# EUROPEAN PATENT SPECIFICATION

(11) **EP 4 199 494 B1**
(45) Date of publication and mention of the grant of the patent: **15.07.2026**
(21) Application number: 21856223.9
(22) Date of filing: 11.08.2021
(51) Int. Cl.: G03B 17/12, G03B 5/00, G02B 27/64, G03B 17/02, H02K 11/215, H02K 41/035, G03B 3/10, G03B 5/02, G03B 30/00, H04N 23/55, G02B 7/02, G02B 7/08

(54) **LENS DRIVING DEVICE, AND CAMERA MODULE AND OPTICAL DEVICE COMPRISING SAME**
LINSENANSTEUERUNGSVORRICHTUNG UND KAMERAMODUL SOWIE OPTISCHE VORRICHTUNG DAMIT
DISPOSITIF D'ENTRAÎNEMENT DE LENTILLE, AINSI QUE MODULE DE PRISE DE VUES ET DISPOSITIF OPTIQUE LE COMPRENANT

(30) Priority: 14.08.2020 KR 20200102776; 14.09.2020 KR 20200117698; 14.09.2020 KR 20200117699
(43) Date of publication of application: 21.06.2023
(73) Proprietor: LG Innotek Co., Ltd., Seoul 07796 (KR)
(72) Inventor: LEE, Jun Taek, Seoul 07796 (KR); NOH, Yun Ho, Seoul 07796 (KR); PARK, Sang Ok, Seoul 07796 (KR)
(74) Representative: Plasseraud IP
(86) International application number: PCT/KR2021/010647
(87) International publication number: WO 2022/035217

(56) References cited:
- EP-A1- 3 070 514
- EP-A1- 3 521 922
- EP-A1- 3 663 829
- JP-A- 2015 034 912
- JP-A- 2020 166 129
- KR-A- 20160 094 636
- KR-B1- 101 498 356
- US-A1- 2013 016 428

## Description

### [Technical Field

Embodiments relate to a lens moving apparatus, and a camera module and optical instrument including the same.

### [Background Art]

It is difficult to apply technology of a voice coil motor (VCM) used in existing general camera modules to a subminiature, low-power camera module, and therefore research related thereto has been actively conducted.

Demand for and production of electronic products, such as smartphones and mobile phones equipped with cameras, have increased. A camera for mobile phones is on a trend of increased resolution and miniaturization. As a result, an actuator has also been miniaturized, increased in diameter, and increased in functionality. In order to realize a high-resolution camera for mobile phones, improvement in performance of the camera for mobile phones and additional functions thereof, such as autofocus, handshake compensation, and zooming, are required.

EP 3 070 514 A1 discloses a lens moving apparatus comprising a base, a circuit board on the base, a housing on the base, a bobbin in the housing, a magnet on the housing, a first coil on the bobbin, opposite to the magnet, and a second coil. The second coil interacting with the magnet is used to move the housing perpendicularly to an optical-axis direction.

### [Disclosure]

### [Technical Problem]

Embodiments provide a lens moving apparatus capable of increasing electromagnetic force, reducing magnetic field interference, preventing damage to an OIS coil, and reducing power consumption, and a camera module and an optical instrument including the same.

### [Technical Solution]

A lens moving apparatus according to the invention is defined in the appended claims.

### [Advantageous Effects]

According to embodiments, an OIS coil is disposed between a circuit board and a base, whereby it is possible to prevent damage to the OIS coil and generation of foreign matter due to collision with a housing or a magnet.

According to embodiments, a winding coil type OIS coil is provided, whereby it is possible to increase electromagnetic force.

According to embodiments, two supporting members are disposed on one corner of the housing, whereby it is possible to prevent cutting of the supporting member due to an increase in size of a lens module.

According to embodiments, three driving magnets are provided, whereby it is possible to reduce magnetic field interference between magnets included in adjacent lens moving apparatuses when a dual camera module is applied.

According to embodiments, a lower end of the supporting member is coupled to a terminal disposed on the base, whereby it is possible to reduce power consumption.

### [Description of Drawings]

FIG. 1 is an exploded perspective view of a lens moving apparatus according to an embodiment.
FIG. 2 is a perspective view of the lens moving apparatus with a cover member removed.
FIG. 3A is a separated perspective view of a bobbin, a first coil, and a sensing magnet.
FIG. 3B is a coupled perspective view of the bobbin, the first coil, and the sensing magnet.
FIG. 4A is a separated perspective view of a housing, first to third magnets, a dummy member, and a yoke.
FIG. 4B is a coupled perspective view of the housing, the first to third magnets, the dummy member, and the yoke.
FIG. 5A is a perspective view of an upper elastic member.
FIG. 5B is a perspective view of a lower elastic member.
FIG. 6 is a view illustrating the conductive connection relationship between the upper elastic member, the coil, and a supporting member.
FIG. 7A is a separated perspective view of a circuit board, a second coil, a first position sensor, a second position sensor, a terminal member, and a base.
FIG. 7B is a coupled perspective view of the second coil, the first position sensor, the second position sensor, the terminal member, and the base.
FIG. 7C is a perspective view when viewed in a different direction from FIG. 7B.
FIG. 8 is a bottom view of the second coil and the circuit board.
FIG. 9A is a sectional view of the lens moving apparatus in direction AB of FIG. 2.
FIG. 9B is a sectional view of the lens moving apparatus in direction CD of FIG. 2.
FIG. 9C is a sectional view of the lens moving apparatus in direction EF of FIG. 2.
FIG. 9D is a sectional view of the lens moving apparatus in direction GH of FIG. 2.
FIG. 10 is a perspective view of the first to third magnets, the dummy member, third to fifth coil units, and the yoke.
FIG. 11 is a side view of the first magnet, the third coil unit, the third magnet, the fifth coil unit, the yoke, and the dummy member shown in FIG. 10.
FIG. 12 is a plan view of the components shown in FIG. 10.
FIG. 13 is a view illustrating the relationship between the stroke range of an OIS moving unit according to an embodiment in a direction perpendicular to an optical axis, the size of the sensing magnet, and the disposition of the first position sensor.
FIG. 14A shows an embodiment of a first terminal of the terminal member.
FIG. 14B shows an embodiment of a third terminal of the terminal member.
FIG. 15A is a partial perspective view of the lens moving apparatus according to the embodiment.
FIG. 15B is a coupled perspective view of the first terminal and a first supporting member.
FIG. 15C is a coupled perspective view of the first terminal, the first supporting member, and a solder.
FIG. 16A shows a first supporting member according to another embodiment.
FIG. 16B is a partial enlarged view showing coupling between the first supporting member of FIG. 16A and a first upper elastic member.
FIG. 16C is a perspective view of a 1-2 supporting member according to another embodiment.
FIG. 16D is a perspective view of a 1-2 supporting member according to another embodiment.
FIG. 17A is a perspective view of a first supporting member according to another embodiment.
FIG. 17B is a perspective view of a first supporting member according to another embodiment.
FIG. 18A is a perspective view of a first supporting member according to another embodiment.
FIG. 18B is a perspective view of a first supporting member according to another embodiment.
FIG. 19 shows a first terminal of a terminal member according to another embodiment and a pad of the circuit board.
FIG. 20 shows a solder that couples the first terminal and the pad of FIG. 19 to each other.
FIG. 21A shows disposition of a magnet disposed on the housing, the third coil unit of the second coil disposed on the base, and the circuit board.
FIG. 21B shows a modification of a protrusion of a projecting portion of FIG. 21A.
FIG. 21C shows another modification of the protrusion of FIG. 21A.
FIG. 22 shows coupling between a lower end of the first supporting member and the first terminal by a solder.
FIG. 23A shows displacement and tilt characteristics of an AF moving unit in a first case and a second case.
FIG. 23B shows displacement and tilt characteristics of an OIS moving unit in the first case and the second case.
FIG. 24 shows frequency response characteristics of the first case and the second case.
FIG. 25 is an exploded perspective view of a lens moving apparatus according to an embodiment.
FIG. 26 is a perspective view of the lens moving apparatus of FIG. 25 with a cover member removed.
FIG. 27A is a separated perspective view of a bobbin and a sensing magnet of FIG. 25.
FIG. 27B is a coupled perspective view of the bobbin, a first coil, and the sensing magnet of FIG. 25.
FIG. 28A is a perspective view of a housing of FIG. 25.
FIG. 28B is a separated perspective view of the housing and a magnet of FIG. 25.
FIG. 28C is a coupled perspective view of the housing and the magnet of FIG. 25.
FIG. 29A is a perspective view of an upper elastic member of FIG. 25.
FIG. 29B is a perspective view of a lower elastic member of FIG. 25.
FIG. 30 is a view illustrating the conductive connection relationship between the upper elastic member, a coil, and a supporting member of FIG. 25.
FIG. 31 is a separated perspective view of a circuit board, a second coil, a first position sensor, a second position sensor, a terminal member, and a base of FIG. 25.
FIG. 32 is a perspective view of the circuit board of FIG. 25.
FIG. 33 is a perspective view of the base of FIG. 25.
FIG. 34A is a perspective view of the terminal member of FIG. 25.
FIG. 34B is a partial enlarged view of the lens moving apparatus of FIG. 26.
FIG. 35A is a coupled perspective view of a first terminal and a first supporting member.
FIG. 35B is a perspective view of a 1-2 supporting member according to another embodiment.
FIG. 35C is a perspective view of a 1-2 supporting member according to another embodiment.
FIG. 36 is a separated perspective view of the second coil, the first position sensor, the second position sensor, the terminal member, and the base of FIG. 25.
FIG. 37A is a coupled perspective view of the base, the terminal member, the second coil, and the circuit board of FIG. 25.
FIG. 37B is a bottom view of the circuit board, the first position sensor, and the second position sensor.
FIG. 38A is a bottom view of a circuit board according to another embodiment.
FIG. 38B is a perspective view of a first terminal according to another embodiment coupled to pads of FIG. 38A.
FIG. 39A is a sectional view of the lens moving apparatus in direction AB of FIG. 26.
FIG. 39B is a sectional view of the lens moving apparatus in direction CD of FIG. 26.
FIG. 39C is a sectional view of the lens moving apparatus in direction EF of FIG. 26.
FIG. 39D is a sectional view of the lens moving apparatus in direction GH of FIG. 26.
FIG. 40A is a perspective view of first to fourth magnets and first to fourth coil units of FIG. 25.
FIG. 40B is a plan view of the first to fourth magnets and the first to fourth coil units of FIG. 40A.
FIG. 41 is a view illustrating the relationship between the stroke range of an OIS moving unit according to an embodiment of FIG. 25 in a direction perpendicular to an optical axis, the size of the sensing magnet, and the disposition of the first position sensor.
FIG. 42 shows a terminal member according to another embodiment.
FIG. 43A shows disposition of a magnet disposed on the housing, the coil units disposed on the base, and the circuit board of FIG. 25.
FIG. 43B shows a projecting portion of the base according to another embodiment.
FIG. 43C shows a projecting portion of the base according to another embodiment.
FIG. 44 shows coupling between the first supporting member and the first terminal and the stair between the circuit board and a body of the first terminal.
FIG. 45A shows a first supporting member and a first terminal according to another embodiment.
FIG. 45B is a perspective view of a first supporting member according to another embodiment.
FIG. 45C is a perspective view of a first supporting member according to another embodiment.
FIG. 45D is a perspective view of a first supporting member according to another embodiment.
FIG. 46 shows a part of a base according to another embodiment.
FIG. 47 shows a first terminal according to another embodiment disposed on the base of FIG. 46.
FIG. 48 is a separated perspective view of a second coil, a circuit board, a base, and supporting members according to another embodiment.
FIG. 49 shows a second coil according to another embodiment.
FIG. 50 is an exploded perspective view of a lens moving apparatus according to another embodiment.
FIG. 51 is a perspective view of the lens moving apparatus of FIG. 50 with a cover member removed.
FIG. 52A is a separated perspective view of a bobbin and a sensing magnet of FIG. 50.
FIG. 52B is a coupled perspective view of the bobbin, a first coil, and the sensing magnet of FIG. 50.
FIG. 53A is a perspective view of a housing of FIG. 50.
FIG. 53B is a separated perspective view of the housing and a magnet of FIG. 50.
FIG. 53C is a coupled perspective view of the housing and the magnet of FIG. 50.
FIG. 54A is a perspective view of an upper elastic member of FIG. 50.
FIG. 54B is a perspective view of a lower elastic member of FIG. 50.
FIG. 55 is a view illustrating the conductive connection relationship between the upper elastic member, a coil, and a supporting member of FIG. 50.
FIG. 56 is a separated perspective view of a circuit board, a second coil, a first position sensor, a second position sensor, a terminal member, and a base of FIG. 50.
FIG. 57 is a perspective view of the circuit board of FIG. 50.
FIG. 58 is a perspective view of the base of FIG. 50.
FIG. 59 is a perspective view of the terminal member of FIG. 50.
FIG. 60A is a partial enlarged view of the lens moving apparatus of FIG. 51.
FIG. 60B shows a solder that couples a first terminal shown in FIG. 60A and a first pad of the circuit board to each other.
FIG. 61A is a coupled perspective view of the first terminal and a first supporting member of FIG. 50.
FIG. 61B is a coupled perspective view of the first terminal, the first supporting member, and the solder.
FIG. 62 is a coupled perspective view of the second coil, the first position sensor, the second position sensor, the terminal member, and the base of FIG. 50.
FIG. 63A is a coupled perspective view of the base, the terminal member, the second coil, and the circuit board of FIG. 50.
FIG. 63B is a bottom view of the circuit board, the second coil, the first position sensor, and the second position sensor of FIG. 50.
FIG. 64A is a bottom view of a circuit board according to another embodiment.
FIG. 64B is a perspective view of a circuit board according to another embodiment.
FIG. 65A is a sectional view of the lens moving apparatus in direction AB of FIG. 51.
FIG. 65B is a sectional view of the lens moving apparatus in direction CD of FIG. 51.
FIG. 65C is a sectional view of the lens moving apparatus in direction EF of FIG. 51.
FIG. 65D is a sectional view of the lens moving apparatus in direction GH of FIG. 51.
FIG. 66 is a perspective view of first to fourth magnets and first to fourth coil units of FIG. 50.
FIG. 67 is a plan view of the first to fourth magnets and the first to fourth coil units of FIG. 66.
FIG. 68 is a view illustrating the relationship between the stroke range of an OIS moving unit according to an embodiment of FIG. 50 in a direction perpendicular to an optical axis, the size of the sensing magnet, and the disposition of the first position sensor.
FIG. 69 shows a terminal member according to another embodiment.
FIG. 70A shows disposition of a magnet disposed on the housing, the coil units disposed on the base, and the circuit board of FIG. 50.
FIG. 70B shows a projecting portion of a base according to another embodiment.
FIG. 70C shows a projecting portion of a base according to another embodiment.
FIG. 71 shows coupling between the first supporting member and the first terminal by the solder and the stair between the circuit board and a body of the first terminal.
FIG. 72A shows a first supporting member according to another embodiment.
FIG. 72B is a perspective view of a 1-2 supporting member according to another embodiment.
FIG. 72C is a perspective view of a 1-2 supporting member according to another embodiment.
FIG. 73 is a perspective view of a first supporting member according to another embodiment.
FIG. 74 is a perspective view of a first supporting member according to another embodiment.
FIG. 75 is a perspective view of a first supporting member according to another embodiment.
FIG. 76 is a perspective view of a first supporting member according to another embodiment.
FIG. 77 shows a part of a base according to another embodiment.
FIG. 78 shows a first terminal according to another embodiment disposed on the base of FIG. 77.
FIG. 79 is an exploded perspective view of a camera module according to an embodiment.
FIG. 80 is a perspective view of a camera module according to another embodiment.
FIG. 81 is a perspective view of a portable terminal according to an embodiment.
FIG. 82 is a view showing the construction of the portable terminal shown in FIG. 81.

### [Best Mode]

Reference will now be made in detail to embodiments, examples of which are illustrated in the accompanying drawings.

However, the technical idea of the disclosure is not limited to the embodiments described below but may be embodied in various other forms, and one or more components may be selectively coupled or substituted between embodiments within the scope of the technical idea of the disclosure.

In addition, terms, (including technical and scientific terms) used in embodiments have the same meanings as those commonly understood by a person having ordinary skill in the art to which the disclosure pertains, unless otherwise defined, and it will be further understood that commonly used terms, such as those defined in dictionaries, should be interpreted as having meanings consistent with their meanings in the context of the relevant art.

In addition, the terms used in embodiments are provided to explain embodiments, but are not intended to restrict the disclosure. In this specification, a singular representation may include a plural representation unless otherwise defined, and in the case in which "at least one (or one or more) of A, B, and C" is described, one or more of all combinations constituted by A, B, and C may be included.

Also, in describing the components of the disclosure, terms such as "first," "second," "A," "B," "(a)," and "(b)" may be used. These terms are used only for the purpose of distinguishing one constituent from another, and the terms do not limit the nature, order or sequence of the components.

When one component is said to be "connected," "coupled," or "linked" to another, this may mean not only that the one component is directly connected, coupled, or linked to the other one but also that the one component is "connected," "coupled," or "linked" to the other one via yet another component interposed therebetween. In addition, it will be understood that when an element is referred to as being "on" or "under" another element, it can be directly on/under the element, and one or more intervening elements may also be present. When an element is referred to as being "on" or "under," "under the element" as well as "on the element" can be included based on the element.

Hereinafter, the lens moving apparatus may be referred to as a lens moving unit, a voice coil motor (VCM), an actuator, or a lens moving device. Hereinafter, the term "coil" may be referred to as a coil unit, and the term "elastic member" may be referred to as an elastic unit or a spring.

Also, in the following description, the term "terminal" may be referred to as a pad, an electrode, a conductive layer, or a bonding portion.

For convenience of description, a camera module according to an embodiment will be described using a Cartesian coordinate system (x, y, z). However, other different coordinate systems may be used, and the disclosure is not limited thereto. In the drawings, an x-axis direction and a y-axis direction are directions perpendicular to a z-axis direction, which is an optical-axis direction. The z-axis direction, which is the optical-axis direction, may be referred to as a "first direction," the x-axis direction may be referred to as a "second direction," and the y-axis direction may be referred to as a "third direction."

A lens moving apparatus according to an embodiment may perform an "autofocus function." Here, the autofocus function means automatically focusing on a subject to form an image of the subject on the surface of an image sensor.

In addition, the lens moving apparatus according to the embodiment may perform a "handshake compensation function." Here, the handshake compensation function means a function of preventing the contour of a captured still image from being blurred due to vibration caused by handshake of a user when capturing the still image.

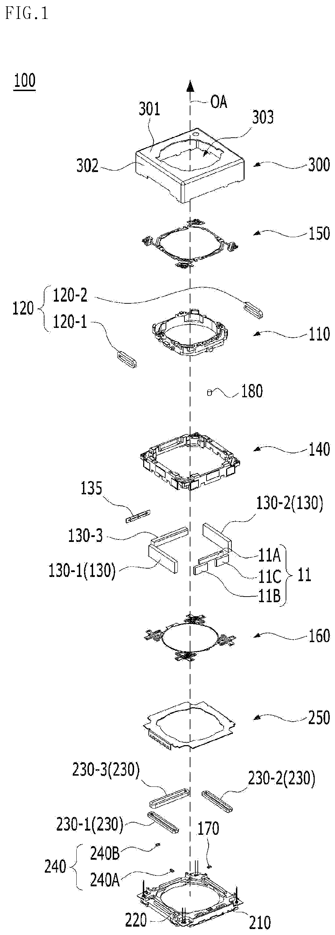

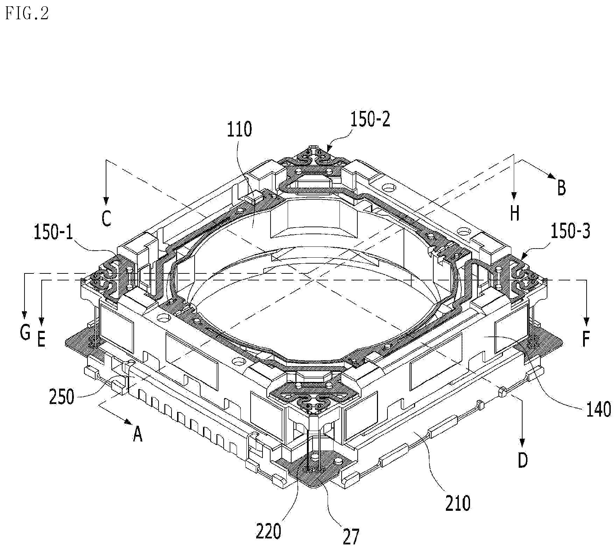

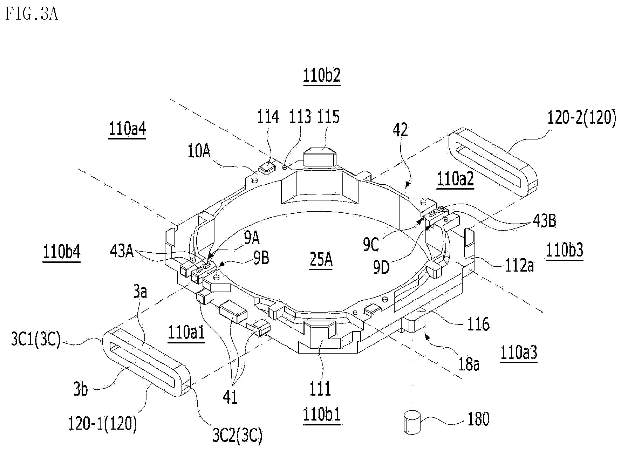

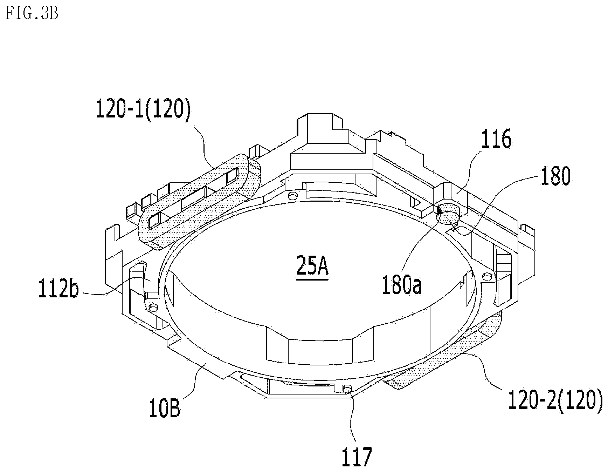

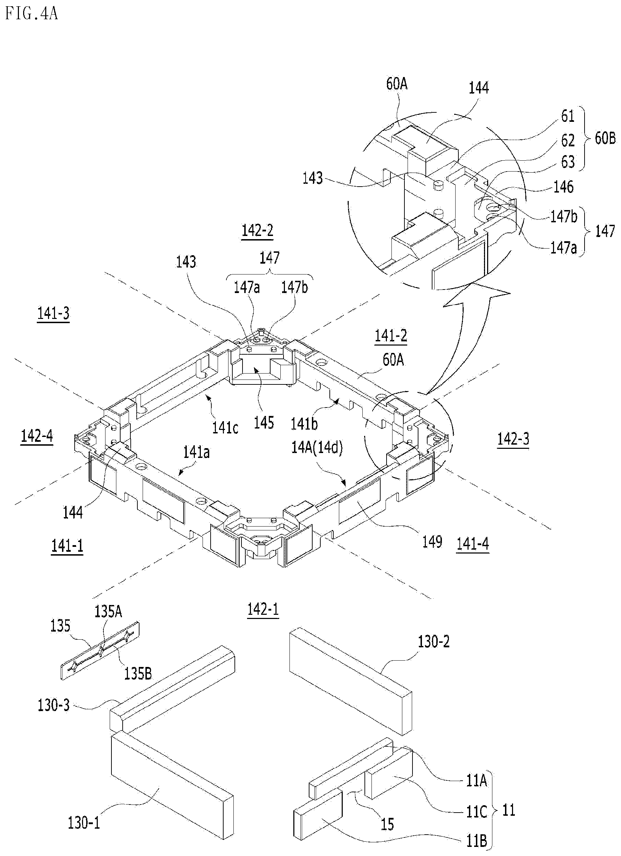

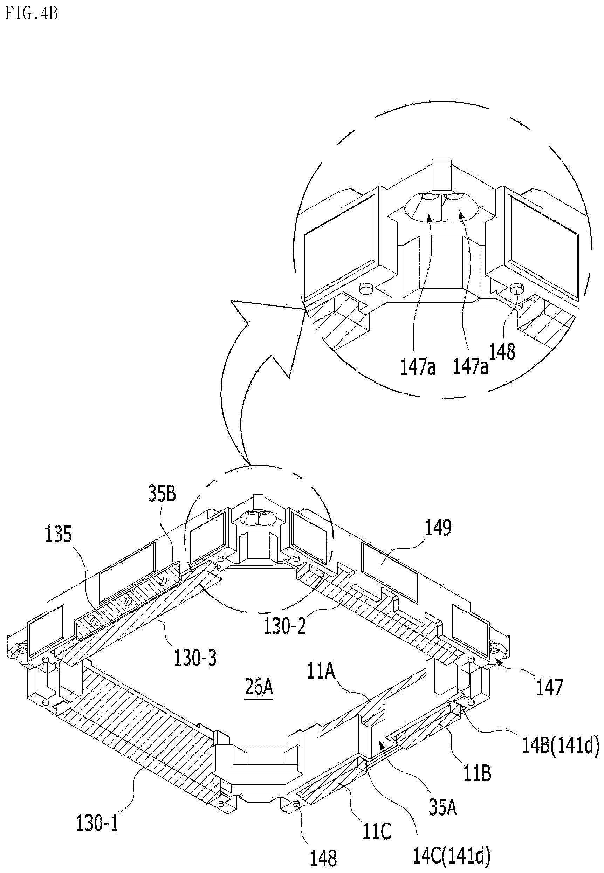

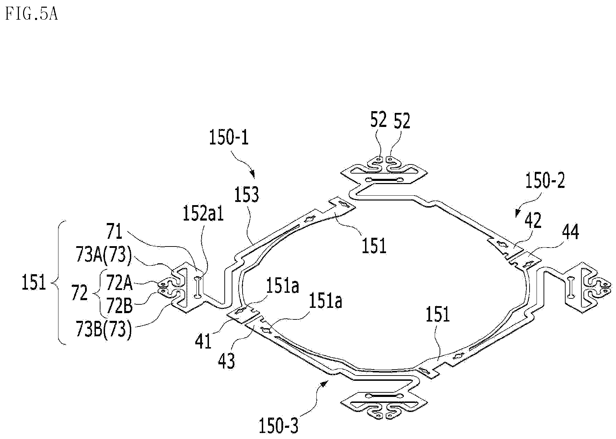

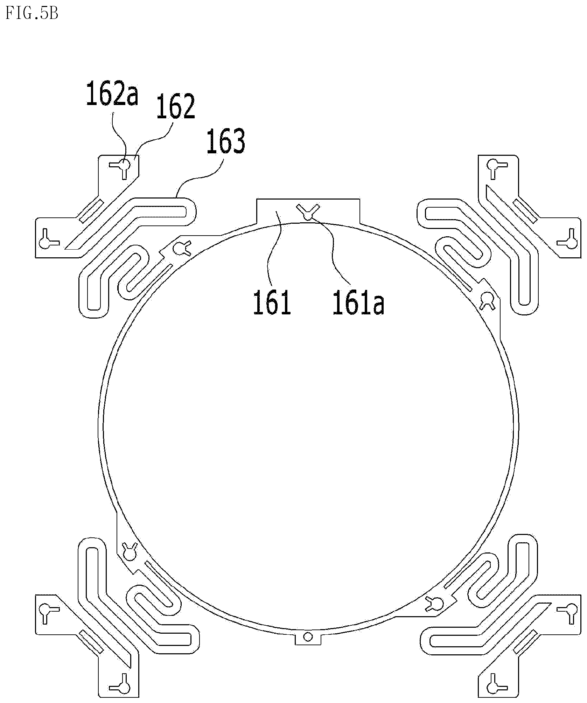

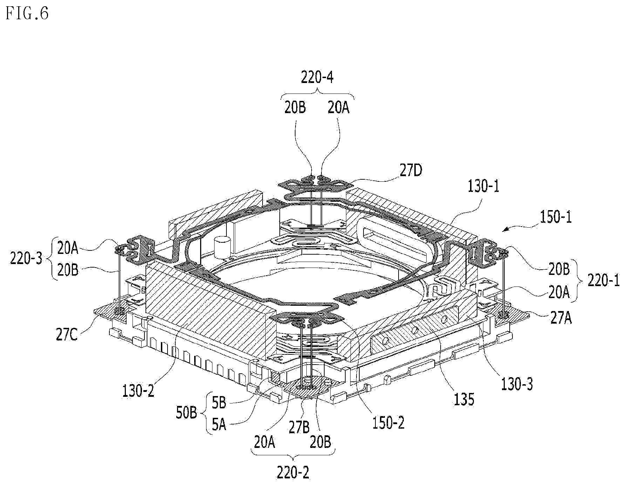

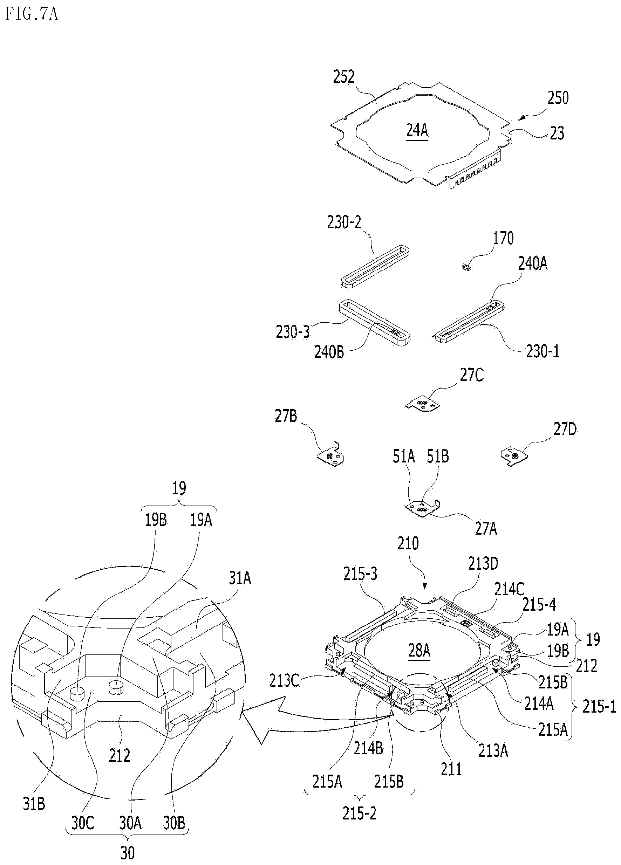

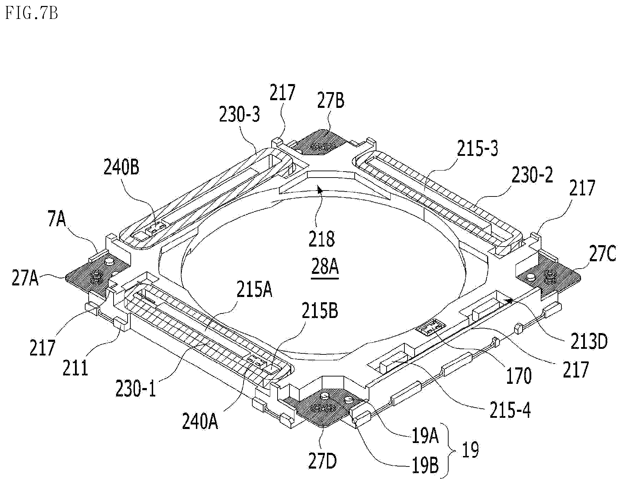

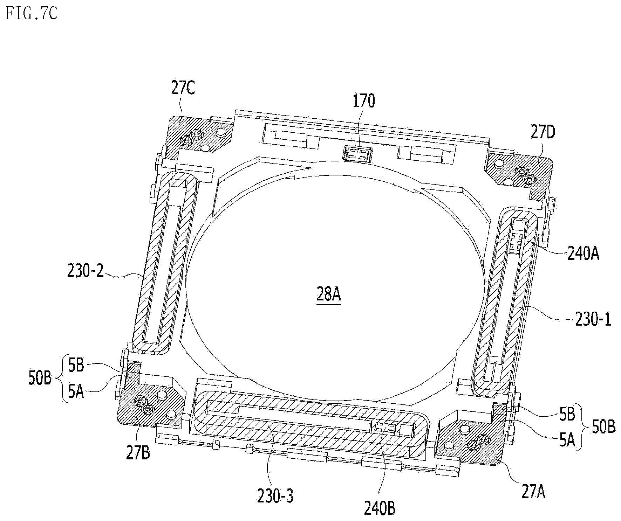

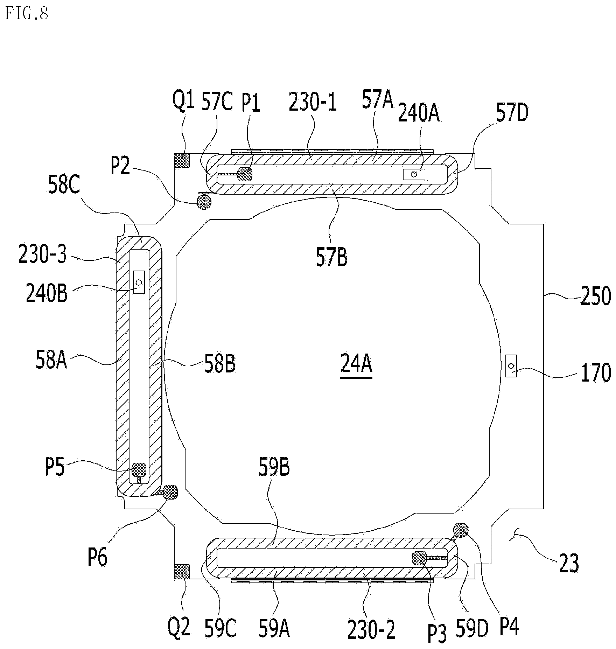

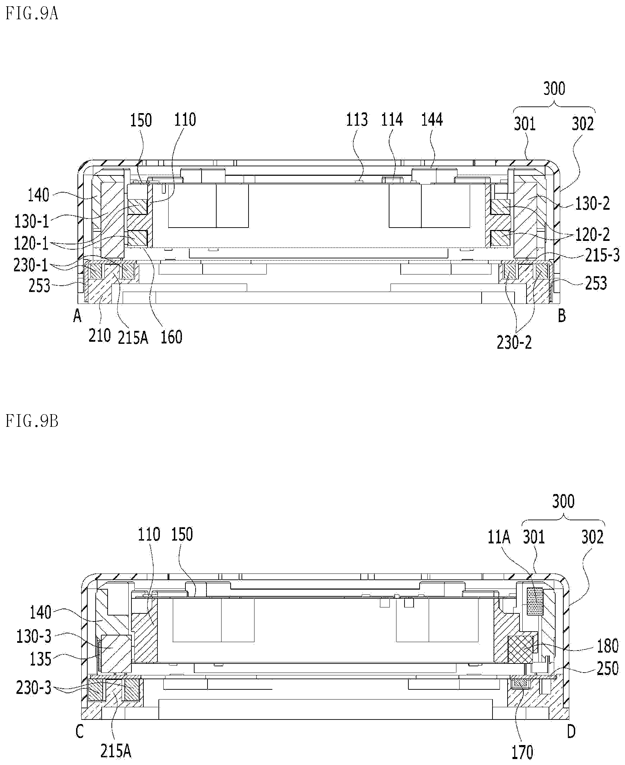

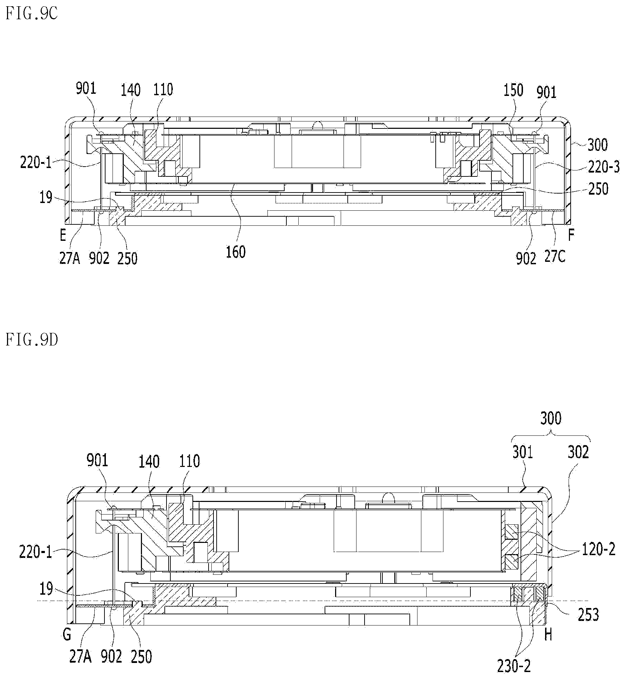

FIG. 1 is an exploded perspective view of a lens moving apparatus 100 according to an embodiment, FIG. 2 is a perspective view of the lens moving apparatus 100 with a cover member 300 removed, FIG. 3A is a separated perspective view of a bobbin 110, a first coil 120, and a sensing magnet 180, FIG. 3B is a coupled perspective view of the bobbin 110, the first coil 120, and the sensing magnet 180, FIG. 4A is a separated perspective view of a housing 140, first to third magnets 130-1 to 130-3, a dummy member 11, and a yoke 135, FIG. 4B is a coupled perspective view of the housing 140, the first to third magnets 130-1 to 130-3, the dummy member 11, and the yoke 135, FIG. 5A is a perspective view of an upper elastic member 150, FIG. 5B is a perspective view of a lower elastic member 160, FIG. 6 is a view illustrating the conductive connection relationship between the upper elastic member 150, the coil 120, and a supporting member 220, FIG. 7A is a separated perspective view of a circuit board 250, a second coil 230, a first position sensor 170, a second position sensor 240, a terminal member 27, and a base 210, FIG. 7B is a coupled perspective view of the second coil 230, the first position sensor 170, the second position sensor 240, the terminal member 27, and the base 210, FIG. 7C is a perspective view when viewed in a different direction from FIG. 7B, FIG. 8 is a bottom view of the second coil 230 and the circuit board 250, FIG. 9A is a sectional view of the lens moving apparatus 100 in direction AB of FIG. 2, FIG. 9B is a sectional view of the lens moving apparatus 100 in direction CD of FIG. 2, FIG. 9C is a sectional view of the lens moving apparatus 100 in direction EF of FIG. 2, and FIG. 9D is a sectional view of the lens moving apparatus 100 in direction GH of FIG. 2.

Referring to FIGs. 1 to 9D, the lens moving apparatus 100 includes a bobbin 110, a first coil 120, a magnet 130, a housing 140, a circuit board 250, a second coil 230, and a base 210.

The lens moving apparatus 100 may further include an elastic member, and the elastic member may include at least one of an upper elastic member 150 and a lower elastic member 160. In addition, the lens moving apparatus 100 may further include a supporting member 220.

The lens moving apparatus 100 may further include a dummy member 11. In addition, the lens moving apparatus 100 may further include a yoke 135.

The lens moving apparatus 100 may further include a terminal member 27.

The lens moving apparatus 100 may further include a first position sensor 170 and a sensing magnet 180 in order to perform AF feedback driving. The lens moving apparatus 100 may further include a second position sensor 240 in order to perform optical image stabilizer (OIS) feedback driving.

In addition, the lens moving apparatus 100 may further include a cover member 300.

The lens moving apparatus 100 according to the embodiment may be a lens moving apparatus including an OIS function capable of reducing or inhibiting magnetic field interference between magnets included in two adjacent lens moving apparatuses mounted in a dual camera module.

In addition, the lens moving apparatus according to the embodiment may maintain balance between electromagnetic force generated in the X-axis direction and electromagnetic force generated in the Y-axis direction in order to perform the OIS function.

In addition, the lens moving apparatus according to the embodiment may reduce the number of OIS magnets and the size of the OIS magnets, thereby reducing the weight of an OIS moving unit and reducing current consumption.

Referring to FIGs. 3A and 3B, the bobbin 110 may be disposed inside the housing 140, and may be moved in the optical-axis (OA) direction or the first direction (e.g. the Z-axis direction) by electromagnetic interaction between the first coil 120 and the first and second magnets 130-1 and 130-2.

The bobbin 110 may have an opening 25A, in which a lens module 400 is mounted. For example, the lens module 400 may include at least one of at least one lens and a lens barrel.

For example, the opening of the bobbin 110 may be a through-hole formed through the bobbin 110, and the shape of the opening of the bobbin 110 may be circular, oval, or polygonal; however, the disclosure is not limited thereto.

The bobbin 110 may include first side portions 110a1 to 110a4 and second side portions 110b1 to 110b4 spaced apart from each other. Each of the second side portions 110b1 to 110b4 may interconnect two adjacent first side portions. For example, the first side portions 110a1 to 110a4 of the bobbin 110 may be referred to as "side portions," and the second side portions 110b1 to 110b4 of the bobbin 110 may be referred to as "corner portions or corners."

A first seating portion 41, on which a first coil unit 120-1 is mounted, seated, or disposed, may be provided in any one (e.g. the first side portion 110a1) of the side portions of the bobbin 110, and a second seating portion 42, on which a second coil unit 120-2 is mounted, seated, or disposed, may be provided in another (e.g. the second side portion 110a2) of the side portions of the bobbin 110.

For example, the first seating portion 41 and the second seating portion 42 may be provided respectively in the two opposite side portions 110a1 and 110a2, among the side potions of the bobbin 110.

Each of the first seating portion 41 and the second seating portion 42 may include at least one protrusion protruding from an outer surface of the bobbin 110; however, the disclosure is not limited thereto. In another embodiment, each of the first seating portion 41 and the second seating portion 42 may be a recess depressed from the outer surface of the bobbin 110.

The first coil unit 120-1 may be coupled to the first seating portion 41, and the second coil unit 120-2 may be coupled to or wound on the second seating portion 42.

The bobbin 110 may have a recess 18a or a hole provided in another (e.g. the fourth side portion 110a4) of the side portions in order to mount or dispose the sensing magnet 180. For example, the fourth side portion 110a4 of the bobbin 110 may be the side portion at which the first coil unit 120-1 or the second coil unit 120-2 is not disposed.

A projecting portion 116 projecting in a direction perpendicular to an optical axis and configured to allow the sensing magnet 180 to be disposed thereon may be formed on the fourth side portion 119a4 of the bobbin 110. The recess 18a may be formed in the projecting portion 116. For example, the recess 18a may be formed in a lower surface of the projecting portion 116; however, the disclosure is not limited thereto. In another embodiment, the recess may be formed in at least one of an upper surface and a side surface of the projecting portion 116.

In addition, the projecting portion 116 may inhibit or prevent the bobbin 110 from being rotated about the optical axis while deviating from a predetermined range, in the same manner as a projecting portion 111 of the bobbin 110.

The bobbin 110 may have projecting portions 111 provided on the corner portions 110b1 to 110b4. The projecting portions 111 may project in a direction parallel to a straight line that extends through the optical axis OA and is perpendicular to the optical-axis direction; however, the disclosure is not limited thereto.

The projecting portions 111 of the bobbin 110 may correspond to recessed portions 145 of the housing 140, may be inserted into or disposed in the recessed portions 145 of the housing 140, and may inhibit or prevent the bobbin 110 from being moved or rotated about the optical axis while deviating from a predetermined range.

An escape recess 112a configured to avoid spatial interference with a first frame connection portion 153 of the upper elastic member 150 may be provided in an upper surface 10A of the bobbin 110. A second escape recess 112b configured to avoid spatial interference with a second frame connection portion 163 of the lower elastic member 160 may be provided in a lower surface 10B of the bobbin 110.

For example, the first and second escape recesses 112a and 112b may be disposed in the corner portions 110b1 to 110b4 of the bobbin 110; however, the disclosure is not limited thereto, and the escape recesses may be formed in at least one of the side portions and the corner portions of the bobbin 110.

The bobbin 110 may include a first stopper 114 projecting from the upper surface 10A thereof. Although not shown in FIG. 3B, the bobbin 110 may include a second stopper projecting from the lower surface 10B thereof.

The first stopper 114 and the second stopper of the bobbin 110 may prevent the upper surface 10A of the bobbin 110 from directly colliding with the inside of an upper plate 301 of the cover member 30 and may prevent the lower surface 10B of the bobbin 110 from directly colliding with the circuit board 250 even though the bobbin 110 is moved while deviating from a predetermined range due to external impact when the bobbin 110 is moved in the first direction in order to perform the autofocus function.

The bobbin 110 may be provided at the upper surface 10A thereof with a first coupling portion 113 configured to be coupled and fixed to the upper elastic member 150, and the bobbin 110 may be provided at the lower surface 10B thereof with a second coupling portion 117 configured to be coupled and fixed to the lower elastic member 160.

For example, in FIGs. 3A and 3B, the first and second coupling portions 113 and 117 of the bobbin 110 may be protrusions; however, the disclosure is not limited thereto. In another embodiment, the first and second coupling portions of the bobbin 110 may be recesses or flat surfaces.

Also, in order to inhibit separation of the first and second coil units 120-1 and 120-2 and to guide both ends of the first and second coil units 120-1 and 120-2 when the first and second coil units 120-1 and 120-2 are connected or coupled to the upper elastic member 150 using a conductive adhesive member, such as a solder, the bobbin 110 may have guide recesses 9A to 9D formed in upper surfaces of the two opposite side portions 110a1 and 110a2.

For example, both ends of the first coil unit 120-1 may be coupled to first and third upper elastic members 150-1 and 150-3 through the guide recesses 9A and 9B. For example, both ends of the second coil unit 120-2 may be coupled to second and third upper elastic members 150-2 and 150-3 through the guide recesses 9C and 9D.

The bobbin 110 may include at least one first protrusion 43A and at least one second protrusion 43B protruding from the upper surface 10A. The at least one first protrusion 43A may be disposed between a first inner frame 151 of the first upper elastic member 150-1 and one end of a first inner frame 151 of the third upper elastic member 150-3, and may serve to spatially separate or isolate both from each other.

The at least one second protrusion 43B may be disposed between a first inner frame 151 of the second upper elastic member 150-2 and the other end of the first inner frame 151 of the third upper elastic member 150-3, and may serve to spatially separate or isolate both from each other.

Next, the first coil 120 will be described.

The first coil 120 may be disposed on the bobbin 110 or may be coupled to the bobbin 110.

The first coil 120 may include a first coil unit 120-1 and a second coil unit 120-2 disposed at the two opposite side portions110a1 and 110a2, among the side portions 110a1 to 110a4 of the bobbin 110. Here, the coil unit may be referred to as a "coil portion," a "coil block," or a "coil ring."

For example, the first coil unit 120-1 may be disposed on or coupled to the first seating portion 41 of the bobbin 110, and the second coil unit 120-2 may be disposed on or coupled to the second seating portion 42 of the bobbin 110.

Each of the first coil unit 120-1 and the second coil unit 120-2 may include at least one of an oval shape, a track shape, and a closed-curve shape. For example, each of the first coil unit 120-1 and the second coil unit 120-2 may have the shape of a coil ring wound around an axis that extends through the center of the opening 25A of the bobbin 110 and is perpendicular to the optical axis OA.

For example, each of the first coil unit 120-1 and the second coil unit 120-2 may have a first part 3a, a second part 3b disposed under the first part 3a, and a third part 3c configured to interconnect the first part 3a and the second part 3b, and a closed curve may be formed by the first to third parts 3a, 3b, and 3c.

The third part 3c may include a first connection part 3c1 configured to interconnect one end of the first part 3a and one end of the second part 3b and a second connection part 3c2 configured to interconnect the other end of the first part 3a and the other end of the second part 3b.

For example, the first part 3a may be referred to as a "first straight portion," the second part 3b may be referred to as a "second straight portion," the third part 3c may be referred to as a "curved portion," the first connection part 3c1 may be referred to as a first curved portion, and the second connection part 3c2 may be referred to as a second curved portion.

For example, the first coil unit 120-1 and the second coil unit 120-2 may be connected to each other in series.

For example, the first coil unit 120-1 and the second coil unit 120-2 may be connected to each other in series via the upper elastic member 160; however, the disclosure is not limited thereto, and both may be connected to each other in series via at least one of the upper elastic member and the lower elastic member.

In another embodiment, the first coil unit and the second coil unit may be connected to each other in series via a connection coil or a connection portion. For example, one end of the connection coil may be directly connected to one end of the first coil unit, and the other end of the connection coil may be connected to one end of the second coil unit.

In another embodiment, the first coil unit 120-1 and the second coil unit 120-2 may be conductively separated or spaced apart from each other, and may be individually driven.

When a driving signal (e.g. driving current) is supplied to the first coil 120, electromagnetic force may be formed through electromagnetic interaction between the first coil 120 and the first and second magnets 130-1 and 130-2, and the bobbin 110 may be moved by the formed electromagnetic force in the optical-axis (OA) direction.

At an initial position of an AF moving unit, the bobbin 110 may be moved in an upward or downward direction (e.g. the Z-axis direction), which is referred to as bidirectional driving of the AF moving unit. Alternatively, at the initial position of the AF moving unit, the bobbin 110 may be moved in the upward direction, which is referred to as unidirectional driving of the AF moving unit.

At the initial position of the AF moving unit, the first coil unit 120-1 may be opposite to or may overlap the first magnet 130-1 in a first horizontal direction 201, but is not opposite to or does not overlap the third magnet 130-3. For example, the first horizontal direction may be a direction that is perpendicular to the optical axis OA and extends from the optical axis OA to the first coil unit 120-1.

At the initial position of the AF moving unit, the second coil unit 120-2 may be opposite to or may overlap the second magnet 130-2 in the first horizontal direction, but is not opposite to or does not overlap the third magnet 130-3.

The AF moving unit may include the bobbin 110 and components coupled to the bobbin 110. For example, the AF moving unit may include the bobbin 110, the first coil 120, and the sensing magnet 180. In addition, the AF moving unit may further include the lens module 400 mounted in the bobbin 110.

The initial position of the AF moving unit may be the original position of the AF moving unit in the state in which no power is applied to the first coil 120 or the position at which the AF moving unit is located as the result of the upper and lower elastic members 150 and 160 being elastically deformed due only to the weight of the AF moving unit.

In addition, an initial position of the bobbin 110 may be the position at which the AF moving unit is located when gravity acts in a direction from the bobbin 110 to the base 210 or when gravity acts in a direction from the base 210 to the bobbin 110.

The sensing magnet 180 provides a magnetic field, which is sensed by the first position sensor 170.

The sensing magnet 180 may be disposed on the bobbin. For example, the sensing magnet 180 may be disposed on the projecting portion 116 of the bobbin 110. For example, the sensing magnet 180 may be coupled to the projecting portion 116 of the bobbin 110.

For example, at least a part of the sensing magnet 180 may be disposed in the recess 18a of the projecting portion 116, and may be coupled to the recess 18a by an adhesive, etc. The sensing magnet 180 may be disposed so as to correspond to or to be opposite to the first position sensor 170 in the optical-axis (OA) direction.

At least a part of one surface (e.g. a lower surface) of the sensing magnet 180 corresponding to the first position sensor 170 may be exposed from the recess 18a of the bobbin 110; however, the disclosure is not limited thereto. In another embodiment, one surface of the sensing magnet 180 facing the first position sensor 170 may not be exposed from the bobbin 110.

For example, the interface between an N pole and an S pole of the sensing magnet 180 disposed on the bobbin 110 may be parallel to a direction perpendicular to the optical axis OA. For example, the N pole and the S pole of the sensing magnet 180 may be opposite to each other in the optical-axis direction; however, the disclosure is not limited thereto.

In another embodiment, the sensing magnet may be disposed such that the N pole and the S pole face each other in the direction perpendicular to the optical axis. For example, in another embodiment, the interface between the N pole and the S pole of the sensing magnet 180 disposed on the bobbin 110 may be parallel to the optical axis OA.

For example, the sensing magnet 180 may be a monopolar magnetized magnet having a single N pole and a single S pole; however, the disclosure is not limited thereto. In another embodiment, the sensing magnet 180 may be a bipolar magnetized magnet or a quadrupole magnet having two N poles and two S poles.

The shape of the sensing magnet 180 may be a circular column, a cylinder, a semicircular column, or a polyhedron (e.g. a hexahedron); however, the disclosure is not limited thereto.

For example, the sensing magnet 180 may have a cylindrical shape having a length in the optical-axis direction greater than the length in the direction perpendicular to the optical axis, whereby the sensing magnet may be easily inserted into or coupled to a hole 116A of the bobbin 110. In another embodiment, the sensing magnet 180 may have a length in the optical-axis direction equal to or less than the length in the direction perpendicular to the optical axis.

When the shape of the sensing magnet 180 is a circular column or a cylinder, distribution of a magnetic field of the sensing magnet 180 sensed by the first position sensor 170 may be uniform, whereby sensitivity of the first position sensor 170 may be improved.

For example, the sectional shape of the sensing magnet 180 cut in the direction perpendicular to the optical axis may be a circle, an oval, or a polygon (e.g. a triangle or a quadrangle); however, the disclosure is not limited thereto.

In another embodiment, the sensing magnet may be disposed on the circuit board 250 or the base 210, and the first position sensor may be disposed on the bobbin 110.

In another embodiment, the first position sensor may be disposed on the bobbin 110, and the sensing magnet may be disposed on the housing 140 so as to be opposite to the first position sensor in the direction perpendicular to the optical axis.

In another embodiment, the first position sensor may be disposed on the housing 140, and the sensing magnet may be disposed on the bobbin 110 so as to be opposite to the first position sensor in the direction perpendicular to the optical axis.

Referring to FIGs. 4A and 4B, the housing 140 receives at least a part of the bobbin 110 therein, and supports the first magnet 130-1, the second magnet 130-2, the third magnet 130-3, and the dummy member 11.

The housing 140 may be referred to as an "OIS moving unit." The OIS moving unit may be moved together with the AF moving unit by OIS driving due to interaction between the first to third magnets 130-1 to 130-3 and the second coil 230.

The housing 140 may be disposed inside the cover member 300, and may be disposed between the cover member 300 and the bobbin 110.

An outer surface of the housing 140 may be spaced apart from an inner surface of a side plate of the cover member 300, and the housing 140 may be moved in a space between the housing 140 and the cover member 300 by OIS driving.

The housing 140 may have a hollow column shape including an opening or a hollow 26A.

For example, the housing 140 may have a polygonal (e.g. quadrangular or octagonal) or circular opening 26A.

The housing 140 may include a side portion and a corner portion. For example, the housing 140 may include a plurality of side portions 141-1 to 141-4 and a plurality of corner portions 142-1 to 142-4.

For example, the housing 140 may include first to fourth side portions 141-1 to 141-4 and first to fourth corner portions 142-1 to 142-4.

The first to fourth side portions 141-1 to 141-4 may be spaced apart from each other. Each of the corner portions 142-1 to 142-4 of the housing 140 may be disposed or located between two adjacent side portions, and may interconnect the side portions 141-1 to 141-4.

For example, the corner portions 142-1 to 142-4 may be located at corners of the housing 140. For example, the number of side portions of the housing 140 may be four, and the number of corner portions thereof may be four; however, the disclosure is not limited thereto.

Each of the side portions 141-1 to 141-4 of the housing 140 may be disposed parallel to a corresponding one of side plates 302 of the cover member 300.

The horizontal length of each of the side portions 141-1 to 141-4 of the housing 140 may be greater than the horizontal length of each of the corner portions 142-1 to 142-4 thereof; however, the disclosure is not limited thereto.

The first side portion 141-1 and the second side portion 141-2 of the housing 140 may be located opposite to each other, and the third side portion 141-3 and the fourth side portion 141-4 may be located opposite to each other. Each of the third side portion 141-3 and the fourth side portion 141-4 of the housing 140 may be located between the first side portion 141-1 and the second side portion 141-2.

In order to prevent direct collision with the inner surface of the upper plate 301 of the cover member 300, the housing 140 may be provided on an upper portion, an upper end, or an upper surface thereof with a stopper 144.

For example, the stopper 144 may be disposed or arranged on at least one of the side portion and the corner portion of the housing 140.

In addition, the housing 140 may be provided on an upper portion, an upper end, or an upper surface of each of the corner portions 142-1 to 142-4 thereof with a guide projecting portion 146 configured to guide a damper formed on the supporting member 220 by coating.

The housing 140 may be provided on an upper portion, an upper end, or an upper surface thereof with at least one first coupling portion 143 coupled to a first outer frame 152 of the upper elastic member 150. In addition, the housing 140 may be provided on a lower portion, a lower end, or a lower surface thereof with at least one second coupling portion 148 coupled and fixed to a second outer frame 162 of the lower elastic member 160.

Each of the first coupling portion 143 and the second coupling portion 148 of the housing 140 may be a protrusion; however, the disclosure is not limited thereto. In another embodiment, each of the first coupling portion and the second coupling portion may be a recess or a flat surface.

The first coupling portion 143 of the housing 140 may be coupled to a hole 152a of the first outer frame 152 of the upper elastic member 150 and the second coupling portion 148 of the housing 140 may be coupled to a hole 162a of the second outer frame 162 of the lower elastic member 160 by thermal fusion or using an adhesive.

The housing 140 may include a first seating portion 141a provided at one (e.g. the first side portion 141-1) of two side portions located opposite to each other such that the first magnet 130-1 is disposed thereon and a second seating portion 141b provided at the other 141-2 of the two side portions such that the second magnet 130-2 is disposed thereon.

In addition, the housing 140 may include a third seating portion 141c provided at one (e.g. the third side portion 141-3) of the other two side portions located opposite each other such that the third magnet 130-3 is disposed thereon and a fourth seating portion 141d provided at the other 141-4 of the other two side portions such that the dummy member 11 is disposed thereon.

Each of the first to third seating portions 141a to 141c of the housing 140 may be provided at an inner surface of a corresponding one of the side portions of the housing 140; however, the disclosure is not limited thereto. In another embodiment, each of the first to third seating portions of the housing may be provided at an outer surface of a corresponding one of the side portions of the housing.

Each of the first to third seating portions 141a to 141c of the housing 140 may be a recess having a shape corresponding to or coinciding with a corresponding one of the first to third magnets 130-1 to 130-3, e.g. a concave recess; however, the disclosure is not limited thereto.

For example, a first opening facing the first coil unit 120-1 and a second opening, through which a lower portion or a lower end of the first magnet 130-1 is exposed, may be formed in the first seating portion 141a (or the second seating portion 141b) of the housing 140.

For example, a first opening facing the second coil unit 120-2 and a second opening, through which a lower portion or a lower end of the second magnet 130-2 is exposed, may be formed in the second seating portion 141b of the housing 140.

In addition, for example, a first opening open to an outer surface of the bobbin 110 and a second opening, through which a lower portion or a lower end of the third magnet 130-3 is exposed, may be formed in the third seating portion 141c of the housing 140. In another embodiment, each of the first to third seating portions of the housing 140 may include at least one of a first opening and a second opening.

The fourth seating portion 141d of the housing 140 may include at least one seating portion configured to allow the dummy member 11 to be mounted thereon. For example, the fourth seating portion 141d may include three seating portions. For example, a 4-1 seating portion 14A may be provided at an upper portion of the fourth side portion 141-4 of the housing 140, and 4-2 and 4-3 seating portions 14B and 14C may be provided at a lower portion of the fourth side portion 141-4 of the housing 140 and may be located under the 4-1 seating portion 14A.

For example, one side surface of the magnet 130-1, 130-2, or 130-3 fixed to or disposed on the seating portion 141a, 141b, or 141c of the housing 140 may be exposed through the first opening of the seating portion 141a, 141b, or 141c. In addition, a lower surface of the magnet 130-1, 130-2, or 130-3 fixed to or disposed on the seating portion 141a, 141b, or 141c of the housing 140 may be exposed through the second opening of the seating portion 141a, 141b, or 141c.

For example, the lower end or the lower surface of each of the first to third magnets may project from the lower surface of the housing 140 toward the circuit board 250.

At least a part of the dummy member 11 (e.g. one side surface of a first dummy member 11A) fixed to or disposed on the seating portion 141d of the housing 140 may be exposed to an inner surface of the housing 140.

At least another part of the dummy member 11 (e.g. a lower surface of each of second and third dummy members 11B and 11C) fixed to or disposed on the seating portion 141d of the housing 140 may be exposed from the lower surface of the housing 140.

For example, a lower end or a lower surface of each of the second and third dummy members 11B and 11C may project from the lower surface of the housing 140 toward the circuit board 250.

For example, the first to third magnets 130-1, 130-2, and 130-3 and the dummy member 11 may be fixed respectively to the seating portions 141a to 141d using an adhesive.

Supporting members 220-1 to 220-4 may be disposed on the corner portions 142-1 to 142-4 of the housing 140, and holes 147, through which the supporting members 220-1 to 220-4 extend, may be provided in the corner portions 142-1 to 142-4 of the housing 140.

For example, the housing 140 may include a hole 147 formed through an upper portion of each of the corner portions 142-1 to 142-4.

At least one supporting member 220-1 to 220-4 may be disposed on at least one of the corner portions 142-1 to 142-4 of the housing 140. For example, two supporting members 20A and 20B may be disposed on each of the corner portions 142-1 to 142-4 of the housing 140, and two holes 147a and 147b may be formed in each corner portion of the housing 140.

The hole 147 may be a through-hole formed through the housing 140 in the optical-axis direction; however, the disclosure is not limited thereto. One end of the supporting member 220 may be connected or bonded to the upper elastic member 150 through the hole 147.

For example, the diameter of the hole 147 may be gradually increased in a direction from the upper surface to the lower surface of the housing 140 in order to easily coat the damper; however, the disclosure is not limited thereto. In another embodiment, the diameter of the hole 147 may be uniform.

In another embodiment, the hole may be depressed from the outer surface of the corner portion of the housing 140, and at least a part of the hole may be open to the outer surface of the corner portion. The number of holes 147 of the housing 140 may be equal to the number of supporting members.

The housing 140 may be provided with at least one stopper 149 projecting from the outer surfaces of the side portions 141-1 to 141-4 thereof, and the at least one stopper 149 may prevent the outer surface of the housing 140 from directly colliding with the cover member 300 when the housing 140 is moved in the direction perpendicular to the optical-axis direction.

Referring to FIG. 4A, an upper surface 60B of each of the corner portions 142-1 to 142-4 of the housing 140 may include a first surface 61, a second surface 62 forming a stair with the first surface 61, and a third surface 63 forming a stair with the second surface 62. For example, the second surface 62 may be lower than the first surface 61, and the third surface 63 may be lower than the second surface 62. In addition, the first surface 61 may be located closest to the center of the housing 140, the third surface 140 may be located farthest from the center of the housing 140, and the second surface 62 may be located halfway between the first surface 61 and the third surface 63.

For example, the first surface 61 of each of the corner portions 142-1 to 142-4 of the housing 140 may be lower than an upper surface 60A of each of the side portions 141-1 to 141-4 of the housing 140; however, the disclosure is not limited thereto. In another embodiment, the former may be level with or higher than the latter.

The first coupling portion 143 may be formed at the first surface 61 of each of the corner portions 142-1 to 142-4 of the housing 140, and the hole 147 may be formed in the third surface 63 of each of the corner portions 142-1 to 142-4 of the housing 140.

A guide protrusion 146 protruding from the second surface 62 and the third surface 63 may be formed on edges of the second surface 62 and the third surface 63 of each of the corner portions 142-1 to 142-4 of the housing 140. For example, a damper may be disposed on the second surface 62 and the third surface 63 of each of the corner portions 142-1 to 142-4 of the housing 140, and the guide protrusion 146 may serve to prevent overflow of the damper from the housing 140.

A hole 35B, through which the yoke 135 is exposed, may be provided in the third side portion 141-3 of the housing 140; however, the disclosure is not limited thereto. In another embodiment, the hole 35B may be omitted, and the yoke 135 may be disposed in the third side portion 141-3 of the housing 140.

The housing 140 may have a recessed portion 145 formed at a position corresponding to the projecting portion 111 of the bobbin 110. For example, the recessed portion 145 may be formed in an inner surface of at least one of the corner portions 142-1 to 142-4 of the housing 140. The recessed portion 145 may be open at an upper portion thereof, and the recessed portion 145 may have an opening formed in a side portion facing an outer surface of each corner portion of the bobbin 110.

The first magnet 130-1, the second magnet 130-2, and the third magnet 130-3 may be disposed on the housing 140 so as to be spaced apart from each other. For example, each of the first to third magnets 130-1 to 130-3 may be disposed between the bobbin 110 and the housing 140.

The first magnet 130-1, the second magnet 130-2, and the third magnet 130-3 may be disposed on the side portions of the housing 140.

The first magnet 130-1 and the second magnet 130-2 may be disposed respectively on two opposite side portions 141-1 and 141-2, among the side portions 141-1 to 141-4 of the housing 140.

For example, the first magnet 130-1 may be disposed on the first side portion 141-1 of the housing 140, and the second magnet 130-2 may be disposed on the second side portion 141-2 of the housing 140 facing the first side portion 141-1. For example, the third magnet 130-3 may be disposed on the third side portion 141-3 of the housing 140.

Since the first and second coil units 120-1 and 120-2 for AF driving are disposed on two facing side portions of the bobbin 110, no coil unit for AF driving is disposed between the bobbin 110 and the third magnet 130-3. In addition, no coil unit for AF driving is disposed between the bobbin 110 and the dummy member 11.

In addition, since third to fifth coil units 230-1 to 230-3 and the first to third magnets 130-1 to 130-3 correspond to each other for OIS driving, the second coil 230 for OIS driving is not disposed between the dummy member 11 and the base 210.

In another embodiment, the first magnet and the second magnet may be disposed on two opposite corner portions of the housing 140, the third magnet may be disposed on one of the other two opposite corner portions of the housing 140, and the dummy member may be disposed on the other of the other two opposite corner portions.

In another embodiment, a magnet installation member may be included. The magnet installation member may be provided separately from the housing 140; however, the disclosure is not limited thereto. In another embodiment, the magnet installation member may be integrally formed with the housing 140.

For example, the magnet installation member may be a frame, the frame may be coupled to the housing 140, and the magnet 130 may be installed at or coupled to the frame.

At the initial position of the AF moving unit, the magnet 130 may be disposed on the housing 140 such that at least a part of the magnet overlaps the first coil 120 in a direction parallel to a straight line that is perpendicular to the optical axis OA and extends through the optical axis OA.

Each of the first to third magnets 130-1 to 130-3 may have a polyhedral shape (e.g. a hexahedral shape). For example, the sectional shape of each of the first to third magnets 130-1 to 130-3 in the direction perpendicular to the optical axis may be a polygon, such as a triangle, a quadrangle, a pentagon, a diamond, or a trapezoid; however, the disclosure is not limited thereto.

Each of the first to third magnets 130-1 to 130-3 may be a monopolar magnetized magnet; however, the disclosure is not limited thereto. In another embodiment, each of the first to third magnets 130-1 to 130-3 may be a bipolar magnetized magnet or a quadrupole magnet having two N poles and two S poles.

The sensing magnet 180 may not overlap the first coil 120 in the optical-axis (OA) direction; however, the disclosure is not limited thereto. In another embodiment, the sensing magnet may overlap the first coil in the optical-axis direction.

The dummy member 11 may be disposed on the housing 140 so as to correspond to or to be opposite to the third magnet 130-3. The dummy member 11 may be referred to as a "weight balancing member," a "balancing member," a "weight compensation member," or a "weight member."

For example, the dummy member 11 may be disposed on the fourth side portion 141-4 of the housing 140.

The dummy member 135 may be made of a material that is not affected by a magnet or a nonmagnetic material, or may be a nonmagnetic body; however, the disclosure is not limited thereto. In another embodiment, the dummy member 11 may be a magnetic body or may include a magnetic body.

The dummy member 11 is configured to balance the weight between the three magnets 130-1 to 130-3 disposed on the housing 140.

For example, the dummy member 11 may have the same mass as the third magnet 130-3; however, the disclosure is not limited thereto. In another embodiment, the weight of the dummy member 11 may be different from the weight of the third magnet 130-3 within a range within which no error in OIS operation due to weight unbalance occurs.

The dummy member 11 may include at least one dummy 11A, 11B, and 11C. For example, the dummy member 11 may include one dummy, or may include two or more dummies.

For example, the dummy member 11 may include a first dummy 11A, a second dummy 11B, and a third dummy 11C spaced apart from each other. In another embodiment, the dummy member 11 may include at least one of the first to third dummies 11A to 11C. For example, in another embodiment, the first dummy 11A may be omitted.

For example, at least a part of the projecting portion 11 of the bobbin may be located between the second and third dummies 11B and 11C. Alternatively, for example, at least a part of the sensing magnet 180 may be located between the second and third dummies 11B and 11C.

The second and third dummies 11B and 11C may be located under the first dummy 11A.

For example, the second dummy 11B and the third dummy 11C may have a symmetrical shape, and may be disposed symmetrically based on the sensing magnet 180; however, the disclosure is not limited thereto.

The dummy member 11 may overlap the third magnet 130-3 in a direction that is perpendicular to the optical axis and extends from the third corner portion 142-3 to the fourth corner portion 142-4 of the housing 140.

For example, at least a part of the sensing magnet 180 may overlap the dummy member 11 in the optical-axis direction; however, the disclosure is not limited thereto. In another embodiment, the sensing magnet may not overlap the dummy member in the optical-axis direction.

The dummy member 11 may not overlap the second coil 230 in the optical-axis direction.

Since the dummy member 11 does not affect OIS driving, no coil unit corresponding to the dummy member is necessary.

When the dummy member 11 includes a magnetic body, the intensity of magnetism of the dummy member 11 may be less than the intensity of magnetism of the third magnet 130-3.

For example, the dummy member 11 may include tungsten, and tungsten may account for 95% or more of the total weight thereof; however, the disclosure is not limited thereto. For example, the dummy member 11 may be a tungsten alloy.

The dummy member 11 may have a polyhedral shape, such as a rectangular parallelepiped shape; however, the disclosure is not limited thereto. The dummy member may have any of various shapes. For example, the dummy member 11 may be rounded or curved at side edges thereof.

The housing 140 may have a recess 35A configured to avoid spatial interference with the sensing magnet 180 and the projecting portion 116 of the bobbin 110. For example, the recess 35A may be formed in an inner surface of the fourth side portion 141-4 of the housing 140. In addition, the recess 35A may be located between the second and third dummies 11B and 11C.

The yoke 135 may be disposed on the housing 140 so as to be adjacent to the third magnet 130-3. For example, the yoke 135 may be disposed so as to be opposite to one side surface of the third magnet 130-3.

For example, the yoke 135 may be disposed so as to be opposite to a second surface of the third magnet 130-3 opposite to a first surface of the third magnet opposite to the outer surface of the bobbin 110. For example, the yoke 135 may be disposed between the third magnet 130-3 and the side plate of the cover member 300.

In another embodiment, the yoke may be disposed so as to be opposite to the first surface of the third magnet 130-3. For example, the yoke 135 may be disposed between the third magnet 130-3 and the bobbin 110.

The yoke 135 may overlap the third magnet 130-3 in a second horizontal direction. The second horizontal direction 202 may be perpendicular to the first horizontal direction. For example, the second horizontal direction 202 may be a direction that is perpendicular to the optical axis and extends from the optical axis OA to the third magnet 130-3.

The yoke 135 may contact the third magnet 130-3; however, the disclosure is not limited thereto. In another embodiment, at least a part of the housing 140 may be disposed between the yoke 135 and the third magnet 130-3, and the yoke 135 may be spaced apart from the third magnet 130-3.

The yoke 135 may have at least one hole 135A. The hole 135A may be a through-hole. For example, the yoke 135 may include a plurality of holes spaced apart from each other.

For example, the yoke 135 may have a connection hole 135B configured to interconnect the plurality of holes spaced apart from each other.

The yoke 135 may be coupled to the third magnet 130-3 and/or the housing 140 using an adhesive, and the hole 135A and/or the connection hole 135B of the yoke 135, into which the adhesive is introduced, may serve to uniformly spread the adhesive between the yoke 135 and the third magnet 130-3 or between the yoke 135 and the housing 140.

An opening or a hole 35B, through which at least a part of the yoke 135 is exposed, may be provided in the third side portion 141-3 of the housing 140. For example, an outer surface of the yoke 135 may be exposed from an outer surface of the third side portion 141-3 of the housing 140; however, the disclosure is not limited thereto. In another embodiment, the yoke 135 may not be exposed from the outer surface of the third side portion 141-3 of the housing 140.

The yoke 135 may increase the intensity of electromagnetic force due to interaction between the fifth coil unit 230-3 and the third magnet 130-3.

In another embodiment, the yoke may be disposed under the third magnet 130-3. For example, the yoke may be disposed between the third magnet 130-3 and the circuit board 250.

Referring to FIGs. 5A and 5B, the elastic member may be coupled to the bobbin 110 and the housing 140. The elastic member may elastically support the bobbin 110 with respect to the housing 140. For example, the elastic member may include at least one of the upper elastic member 150 and the lower elastic member 160.

For example, the upper elastic member 150 may be coupled to an upper portion, an upper surface, or an upper end of the bobbin 110 and to the upper portion, the upper surface, or the upper end of the housing 140. For example, the lower elastic member 160 may be coupled to a lower portion, a lower surface, or a lower end of the bobbin 110 and to the lower portion, the lower surface, or the lower end of the housing 140.

The upper elastic member 150 may include a plurality of upper elastic members 150-1 to 150-3 conductively separated from each other. For example, the plurality of upper elastic members 150-1 to 150-3 may be disposed spaced apart from each other.

In FIG. 5A, three upper elastic members conductively separated from each other are shown; however, the number of upper elastic members is not limited thereto. In another embodiment, one or two or more upper elastic members may be provided.

At least one of the first to third upper elastic members 150-1 to 150-3 may include a first inner frame 151 coupled to the bobbin 110, a first outer frame 152 coupled to the housing 140, and a first frame connection portion 153 configured to interconnect the first inner frame 151 and the first outer frame 152. The elastic member may be referred to as a "spring" or an "elastic unit," the inner frame may be referred to as an "inner portion," and the outer frame may be referred to as an "outer portion."

For example, the first inner frame 151 of the upper elastic member 150 may be provided with a hole 151a, to which the first coupling portion 113 of the bobbin 110 is coupled; however, the disclosure is not limited thereto. For example, the hole 151a of the first inner frame 151 may have at least one incised portion, through which an adhesive permeates between the first coupling portion 113 of the bobbin 110 and the hole 151a.

The first outer frame 152 of the upper elastic member 150 may be provided with a hole 152a, to which the first coupling portion 143 of the housing 140 is coupled.

The first outer frame 152 may include a first coupling portion 71 coupled to the housing 140, a second coupling portion 72 coupled to the supporting member 220, and a connection portion 73 configured to interconnect the first coupling portion 71 and the second coupling portion 72.

The first coupling portion 71 may include at least one coupling region coupled to the housing 140 (e.g. the corner portions 142-1 to 142-4). For example, the coupling region of the first coupling portion 71 may include at least one hole 152a1 coupled to the first coupling portion 143 of the housing 140.

For example, the coupling region may have one or more holes, and each of the corner portions 142-1 to 142-4 of the housing 140 may be provided with one or more first coupling portions corresponding thereto. In the embodiment of FIG. 5A, the coupling region of the first coupling portion 71 is implemented so as to include the hole 152a; however, the disclosure is not limited thereto. In another embodiment, the coupling region may be implemented by any of various shapes sufficient to be coupled to the housing 140, such as a recess.

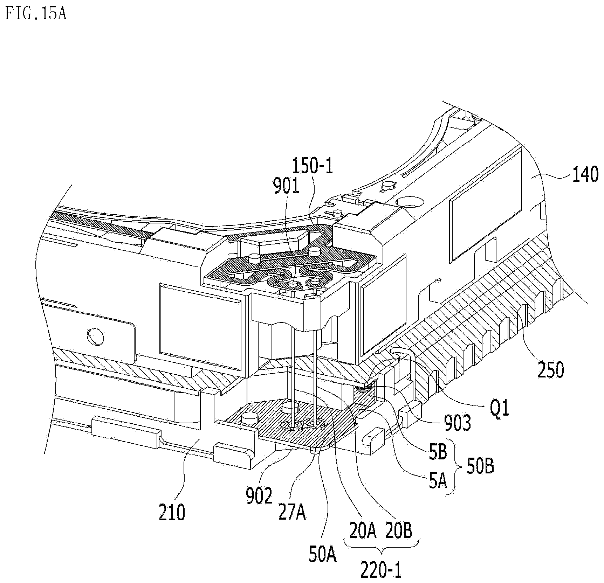

The second coupling portion 72 may have a hole 52, through which the supporting member 220 extends. One end of the supporting member 220 extending through the hole 52 may be directly coupled to the second coupling portion 72 using a conductive adhesive member or a solder 901 (see FIG. 15A), and the second coupling portion 72 and the supporting member 220 may be conductively connected to each other.

For example, the second coupling portion 72, which is a region on which the solder 901 is disposed for coupling with the supporting member 220, may include the hole 52 and a region around the hole 52.

In an embodiment in which two supporting members are disposed on one corner of the housing 140, the first outer frame 152 may include two second coupling portions 72A and 72B. For example, the second coupling portion 72 may include a 2-1 coupling portion 72A coupled to one of the two supporting members 20A and 20B and a 2-2 coupling portion 72B coupled to the other of the two supporting members 20A and 20B.

The connection portion 73 may interconnect the first coupling portion 71 and the second coupling portion 72. For example, the connection portion 73 may interconnect the second coupling portion 72 and the coupling region of the first coupling portion 71.

For example, the connection portion 73 may include a first connection portion 73A configured to interconnect the first coupling portion 71 and the 2-1 coupling portion 72A of the upper elastic member 150 and a second connection portion 73B configured to interconnect the first coupling portion 71 and the 2-2 coupling portion 72B of the upper elastic member 150.

Each of the first and second connection portions 73A and 73B may include a bent portion bent at least once or a curved portion curved at least once; however, the disclosure is not limited thereto. In another embodiment, each of the first and second connection portions may be straight.

For example, the first coupling portion 71 may contact the upper surface of each of the corner portions 142-1 to 142-4 of the housing 140, and may be supported by each of the corner portions 142-1 to 142-4 of the housing 140. For example, the second coupling portion 72 may not be supported by the upper surface of the housing 140, and may be spaced apart from the housing 140.

In addition, an empty space between the connection portion 73 and the housing 140 may be filled with a damper (not shown) in order to prevent oscillation due to vibration.

For example, the first upper elastic member 150-1 may include one first outer frame 152 coupled to one corner portion (e.g. 142-4) of the housing 140, and the second upper elastic member 150-2 may include one first outer frame 152 coupled to another corner portion (e.g. 142-2) of the housing 140.

The third second upper elastic member 150-3 may include two first outer frames coupled to other two corner portions (e.g. 142-1 and 142-3) of the housing 140.

In FIG. 5A, one first outer frame is disposed on any one corner of the housing 140; however, the disclosure is not limited thereto. In another embodiment, two first outer frames may be disposed on any one corner of the housing 140 so as to be spaced apart from each other, and each of the two first outer frames may one first coupling portion, one second coupling portion, and one connection portion configured to interconnect the first coupling portion and the second coupling portion.

A first bonding portion 41, to which one end of the first coil unit 120-1 is coupled, may be provided at one end of the first inner frame of the first upper elastic member 150-1.

A second bonding portion 42, to which one end of the second coil unit is coupled, may be provided at one end of the first inner frame of the second upper elastic member 150-2.

A third bonding portion 43, to which the other end of the first coil unit 120-1 is coupled, may be provided at one end of the first inner frame of the third upper elastic member 150-3, and a fourth bonding portion 44, to which the other end of the second coil unit 120-2 is coupled, may be provided at another end of the first inner frame of the third upper elastic member 150-3. A recess configured to guide one end and the other end of the first coil may be formed in each of the bonding portions 41 to 44.

For the first to fourth bonding portions 41 to 44, the "bonding portion" may be referred to as a pad portion, a connection terminal, a solder portion, or an electrode portion.

The first coil unit 120-1 and the second coil unit 120-2 may be connected to each other in series via the first to third upper elastic members 150-1 to 150-3.

The lower elastic member 160 may be constituted by one spring or elastic unit; however, the disclosure is not limited thereto. In another embodiment, the lower elastic member may include a plurality of springs or a plurality of elastic units spaced apart from each other.

The lower elastic member 160 may include a second inner frame 161 coupled or fixed to the lower portion, the lower surface, or the lower end of the bobbin 110, a second outer frame 162 coupled or fixed to the lower portion, the lower surface, or the lower end of the housing 140, and a second frame connection portion 163 configured to interconnect the second inner frame 161 and the second outer frame 162.

Each of the first frame connection portion 153 of the upper elastic member 150 and the second frame connection portion 163 of the lower elastic member 160 may be formed so as to be bent or curved (or crooked) at least once in order to form a predetermined pattern. The upward and/or downward movement of the bobbin 110 in the first direction may be flexibly (or elastically) supported through positional change and minute deformation of the connection portion 73 and the first and second frame connection portions 153 and 163.

The second inner frame 161 may be provided with a hole 161a, to which the second coupling portion 117 of the bobbin 110 is coupled, and the second outer frame 162 may be provided with a hole 162a, to which the second coupling portion 148 of the housing 140 is coupled.

Each of the upper elastic member 150 and the lower elastic member 160 may be constituted by a leaf spring; however, the disclosure is not limited thereto. Each of the upper elastic member and the lower elastic member may be implemented by a coil spring or the like.

In order to absorb or alleviate vibration of the bobbin 110, the lens moving apparatus 100 may further include a first damper (not shown) disposed between each of the upper elastic members 150-1 to 150-3 and the bobbin 110 (or the housing 140).

For example, the first damper may be disposed between the first frame connection portion 153 of each of the upper elastic members 150-1 to 150-3 and the bobbin 110, or may be coupled to the first frame connection portion 153 and the bobbin 110.

In addition, for example, the lens moving apparatus 100 may further include a second damper (not shown) disposed between the second frame connection portion 163 of the lower elastic member 160 and the bobbin 110 (or the housing 140).

In addition, for example, the lens moving apparatus 100 may further include a third damper (not shown) disposed between the supporting member 220 and the hole 147 of the housing 140.

In addition, for example, the lens moving apparatus 100 may further include a fourth damper (not shown) disposed on the second coupling portion 72 and one end of the supporting member 220, and may further include a fifth damper (not shown) disposed on the other end of the supporting member 220 and the terminal 27.

In addition, for example, in another embodiment, a damper (not shown) may be further disposed between the inner surface of the housing 140 and the outer surface of the bobbin 110.

The supporting member 220 may support the housing 140 so as to be movable relative to the base 210 in the direction perpendicular to the optical axis OA. The supporting member 220 may conductively connect at least one of the upper and lower elastic members 150 and 160 to the circuit board 250.

The supporting member 220 may include a plurality of supporting members 220-1 to 220-4.

For example, the supporting member 220 may include first to fourth supporting members 220-1 to 220-4 corresponding to the corner portions 142-1 to 142-4 of the housing 140.

For example, the supporting member may be disposed on each corner portion of the housing 140.

For example, two supporting members 20A and 20B may be disposed on each corner portion of the housing 140.

For example, the lens moving apparatus 100 may include a total of eight supporting members; however, the disclosure is not limited thereto. In another embodiment, one support member may be disposed on each of the corner portions of the housing 140. In another embodiment, two support members may be disposed on at least one of the corner portions of the housing 140, and one support member may be disposed on at least another of the corner portions of the housing 140.

In another embodiment, for example, two support members may be disposed on each of two corner portions of the housing 140, and one support member may be disposed on each of two corner portions of the housing 140.

For example, each of the first to fourth supporting members 220-1 to 220-4 may be disposed on a corresponding one of the first to fourth corner portions 142-1 to 142-4 of the housing 140. For example, each of the first to fourth supporting members 220-1 to 220-4 may include two supporting members 20A and 20B (or wires) spaced apart from each other.

The first to fourth supporting members 220-1 to 220-4 may be connected or coupled to the upper elastic member 150.

For example, the first supporting member 220-1 may be connected or coupled to the first upper elastic member 150-1, the second supporting member 220-2 may be connected or coupled to the second upper elastic member 150-2, and the third and fourth supporting members 220-3 and 220-4 may be connected or coupled to the third upper elastic member 150-3.

For example, the first supporting member 220-1 may be conductively connected to the first upper elastic member 150-1, the second supporting member 220-2 may be conductively connected to the second upper elastic member 150-2, and the third and fourth supporting members 220-3 and 220-4 may be conductively connected to the third upper elastic member 150-3.

For example, one end of the 1-1 supporting member 20A of the first supporting member 220-1 may be coupled to one 72A of the two second coupling portions 72A and 72B of the first outer frame 152 of the first upper elastic member 150-1. In addition, one end of the 1-2 supporting member 20B of the first supporting member 220-1 may be coupled to the other 72B of the two second coupling portions 72A and 72B of the first outer frame 152 of the first upper elastic member 150-1.

For example, one end of the 1-1 supporting member 20A of the second supporting member 220-2 may be coupled to one 72A of the two second coupling portions 72A and 72B of the first outer frame 152 of the second upper elastic member 150-2. In addition, one end of the 1-2 supporting member 20B of the second supporting member 220-2 may be coupled to the other 72B of the two second coupling portions 72A and 72B of the first outer frame 152 of the second upper elastic member 150-2.

For example, one end of the 1-1 supporting member 20A of the third supporting member 220-3 may be coupled to one 72A of the two second coupling portions 72A and 72B of the 1-1 outer frame of the third upper elastic member 150-3. In addition, one end of the 1-2 supporting member 20B of the third supporting member 220-3 may be coupled to the other 72B of the two second coupling portions 72A and 72B of the 1-1 outer frame of the third upper elastic member 150-3.

For example, one end of the 1-1 supporting member 20A of the fourth supporting member 220-4 may be coupled to one 72A of the two second coupling portions 72A and 72B of the 1-2 outer frame of the third upper elastic member 150-3. In addition, one end of the 1-2 supporting member 20B of the fourth supporting member 220-4 may be coupled to the other 72B of the two second coupling portions 72A and 72B of the 1-2 outer frame of the third upper elastic member 150-3.

In another embodiment, the upper elastic member may include four upper elastic members separated or spaced apart from each other, and each of the supporting members 220-1 to 220-4 may be coupled to two coupling portions of a corresponding one of the four upper elastic members.

Two supporting members 220-1 and 220-2, among the supporting members 220-1 to 220-4, may be conductively connected to the first coil 120. For example, the two supporting members 220-1 and 220-2 may be disposed on two corners adjacent to a side portion of the housing 140 opposite to a side portion on which the dummy member 11 is disposed. In another embodiment, the two supporting members conductively connected to the first coil 120 may be disposed on two corners selected from among the four corners of the housing 140. For example, the two supporting members conductively connected to the first coil 120 may be disposed on two corners adjacent to one side portion of the housing or two corners of the housing diagonally facing each other.

The other end of each of the supporting members 220-1 to 220-4 may be connected or coupled to a corresponding one of the terminal members 27 (27A to 27D).

Each of the supporting members 220-1 to 220-4 may be conductively connected to a corresponding one of the terminal members (27A to 27D). For example, the supporting members 220-1 to 220-4 may conductively connect the upper elastic members 150-1 to 150-3 and the terminal members 27A to 27D to each other.

For example, the first supporting member 220-1 may conductively connect the first upper elastic member 150-1 and the first terminal member 27A to each other, the second supporting member 220-2 may conductively connect the second upper elastic member 150-2 and the second terminal member 27B to each other, the third supporting member 220-3 may conductively connect the third upper elastic member 150-3 and the third terminal member 27C to each other, and the fourth supporting member 220-4 may conductively connect the third upper elastic member 150-3 and the fourth terminal member 27D to each other.

In an embodiment in which the upper elastic member includes four upper elastic members separated or spaced apart from each other, each of the first to fourth supporting members 220-1 to 220-4 may conductively connect a corresponding one of the four upper elastic members and a corresponding one of the first to fourth terminal members 27A to 27D to each other.

The first to fourth supporting members 220-1 to 220-4 may be spaced apart from the housing 140, not fixed to the housing 140, and one end of each of the first to fourth supporting members 220-1 to 220-4 may be directly connected or coupled to the second coupling portion 72 of a corresponding one of the first to third upper elastic members 150-1 to 150-3 by soldering.

In another embodiment, the terminal member 27 may be omitted, and the other end of each of the first to fourth supporting members 220-1 to 220-4 may be directly connected or coupled to the circuit board 250. For example, the other end of each of the first to fourth supporting members 220-1 to 220-4 may be directly connected or coupled to a lower surface of the circuit board 250.

In another embodiment, the other end of each of the supporting members 220-1 to 220-4 may be coupled to the base 210, and wiring or a circuit pattern configured to conductively connect the other end of each of the supporting members 220-1 to 220-4 to the circuit board 250 may be formed on the base 210.

The first coil 120 may be conductively connected to the circuit board 250 via the upper elastic member 150 and the terminal member 27.

For example, the first coil unit 120-1 and the second coil unit 120-2 may be connected to each other in series via the first to third upper elastic members 150-1 to 150-3.

One end of the first coil unit 120-1 connected in series may be connected to the first supporting member 220-1, and may be conductively connected to a first pad Q1 of the circuit board 250 via the first supporting member 220-1 and the first terminal member 27A. In addition, the other end of the first coil unit 120-1 connected in series may be connected to the second supporting member 220-2, and may be conductively connected to a second pad Q2 of the circuit board 250 via the second supporting member 220-2 and the second terminal member 27B.

For example, one driving signal may be provided to the first coil unit 120-1 and the second coil unit 120-2 via the first and second pads Q1 and Q2 of the circuit board 250.

In an embodiment in which the first and second coil units are directly connected to each other, one end of the first coil unit may be connected or coupled to the first supporting member 220-1, and may be conductively connected to the first pad Q1 of the circuit board 250 via the first terminal member 27A. In addition, one end of the second coil unit may be connected or coupled to the second supporting member 220-2, and may be conductively connected to the second pad Q2 of the circuit board 250 via the second terminal member 27B.

In another embodiment in which the first and second coil units are conductively separated from each other, the first coil unit may be conductively connected to two of the four upper elastic members separated from each other and may be conductively connected the two pads of the circuit boards 250 via two supporting members and two terminal members corresponding thereto, and a first driving signal for driving the first coil unit may be provided to the two pads. In addition, the second coil unit may be conductively connected to the other two of the four upper elastic members separated from each other and may be conductively connected to the other two pads of the circuit boards 250 via the other two supporting members and the other two terminal members corresponding thereto, and a second driving signal for driving the second coil unit may be provided to the other two pads.

The supporting member 220 may be implemented by an elastic supporting member, such as a suspension wire, a leaf spring, or a coil spring. The supporting member 220 may be made of a conductive material. For example, the supporting member 220 may be made of a metal.

Also, in another embodiment, the supporting member 220 may be integrally formed with the upper elastic member 150.

Referring to FIGs. 7A to 7C, the circuit board 250 is disposed under the housing 140 and/or the bobbin 110. Alternatively, for example, the circuit board 250 may be disposed under the lower elastic member 160.

The circuit board 250 may be disposed on an upper surface of the base 210.

For example, the circuit board 250 may include a body 252 disposed on the upper surface of the base 210 and an opening 24A formed in the body 252.

The opening 24A of the circuit board 250 may correspond to or may be opposite to at least one of the opening 25A of the bobbin 110, the opening 26A of the housing 140, and/or an opening 28A of the base 210.

When viewed from above, the shape of the body 252 of the circuit board 250 may be a shape coinciding with or corresponding to the upper surface of the base 210, such as a quadrangular shape; however, the disclosure is not limited thereto.

The circuit board 250 may include a terminal member 253 extending from the body 252. The terminal member 253 may be bent from the body 252 to a side surface of the base 210 and may then extend.

The terminal member 253 of the circuit board 250 may include a plurality of terminals 251 configured to receive electrical signals from the outside or to output electrical signals to the outside.

For example, the circuit board 250 may include two terminal members disposed on two facing sides of the body 252, among sides of the body; however, the disclosure is not limited thereto.

A driving signal may be provided to each of the first coil 120 and the second coil 230 through the plurality of terminals 251 provided at the terminal member 253 of the circuit board 250.

For example, the first and second pads Q1 and Q2 of the circuit board 250 may be conductively connected to two corresponding ones of the terminals 251 of the circuit board.

In addition, through the terminals 251 of the circuit board 250, a driving signal may be provided to the first position sensor 170, and an output signal of the first position sensor 170 may be received and output. For example, the first position sensor 170 may be conductively connected to corresponding ones of the terminals 251 of the circuit board 250.

The circuit board 250 may be an FPCB; however, the disclosure is not limited thereto. The terminals of the circuit board 250 may be directly formed on the surface of the base 210 using a surface electrode scheme or the like.

In order to avoid spatial interference with the supporting members 220-1 to 220-4, the circuit board 250 may have an escape portion 23 through which each of the supporting members 220-1 to 220-4 extends. In FIG. 7A, the escape portion 23 may be formed at each corner of the body 252 and may be a recess; however, the disclosure is not limited thereto. In another embodiment, the escape portion may be a hole or a through-hole, and the supporting member may extend through the hole or the through-hole.

In another embodiment, the circuit board 250 may have no escape portion, and the supporting members 220-1 to 220-4 may be conductively connected to the circuit pattern or the pad formed at the upper surface of the circuit board 250 via a solder or the like.

Referring to FIG. 8, the circuit board 250 may include first and second pads Q1 and Q2 coupled or connected respectively to the first and second terminal members 27A and 27B. For example, the first and second pads Q1 and Q2 may be formed at a lower surface of the body 252 of the circuit board 250; however, the disclosure is not limited thereto. In another embodiment, the first and second pads may be formed at an upper surface of the body 252. Here, the lower surface of the body 252 may be a surface facing the upper surface of the base 210, and the upper surface of the body 252 may be a surface opposite to the lower surface of the body 252.

For example, the first pad Q1 may be disposed adjacent to a first escape portion formed at one corner of the body 252, and the second pad Q2 may be disposed adjacent to a second escape portion formed at another corner of the body 252. At this time, the first escape portion may be adjacent to the first supporting member 220-1, and the second escape portion may be adjacent to the second supporting member 220-2.

The circuit board 250 may include pads P1 to P6 conductively connected to the second coil 230.

For example, the circuit board 250 may include two pads P1 and P2 conductively connected to the third coil unit 230-1, two pads P3 and P4 conductively connected to the fourth coil unit 230-2, and two pads P5 and P6 conductively connected to the fifth coil unit 230-3.

The six pads P1 to P6 conductively connected to the second coil 230 may be disposed on the lower surface of the circuit board 250.

For example, one of the two pads P1 and P2 may be disposed on a first region of the lower surface of the circuit board 250 located inside the third coil unit 230-1, and the other of the two pads P1 and P2 may be disposed on a second region of the lower surface of the circuit board 250 located inside the third coil unit 230-1. This disposition is provided for easy bonding with the coil unit. This may be equally applied to the fourth and fifth coil units.

In another embodiment, both the two pads may be located inside the coil unit of the second coil 230. In another embodiment, both pads may be located outside the coil unit of the second coil 230.

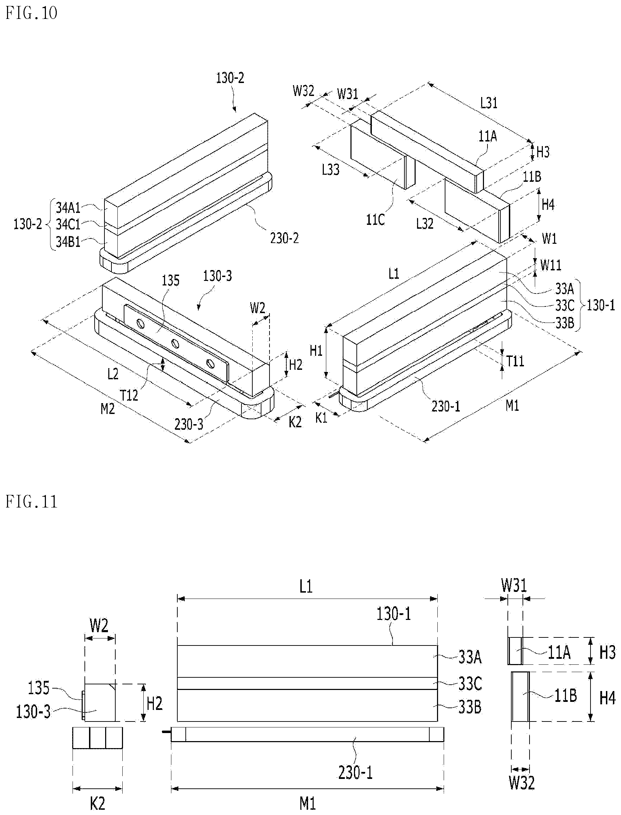

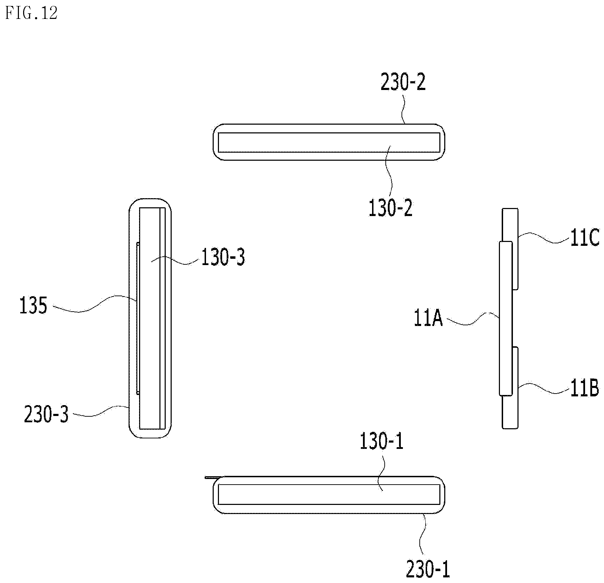

FIG. 10 is a perspective view of the first to third magnets 130-1 to 130-3, the dummy member 11, the third to fifth coil units 230-1 to 230-3, and the yoke 135, FIG. 11 is a side view of the first magnet 130-1, the third coil unit 230-1, the third magnet 130-3, the fifth coil unit 230-3, the yoke 135, and the dummy member 11 shown in FIG. 10, and FIG. 12 is a plan view of the components 130-1 to 130-3, 230-1 to 230-3, 11, and 135 shown in FIG. 10.

Referring to FIGs. 10 to 12, the first magnet 130-1 may include a first magnet portion 33A, a second magnet portion 33B, and a first nonmagnetic partition 33C disposed between the first magnet portion 33A and the second magnet portion 33B. Here, the first nonmagnetic partition 33C may be referred to as a "first partition."

For example, the first magnet portion 33A and the second magnet portion 33B may be spaced apart from each other in the optical-axis direction, and the first partition 33C may be located between the first magnet portion 33A and the second magnet portion 33B.

The first magnet portion 33A may include an N pole, an S pole, and a first interface between the N pole and the S pole. The first interface may be a portion having substantially no magnetism, may include a section having little polarity, and may be a portion that is naturally generated to form a magnet consisting of one N pole and one S pole.

The second magnet portion 33B may include an N pole, an S pole, and a second interface between the N pole and the S pole. The second interface may be a portion having substantially no magnetism, may include a section having little polarity, and may be a portion that is naturally generated to form a magnet consisting of one N pole and one S pole.

The first partition 33C may be a portion that separates or isolates the first magnet portion 33A and the second magnet portion 33B from each other and that has substantially no magnetism, and may be a portion having little polarity. For example, the first partition 33C may be a nonmagnetic material or air. The nonmagnetic partition may be referred to as a "neutral zone" or a "neutral region."

The first partition 33C is a portion that is artificially formed when the first magnet portion 33A and the second magnet portion 33B are magnetized, and the width of the first partition 33C may be greater than the width of each of the first interface and the second interface. Here, the width of the first partition 33C may be the length of the first partition 33C in a direction from the first magnet portion 33A to the second magnet portion 33B. Alternatively, the width of the first partition 33C may be the length of the first partition 33C in the optical-axis direction.

The first magnet portion 33A and the second magnet portion 33B may be disposed such that different poles face each other in the optical-axis direction.

For example, the N pole of the first magnet portion 33A and the S pole of the second magnet portion 33B may be disposed so as to face the first coil unit 120-1; however, the disclosure is not limited thereto, and reverse disposition is possible.

The second magnet 130-2 may include a third magnet portion 34A1, a fourth magnet portion 34B1, and a second nonmagnetic partition 34C1 disposed between the third magnet portion 34A1 and the fourth magnet portion 34B1. Here, the second nonmagnetic partition 34C1 may be referred to as a "second partition."

The second magnet 130-2 may have the same structure as the first magnet 130-1, and a description of the first magnet 130-1 may be applied or analogically applied to the second magnet 130-2.

The partitions 33C and 34C1 may extend in a horizontal direction or a direction perpendicular to the optical axis. The first magnets 33A and 34A1, the partitions 33C and 34C1, and the second magnets 33B and 34B1 may be sequentially disposed in the optical-axis direction. For example, the first magnets 33A and 34A1 may be disposed on the partitions 33C and 34C1, and the second magnets 33B and 34B1 may be disposed under the partitions 33C and 34C1. For example, in each of the first magnet 130-1 and the second magnet 130-2, an N pole and an S pole in the form of bipolar magnetization may be disposed in the optical-axis direction.

The third magnet 130-3 may be a monopolar magnetized magnet including a single N pole and a single S pole. For example, the N pole and the S pole of the third magnet 130-3 may face each other in the direction perpendicular to the optical axis, and the interface between the N pole and the S pole of the third magnet 130-3 may be parallel to the optical axis OA. In another embodiment, the N pole and the S pole of the third magnet 130-3 may be opposite to each other in the optical-axis direction, and the interface between the N pole and the S pole may be perpendicular to the optical axis.

In another embodiment, the third magnet 130-3 may be a bipolar magnetized magnet including a fifth magnet portion, a sixth magnet portion, and a third nonmagnetic partition disposed between the fifth magnet portion and the sixth magnet portion. At this time, the fifth magnet portion and the sixth magnet portion may be spaced apart from each other in the optical-axis direction or in the direction perpendicular to the optical axis, and the third nonmagnetic partition may be located between the fifth magnet portion and the sixth magnet portion.

When viewed from above, the first magnet 130-1 may be located inside a region of the third coil unit 230-1, and may overlap the third coil unit 230-1 in the optical-axis direction.

When viewed from above, the second magnet 130-2 may be located inside a region of the fourth coil unit 230-2, and may overlap the fourth coil unit 230-2 in the optical-axis direction.

When viewed from above, the third magnet 130-3 may be located inside a region of the fifth coil unit 230-3, and may overlap the fifth coil unit 230-3 in the optical-axis direction.

One part of the third coil unit 230-1 may simultaneously overlap a first polar part of the first magnet portion 33A, the nonmagnetic partition 33C, and a second polar part of the second magnet portion 33B of the first magnet 130-1 in the optical-axis direction. Here, the first polar part may be an N pole or an S pole, and the second polar part may be a polar part having polarity opposite to the polarity of the first polar part.

One part of the fourth coil unit 230-2 may simultaneously overlap a first polar part of the third magnet portion 34A1, the second nonmagnetic partition 34C1, and a second polar part of the fourth magnet portion 34B1 of the second magnet 130-2 in the optical-axis direction.

One part of the fifth coil unit 230-3 may overlap a first polar part of the third magnet 130-3 in the optical-axis direction, and another part of the fifth coil unit 230-3 may overlap a second polar part of the third magnet 130-3.

The first magnet 130-1 and the second magnet 130-2 may have the same length, width, and height; however, the disclosure is not limited thereto.

In addition, the third coil unit 230-1 and the fourth coil unit 230-2 may have the same length, width, and height; however, the disclosure is not limited thereto.

The lengths L1 and L2 of the first to third magnets 130-1 to 130-3 may be lengths thereof in a longitudinal direction, and the length L3 of the dummy member 11 may be a length of the dummy member 11 in the longitudinal direction.

In addition, the widths W1 and W2 of the first to third magnets 130-1 to 130-3 may be lengths thereof in a width direction, and the widths W31 and W32 of the dummy member 11 may be lengths of the dummy member 11 in the width direction. Here, the width direction may be perpendicular to the longitudinal direction, and the width of each of the components 130-1 to 130-3 and 11 may be less than the length thereof. In addition, the width of each of the components 130-1 to 130-3 and 11 may be referred to as the "thickness" of each of the components 130-1 to 130-3 and 11.

For example, the lengths L1 and L2 of the first to third magnets 130-1 to 130-3 may be lengths of the first surfaces of the first to third magnets 130-1 to 130-3 facing the bobbin 110 in the horizontal direction. In addition, the length L3 of the dummy member 11 may be a length of the first surface of the dummy member 11 facing the bobbin 110 in the horizontal direction.

In addition, for example, the widths W1, W2, W31, and W32 of the first to third magnets 130-1 to 130-3 and the dummy member 11 may be distances from the first surfaces of the components 130-1 to 130-3 and 11 facing the bobbin 110 to the second surfaces thereof opposite to the first surfaces.

In addition, for example, the heights H1, H2, H3, and H4 of the first to third magnets 130-1 to 130-3 and the dummy member 11 may be lengths of the components in the optical-axis direction. Alternatively, for example, the heights H1, H2, H3, and H4 may be lengths of the first surfaces of the components 130-1 to 130-3 and 11 facing the bobbin 110 in a vertical direction. Alternatively, for example, the heights H1, H2, H3, and H4 may be distances from the lower surfaces to the upper surfaces of the components.

Each of the lengths M1 and M2 of the third to fifth coil units 230-1 to 230-3 may be a length of a corresponding one of the first to third magnets 130-1 to 130-3 in the longitudinal direction or a direction parallel thereto.

Each of the widths K1 and K2 of the third to fifth coil units 230-1 to 230-3 may be a length of a corresponding one of the first to third magnets 130-1 to 130-3 in the width direction or a direction parallel thereto.

The heights T11 and T12 of the third to fifth coil units 230-1 to 230-3 may be lengths in the optical-axis direction, and the heights of the third to fifth coil units 230-1 to 230-3 may be equal to each other; however, the disclosure is not limited thereto.

In another embodiment, at least one of the heights of third to fifth coil units 230-1 to 230-3 may be different from the others. For example, the height T11 of the third coil unit 230-1 may be equal to the height of the fourth coil unit 230-2, and the height T12 of the fifth coil unit 230-3 may be greater than the height T11 of the third coil unit 230-1 (T12>T11).

In another embodiment, the height T12 of the fifth coil unit 230-3 may be less than the height T11 of the third coil unit 230-1.

The length L1 of the first magnet 130-1 in the longitudinal direction may be less than the length M1 of the third coil unit 230-1 in the longitudinal direction (L1<M1).

For example, the ratio (L1:M1) of the length L1 of the first magnet 130-1 in the longitudinal direction to the length M1 of the third coil unit 230-1 in the longitudinal direction may be 1:1.02 to 1:3. Alternatively, L1:M1 may be 1:1.02 to 1:1.2.

The length W1 of the first magnet 130-1 in the width direction may be less than the length K1 of the third coil unit 230-1 in the width direction (W1<K1).

For example, the ratio (W1:K1) of the length W1 of the first magnet 130-1 in the width direction to the length K1 of the third coil unit 230-1 in the width direction may be 1:1.6 to 1:5.

Alternatively, W1:K1 may be 1:1.6 to 1:2.

In addition, the length of the second magnet 130-2 in the longitudinal direction may be less than the length of the fourth coil unit 230-2 in the longitudinal direction. The length of the second magnet 130-2 in the width direction may be less than the length of the fourth coil unit 230-2 in the width direction.

The length L2 of the third magnet 130-3 in the longitudinal direction may be less than the length M2 of the fifth coil unit 230-3 in the longitudinal direction (L2<M2).

For example, the ratio (L2:M2) of the length L2 of the third magnet 130-3 in the longitudinal direction to the length M2 of the fifth coil unit 230-3 in the longitudinal direction may be 1:1.06 to 1:1.4. Alternatively, L2:M2 may be 1:1.06 to 1:1.2.

The length W2 of the third magnet 130-3 in the width direction may be less than the length K2 of the fifth coil unit 230-3 in the width direction (W2<K2).

For example, the ratio (W2:K2) of the length W2 of the third magnet 130-3 in the width direction to the length K2 of the fifth coil unit 230-3 in the width direction may be 1:1.7 to 1:3.

Alternatively, W2:K2 may be 1:1.7 to 1:1.8.

In another embodiment, W2 and K2 may be equal to each other.

For example, the length of the yoke 135 in the longitudinal direction may be less than the length L2 of the third magnet 130-3 in the longitudinal direction. In another embodiment, the length of the yoke 135 in the longitudinal direction may be equal to or greater than the length L2 of the third magnet 130-3 in the longitudinal direction.

In addition, the length of the yoke 135 in the width direction may be less than the length W2 of the third magnet 130-3 in the width direction.

In addition, for example, the height (or the length in the optical-axis direction) of the yoke 135 may be less than the height H2 of the third magnet 130-3. In another embodiment, the height (or the length in the optical-axis direction) of the yoke 135 may be equal to or greater than the height H2 of the third magnet 130-3.

In another embodiment, at least a part of the yoke may extend to at least one of a lower surface, an upper surface, or a side surface of the third magnet 130-3.

The length M2 of the fifth coil unit 230-3 in the longitudinal direction may be greater than the length M1 of the third coil unit 230-1 in the longitudinal direction and/or the length of the fourth coil unit 230-2 in the longitudinal direction (M2>M1).

For example, the ratio (M1:M2) of the length M1 of the third coil unit 230-1 in the longitudinal direction to the length M2 of the fifth coil unit 230-3 in the longitudinal direction may be 1:1.02 to 1:1.5. Alternatively, for example, M1:M2 may be 1:1.02 to 1:1.06.

The length L2 of the third magnet 130-3 in the longitudinal direction may be greater than the length L1 of the first magnet 130-1 in the longitudinal direction and/or the length of the second magnet 130-2 in the longitudinal direction (L2>L1).

For example, the ratio of L1 to L2 (L1:L2) may be 1:1.02 to 1:1.5. Alternatively, for example, L1:L2 may be 1:1.02 to 1:1.06.

Since M2>M1 and L2>L1, first electromagnetic force generated by the fifth coil unit 230-3 and the third magnet 130-3 may be greater than each of second electromagnetic force generated by the third coil unit 230-1 and the first magnet 130-1 and third electromagnetic force generated by the fourth coil unit 230-2 and the second magnet 130-2. As a result, the embodiment is capable of reducing the difference between the first electromagnetic force in the X-axis direction and the sum of the second and third electromagnetic forces in the Y-axis direction, thereby improving reliability in OIS operation.

In another embodiment, M2 = M1. Also, in another embodiment, L2 = L1.

In addition, the length K2 of the fifth coil unit 230-3 in the width direction may be greater than the length K1 of the third coil unit 230-1 in the width direction and/or the length of the fourth coil unit 230-2 in the width direction (K2>K1).

For example, the ratio of K1 to K2 (K1:K2) may be 1:1.1 to 1:1.5. Alternatively, K1:K2 may be 1:1.1 to 1:1.25.

In another embodiment, K2 and K1 may be equal to each other.

The length W2 of the third magnet 130-3 in the width direction may be greater than the length W1 of the first magnet 130-1 in the width direction and/or the length of the second magnet 130-2 in the width direction (W2>W1).

For example, the ratio of W1 to W2 (W1:W2) may be 1:1.15 to 1:1.5. Alternatively, for example, W1:W2 may be 1:1.2 to 1:1.25.

For example, W1 may be a length in a direction perpendicular to the optical axis and one surface of the first magnet 130-1 (or the second magnet 130-2), and W2 may be a length in a direction perpendicular to the optical axis and one surface of the third magnet 130-3.

Since W2>W1, the embodiment is capable of reducing the difference between the first electromagnetic force in the X-axis direction and the sum of the second and third electromagnetic forces in the Y-axis direction, thereby improving reliability in OIS operation.

In another embodiment, W1 and W2 may be equal to each other.

The third magnet 130-3 may include a portion having a width gradually decreased in a direction from the lower surface to the upper surface thereof. For example, the third magnet 130-3 may include a first portion and a second portion located on the first portion, and the width of at least a part of the second portion may be less than the width of the first portion.

The height H2 of the third magnet 130-3 may be less than the height H1 of the first magnet 130-1 and/or the height of the second magnet 130-2 (H2<H1).

For example, the ratio of H2 to H1 (H2:H1) may be 1:1. 5 to 1:2.2. Alternatively, for example, H2:H1 may be 1:1.8 to 1:1.02.

Here, H1 and H2 may be lengths of the magnets 130-1 to 130-3 in the optical-axis direction. Alternatively, H1 may be the distance from the lower surface to the upper surface of the first magnet 130-1 (or the second magnet 130-2), and H2 may be the distance from the lower surface to the upper surface of the third magnet 130-3.

That is, the length of the third magnet 130-3 in the optical-axis direction may be less than the length of the first magnet 130-1 in the optical-axis direction and/or the length of the second magnet 130-2 in the optical-axis direction.

For example, the length of the first magnet 130-1 in the optical-axis direction and the length of the second magnet 130-2 in the optical-axis direction may be equal to each other.

Since H2<H1, the embodiment is capable of reducing the weight of the lens moving apparatus, thereby reducing power consumption for AF driving and/or OIS driving.

In another embodiment, H2=H1.

The lengths L31, L32, and L33 of the dummy member 11 in the longitudinal direction may be less than the length L2 of the third magnet 130-3 in the longitudinal direction. For example, the length of each of the first to third dummies 11A, 11B, and 11C may be less than the length L2 of the third magnet.

The length W3 of the dummy member 11 in the width direction may be less than the length W2 of the third magnet 130-3 in the width direction (W3<W2). For example, the lengths W31 and W32 of the first to third dummies 11A, 11B, and 11C in the width direction may be less than the length W2 of the third magnet 130-3 in the width direction.

For example, the length L31 of the first dummy 11A in the longitudinal direction may be greater than the lengths L32 and L33 of the second dummy 11B and the third dummy 11C in the longitudinal direction; however, the disclosure is not limited thereto. In another embodiment, the former may be equal to or less than the latter.

The length L32 of the second dummy 11B in the longitudinal direction and the length L33 of the third dummy 11C in the longitudinal direction may be equal to each other; however, the disclosure is not limited thereto. In another embodiment, both may be different from each other.

In addition, the length of the second dummy 11B in the width direction and the length of the third dummy 11C in the width direction may be equal to each other; however, the disclosure is not limited thereto. In another embodiment, both may be different from each other.

Since W31<W2 and W32<W2, the embodiment is capable of securing a space (e.g. the recess 33A of the housing 140) sufficient to avoid spatial interference with the projecting portion 116 of the bobbin 110 and preventing spatial interference between the projecting portion 116 of the bobbin 110 (or the sensing magnet 180) and the dummy member 11.

In another embodiment, W31=W32=W2.

In addition, a first distance between the first magnet 130-1 and the third coil unit 230-1 in the optical-axis direction, a second distance between the second magnet 130-2 and the fourth coil unit 230-2 in the optical-axis direction, and a third distance between the third magnet 130-3 and the fifth coil unit 230-3 in the optical-axis direction may be equal to each other; however, the disclosure is not limited thereto.

In another embodiment, the third distance may be less than the first distance and/or the second distance. Since the third distance is less than the first distance and/or the second distance, it is possible to further reduce the difference between the electromagnetic force generated in the X-axis direction and the electromagnetic force generated in the Y-axis direction, compared to the case in which the first to third distances are equal to each other.

For example, the height H3 of the first dummy member 11A may be equal to or less than the height H2 of the third magnet 130-3; however, the disclosure is not limited thereto. In another embodiment, the height H3 of the first dummy member 11A may be greater than the height H2 of the third magnet 130-3.

For example, the height H4 of each of the second and third dummies 11B and 11C may be greater than the height H2 of the third magnet 130-3; however, the disclosure is not limited thereto. In another embodiment, the height H4 of each of the second and third dummies 11B and 11C may be equal to or less than the height H2 of the third magnet 130-3.

Referring to FIGs. 9A to 9C, at the initial position of the bobbin 110, the height of the upper surface of the first dummy member 11A disposed on the housing 140 may be greater than the height of the upper surface of the sensing magnet 180. In addition, the height of the upper surface of each of the second and third dummies 11B and 11C may be greater than the height of the upper surface of the sensing magnet 180.

Referring to FIG. 11, for example, the height of the upper surface of each of the second and third dummies 11B and 11C may be equal to or greater than the height of the upper surface of the third magnet 130-3; however, the disclosure is not limited thereto. In another embodiment, the height of the upper surface of each of the second and third dummies 11B and 11C may be less than the height of the upper surface of the third magnet 130-3.

The height of the lower surface of each of the second and third dummies 11B and 11C may be equal to or greater than the height of the lower surface of the third magnet 130-3; however, the disclosure is not limited thereto. In another embodiment, the height of the lower surface of each of the second and third dummies 11B and 11C may be less than the height of the lower surface of the third magnet 130-3.

For example, the height of the upper surface of each of the second and third dummies 11B and 11C may be less than the height of the upper surface of the second magnet 130-2 (or the first magnet 130-1), and may be greater than the height of the lower surface of the second magnet 130-2 (or the first magnet 130-1) .

For example, the height of the lower surface of each of the second and third dummies 11B and 11C may be equal to or greater than the height of the lower surface of the second magnet 130-2 (or the first magnet 130-1); however, the disclosure is not limited thereto. In another embodiment, the height of the lower surface of each of the second and third dummies 11B and 11C may be less than the height of the lower surface of the second magnet 130-2 (or the first magnet 130-1).

Embodiments include three magnets 130-1 to 130-3 and three coil units 230-1 to 230-3 for OIS corresponding thereto in order to reduce magnetic field interference between magnets included in adjacent lens moving apparatuses of a dual or more camera module.

Two 130-1 and 130-2 of the three magnets 130-1 to 130-3 may perform AF operation based on interaction with the first and second coil units 120-1 and 120-2 and at the same time may perform OIS operation in one of the X-axis direction and the Y-axis direction based on interaction with the third and fourth coil units 230-1 and230-2.

The other 130-3 of the three magnets 130-1 to 130-3 may perform OIS operation in the other of the X-axis direction and the Y-axis direction based on interaction with the fifth coil unit 230-3.

Each of the first and second magnets 130-1 and 130-2 may be constituted by a quadrupole magnet, whereby the embodiment is capable of increasing electromagnetic force with a corresponding one of the third and fourth coil units 230-1 and 230-2, thereby reducing current consumption necessary for OIS driving.

In addition, the embodiment is capable of increasing electromagnetic force between the third magnet 130-3 and the fifth coil unit 230-3 by the yoke 135, thereby reducing current consumption necessary for OIS driving.

In addition, the dummy member 11 may be disposed opposite the third magnet 130-3, whereby the embodiment is capable of preventing oscillation due to weight eccentricity at the time of OIS operation.

In general, first electromagnetic force generated by interaction between one magnet and one coil unit may be less than second electromagnetic force generated by interaction between two magnets and two coil units, and the difference between the first electromagnetic force and the second electromagnetic force may cause malfunction of OIS driving. However, the embodiment is capable of reducing the difference between the first electromagnetic force and the second electromagnetic force using the yoke 135, thereby preventing malfunction of OIS driving.

In addition, the number of windings of a coil at the fifth coil unit 230-3 (hereinafter referred to as a "first number of windings") may be greater than the number of windings of a coil at the third coil unit 230-1 (hereinafter referred to as a "second number of windings") and/or the number of windings of a coil at the fourth coil unit 230-2 (hereinafter referred to as a "third number of windings"), whereby the difference between electromagnetic force generated in the X-axis direction and electromagnetic force generated in the Y-axis direction may be reduced. In addition, the second number of windings and the third number of windings may be equal to each other.

In another embodiment, the first number of windings and the second number of windings (or the third number of windings) may be equal to each other.

In addition, the length L2 of the third magnet 130-3 in the longitudinal direction may be greater than the length L1 of the first magnet 130-1 in the longitudinal direction and/or the length of the second magnet 130-2 in the longitudinal direction, and the length M2 of the fifth coil unit 230-3 in the longitudinal direction may be greater than the length M1 of the third coil unit 230-1 in the longitudinal direction and/or the length of the fourth coil unit 230-2 in the longitudinal direction. As a result, the embodiment is capable of reducing the difference between the electromagnetic force generated in the X-axis direction and the electromagnetic force generated in the Y-axis direction.

In another embodiment, the third magnet 130-3 and the dummy member 11 may be omitted. In another embodiment, a ringshaped first coil configured to encompass the outer surface of the bobbin about the optical axis may be provided instead of the first coil 120.

In another embodiment, the third magnet 130-3 and the dummy member 11 may be omitted, and third and fourth magnets may be disposed at the positions of the omitted third magnet 130-3 and the omitted dummy member 11. At this time, each of the third and fourth magnets may have a structure identical or similar to the structure of the first magnet 130-1. In another embodiment, a magnet corresponding to or opposite to the first coil may be disposed on at least one of the corner portions (e.g. each corner) of the housing 140.

The base 210 is disposed under the circuit board 250. In addition, the base 210 may be disposed under the housing 140 and/or the bobbin 110.

The base 210 may have an opening 28A corresponding to the opening 25A of the bobbin 110 and/or the opening 26A of the housing 140, and may have a shape coinciding with or corresponding to the cover member 300, such as a quadrangular shape.

A prop portion or a supporting portion 255 may be provided at a region of the base 210 facing the terminal 251 of the circuit board 250. The supporting portion 255 of the base 210 may support the terminal member 253 of the circuit board 250 at which the terminal 251 is formed.

The base 210 may have an escape portion 212 formed at each corner or each corner region thereof in order to avoid spatial interference with the other end of a corresponding one of the supporting members 220-1 to 220-4. For example, the escape portion 212 may be a recess or a concave recess.

In addition, for example, referring to FIGs. 7B and 7C, an escape portion 218 configured to avoid spatial interference with the bobbin 110 and/or the lens module 400 may be formed at the upper surface of the base 210 adjacent to the opening 28A.

The upper surface 30 of the base 210 may include a first surface 30A configured to allow the body 252 of the circuit board 250 to come into contact therewith or to support the body 252 and a second surface 30B forming a first stair with the first surface 30A in the optical-axis direction.

The base 210 may further include a surface 31A (or a first stair surface or a first side surface) that connects the first surface 30A and the second surface 30B to each other. For example, the first stair surface 31A may be perpendicular to the first surface 30A; however, the disclosure is not limited thereto. In another embodiment, the first stair surface 31A may be an inclined surface, and the interior angle between the first surface 30A and the first stair surface 31A may be an obtuse angle or an acute angle. In another embodiment, the first stair surface 31A may have a stair shape, a curved shape, or a bent shape.

For example, the second surface 30B may be located lower than the first surface 30A. The second surface 30B may be closer to the lower surface of the base 210 than the first surface 30A.

For example, the second surface 30B may be located between the opening 28A of the base 210 and a side of the upper surface of the base 210.

The base 210 may include a first region on which the second coil 230 is disposed and a second region on which the second coil 230 is not disposed.

For example, the first region of the base 210 may be referred to as a "receiving portion" or a "receiving region." For example, the first region of the base 210 may be a recess. At this time, the recess may include a region open in two perpendicular directions.

For example, the first region of the base 210 may include a bottom surface located lower than the uppermost surface of the base 210. In addition, the first region of the base 210 may include a protrusion, a projecting region, or a projecting portion disposed on the bottom surface.

At least a part of the second coil 230 may be disposed in the first region of the base 210. The circuit board 250 may be disposed on the first region of the base 210, and the lower surface of the circuit board 250 may be spaced apart from the bottom surface of the first region of the base 210. The first region of the base 210 may include a protrusion, a projecting region, or a projecting portion projecting higher than the bottom surface.

For example, the protrusion, the projecting region, or the projecting portion of the first region of the base 210 may be disposed in a hollow (or a center hole) of each of the coil units 230-1 to 230-3 of the second coil 230.

For example, the base 210 may include seating portions 213A, 213B, and 213C configured to allow the second coil 230 to be disposed thereon, to be seated thereon, or to be inserted therein. The seating portions 213A, 213B, and 213C may be formed at the upper surface 30 of the base 210.

For example, each of the seating portions 213A, 213B, and 213C may be a recess depressed from the upper surface 30 of the base 210. Each of the seating portions 213A, 213B, and 213C may be referred to as a "recess" or a "seating recess." For example, each of the seating portions 213A, 213B, and 213C may include a first opening (or a first open region) open to the upper surface of the base 210 and/or a second opening (or a second open region) open to the outer surface of the base 210.

For example, the base 210 may include three seating portions 213A, 213B, and 213C. For example, the first seating portion 213A may be disposed adjacent to a first side of the upper surface 30 of the base 210, the second seating portion 213B may be disposed adjacent to a second side of the upper surface 30 of the base 210 opposite to the first side, and the third seating portion 213C may be disposed adjacent to a third side of the upper surface 30 of the base 210 located between the first side and the second side.

At least one projecting portion 215-1 to 215-3, around which the coil units of the second coil 230 are wound or to which the coil units of the second coil are fixed, may be formed at bottom surfaces of the seating portions 213A, 213B, and 213C. For example, each of the projecting portions 215-1 to 215-3 may be referred to as a "protrusion."

For example, the bottom surfaces of the seating portions 213A, 213B, and 213C may be the second surface 30B of the upper surface 30 of the base 210. The coil units 230-1 to 230-3 of the second coil 230 may be disposed on the second surface 30B of the upper surface 30 of the base 210 or the bottom surfaces of the seating portions 213A, 213B, and 213C.

For example, the first projecting portion 215-1 formed on the first seating portion 213A may include two protrusions 215A and 215B spaced apart from each other, the second projecting portion 215-2 formed on the second seating portion 213B may include one protrusion, and the third projecting portion 215-3 formed on the third seating portion 213C may include two protrusions 215A and 215B; however, the disclosure is not limited thereto. Each of the first to third projecting portions 215-1, 215-2, and 215-3 may include one or two or more protrusions.

The lengths of the two protrusions in a direction parallel to the side of the upper surface of the base 210 or in the longitudinal direction of the coil unit may be different from each other. For example, the length of the first protrusion 215A may be greater than the length of the second protrusion 215B; however, the disclosure is not limited thereto. In another embodiment, both may be equal to each other, or the former may be less than the latter.

The depth of each of the seating portions 213A, 213B, and 213C may be greater than the length of a corresponding one of the coil units 230-1 to 230-3 of the second coil 230 in the optical-axis direction. As a result, it is possible to prevent the circuit board, to which the coil units are coupled, from being loosened or spaced apart from the upper surface 30 (e.g. the first surface 30A) of the base 210, whereby it is possible to prevent reduction in the force of coupling between the circuit board 250 and the base 210.

In another embodiment, the depth of each of the seating portions 213A, 213B, and 213C may be equal to the length of a corresponding one of the coil units 230-1 to 230-3 of the second coil 230 in the optical-axis direction.

In another embodiment, the depth of each of the seating portions 213A, 213B, and 213C may be less than the length of a corresponding one of the coil units 230-1 to 230-3 of the second coil 230 in the optical-axis direction.

For example, the depth of each of the seating portions 213A, 213B, and 213C may be the distance from the first surface 30A of the upper surface of the base 210 to the bottom surface (or the second surface 30B) of a corresponding one of the seating portions 213A, 213B, and 213C. Alternatively, the depth of each of the seating portions 213A, 213B, and 213C may be a first stair between the first surface 30A and the second surface 30B.

The base 210 may include a third surface 30C forming a second stair with the first surface 30A in the optical-axis direction. The third surface 30C may be disposed on each corner of the upper surface 30 of the base 210.

The third surface 30C may be disposed adjacent to the escape portion 212 of the base 210. For example, the second stair may be the distance between the first surface 30A and the third surface 30C of the upper surface 30 of the base 210 in the optical-axis direction. For example, the second stair may be smaller than the first stair; however, the disclosure is not limited thereto. In another embodiment, the second stair may be equal to or larger than the first stair.

The base 210 may further include a surface 31B (or a second stair surface or a second side surface) that connects the third surface 30C and the first surface 30A to each other.

For example, the second stair surface 31B may be perpendicular to the first surface 30A; however, the disclosure is not limited thereto. In another embodiment, the second stair surface 31B may be an inclined surface, and the interior angle between the first surface 30A and the second stair surface 31B may be an obtuse angle or an acute angle. In another embodiment, the second stair surface 31B may have a stair shape, a curved shape, or a bent shape.

The first surface 30A, the second surface 30B, and the third surface 30C may be parallel to each other; however, the disclosure is not limited thereto. In another embodiment, at least one of the first to third surfaces may not be parallel to the others.

The base 210 may have a recess 213C formed adjacent to a fourth side of the upper surface. In addition, the base 210 may include at least one projecting portion 213D projecting from a bottom of the recess 213C. The recess 213C may be depressed from the first surface 30A of the upper surface 30 of the base 210. For example, the base 210 may be a member formed by injection molding, and the recess 213C may be formed adjacent to the fourth side of the upper surface of the base 210, whereby it is possible to prevent non-ideal increase in the thickness of the base 210 adjacent to the fourth side of the base 210. In the same manner as the recess 213C, the projecting portion 213D may serve to equalize the thickness of the base 210 formed by injection molding.

The base 210 may include a seating portion 214C configured to allow the first position sensor to be disposed thereon. The seating portion 214C may be a recess depressed from the upper surface 30 (e.g. the first surface 30A) of the base 210. The seating portion 214C may be formed adjacent to the fourth side of the upper surface of the base 210. For example, the seating portion 214C may be disposed on the upper surface of the base 210 located between the opening 28A of the base 210 and the fourth side of the upper surface of the base 210.

The base 210 may have a stair 211 configured to allow an adhesive to be coated thereon when the cover member 300 is fixed by adhesion. At this time, the stair 211 may be formed at the outer surface of the base 210, may guide the side plate 302 of the cover member 300, and may face a lower end of the side plate 302 of the cover member 300.

In addition, a seating portion (not shown) configured to allow a filter 610 of a camera module 200 to be installed thereat may be formed at the lower surface of the base 210.

A guide protrusion 217 protruding from the upper surface 30 (e.g. the first surface 30A) of the base 210 may be formed at an edge of the upper surface 30 of the base 210. The guide protrusion 217 may guide the body 252 of the circuit board 250, and may support a side surface of the body 252, thereby preventing the body 252 from being separated outside the base 210.

The second coil 230 may be disposed under the circuit board 250. The second coil 230 may be disposed between the circuit board 250 and the base 210.

For example, the second coil 230 may be disposed between the lower surface of the circuit board 250 and the upper surface 30 (e.g. the second surface 30B) of the base 210.

The second coil 230 may include a third coil unit 230-1 corresponding to or opposite to the first magnet 130-1 disposed on the housing 140, a fourth coil unit 230-2 corresponding to or opposite to the second magnet 130-2, and a fifth coil unit 230-3 corresponding to or opposite to the third magnet 130-3.

For example, the second coil 230 may include three coil units spaced apart from each other.

For example, the third coil unit 230-1 may be opposite to or may overlap the first magnet 130-1 in the optical-axis direction, the fourth coil unit 230-2 may be opposite to or may overlap the second magnet 130-2 in the optical-axis direction, and the fifth coil unit 230-3 may be opposite to or may overlap the third magnet 130-3 in the optical-axis direction.

For example, the three magnets 130-1 to 130-3 may be disposed on three of the four side portions of the housing 140, and the third to fifth coil units 230-1 to 230-3 may be disposed on three side portions or three sides of the base 210 so as to correspond to or to be opposite to the magnets 130-1 to 130-3 in the optical-axis direction.

In another embodiment, the three magnets may be disposed on three of the four corner portions of the housing 140, and the third to fifth coil units may be disposed on three corners of the base 210 so as to correspond to or to be opposite to the three magnets in the optical-axis direction.

Each of the third to fifth coil units 230-1 to 230-3 may have a closed curve shape having a hollow or a center hole, such as a ring shape, and the center hole may be formed so as to face in the optical-axis direction.

In addition, for example, each of the third to fifth coil units 230-1 to 230-3 may be a winding coil, a coil bundle, a coil body, or a coil block, not a fine pattern (FP) coil.

When the FP coil is manufactured, a sufficient number of coil turns is not secured and the number of coil turns is limited due to a problem, such as resistance. As a result, electromagnetic force due to interaction with the magnet 130 may be reduced or weakened. In the structure in which two supporting members are disposed on each corner of the housing 140, as in the embodiment, electromagnetic force sufficient to withstand restoring force of the supporting members is necessary. When the FP coil is used, it is not possible to secure sufficient electromagnetic force.

In contrast, the winding coil has no limitations in number of coil turns, and may have a number of turns equivalent to 1.5 or more times the number of turns of the FP coil. For example, under the condition of the same resistance, the winding coil may have a number of turns equivalent to 1.5 or more times the number of turns of the FP coil.

For example, the number of turns of each of the third to fifth coil units 230-1 to 230-3 may be 40 or more. For example, the number of turns of each of the third to fifth coil units 230-1 to 230-3 may be 40 to 80. Alternatively, for example, the number of turns of each of the third to fifth coil units 230-1 to 230-3 may be 45 to 60. Alternatively, for example, the number of turns of each of the third to fifth coil units 230-1 to 230-3 may be 45 to 55.

For example, the number of turns of the fifth coil unit 230-3 may be greater than the number of turns of each of the third and fourth coil unit 230-1 and 230-2. In addition, for example, the number of turns of the third coil unit 230-1 and the number of turns of the fourth coil unit 230-2 may be equal to each other.

Alternatively, for example, the sum of the number of turns of the third coil unit 230-1 and the number of turns of the fourth coil unit 230-2 may be equal to or greater than the number of turns of the fifth coil unit 230-3. In another embodiment, the sum of the number of turns of the third coil unit 230-1 and the number of turns of the fourth coil unit 230-2 may be less than the number of turns of the fifth coil unit 230-3.

For example, the number of turns of each of the third and fourth coil units 230-1 and 230-2 may be 40 to 60, and the number of turns of the fifth coil unit 230-3 may be 70 to 90.

Alternatively, for example, the number of turns of each of the third and fourth coil units 230-1 and 230-2 may be 48 to 52, and the number of turns of the fifth coil unit 230-3 may be 84 to 88.

As a result, the embodiment is capable of sufficiently securing the number of turns of the second coil 230 and securing electromagnetic force sufficient to withstand restoring force of the supporting members 220-1 to 220-4 during OIS driving.

In addition, for example, the line width of each of the third to fifth coil units 230-1 to 230-3 may be 55 micrometers to 70 micrometers. Alternatively, the line width of each of the third to fifth coil units 230-1 to 230-3 may be 60 micrometers to 65 micrometers. Alternatively, for example, the line width of each of the third to fifth coil units 230-1 to 230-3 may be 60 micrometers to 63 micrometers.

For example, the third coil unit 230-1 and the fourth coil unit 230-2 may be disposed so as to face each other in a direction from the first magnet 130-1 to the second magnet 130-2.

In addition, for example, each of the third coil unit 230-1 and the fourth coil unit 230-2 may not overlap the fifth coil unit 230-3 in the direction from the first magnet 130-1 to the second magnet 130-2.

For example, the third coil unit 230-1 may be disposed on, seated on, or coupled to the first seating portion 213A of the base 210, the fourth coil unit 230-2 may be disposed on, seated on, or coupled to the second seating portion 213B of the base 210, and the fifth coil unit 230-3 may be disposed on, seated on, or coupled to the third seating portion 213C of the base 210.

For example, at least a part of the second coil 230 may be disposed between the plurality of protrusions 215A and 215B. For example, at least a part of the coil unit (e.g. 230-1 and 230-2) may be disposed between the plurality of protrusions 215A and 215B.

The first projecting portion 215-1 may be coupled to, inserted into, or disposed in the hollow (or the center hole) of the third coil unit 230-1. The second projecting portion 215-2 may be coupled to, inserted into, or disposed in the hollow (or the center hole) of the fourth coil unit 230-2. The third projecting portion 215-3 may be coupled to, inserted into, or disposed in the hollow (or the center hole) of the fifth coil unit 230-3.

For example, the height of each of the projecting portions 215-1 to 215-3 may be equal to or less than the height of the upper surface or the upper end of the second coil 230 (or the coil units 230-1 to 230-3).

For example, the height of each of the projecting portions 215-1 to 215-3 may be equal to or less than the length of a corresponding one of the coil units 230-1 to 230-3) in the optical-axis direction. For example, the heights of the projecting portions 215-1 to 215-3 may be the lengths of the projecting portions 215-1 to 215-3 in the optical-axis direction.

For example, the upper surface of each of the projecting portions 215-1 to 215-3 may be lower than or level with the first surface 30A of the upper surface 30 of the base 210. The reason for this is that, if the height of each of the projecting portions 215-1 to 215-3 is higher than the first surface of the upper surface of the base 210, the lower surface of the circuit board 250 and the first surface 30A of the upper surface of the base 210 may be loosened or spaced apart from each other.

The third to fifth coil units 230-1 to 230-3 may be fixed or attached to the lower surface of the circuit board 250.

For example, the third coil unit 230-1 may be disposed adjacent to a first side of the lower surface of the circuit board 250 or a first side surface of the circuit board 250. The fourth coil unit 230-2 may be disposed adjacent to a second side of the lower surface of the circuit board 250 or a second side surface of the circuit board 250. The fifth coil unit 230-3 may be disposed adjacent to a third side of the lower surface of the circuit board 250 or a third side surface of the circuit board 250. For example, the first side (or the first side surface) and the second side (or the second side surface) of the lower surface of the circuit board 250 may be located opposite to each other, and the third side (or the third side surface) of the lower surface of the circuit board 250 may be located between the first side (or the first side surface) and the second side (or the second side surface).

For example, the third coil unit 230-1 may be disposed on a first region between the first side (or the first side surface) of the lower surface of the circuit board 250 and the opening 24A of the circuit board 250, the fourth coil unit 230-2 may be disposed on a second region between the second side (or the second side surface) of the lower surface of the circuit board 250 and the opening 24A of the circuit board 250, and the fifth coil unit 230-3 may be disposed on a third region between the third side (or the third side surface) of the lower surface of the circuit board 250 and the opening 24A of the circuit board 250.

The third coil unit 230-1 may be disposed parallel to the first side (or the first side surface) of the lower surface of the circuit board 250, the fourth coil unit 230-2 may be disposed parallel to the second side (or the second side surface) of the lower surface of the circuit board 250, and the fifth coil unit 230-3 may be disposed parallel to the third side (or the third side surface) of the lower surface of the circuit board 250.

The circuit board 250 may include pads P1 to P6 conductively connected to the third to fifth coil units 230-1 to 230-3.

The lens moving apparatus 100 may further include a second position sensor 240 for OIS feedback driving. The second position sensor 240 may include a first sensor 240A and a second sensor 240B.

The first sensor 240A and the second sensor 240B may be disposed between the circuit board 250 and the base 210. For example, the first sensor 240A and the second sensor 240B may be disposed between the lower surface of the circuit board 250 and the upper surface 30 of the base 210.

Each of the first sensor 240A and the second sensor 240B may be a Hall sensor, and any sensor capable of sensing the intensity of a magnetic field may be used. For example, each of the first and second sensors 240A and 240B may be implemented by a position sensor, such as a Hall sensor, alone or in the form of a driver IC including a Hall sensor.

For example, the first sensor 240A may be disposed in the first seating portion 213A of the base 210, and the second sensor 240B may be disposed in the third seating portion 213C of the base 210.

For example, a space 214A may be formed between the first protrusion 215A and the second protrusion 215B located in the first seating portion 213A, and the first sensor 240A may be disposed between the first protrusion 215A and the second protrusion 215B of the first seating portion 213A.

For example, a space 214B may be formed between the first protrusion 215A and the second protrusion 215B located in the third seating portion 213C, and the second sensor 240B may be disposed between the first protrusion 215A and the second protrusion 215B of the third seating portion 213C.

In another embodiment, the first sensor may be disposed on a seating portion formed separately from the first seating portion while being spaced apart therefrom, and the second sensor may be disposed on a seating portion formed separately from the second seating portion while being spaced apart therefrom.

For example, the first sensor 240A may be disposed in the center hole of the third coil unit 230-1, and the second sensor 240B may be disposed in the center hole of the fifth coil unit 230-3.

Referring to FIG. 8, each of the first to third coil units 230-1 to 230-3 may include two straight portions 57A and 57B, 58A and 58B, or 59A and 59B, a first curved portion 57C, 58C, or 59C that connects one end of each of the two straight portions to each other, and a second curved portion 57D, 58D, or 59D that connects the other ends of the two straight portions to each other.

The first pad P1 of the circuit board 250 and the first sensor 240A may be disposed in the center hole of the third coil unit 230-1. The first pad P1 may be located adjacent to the first curved portion 57C, which is one of the first and second curved portions 57C and 57D of the third coil unit 230-1, and the first sensor 240A may be located adjacent to the second curved portion 57D, which is one of the first and second curved portions 57C and 57D of the third coil unit 230-1. In addition, the second pad P2 of the circuit board 250 may be located outside the center hole of the third coil unit 230-1, and may be located adjacent to the first curved portion 57C, which is one of the first and second curved portions 57C and 57D of the third coil unit 230-1. In another embodiment, the first pad and the first sensor may be located contrary to the above.

The fifth pad P5 of the circuit board 250 and the second sensor 240B may be disposed in the center hole of the fifth coil unit 230-3. The second sensor 240B may be located adjacent to the first curved portion 58C, which is one of the first and second curved portions 58C and 58D of the fifth coil unit 230-3, and the fifth pad P5 may be located adjacent to the second curved portion 58D, which is one of the first and second curved portions 58C and 58D of the fifth coil unit 230-3. In addition, the sixth pad P6 of the circuit board 250 may be located outside the center hole of the fifth coil unit 230-3, and may be located adjacent to the second curved portion 58D, which is one of the first and second curved portions 58C and 58D of the fifth coil unit 230-3. In another embodiment, the fifth pad and the second sensor may be located contrary to the above.

The first curved portion 57C of the third coil unit 230-1 and the first curved portion 58C of the fifth coil unit 230-3 may be located adjacent to each other.

The third pad P3 of the circuit board 250 may be located in the center hole of the fourth coil unit 230-2, and the third pad P3 may be located adjacent to the second curved portion 59D, which is one of the first and second curved portions 59C and 59D of the fourth coil unit 230-2. The fourth pad P4 of the circuit board 250 may be located outside the center hole of the fourth coil unit 230-2, and may be located adjacent to the second curved portion 59D, which is one of the first and second curved portions 59C and 59D of the fourth coil unit 230-2.

The first curved portion 59C of the fourth coil unit 230-2 may be located adjacent to the second curved portion 58D of the fifth coil unit 230-3.

The first sensor 240A may be disposed so as to be opposite to or to overlap the first magnet 130-1 in the optical-axis direction. For example, the first sensor 240A may not overlap the second coil 230, e.g. the third coil unit 230-1, in the optical-axis direction.

The second sensor 240B may be disposed so as to be opposite to or to overlap the third magnet 130-3 in the optical-axis direction. For example, the second sensor 240B may not overlap the second coil 230, e.g. the fifth coil unit 230-3.

The first sensor 240A and the second sensor 240B may be coupled or attached to the lower surface of the circuit board 250 using a solder or a conductive adhesive member. For example, the first sensor 240A and the second sensor 240B may be conductively connected to the circuit board 250. For example, the first sensor 240A and the second sensor 240B may be conductively connected to the terminals 251 of the circuit board 250.

For example, driving signals may be provided to the first sensor 240A and the second sensor 240B through the terminals 251 of the circuit board 250, and a first output of the first sensor 240A and a second output of the second sensor 240B may be output through the terminals 251 of the circuit board 250.

A controller 830 of the camera module 200 or a controller 780 of a portable terminal 200A may sense or detect displacement of the OIS moving unit using the first output of the first sensor 240A and the second output of the second sensor 240B.

For example, the first sensor 240A may sense the intensity of a magnetic field of the first magnet 130-1 and may output the first output, and the second sensor 240B may sense the intensity of a magnetic field of the third magnet 130-3 and may output the first output.

The first sensor 240A and the second sensor 240B may sense displacement of the OIS moving unit in the direction perpendicular to the optical axis OA. Here, the OIS moving unit may include the AF driving unit and the components mounted to the housing 140.

For example, the "OIS moving unit" may include the AF moving unit and the housing 140, and may further include the first to third magnets 130-1 to 130-3, the dummy member 11, and the yoke 135 depending on embodiments.

The OIS moving unit (e.g. the housing 140) may be moved in the direction perpendicular to the optical axis, such as the x-axis direction and/or the y-axis direction, by interaction between the first to third magnets 130-1 to 130-3 and the third to fifth coil units 230-1 to 230-3, whereby handshake compensation may be performed.

The base 210 may include side portions and corner portions (or corners). For example, the base 210 may include four side portions and four corner portions. The seating portions 213A to 213C may be provided at three of the four side portions of the base 210, and the recess 213D may be formed in the other one side portion thereof.

The corner portions of the base 210 may correspond to or may be opposite to the corner portions 142-1 to 142-4 of the housing 140 in the optical-axis direction.

The escape portion 212 may be formed at each of the corner portions of the base 210, and the third surface 30C may be formed thereat. For example, the third surface 30C and the second stair surface 31B of the base 210 may form a "stair portion" configured to allow the terminal member 27 to be disposed thereon.

For example, at least one protrusion or coupling protrusion 19 protruding in a direction from the lower surface to the upper surface of the base 210 may be formed at the third surface 30C of the base 210. In FIGs. 7B and 7C, two coupling protrusions 19A and 19B spaced apart from each other are formed at the third surface 30C; however, the disclosure is not limited thereto. In another embodiment, the number of coupling protrusions may be one or more.

For example, in order to avoid spatial interference with coupled or bonded portions between the supporting members 220-1 to 220-4 and the terminal member 27, the width of the concave recess 212, the diameter of the concave recess, or the distance between inner surfaces of the concave recess 212 that face each other may be increased in a direction from the center of the base 210 to the corner portion of the base 210; however, the disclosure is not limited thereto.

The concave recess 212 may be formed through the third surface 30C of the base 210, and the concave recess 212 may have an opening open to the outer surface of the base 210.

The terminal member 27 may be disposed on the third surface 30C of the base 210.

For example, the concave recess 212 may expose a solder 902 configured to couple a lower surface of the terminal member 27 and the supporting member 220 to each other from the lower surface of the base 210.

In order to avoid spatial interference between the solder 902 (see FIG. 15A) and the base 210, the concave recess 212 may overlap coupling portions 81 and 82 of the terminal member 27 and the solder 902 in the optical-axis direction.

For coupling with coupling holes 51A and 51B of the terminal member 27, the height of the coupling protrusion 19 of the base 210 may be greater than the length or thickness of the terminal member 27 in the optical-axis direction. In another embodiment, the height of the coupling protrusion 19 may be equal to or less than the length or thickness of the terminal member 27 in the optical-axis direction.

In addition, the height of the coupling protrusion 19 of the base 210 may be less than the second stair between the first surface 30A and the third surface 30C (or the distance in the optical-axis direction). In another embodiment, the height of the coupling protrusion 19 may be equal to the second stair between the first surface and the third surface (or the distance in the optical-axis direction).

The coupling protrusion 19 of the base 210 may be located between the coupling portions 81 and 82 of the terminal member 27 and the second stair surface 31B; however, the disclosure is not limited thereto.

A guide protrusion 7A configured to guide and support the outer surface of the terminal member 27 may be formed at an edge of the third surface 30C of the base 210. For example, an upper surface of the guide protrusion 7A may be higher than the third surface 30C and may be lower than or level with the first surface 30A.

The first position sensor 170 may be disposed between the base 210 and the circuit board 250. For example, the first position sensor 170 may be disposed between the upper surface of the base 210 and the lower surface of the circuit board 250. For example, the first position sensor 170 may be disposed between the first surface 30A of the upper surface 30 of the base 210 and the lower surface of the circuit board 250.

The first position sensor 170 may be mounted on, connected to, or coupled to the lower surface of the circuit board 250. For example, the first position sensor 170 may be disposed in the seating portion 214C of the base 210.

The first position sensor 170 may be conductively connected to the circuit board 250. For example, the first position sensor 170 may be conductively connected to the terminals 251 of the circuit board 250.

At least a part of the first position sensor 170 may be opposite to or may overlap the sensing magnet 180 in the optical-axis direction.

The bobbin 110 may be moved in the optical-axis direction by interaction between the first and second coil units 120-1 and 120-2 and the first and second magnets 130-1 and 130-2, and the first position sensor 170 may sense the intensity of a magnetic field of the sensing magnet 180 and may output an output signal based on the result of sensing. That is, the first position sensor 170 may serve to sense displacement of the AF moving unit (e.g. the bobbin 110) in the optical-axis direction.

The first position sensor 170 may be implemented by a position sensor, such as a Hall sensor, alone or in the form of a driver integrated circuit (IC) including a Hall sensor.

When the first position sensor 170 is implemented by a Hall sensor alone, the first position sensor 170 may include two input terminals and two output terminals conductively connected to the circuit board 250. The first position sensor 170 may receive a driving signal from the circuit board 250, and output of the first position sensor 170 may be transmitted to the circuit board 250.

When the first position sensor 170 is a driver IC including a Hall sensor, the first position sensor may include one terminal for a clock signal, one terminal for a data signal, two terminals for a power signal, and two terminals configured to provide a driving signal to the first coil 120, and these six terminals may be conductively connected to the circuit board 250.

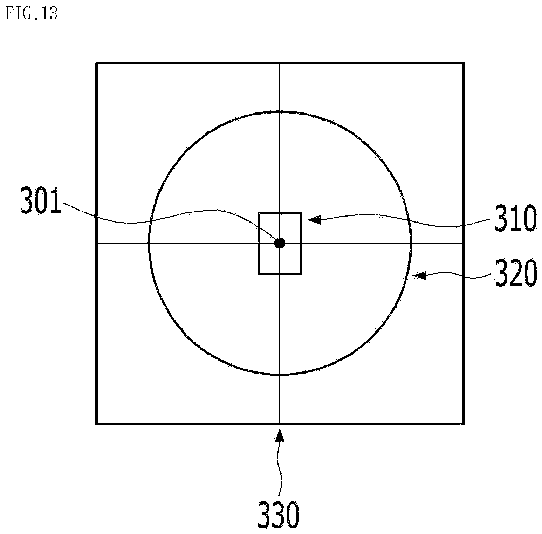

FIG. 13 is a view illustrating the relationship between the stroke range of the OIS moving unit according to the embodiment in the direction perpendicular to the optical axis, the size of the sensing magnet 180, and the disposition of the first position sensor 170.

310 may be a sensing element or a sensing region of the first position sensor 170 configured to sense the intensity of a magnetic field of the sensing magnet 180. 320 may be the stroke range of the OIS moving unit. 330 may be a region on which the sensing magnet 180 is disposed, and the region is shown as a square in FIG. 13; however, the disclosure is not limited thereto, and the region may be shown as a circle, a polygon, or an oval depending on the shape of the sensing magnet 180.

Referring to FIG. 13, in order to improve sensitivity of the first position sensor 170, the sensing element 310 of the first position sensor 170 may overlap the sensing magnet 180 in the optical-axis direction. For example, FIG. 13 shows disposition of the sensing magnet 180 and the first position sensor 170 at the initial position of the OIS moving unit.

At the initial position of the OIS moving unit, the sensing element 310 of the first position sensor 170 may overlap the sensing magnet 180 in the optical-axis direction.

For example, at the initial position of the OIS moving unit, the sensing element 310 of the first position sensor 170 may overlap the center 311 or the central region of the sensing magnet 180 in the optical-axis direction or may be aligned with the center 311 of the sensing magnet 180; however, the disclosure is not limited thereto.

The first position sensor 170 is disposed on a stationary unit (e.g. the circuit board 250 and the base 210), and the sensing magnet 180 is disposed on the OIS moving unit. When the OIS moving unit is moved relative to the stationary unit in the direction perpendicular to the optical axis, therefore, alignment or relative positional relationship between the sensing magnet 180 and the first position sensor 170 in the optical-axis direction may be changed, whereby sensitivity of the first position sensor 170 may be reduced or sensitivity of the first position sensor 170 may be affected.

The stroke range 320 of the OIS moving unit in the direction perpendicular to the optical axis may overlap the sensing magnet 180 in the optical-axis direction, whereby it is possible to prevent reduction in sensitivity of the first position sensor 170 due to movement of the OIS moving unit in the direction perpendicular to the optical axis.

For example, the stroke range 320 of the OIS moving unit may be a circle having the maximum stroke of the OIS moving unit as the radius. The maximum stroke of the OIS moving unit may be the maximum stroke of the OIS moving unit in any one direction perpendicular to the optical axis (e.g. a +X-axis direction or a +Y-axis direction) at the initial position of the OIS moving unit.

That is, even when the OIS moving unit is moved in the direction perpendicular to the optical axis, the state in which the first position sensor 170 and the sensing magnet 180 at least partially overlap each other in the optical-axis direction may be maintained. For example, the state in which the sensing element of the first position sensor 170 and the sensing magnet 180 overlap each other in the optical-axis direction may be maintained within displacement of the OIS moving unit in the direction perpendicular to the optical axis.

In addition, the sensing magnet 180 may have a size capable of covering the stroke range 320 of the OIS moving unit.

For example, the sectional area of the sensing magnet 180 in the direction perpendicular to the optical axis may be greater than the area of the stroke range 320 of the OIS moving unit. In another embodiment, the sectional area of the sensing magnet 180 in the direction perpendicular to the optical axis may be equal to the stroke range of the OIS moving unit.

The OIS moving unit may droop (or move) in the direction of gravity due to the effect of gravity, and resolution of the camera module may be reduced due to such drooping (or movement). As the weight of the OIS moving unit is increased due to an increase in size of the lens, drooping of the OIS moving unit in the direction of gravity due to the effect of gravity may further increased, whereby resolution of the camera module may be further reduced.

Since the first position sensor 170 is disposed on the stationary unit in the embodiment, it is possible to automatically compensate or correct movement (or drooping) of the AF moving unit caused by movement (or drooping) of the OIS moving unit due to the effect of gravity.

In another embodiment, the first position sensor 170 may be disposed on the housing 140 so as to correspond to the sensing magnet 180, not on the base 210.

In another embodiment, the sensing magnet may be disposed on the housing, and the first position sensor may be disposed on the bobbin 110.

A magnetic field may be generated at the second coil 230 to which a driving signal is provided for OIS driving. In order to improve accuracy of the first position sensor 170, it is preferable for the first position sensor 170 to be spaced apart from the second coil 230 so as to be less affected by the magnetic field of the second coil 230.

In the embodiment, in order to reduce the effect of the magnetic field of the second coil 230, the first position sensor 170 may be disposed on one region of the upper surface of the base 210 on which the third to fifth coil units 230-1 to 230-3 are not disposed.

For example, the third coil unit 230-1 may be disposed on a first region of the upper surface of the base 210 adjacent to the first side of the upper surface of the base 210 (or a first outer surface of the base 210), the fourth coil unit 230-2 may be disposed on a second region of the upper surface of the base 210 adjacent to the second side of the upper surface of the base 210 (or a second outer surface of the base 210), and the fifth coil unit 230-3 may be disposed on a third region of the upper surface of the base 210 adjacent to the third side of the upper surface of the base 210 (or a third outer surface of the base 210). For example, the first position sensor 170 may be disposed on a fourth region of the upper surface of the base 210 adjacent to the fourth side of the upper surface of the base 210 (or a fourth outer surface of the base 210).

The first region (the first side or the first outer surface) and the second region (the second side or the second outer surface) of the base 210 may be located opposite to each other, and the third region (the third side or the third outer surface) and the fourth region (the fourth side or the fourth outer surface) of the base 210 may be located opposite to each other.

The terminal member 27 may be disposed on the base 210. The terminal member 27 may be coupled or connected to the other end of the supporting member 220. The terminal member 27 may be conductively connected to the supporting member 220, and may be conductively connected to the circuit board 250. The terminal member 27 may conductively connect the supporting member 220 and the circuit board 250 to each other.

The terminal member 27 may be located between the first surface 30A and the third surface 30C of the upper surface of the base 210.

For example, the upper surface of the terminal member 27 may be located so as to be higher than the lower surface of the base 210 and to be lower than the first surface 30A of the upper surface 30 of the base 210. For example, the upper surface of the terminal member 27 may be located so as to be higher than the third surface 30C of the upper surface of the base 210 and to be lower than the first surface 30A of the upper surface 30 of the base 210.

For example, the lower surface of the terminal member 27 may be located so as to be higher than the lower surface of the base 210 and to be lower than the first surface 30A of the upper surface 30 of the base 210. For example, the lower surface of the terminal member 27 may be located so as to be higher than the third surface 30C of the upper surface of the base 210 and to be lower than the first surface 30A of the upper surface 30 of the base 210.

Referring to FIG. 9D, for example, a lower surface of a body 50A of the terminal member 27 may be located lower than the lower surface of the coil unit (e.g. 230-2) of the second coil 230. For example, an upper surface of the body 50A of the terminal member 27 may be located lower than the lower surface of the coil unit (e.g. 230-2) of the second coil 230.

In another embodiment, for example, the lower surface (or the upper surface) of the body 50A of the terminal member 27 may be may be located in the same plane as the lower surface of the coil unit (e.g. 230-2) of the second coil 230.

In another embodiment, for example, the lower surface (or the upper surface) of the body 50A of the terminal member 27 may be may be located higher than the lower surface of the coil unit (e.g. 230-2) of the second coil 230.

The terminal member 27 may include at least one terminal. For example, the terminal member 27 may include a plurality of terminals 27A to 27D spaced apart from each other.

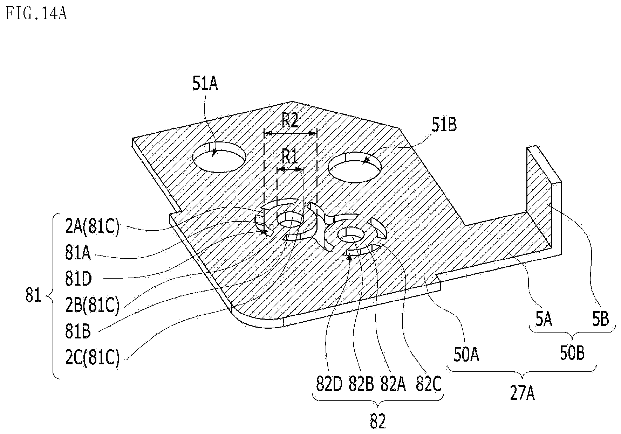

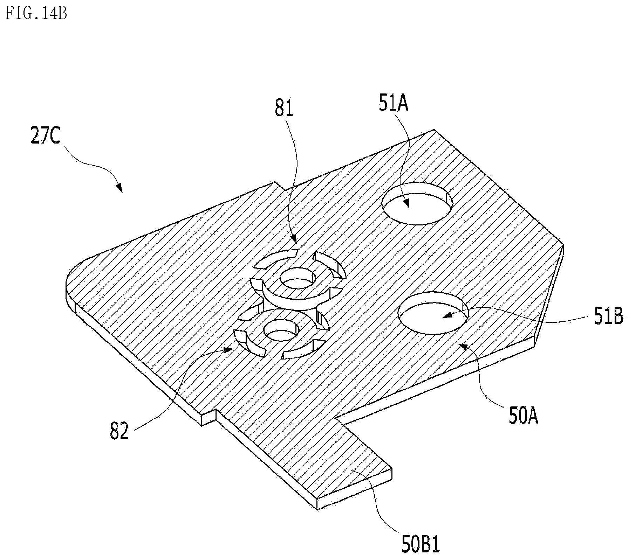

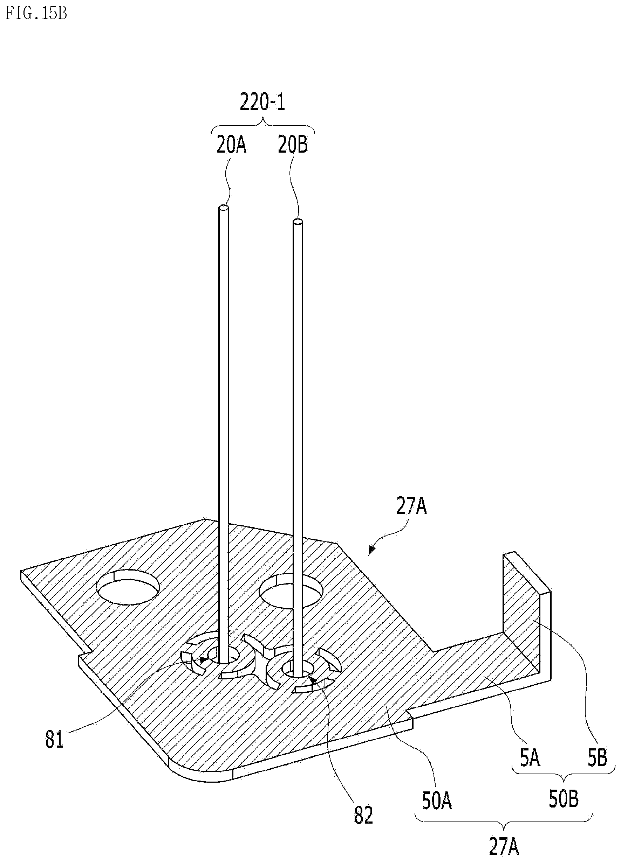

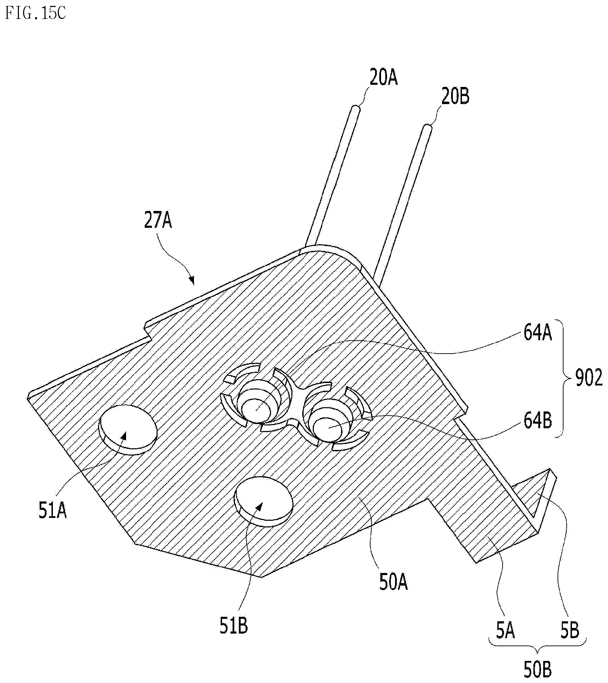

FIG. 14A shows an embodiment of the first terminal 27A of the terminal member 27, FIG. 14B shows an embodiment of the third terminal 27C of the terminal member 27, FIG. 15A is a partial perspective view of the lens moving apparatus 100 according to the embodiment, FIG. 15B is a coupled perspective view of the first terminal and the first supporting member 220-1, and FIG. 15C is a coupled perspective view of the first terminal 27A, the first supporting member 220-1, and the solder 902.

Referring to FIGs. 14A to 15C, the first terminal 27A may include a body 50A coupled to the supporting member 220-1 and an extension portion 50B extending from the body 50A.

One end of the extension portion 50B may be conductively connected to the circuit board 250. For example, one end of the extension portion 50B may be conductively connected to the first pad Q1 of the circuit board 250 using a solder or a conductive adhesive member. An extension portion 50B of the second terminal 27B may be conductively connected to the second pad Q2 of the circuit board 250.

The body 50A may be disposed on the third surface 30C of the base 210. The body 50A may be located lower than the circuit board 250. For example, the upper surface of the body 50A may be located lower than the lower surface of the circuit board 250.

When compared to a comparative example in which the supporting member is coupled to the circuit board using a solder, etc., the upper surface of the body 50A coupled to the supporting member 220-1 is located lower than the lower surface of the circuit board 250 in the embodiment, whereby it is possible to increase the length of the supporting member 220 in the optical-axis direction. As the length of the supporting member 220 is increased, resistance of the supporting member may be increased, and the intensity of current that flows in the supporting member 220 may be decreased. As a result, the embodiment is capable of reducing power consumption and to prevent lowering in reliability of OIS driving due to reduction in diameter of an OIS wire necessary to reduce power consumption.

The body 50A may include coupling regions 81A and 82A configured to be coupled to the supporting member 220 and first holes 81B and 82B formed respectively in the coupling regions 81A and 82A. The coupling regions 81A and 82A may be regions of the body 50A to which the supporting member 220-1 and the solder are coupled.

The first holes 81B and 82B may be through-holes. The other end of the supporting member 220-1 may extend through the first holes 81B and 82B, and the other end of the supporting member 220-1 that has extended through the first holes 81B and 82B may be coupled to lower portions or lower surfaces of the coupling regions 81A and 82A using the solder 901 or the conductive adhesive.

The diameter R1 of the first holes 81B and 82B may be greater than the diameter of the supporting member 220-1.

For example, the diameter (or the thickness) of the 1-1 supporting member 20A may be 40 micrometers to 100 micrometers. Alternatively, for example, the diameter (or the thickness) of the 1-1 supporting member 20A may be 50 micrometers to 70 micrometers. Alternatively, for example, the diameter (or the thickness) of the 1-1 supporting member 20A may be 50 micrometers to 60 micrometers.

The diameter R1 of the first holes 81B and 82B may be 0.15 mm to 0.3 mm. Alternatively, for example, the diameter R1 of the first holes 81B and 82B may be 0.2 mm to 0.25 mm. Alternatively, for example, the diameter R1 of the first holes 81B and 82B may be 0.15 mm to 0.2 mm.

In FIG. 14A, the shape of the coupling regions 81A and 82A may be a circle; however, the disclosure is not limited thereto. In another embodiment, the shape of the coupling regions may be an oval or a polygon (e.g. a triangle or a quadrangle).

The diameter R2 of the coupling regions 81A and 82A may be greater than the diameter R1 of the first holes 81B and 82B. For example, the coupling regions 81A and 82A may have an area or a diameter sufficient to allow the solder 901 and the supporting member 220-1 to be well coupled thereto.

In addition, the body 50A may include at least one second hole 81D and 82D formed around the coupling regions 81A and 82A. For example, the body 50A may include at least one second hole 81D and 82D formed so as to encompass the coupling regions 81A and 82A.

For example, the body 50A may include a plurality of second holes formed so as to encompass the coupling regions 81A and 82A, and the plurality of second holes 81D and 82D may be spaced apart from each other.

In addition, the plurality of second holes 81D and 82D may be spaced apart from the first holes 81B and 82B.

The at least one second hole 81D and 82D may serve to allow a solder to be mainly formed on only the coupling regions 81A and 82A due to interface tension (e.g. surface tension) at edges of the coupling regions 81A and 82A during soldering.

In addition, the coupling regions 81A and 82A must be heated for soldering, and transmission of heat from the coupling regions 81A and 82A to the other region of the body 50A may be inhibited or interrupted by the at least one second hole 81D and 82D, whereby the solder due to soldering may not be formed on the other region of the body 50A. As a result, the at least one second hole 81D and 82D may improve solderability of the solder 902 (64A and 64B).

In addition, the body 50A may include supporting portions 81C and 82C located between the plurality of second holes 81D and 82D so as to support the coupling regions 81A and 82A. The supporting portions 81C and 82C may be referred to as "connection portions" or "bridges."

For example, each of the supporting portions 81C and 82C may include a plurality of supporting portions 2A to 2C spaced apart from each other.

For example, the coupling portion of the first terminal 27A may include a first coupling portion 81 coupled to the 1-1 supporting member 20A of the first supporting member 220-1 and a second coupling portion 82 coupled to the 1-2 supporting member 20B.

Each of the first and second coupling portions 81 and 82 may include the coupling regions 81A and 82A and the first holes 81B and 82B. In addition, each of the first and second coupling portions 81 and 82 may include the plurality of second holes 81D and 82D and the supporting portions 81C and 82C.

The body 50A may include at least one coupling hole 51A and 51B or holes configured to be coupled to the coupling protrusion 19 of the base 210. For example, the coupling holes 51A and 51B may be through-holes.

For example, the body 50A may include two coupling holes 51A and 51B configured to be coupled to the two coupling protrusion 19A and 19B of the base 210; however, the number of coupling holes is not limited thereto, and the number of coupling holes may be one or more. The coupling protrusion 19A and 19B may be inserted into the coupling holes 51A and 51B or may extend through the coupling holes 51A and 51B.

At least a part of the extension portion 50B may be disposed on the third surface 30C of the upper surface 30 of the base 210. One end of the extension portion 50B may be connected to the body 50A, and the other end of the extension portion 50B may be connected to the pad Q1 of the circuit board 250. The extension portion 50B and the pad Q1 of the circuit board 250 may be coupled to each other using a solder or a conductive adhesive.

The extension portion 50B may include at least one bent or curved portion.

For example, the extension portion 50B may include a first part 5A disposed on the third surface 30C of the upper surface 30 of the base 210 and a second part 5B connected to the first part 5A and disposed on the second stair surface 31B of the base 210. The second part 5B may be bent from the first part 5A toward the circuit board 250, and may be connected to the pad Q1 or Q2 of the circuit board 250.

The first terminal 27A may be coupled or attached to the base 210 using an adhesive. For example, the body 50A may be coupled or attached to the third surface 30C of the upper surface 30 of the base 210 using an adhesive, and the extension portion 50B may be coupled or attached to the second stair surface 31B and the third surface 30C of the upper surface 30 of the base 210.

In another embodiment, the terminal 27A may be inserted into the base 210 by insert injection molding. For example, the terminal 27A may be formed with the base 210 by insert injection molding, and at least a part of the terminal 27A may be inserted into the base 210 or may be disposed in the base 210.

For example, the second terminal 28B may have a structure identical or similar to the structure of the first terminal 27A, and a description of the first terminal 27A of FIG. 14A may be applied or analogically applied to the second terminal 27B.

Referring to FIG. 14B, the third terminal 27C may be configured such that the second part 5B coupled to the pad (e.g. Q1) of the circuit board 250 is omitted from the first terminal 27A of FIG. 14A.

A description of the first terminal 27A of FIG. 14A may be applied or analogically applied to the second to fourth terminals 27B to 27D.

In another embodiment, each of the third and fourth terminals 27C and 27D may have the second part 5B of the first terminal 27A of FIG. 14A, and the circuit board 250 may have pads coupled or conductively connected respectively to the third and fourth terminals 27C and 27D.

As shown in FIG. 7A, the first to fourth terminals 27A to 27D are spaced apart from each other; however, the disclosure is not limited thereto. In another embodiment, the first terminal 27A may be connected to one of the third and fourth terminals 27C and 27D, or both may be integrally formed. The second terminal 27B may be connected to the other one of the third and fourth terminals 27C and 27D, or both may be integrally formed.

The cover member 300 may receive the OIS moving unit, the upper elastic member 150, the lower elastic member 160, the second coil 230, the base 210, the terminal member 27, the circuit board 250, the supporting member 220, and the second position sensor 240 in a receiving space formed together with the base 210.

The cover member 300 may be a box that is open at a lower portion thereof and that includes an upper plate 301 and side plates 302. A lower portion of the side plate 302 of the cover member 300 may be coupled to the stair 211 of the base 210. The shape of the upper plate 301 of the cover member 300 may be a polygon, such as a quadrangle or an octagon.

An opening 303, through which the lens module 400 coupled to the bobbin 110 is exposed to external light, may be formed in the upper plate 301 of the cover member 300. The material for the cover member 300 may be a nonmagnetic material, such as SUS, in order to prevent a phenomenon in which the cover member sticks to the magnet 130. The cover member 300 may be made of a metal sheet; however, the disclosure is not limited thereto, and the cover member may be made of plastic. In addition, the cover member 300 may be connected to a ground terminal of the circuit board 250 of the lens moving apparatus and/or a ground of a circuit board 800 of the camera module 200. The cover member 300 may block electromagnetic interference (EMI).

Each of the two supporting members 20A and 20B of the first supporting member 220-1 may be implemented by a one-strand wire; however, the disclosure is not limited thereto.

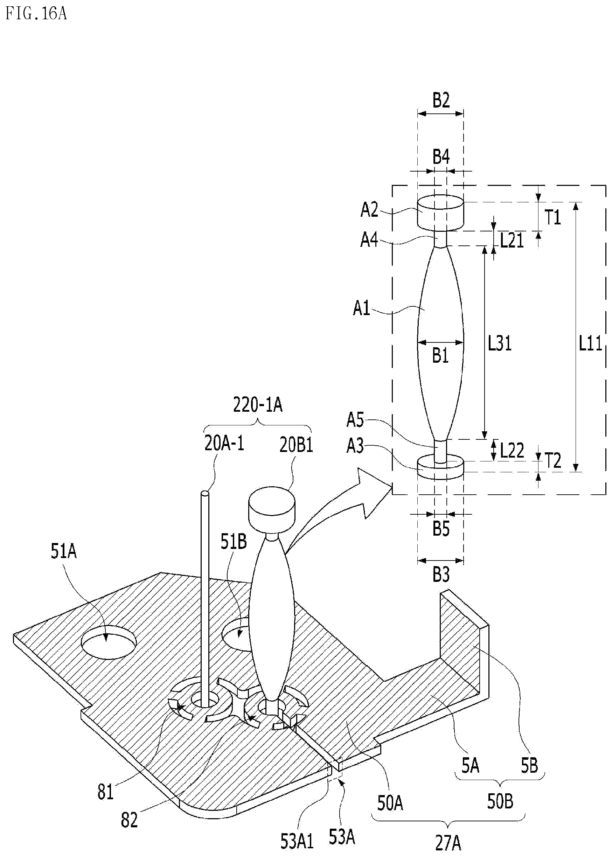

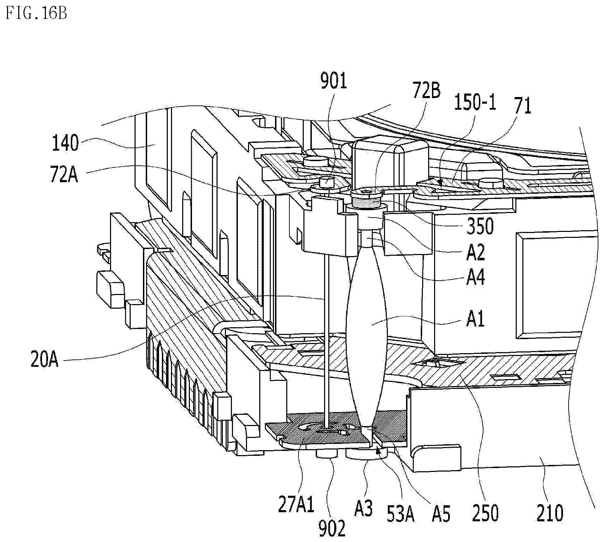

FIG. 16A shows a first supporting member 220-1A according to another embodiment, and FIG. 16B is a partial enlarged view showing coupling between the first supporting member 220-1A of FIG. 16A and the first upper elastic member 150-1. Hereinafter, a description of the first supporting member 220-1A may be applied or applied correspondingly to the second to fourth supporting members 220-2 to 220-4, the terminals of the terminal member 27 corresponding thereto, and the upper elastic members.

Referring to FIGs. 16A and 16B, the first supporting member 220-1A may include a 1-1 supporting member 20A-1 implemented by a one-strand wire and a 1-2 supporting member 20B1 made of a nonconductive material.

For example, the 1-1 supporting member 20A-1 may have different stiffness (or spring constant) from the 1-1 supporting member 20A (or the 1-2 supporting member 20B) of FIG. 15A.

For example, the stiffness (or spring constant) of the 1-1 supporting member 20A-1 may be less than the stiffness (or spring constant) of the 1-1 supporting member 20A (or the 1-2 supporting member 20B) of FIG. 15A.

For example, the diameter of the 1-1 supporting member 20A-1 may be equal to or less than the diameter of the 1-1 supporting member 20A (or the 1-2 supporting member 20B) of FIG. 15A. For example, the diameter range of the 1-1 supporting member 20A of FIG. 15A may be applied or applied correspondingly to the diameter range of the 1-1 supporting member 20A-1.

In contrast, the 1-2 supporting member 20B1 made of the nonconductive material may have different stiffness (or spring constant) from the 1-1 supporting member 20A (or the 1-2 supporting member 20B) of FIG. 15A.

For example, the stiffness (or spring constant) of the 1-2 supporting member 20B1 made of the nonconductive material may be greater than the stiffness (or spring constant) of the 1-1 supporting member 20A (or the 1-2 supporting member 20B) of FIG. 15A.

For example, the bobbin 110, the housing 140, and/or the base 210 may be made of an injection molded material (e.g. resin, rubber, urethane, or plastic) formed by injection molding, and the 1-2 supporting member 20B1 may also be made of an injection molded material (e.g. resin, rubber, urethane, or plastic) formed by injection molding. The 1-2 supporting member 20B1 may be elastically deformed.

For example, the 1-2 supporting member 20B1 may be made of a thermoplastic elastomer.

The section of the 1-2 supporting member 20B1 in the direction perpendicular to the optical axis may be circular; however, the disclosure is not limited thereto. In another embodiment, the section of the 1-2 supporting member 20B1 in the direction perpendicular to the optical axis may be polygonal.

The 1-2 supporting member 20B1, which is made of the injection molded material, may serve as a damper configured to perform buffer action.

One end of the 1-2 supporting member 20B1 may be coupled or connected to the second coupling portion 72B of the first outer frame 152 of the first upper elastic member 150-1. For example, one end of the 1-2 supporting member 20B1 may be coupled to the second coupling portion 72B of the first outer frame 152 using an adhesive 350.

The adhesive 350 may be disposed between a first end A2 (or a "first stationary portion") of the 1-2 supporting member 20B1 and the second coupling portion 72B of the first outer frame 152 of the first upper elastic member 150-1 corresponding thereto, and may couple or attach both to each other.

For example, at least a part of the adhesive 350 may be disposed on the first end A2 (or the "first stationary portion") of the 1-2 supporting member 20B1 and the second coupling portion 72B of the first outer frame 152 of the first upper elastic member 150-1, and may couple both to each other.

For example, the adhesive 350 may be resin (e.g. epoxy) or silicone; however, the disclosure is not limited thereto.

The other end of the 1-2 supporting member 20B1 may be coupled to a first terminal 27A1.

The first terminal 27A1 is a modification of the first terminal 27A of FIG. 15A, and a body 50A1 of the first terminal 27A1 may further include a third hole 53A connected to or communicating with the second coupling portion 82. For example, a part of the third hole 53A may be formed in the coupling region 82A of the second coupling portion 82, and may connect the first hole 82B and the second hole 82D of the second coupling portion 82 of the body 50A1 to each other or may allow the first hole and the second hole to communicate with each other. Another part of the third hole 53A may extend from the second hole 82D to an outer surface of the body 50A1, and may include an opening 53A1 open to the outer surface of the body 50A1.

For example, the other end of the 1-2 supporting member 20B1 may be inserted or fitted into the recess 53A of the first terminal 27A1 through the opening 53A1 of the hole 53A, and the other end of the 1-2 supporting member 20B1 may be inserted into or disposed in the first hole 82B. In addition, for example, the other end of the 1-2 supporting member 20B1 and the first hole 82B of the second coupling portion 82 of the first terminal 27A1 may be coupled to each other using an adhesive, such as epoxy or silicone.

The 1-2 supporting member 20B1 may include a body A1, a first end A2 (or a first stationary portion) disposed between one side of the body A1 and the first upper elastic member 150-1, and a second end A3 (or a second stationary portion) disposed between the other side of the body A1 and the first terminal 27A1.

The body A1 may be columnar. For example, the body A1 may be an entasis; however, the disclosure is not limited thereto. For example, the section of the body A1 in the direction perpendicular to the optical axis may be circular, oval, or polygonal (e.g. quadrangular).

For example, the body A1 may include at least a part having a diameter B1 gradually decreased from the middle to the first end A2 of the body A1. In addition, the body A1 may include at least a part having a diameter B1 gradually decreased from the middle to the second end A3 of the body A1. The diameter of the body A1 may be the length of the body A1 in the direction perpendicular to the optical axis.

For example, the diameter B1 of the body A1 may be gradually decreased from the middle to the first end A2 of the body A1, and the diameter B1 of the body A1 may be gradually decreased from the middle to the second end A3 of the body A1. The diameter of the body A1 may be the length of the body A1 in the direction perpendicular to the optical axis.

For example, the diameter of the body A1 may be increased and then decreased in a direction from the first end A2 (or the second end A3) to the second end A3 (or the first end A2).

In another embodiment, the diameter of the body A1 may be gradually increased from the middle to the first end A2 of the body A1, and the diameter of the body A1 may be gradually increased from the middle to the second end A3 of the body A1.

In another embodiment, the diameter of the body A1 may be gradually decreased from the first end A2 to the second end A3. In another embodiment, the diameter of the body A1 may be gradually increased from the first end A2 to the second end A3.

In another embodiment, the diameter of the body A1 from the first end A2 (or a first connection portion A4) to the second end A3 (a second connection portion A5) may be uniform.

The first end A2 may be connected or coupled to the first upper elastic member 150-1. The first end A2 may be disposed under the second coupling portion 72B of the first outer frame 152 of the first upper elastic member 150-1.

The shape of the first end A2 may be cylindrical; however, the disclosure is not limited thereto, and the shape of the first end may be polyhedral (e.g. hexahedral). The sectional shape of the first end in the direction perpendicular to the optical axis may be circular, oval, or polygonal (e.g. quadrangular).

In another embodiment, the first end A2 may be disposed in the hole 152a of the first outer frame 152 of the first upper elastic member 150-1 or may extend through the hole 152a.

The second end A3 may be connected or coupled to the first terminal 27A1. For example, the second end A3 may be coupled or attached to the first terminal 27A1 using an adhesive.

The second end A3 may be disposed under the first hole 82B of the body 50A1 of the first terminal 27A1.

The shape of the second end A3 may be cylindrical; however, the disclosure is not limited thereto, and the shape of the second end may be polyhedral (e.g. hexahedral). The sectional shape of the second end in the direction perpendicular to the optical axis may be circular, oval, or polygonal (e.g. quadrangular).

The 1-2 supporting member 20B1 may further include a first connection portion A4 (or a first deformation portion) disposed between the body A1 and the first end A2. The first connection portion A4 may connect the body A1 and the first end A2 to each other.

The 1-2 supporting member 20B1 may further include a second connection portion A5 (or a second deformation portion) disposed between the body A1 and the second end A3. The second connection portion A5 may connect the body A1 and the second end A3 to each other. At least a part of the second connection portion A5 may be disposed in the first hole 82B of the first terminal 27A1. For example, at least a part of the second connection portion A5 may extend through the first hole 82B.

The length L21 of the body A1 in the optical-axis direction may be greater than each of the lengths T1 and T2 of the first and second ends A2 and A3 in the optical-axis direction.

The length L21 of the body A1 in the optical-axis direction may be greater than each of the lengths L22 and L23 of the first and second connection portions A4 and A5 in the optical-axis direction. In another embodiment, the length of the body A1 in the optical-axis direction may be equal to or less than the length of each of the first and second connection portions A4 and A5 in the optical-axis direction.

For example, the length L21 of the body A1 in the optical-axis direction may be 30% to 90% of the length L11 of the 1-2 supporting member 20B1 in the optical-axis direction. For example, the length L21 of the body A1 in the optical-axis direction may be 65% to 80% of the length L11 of the 1-2 supporting member 20B1 in the optical-axis direction. Alternatively, for example, the length L21 of the body A1 in the optical-axis direction may be 68% to 75% of the length L11 of the 1-2 supporting member 20B1 in the optical-axis direction.

The length T1 of the first end A2 in the optical-axis direction may be greater than the length T2 of the second end A3 in the optical-axis direction. In another embodiment, the length T1 of the first end A2 in the optical-axis direction may be equal to or less than the length T2 of the second end A3 in the optical-axis direction.

The length L22 of the first connection portion A4 in the optical-axis direction may be equal to the length L23 of the second connection portion A5 in the optical-axis direction. In another embodiment, the length L22 of the first connection portion A4 in the optical-axis direction may be different from the length L23 of the second connection portion A5 in the optical-axis direction. For example, L22>L23 or L22<L23.

The diameter B1 of the body A1 may be equal to or less than the diameter B2 of the first end A2 (or the diameter B3 of the second end A3). In another embodiment, the diameter B1 of the body A1 may be greater than the diameter B2 of the first end A2 (or the diameter B3 of the second end A3). The diameter B2 (or the diameter B3) may be the length of the first end A2 (or the second end A3) in the direction perpendicular to the optical axis.

The diameter B4 of the first connection portion A4 may be less than the diameter B2 of the first end A2. In addition, the diameter B5 of the second connection portion A5 may be less than the diameter B3 of the second end A3. The diameter B4 (or the diameter B5) may be the length of the first connection portion A4 (or the second connection portion A5) in the direction perpendicular to the optical axis.

For example, each of the diameter B4 of the first connection portion A4 and the diameter B5 of the second connection portion A5 may be 150 micrometers to 200 micrometers. Alternatively, for example, each of the diameter B4 of the first connection portion A4 and the diameter B5 of the second connection portion A5 may be 160 micrometers to 185 micrometers.

For example, the ratio of the diameter of the 1-1 supporting member 20A-1 to the diameter B4 or B5 of the first connection portion A4 (or the second connection portion A5) may be 2.14 to 4.

For example, the diameter B4 of the first connection portion A4 (or the diameter B5 of the second connection portion A5) may be 15% to 80% of the diameter B2 of the first end A2 (or the diameter B3 of the second end A3).

Alternatively, for example, B4 (or B5) may be 20% to 50% of B2 (or B3). Alternatively, for example, B4 (or B5) may be 20% to 30% of B2 (or B3).

Since the diameters B4 and B5 of the first and second connection portions A4 and A5 are less than the diameters B2 and B3 of the first and second ends A2 and A3 and the diameter B1 of the body A1, deformation may easily occur during OIS driving.

If B4 (or B5) is less than 15% of B2 (or B3), the first supporting member 220-1A may not stably support the OIS moving unit during OIS driving, and the 1-2 supporting member 20B1 may be cut.

If B4 (or B5) is greater than 80% of B2 (or B3), on the other hand, the 1-2 supporting member 20B1 may not be easily deformed during OIS driving, whereby more electromagnetic force is necessary to perform normal OIS driving, and therefore power consumption may be increased.

For example, the diameter B3 of each of the first and second connection portions A4 and A5 may be equal to or less than the diameter B1 of the body A1. For example, the diameter B3 of each of the first and second connection portions A4 and A5 may be less than the diameter of a middle part of the body A1.

The diameter of the first hole 82B of the first terminal 27A1 may be greater than the diameter B5 of the second connection portion A5 such that at least a part of the second connection portion is disposed in the first hole 82B of the first terminal 27A1.

The first and second connection portions A4 and A5 may be concave portions formed between the first end A2 and the body A2 and between the second end A3 and the body A1, respectively.

The body A1 may be referred to as a "first part," the first end A2 may be referred to as a "second part," the second end A3 may be referred to as a "third part," the first connection portion A4 may be referred to as a "fourth part" or a "first deformation portion," and the second connection portion A5 may be referred to as a "fifth part" or a "second deformation portion."

Each of the first connection portion A4 and the second connection portion A5 is basically circular but may have another shaped bend, and the number of connection portions may be different depending on characteristics of a product. The shape of the connection portion may be implemented in a partially bent or clamped form.

In another embodiment, the first connection portion and the second connection portion of FIG. 16A may be omitted, one side of the body may be connected to the first end, and the other side of the body may be connected to the second end.

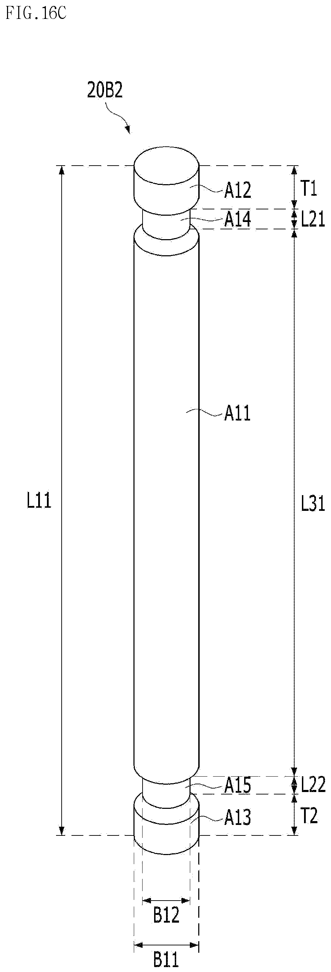

FIG. 16C is a perspective view of a 1-2 supporting member 20B2 according to another embodiment.

Referring to FIG. 16C, the 1-2 supporting member 20B2 is a modification of the 1-2 supporting member 20B1, and the length of a body A11 of the 1-2 supporting member 20B2 in the direction perpendicular to the optical axis may be uniform.

The 1-2 supporting member 20B2 may include a body A11, a first end A12, and a second end A13. In addition, the 1-2 supporting member 20B2 may include a first connection portion A14 that connects the first end A12 and one side of the body A11 to each other. In addition, the 1-2 supporting member 20B2 may include a second connection portion A15 that connects the second end A13 and the other side of the body A11 to each other.

The diameter of the body A11 may be uniform from the first connection portion A14 to the second connection portion A15. A description of the length of each part of FIG. 16A in the optical-axis direction may be applied or applied correspondingly to the length of each part of FIG. 16C in the optical-axis direction.

Each of the diameter of the first end A12 and the diameter of the second end A13 may be equal to the diameter B11 of the body A11. In another embodiment, each of the diameter of the first end A12 and the diameter of the second end A13 may be different from the diameter B11 of the body A11.

The diameter of each of the first and second connection portions A14 and A15 may be less than the diameter of the first end A12, the diameter of the second end A13, and the diameter B11 of the body A11.

A description of FIG. 16A may be applied or applied correspondingly to the ratio of the diameters of the first and second connection portions A14 and A15 to the diameters of the first and second ends A12 and A13.

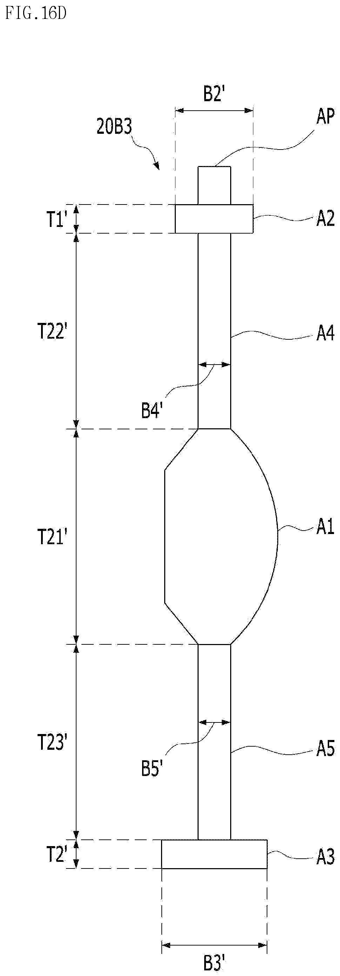

FIG. 16D is a perspective view of a 1-2 supporting member 20B3 according to another embodiment.

Referring to FIG. 16D, the 1-2 supporting member 20B3 may be another modification of the 1-2 supporting member 20B1. For example, the length T21' of a body A1 in the optical-axis direction may be equal to or greater than the length T22' (or T23') of a fourth part A4 (or a fifth part A5) of the 1-2 supporting member 20B3 in the optical-axis direction.

For example, the length T21' of the body A1 in the optical-axis direction may be 1 mm to 1.5 mm. For example, T21' may be 1.15 mm to 1.3 mm.

In addition, for example, the length T22' of the fourth part A4 in the optical-axis direction and the length T23' of the fifth part A5 in the optical-axis direction may be equal to each other. For example, each of T22' and T23' may be 0.8 mm to 1.4 mm. For example, each of T22' and T23' may be 1 mm to 1.2 mm.

In another embodiment, the length T22' of the fourth part A4 in the optical-axis direction and the length T23' of the fifth part A5 in the optical-axis direction may be different from each other. For example, the former may be greater or less than the latter.

In addition, for example, each of the length T1' of the first end A2 of the 1-2 supporting member 20B3 in the optical-axis direction and the length T2' of the second end A3 of the 1-2 supporting member 20B3 in the optical-axis direction may be less than the length T22' of the fourth part A4 in the optical-axis direction and/or the length T23' of the fifth part A5 in the optical-axis direction.

For example, each of T1' and T2' may be 0.1 mm to 0.2 mm. For example, each of T1' and T2' may be 0.1 mm to 0.15 mm.

In addition, the length T1' of the first end A2 in the optical-axis direction and the length T2' of the second end A3 in the optical-axis direction may be equal to each other; however, the disclosure is not limited thereto. In another embodiment, both may be different from each other. For example, T1'>T2' and vice versa.

In addition, for example, the diameter B2' of the first end A2 of the 1-2 supporting member 20B3 may be less than the diameter B3' of the second end A3 of the 1-2 supporting member 20B3.

In addition, for example, each of the diameters B4' and B5' of the fourth part A4 and the fifth part A5 may be less than the diameter B2' of the first end A2 (or the diameter B3' of the second end A3).

For example, the diameter B2' of the first end A2 may be 0.3 mm to 0.5 mm. For example, the diameter B2' of the first end A2 may be 0.4 mm to 0.44 mm.

For example, the diameter B3' of the second end A3 may be 0.55 mm to 0.7 mm. For example, the diameter B3' of the second end A3 may be 0.6 mm to 0.65 mm.

For example, each of the diameters B4' and B5' of the fourth part A4 and the fifth part A5 may be 0.15 mm to 0.2 mm. Each of the diameters B4' and B5' of the fourth part A4 and the fifth part A5 may be 0.16 mm to 0.185 mm.

For example, each of the diameters B4' and B5' of the fourth part A4 and the fifth part A5 may be greater than the diameter (or the thickness) of the 1-1 supporting member 20A. In another embodiment, both may be equal to each other. In another embodiment, the former may be less than the latter.

For example, each of the diameters B4' and B5' of the fourth part A4 and the fifth part A5 may be 1.5 to 5 times the diameter (or the thickness) of the 1-1 supporting member 20A. For example, each of the diameters B4' and B5' of the fourth part A4 and the fifth part A5 may be 1.5 to 3 times the diameter (or the thickness) of the 1-1 supporting member 20A. Alternatively, for example, each of the diameters B4' and B5' of the fourth part A4 and the fifth part A5 may be 2 to 3 times the diameter (or the thickness) of the 1-1 supporting member 20A.

The body A1, which is a part adjacent to an injection portion of a mold, through which an injection molded material is injected, may have a shape similar to the shape of the body A1 of FIG. 16A, and may have at least one flat surface. At this time, the flat surface may be formed at the position corresponding to the injection portion of the mold.

The 1-2 supporting member 20B3 may include a protrusion AP protruding from an upper surface of the first end A2. The protrusion AP may be coupled to the second coupling portion 72 of the first upper elastic member 150-1 via an adhesive member.

For example, the second coupling portion 72 of the first upper elastic member 150-1 may have a coupling hole to which the protrusion AP of the 1-2 supporting member 20B3 is coupled, at least a part of the protrusion AP may be disposed in the coupling hole, and the adhesive member may be disposed on the protrusion AP and in the coupling hole so as to couple both to each other.

For example, the diameter of the protrusion AP may be equal to each of the diameters B4' and B5' of the fourth part A4 (and/or the fifth part A5). In another embodiment, the diameter of the protrusion AP may be less or greater than each of the diameters B4' and B5' of the fourth part A4 (and/or the fifth part A5).

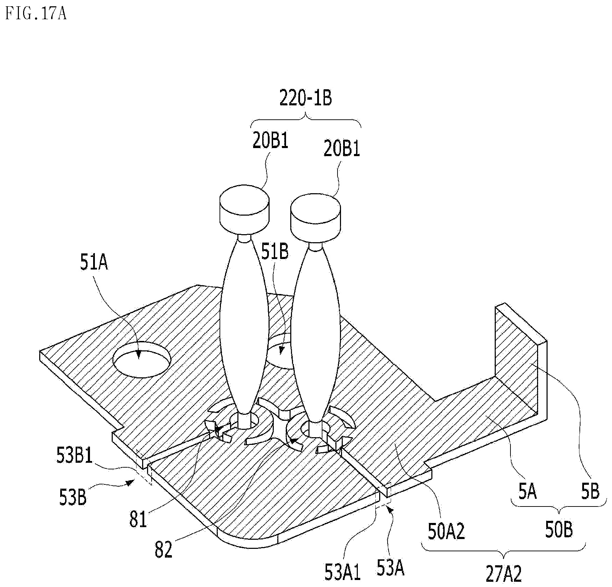

FIG. 17A is a perspective view of a first supporting member 220-1B according to another embodiment.

Referring to FIG. 17A, the first supporting member 220-1B may include two supporting members, each of the two supporting members may be the 1-2 supporting member 20B1 made of the nonconductive material described with reference to FIG. 16A.

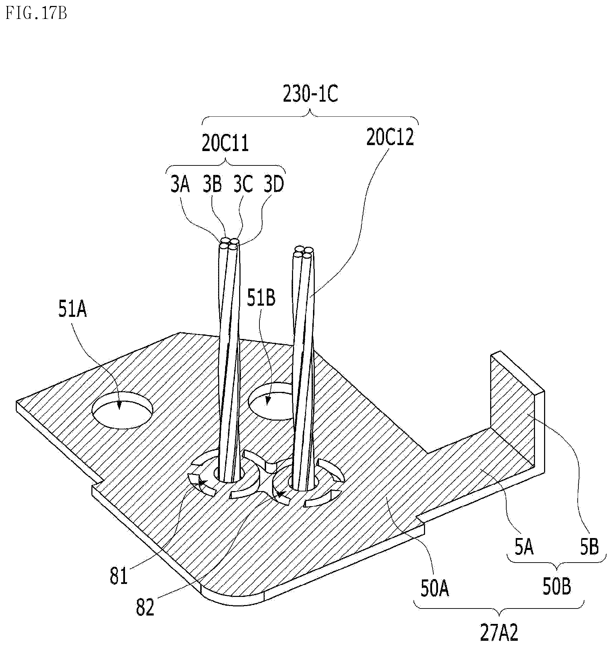

A fourth hole 53B may be formed in a body 50A2 of a first terminal 27A2 corresponding to the first supporting member 220-1B, the fourth hole 53B may include an opening 53B1 open to an outer surface of the body 50A2, and a description of the third hole 53A and the opening 53A1 of FIG. 16A may be applied or applied correspondingly to the embodiment of FIG. 17.

FIG. 17B is a perspective view of a first supporting member 220-1C according to another embodiment.

Referring to FIG. 17B, the first supporting member 220-1C may include a 1-1 supporting member 20C11 and a 1-2 supporting member 20C12.

The 1-1 supporting member 20A of FIG. 15A may be implemented by a one-strand wire, whereas each of the two supporting members 20C11 and 20C12 of FIG. 17B may be implemented by a two-or-more-strand wire.

For example, each of the 1-1 supporting member 20C11 and the 1-2 supporting member 20C12 may be implemented by a four-strand wire.

For example, the diameter (or the thickness) of each strand of the four-strand wire may be 20 micrometers to 30 micrometers. For example, the diameter (or the thickness) of each strand of the four-strand wire may be 24 micrometers to 28 micrometers. Alternatively, for example, the diameter (or the thickness) of each strand of the four-strand wire may be 26 micrometers to 28 micrometers.

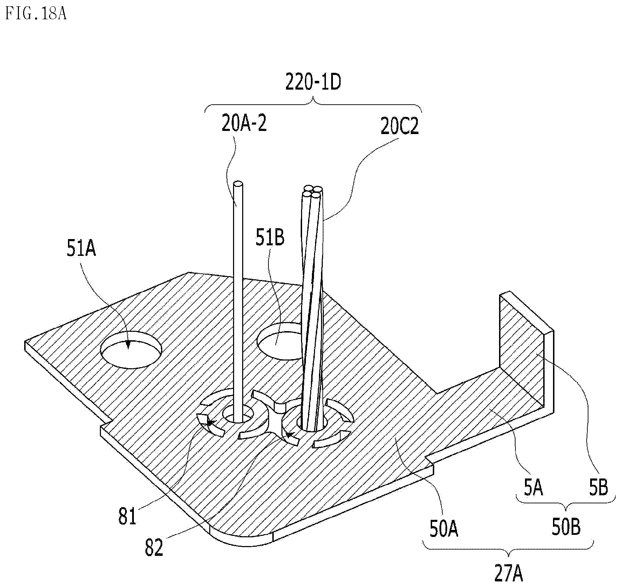

FIG. 18A is a perspective view of a first supporting member 220-1D according to another embodiment.

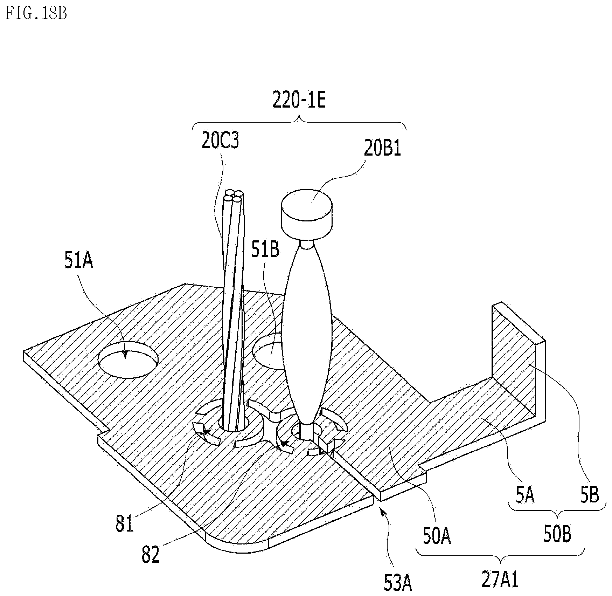

Referring to FIG. 18A, the first supporting member 220-1D may include a 1-1 supporting member 20A-2 and a 1-2 supporting member 20C2 of FIG. 18.

For example, the 1-1 supporting member 20A-2 may have different stiffness (or spring constant) from the 1-1 supporting member 20A (or the 1-2 supporting member 20B) of FIG. 15A. For example, the stiffness (or spring constant) of the 1-1 supporting member 20A-2 may be less than the stiffness (or spring constant) of the 1-1 supporting member 20A (or the 1-2 supporting member 20B) of FIG. 15A.

For example, the diameter of the 1-1 supporting member 20A-2 may be equal to or less than the diameter of the 1-1 supporting member 20A (or the 1-2 supporting member 20B) of FIG. 15A. For example, the diameter range of the 1-1 supporting member 20A of FIG. 15A may be applied or applied correspondingly to the diameter range of the 1-1 supporting member 20A-2.

For example, the ratio of the diameter of the 1-1 supporting member 20A-2 to the diameter of the 1-2 supporting member 20C2 may be 1:1.15 to 1:2.4.

In contrast, the 1-2 supporting member 20C2 may have different stiffness (or spring constant) from the 1-1 supporting member 20A (or the 1-2 supporting member 20B) of FIG. 15A. For example, the stiffness (or spring constant) of the 1-2 supporting member 20C2 may be greater than the stiffness (or spring constant) of the 1-1 supporting member 20A (or the 1-2 supporting member 20B) of FIG. 15A.

For example, the diameter (or the thickness) of the supporting member 20C2 of FIG. 18A may be greater than the diameter (or the thickness) of the 1-1 supporting member 20A-2 of FIG. 18A. In another embodiment, the diameter (or the thickness) of the supporting member 20C2 of FIG. 18A may be equal to the diameter (or the thickness) of the 1-1 supporting member 20A-2 of FIG. 18A.

FIG. 18B is a perspective view of a first supporting member 220-1E according to another embodiment.

Referring to FIG. 18B, the first supporting member 220-1E may include a 1-1 supporting member 20C3 and a 1-2 supporting member 20B1.

For example, the diameter of the 1-1 supporting member 20C3 may be greater than the diameter B4 (or B5) of a first connection portion A4 (or a second connection portion A5) of the 1-2 supporting member 20B1.

For example, the ratio of the diameter of the 1-1 supporting member 20C3 to the diameter B4 (or B5) of the first connection portion A4 (or A5) of the 1-2 supporting member 20B1 may be 1:1.25 to 1:2.5.

The lens moving apparatus according to the embodiment may be implemented so as to include at least one of the first supporting members 220-1, 220-1A, 220-1B, 220-1C, 220-1D, and 220-1E described with reference to FIGs. 15A to 18B.

In order to exhibit the same performance, the first supporting members 200-1 to 200-1E described with reference to FIGs. 15A to 18B may be designed to have the same stiffness or spring constant. Here, the spring constant may be a spring constant in the X-axis direction or the Y-axis direction.

The first supporting member 220-1, 220-1B, or 220-1C of FIGs. 15A, 17A, and 17B has two supporting members having the same stiffness.

The supporting member 20B1 made of the injection molded material of FIG. 17A has a longer lifespan than the wire-shaped support members 20A and 20B of FIG. 15A. In addition, each of the supporting members 20C1 and 20C2 of FIG. 17B has a longer lifespan than the wire-shaped support members 20A and 20B of FIG. 15A.

The embodiment of FIG. 16A will be compared to the embodiment of FIG. 15A as follows.

In order to exhibit the same performance, the stiffness (or spring constant) of the first supporting member 220-1 of FIG. 15A must be designed so as to be equal or similar to the stiffness (or spring constant) of the first supporting member 220-1A of FIG. 16A.

To this end, in the embodiment of FIG. 16A, the 1-1 supporting member 20A-1 may be designed so as to have lower stiffness than the 1-1 supporting member 20A of FIG. 15A, and the 1-2 supporting member 20B1 may be designed so as to have higher stiffness than the 1-1 supporting member 20A of FIG. 15A.

When compared to the 1-1 supporting member 20A of FIG. 15A, the 1-1 supporting member 20A-1 of FIG. 16A may be more easily bent, whereby cutting thereof due to external impact may be inhibited or prevented.

In addition, since the 1-2 supporting member 20B1 is made of an injection molded material, the lifespan thereof is longer, when compared to the 1-1 supporting member of FIG. 15A, whereby the lifespan of the supporting member 220-1A of FIG. 16A may be longer than the lifespan of the supporting member 220-1 of FIG. 15A.

For the above reason, in the embodiments of FIGs. 18A and 18B, cutting of the 1-1 supporting member 20A-2 may be inhibited or prevented, and the lifespan of the first supporting member 220-1D may be extended.

In order to implement a high-quality image, the size (e.g. the weight) of the lens module mounted to the lens moving apparatus may be increased. In an OIS VCM having a heavy lens module (e.g. a weight of 400 mg or more) mounted thereto, a wire-shaped supporting member may be cut. In particular, a fracture phenomenon may occur at the part at which the upper end of the supporting member (e.g. wire) is soldered and at the part at which the lower end of the supporting member (e.g. wire) is soldered.

In the embodiment, in order to prevent or inhibit cutting of the supporting member, two supporting members are disposed on one corner of the housing 140, as shown in FIGs. 15A to 20.

When compared to a lens moving apparatus having a structure in which only one wire is disposed on one corner of the housing (hereinafter referred to as a "comparative example"), two wires are disposed on at least one corner of the housing 140 in the embodiment, whereby the number of wires may be increased, and therefore elastic force (or restoring force) of the supporting member may be increased.

When compared to the comparative example, elastic force (restoring force) of the supporting member is increased in the embodiment, whereby an increase in electromagnetic force by interaction between the OIS coil and the magnet is required for smooth and normal OIS driving.

In order to increase electromagnetic force, the second coil 230 according to the embodiment may be a winding coil, a coil bundle, a coil body, or a coil block, whereby it is possible to increase electromagnetic force.

If the second coil of the winding coil is disposed on the circuit board, however, the distance between the second coil and the magnet (or the lower stopper of the housing) may be too small, whereby the second coil and the magnet (or the lower stopper of the housing) may collide with each other, and therefore the second coil may be damaged or foreign matter may be generated due to collision.

In order to prevent damage or generation of foreign matter due to collision, the second coil 230 is disposed under the circuit board 250 in the embodiment. That is, the second coil 230 is located between the lower surface of the circuit board 250 and the upper surface of the base 210, and may be disposed in the recesses 213A, 213B, and 213C formed in the upper surface of the base 210.

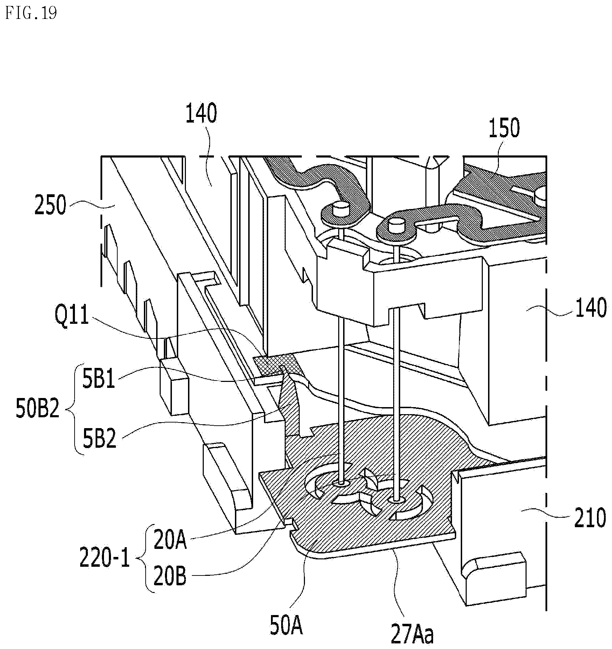

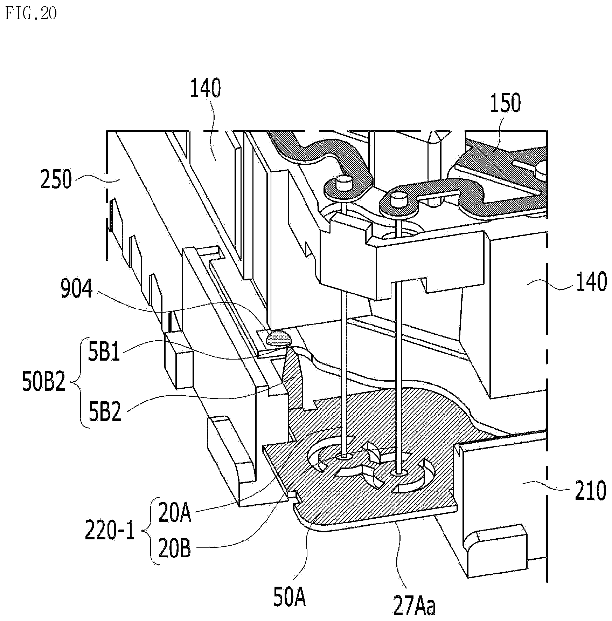

FIG. 19 shows a first terminal 27Aa of a terminal member according to another embodiment and a pad Q11 of the circuit board 250, and FIG. 20 shows a solder 904 that couples the first terminal 27Aa of FIG. 19 and the pad Q11 of the circuit board 250 to each other.

Referring to FIGs. 19 and 20, the circuit board 250 may include at least one pad Q11, and the at least one pad Q11 may be disposed on the upper surface of the circuit board 250. For example, the pad Q11 may be disposed on the upper surface of the body 252 of the circuit board 250 adjacent to the terminal member 253 of the circuit board 250.

The first terminal 27Aa may be a modification of the first terminal 27A of FIG. 14A. A description of the first terminal 27Aa may be applied or applied correspondingly to at least one of the first to fourth terminals 27A to 27D.

The first terminal 27Aa may include a body 50A and an extension portion 50B2.

The extension portion 50B2 of the first terminal 27Aa may extend from the body 50A toward the pad Q11 of the circuit board 250, may be coupled to the pad Q11, and may be conductively connected thereto.

At least a part of the extension portion 50B2 may be disposed on the third surface 30C of the upper surface of the base 210. One end of the extension portion 50B2 may be connected to the body 50A, and the other end of the extension portion 50B2 may be connected to the pad Q11 of the circuit board 250. The extension portion 50B2 and the pad Q11 of the circuit board 250 may be coupled to each other using the solder or the conductive adhesive 904.

The extension portion 50B2 may include at least one bent or curved portion.

For example, the extension portion 50B2 may include a first part 5B1 disposed on the upper surface of the circuit board 250 and a second part 5B2 that connects the first part 5A1 and the body 50A to each other.

For example, at least a part of the second part 5B2 may be disposed on the second stair surface 31B of the base 210. In addition, for example, at least a part of the first part 5B1 may be disposed on the pad Q11 of the circuit board 250. A first bent portion may be formed between one end of the second part 5B2 and the body 50A, and a second bent portion may be formed between the other end of the second part 5B2 and the first part 5A1.

The solder 904 or the conductive adhesive member may be disposed on a part (e.g. the first part 5B1) of the extension portion 50B2 and the pad Q11.

A description of the first terminal 27A of FIG. 14A, such as the holes 51A and 51B and the coupling portions 81 and 82, may be applied or analogically applied to the first terminal of FIGs. 19 and 20.

For example, the circuit board 250 may include a first pad Q11 configured to be coupled or connected to the first terminal 27Aa and a second pad (not shown) configured to be coupled or connected to the second terminal. Here, a description of the first terminal 27Aa may be applied or applied correspondingly to the second terminal, and a description of the first pad Q11 may be applied or applied correspondingly to the second pad. In another embodiment, one pad or three or more pads may be included, and the terminal member may have one terminal or three or more terminals connected to the one pad or three or more pads.

As shown in FIGs. 19 and 20, a stair may be formed between the outer surface of the side portion and the outer surface of the corner portion of the housing 140. The reason that the stair is formed is that the thickness of the corner portion of the housing 140 is small, and therefore the stair is formed such that the corner portion is not damaged by external impact.

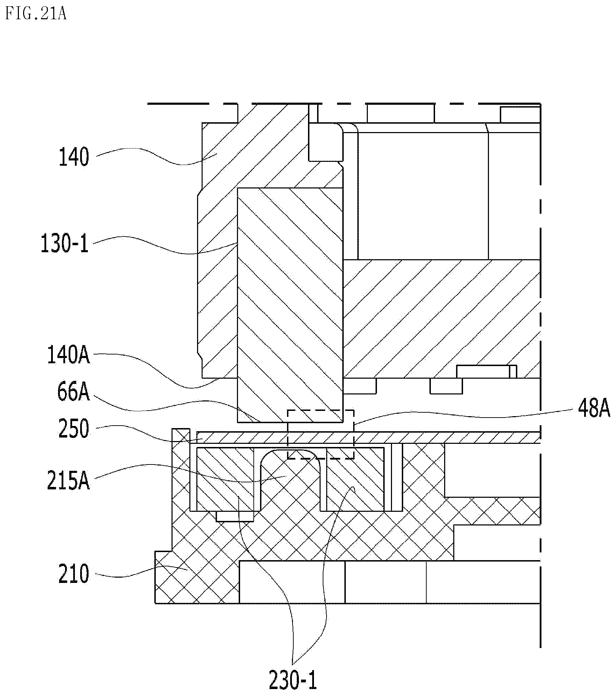

FIG. 21A shows disposition of the magnet (e.g. 130-1) disposed on the housing 140, the third coil unit 230-1 of the second coil 230 disposed on the base 210, and the circuit board 250. A description of FIG. 21A may be applied to the other magnets 130-2 and 130-3 and the other coil units 230-2 and 230-3.

Referring to FIG. 21A, a lower surface 66A of the magnet (e.g. 130-1) may protrude from a lower end 140A or a lower surface of the housing 140 toward the circuit board 250. For example, the lower end 140A of the housing 140 may be the lowest part of the housing 140 or the part of the housing closest to the upper surface of the circuit board 250.

Since the third coil unit 230-1 is located under the circuit board 250, the magnet 130-1 and the third coil unit 230-1 may not collide with each other, the magnet 130-1 and the upper surface of the circuit board 250 may collide with each other due to external impact, and the circuit board 250 may absorb collision with the magnet 130-1 in FIG. 21A.

In addition, when compared to the comparative example, the area of the collision point 48A or the collision region between the magnet 130-1 and the upper surface of the circuit board 250 may be increased, whereby impact may be dispersed, and therefore a structure having high resistance to impact may be obtained.

As shown in FIG. 21A, the height of the upper surface of the protrusion 215A of the projection portion 215-1 may be equal to or less than the height of the upper surface of the third coil unit 230-1. In addition, the protrusion 215A of the projection portion 215-1 and the magnet 130-1 may overlap each other in the optical-axis direction, and the width W1 of the magnet 130-1 may be greater than the width of the protrusion 215A.

In the embodiment, in order to increase the length of the supporting member 220 in the optical-axis direction, the lower end of the supporting member 220 may be coupled to the terminal member 27 disposed on the base 210.

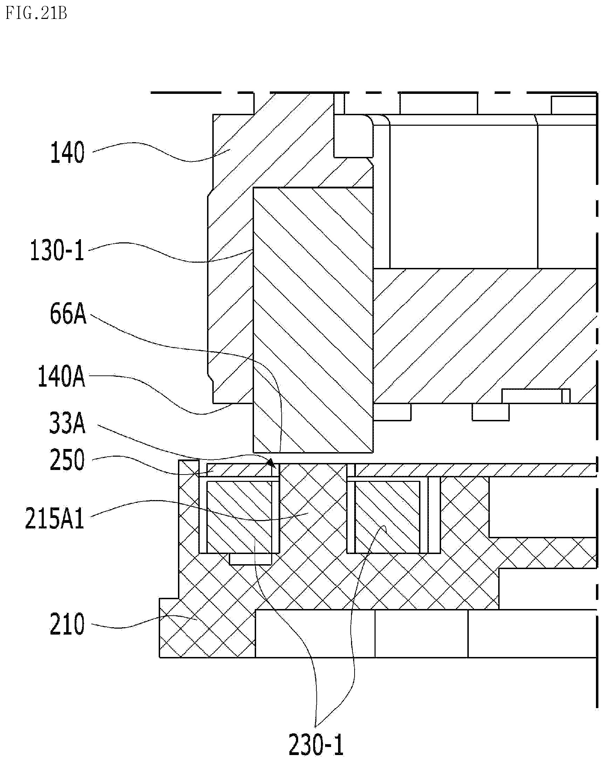

FIG. 21B shows a modification 215A1 of the protrusion 215A of the projecting portion 215-1 of FIG. 21A.

Referring to FIG. 21B, the height of an upper surface of the protrusion 215A1 may be greater than the height of the upper surface or the upper end of the second coil 230 (or the third coil unit 230-1). For example, the protrusion 215A1 and the magnet 130-1 may overlap each other in the optical-axis direction, and the width W1 of the magnet 130-1 may be greater than the width of the protrusion 215A1.

In addition, for example, at least a part of the protrusion 215A1 may be exposed to the upper surface of the circuit board 250. For example, at least a part of the upper surface of the protrusion 215A1 may be exposed to the upper surface of the circuit board 250.

For example, the circuit board 250 may include an opening 33A, through which at least a part of the upper surface of the protrusion 215A1 is exposed. For example, the opening 33A may be a hole or a recess. For example, the opening 33A may be a through-hole formed through the circuit board 250 in the optical-axis direction.

At least a part of the protrusion 215A1 may be disposed in the hole 33A of the circuit board 250. For example, the upper surface of the protrusion 215A1 may be the same plane as the upper surface of the circuit board 250; however, the disclosure is not limited thereto. In another embodiment, the upper surface of the protrusion may be located so as to be lower than the upper surface of the circuit board and to be higher than the upper surface of the coil unit 230-1.

In FIG. 21B, the protrusion 215A1 exposed from the opening 33A of the circuit board 250 and the upper surface of the circuit board 250 may serve as a stopper configured to absorb impact due to collision with the magnet 130-1.

For example, in FIGs. 21A and 21B, a circuit pattern or wiring may be formed on the region of the circuit board 250 corresponding to the protrusions 215A and 215A1 in the optical-axis direction.

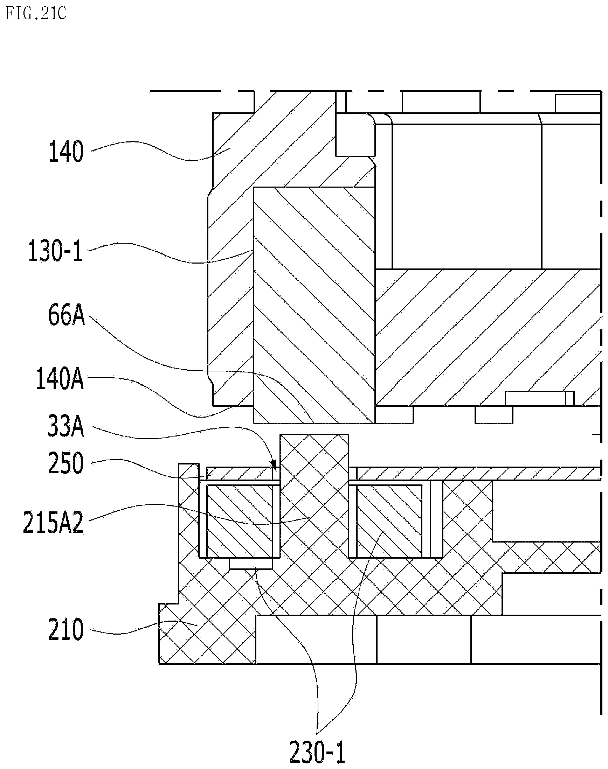

FIG. 21C shows another modification 215A2 of the protrusion 215A of FIG. 21A.

Referring to FIG. 21C, at least a part of the protrusion 215A2 may protrude from the upper surface of the circuit board 250 toward the magnet 130-1. For example, at least a part of the protrusion 215A2 may extend through the circuit board 250.

For example, the height of an upper surface of the protrusion 215A2 may be greater than the height of the upper surface of the circuit board 250. For example, the distance between the protrusion 215A2 and the magnet 130-1 in the optical-axis direction may be less than the distance between the upper surface of the circuit board 250 and the magnet 130-1 in the optical-axis direction.

For example, the circuit board 250 may include an opening 33A, through which at least a part of the protrusion 215A2 extends. At least a part of the protrusion 215A2 may be disposed in the hole 33A of the circuit board 250.

In FIG. 21C, the protrusion 215A1 protruding from the opening 33A of the circuit board 250 may serve as a stopper configured to absorb impact due to collision with the magnet 130-1.

For example, in FIG. 21C, no circuit pattern or no wiring may be formed on the region of the circuit board 250 corresponding to the protrusion 215A2 in the optical-axis direction.

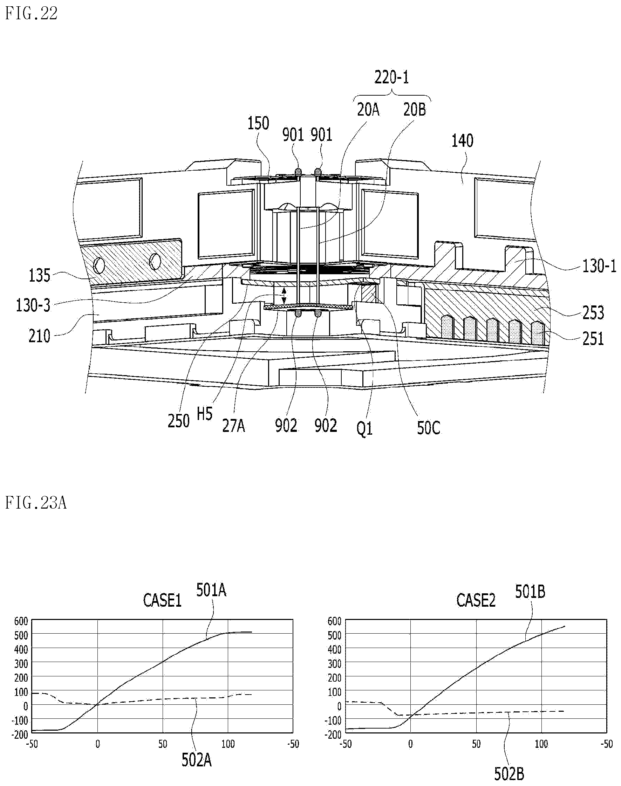

FIG. 22 shows coupling between the lower end of the first supporting member 220-1 and the first terminal 27A by the solder 902. A description of FIG. 22 may be applied or applied correspondingly to the second to fourth supporting members 220-2 to 220-4 and the second to fourth terminals 27B to 27D.

Referring to FIG. 22, the upper surface of the terminal member 27A may be located lower than the lower surface of the circuit board 250.

For example, a stair H5 may be present between the lower surface of the circuit board 250 and the upper surface of the first terminal 27A in the optical-axis direction. The stair H5 may be the difference in height between the lower surface of the circuit board 250 and the upper surface of the first terminal 27A.

When compared to a comparative example in which the supporting member is coupled to the lower surface of the circuit board 250, the length of the first supporting member 220-1 may be increased by the stair H5 and power consumption may be reduced in the embodiment.

In the embodiments of FIGs. 16A and 20, the wire-shaped supporting members 20A, 20B, and 20C2 made of the conductive material and the supporting members 20B1 and 20B2 made of the nonconductive material may be provided together. As a result, when compared to the embodiment of FIG. 15A, in which the two wires are provided, the embodiments of FIGs. 16A and 20 are capable of reinforcing elastic force while exhibiting AF and OIS driving characteristics similar to FIG. 16A, increasing the lifespan of the supporting members, and performing stable OIS driving.

FIG. 23A shows displacement and tilt characteristics of the AF moving unit in a first case CASE1 and a second case CASE2.

The first case CASE1 relates to an embodiment in which the two wires 20A and 20B of FIG. 15A are provided at one corner of the housing 140, and the second case CASE2 relates to an embodiment in which the two supporting members 20A and 20B1 of FIG. 16A are provided at one corner of the housing 140.

The X axis of the graph of FIG. 23A may be a current value of a driving signal provided to the first coil 120, and the unit of the current value may be milliampere (mA). The Y axis may be displacement of the AF moving unit, and the unit thereof may be micrometer (µm). For example, the origin may be an initial position of the AF moving unit. In addition, each of 501A and 501B may be the displacement of the AF moving unit, and each of 502A and 502B may be the tilt of the AF moving unit in the Z-axis direction.

Referring to FIG. 23A, displacement and tilt characteristics of the AF moving unit in the first case CASE1 and the second case CASE2 may be similar to each other.

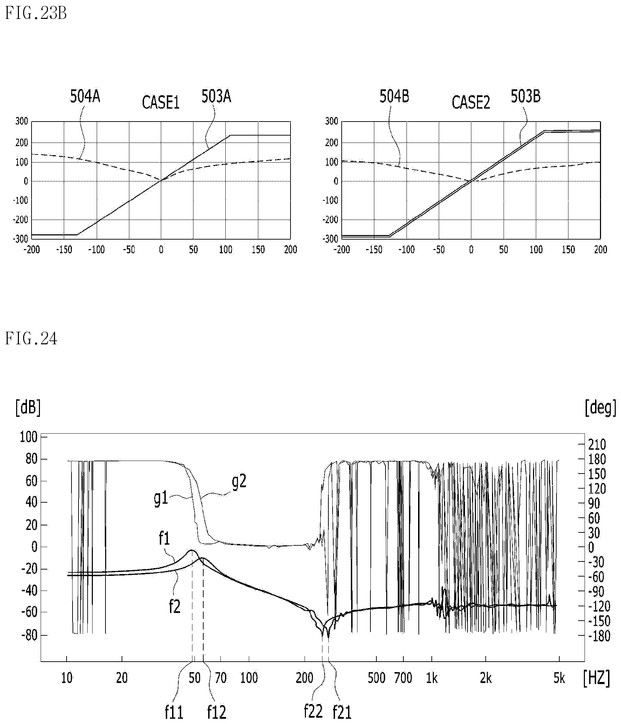

FIG. 23B shows displacement and tilt characteristics of the OIS moving unit in the first case CASE1 and the second case CASE2.

The X axis of the graph of FIG. 23B may be a current value of a driving signal provided to the second coil (e.g. the second coil unit 230-1), and the unit of the current value may be milliampere (mA). The Y axis may be displacement of the OIS moving unit (e.g. displacement in the X-axis direction), and the unit thereof may be micrometer (µm). Each of 503A and 503B may be the displacement of the OIS moving unit, and each of 504A and 504B may be the tilt of the OIS moving unit in the Z-axis direction.

Referring to FIG. 23B, displacement and tilt characteristics of the OIS moving unit in the first case CASE1 and the second case CASE2 may be similar to each other.

FIG. 24 shows frequency response characteristics for OIS driving in the first case CASE1 and the second case CASE2. The X axis of FIG. 24 indicates frequency, and the Y axis indicates gain and phase. The frequency response characteristics may be measured using a frequency response analyzer (FRA).

f1 may be a frequency response characteristic for gain in the first case CASE1, and f2 may be a frequency response characteristic for gain in the second case CASE2. g1 may be a frequency response characteristic for phase in the first case CASE1, and g2 may be a frequency response characteristic for phase in the second case CASE2.

The frequency response characteristic for gain in the first case CASE1 may be similar to the frequency response characteristic for gain in the second case CASE2, and the frequency response characteristic for phase in the first case CASE1 may be similar to the frequency response characteristic for phase in the second case CASE2.

For example, a primary resonance frequency f11 in the first case CASE1 and a primary resonance frequency f12 in the second case CASE2 may be similar to each other. In addition, for example, a secondary resonance frequency f21 in the first case CASE1 and a secondary resonance frequency f22 in the second case CASE2 may be similar to each other. For example, the primary resonance frequency f12 in the second case CASE2 may be higher than the primary resonance frequency f11 in the first case CASE1, and the secondary resonance frequency f22 (250 Hz) in the second case CASE2 may be lower than the secondary resonance frequency f21 (270 Hz) in the first case CASE1.

For example, each of the primary resonance frequency f11 in the first case CASE1 and the primary resonance frequency f12 in the second case CASE2 may be 40 Hz to 70 Hz. In addition, for example, each of the secondary resonance frequency f21 in the first case CASE1 and the secondary resonance frequency f22 in the second case CASE2 may be 240 Hz to 300 Hz.

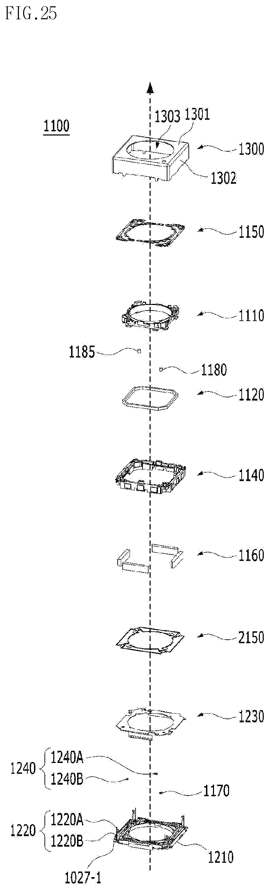

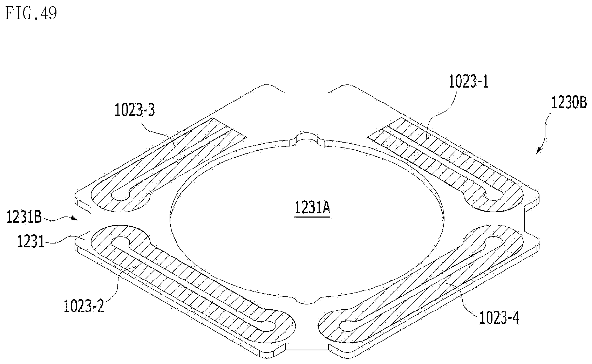

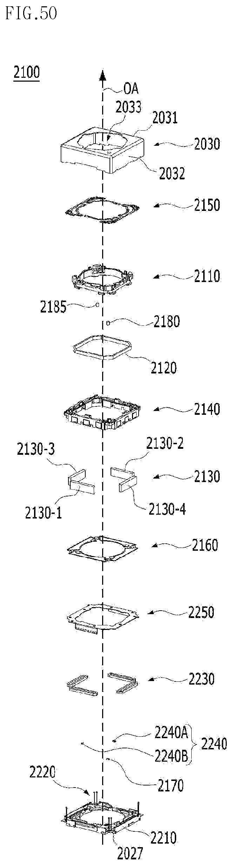

Terminals (e.g. 1027A1, 1027A-1, and 1027A11) of embodiments of FIGs. 25 to 49, a description of which will follow, may be applied or analogically applied to the embodiment of FIG. 1. In addition, an embodiment of FIG. 49 may be applied or analogically applied to an embodiment of FIG. 50.

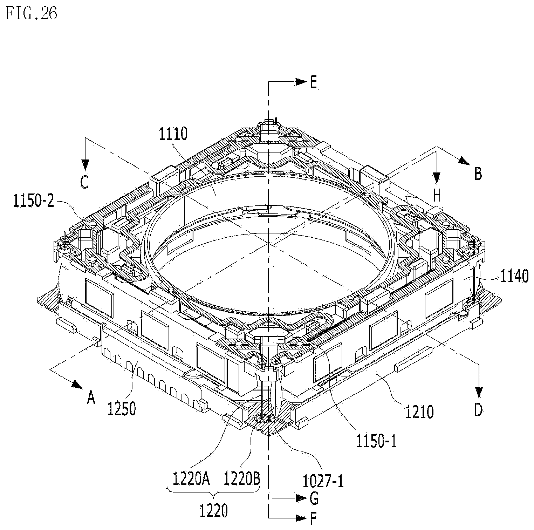

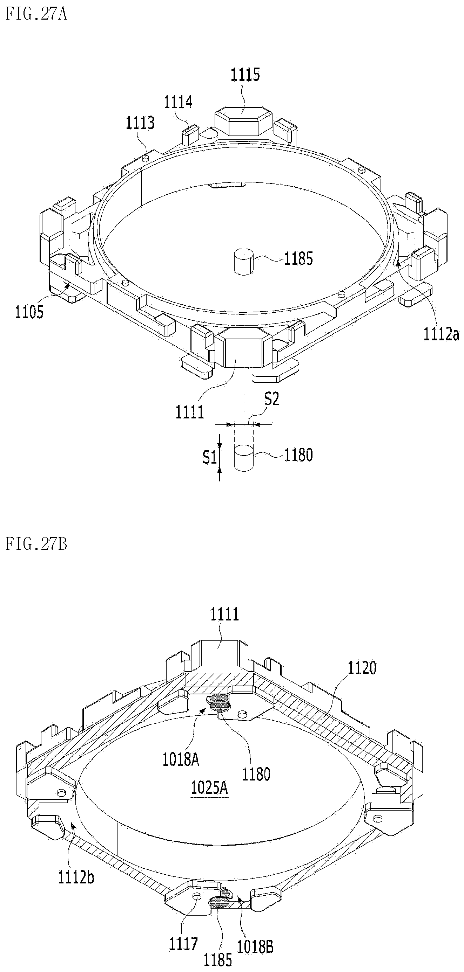

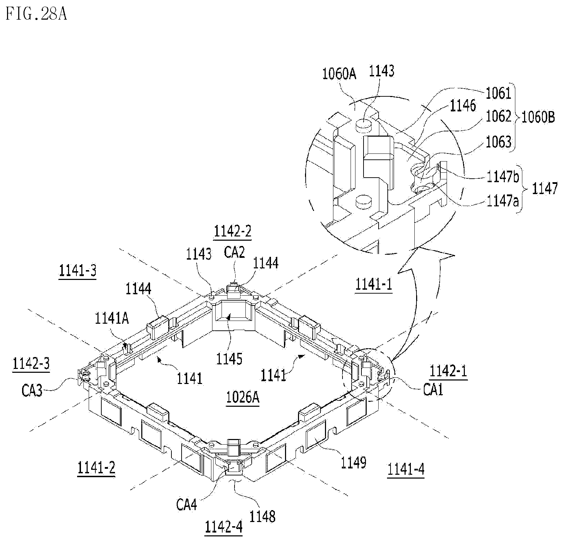

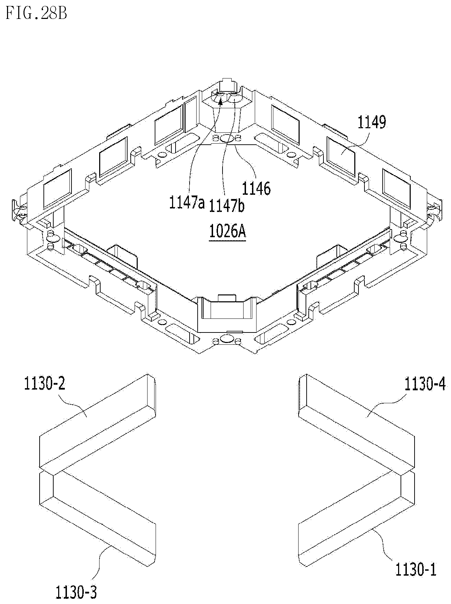

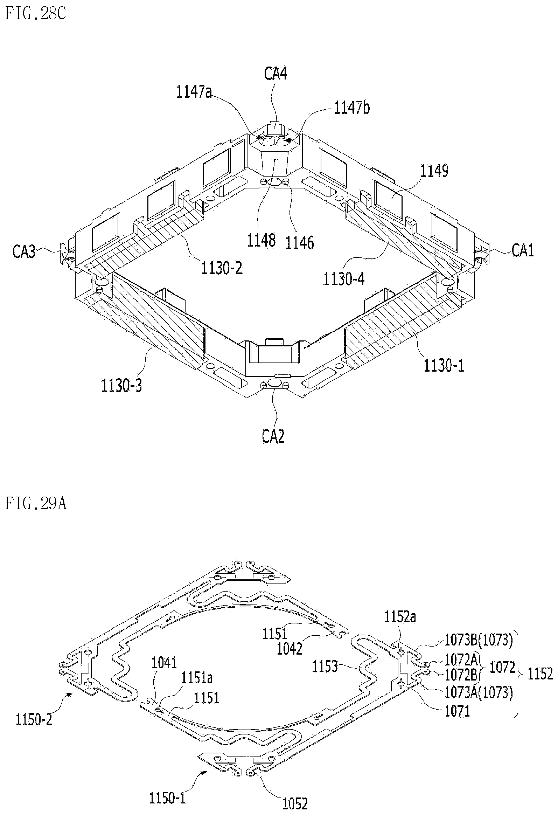

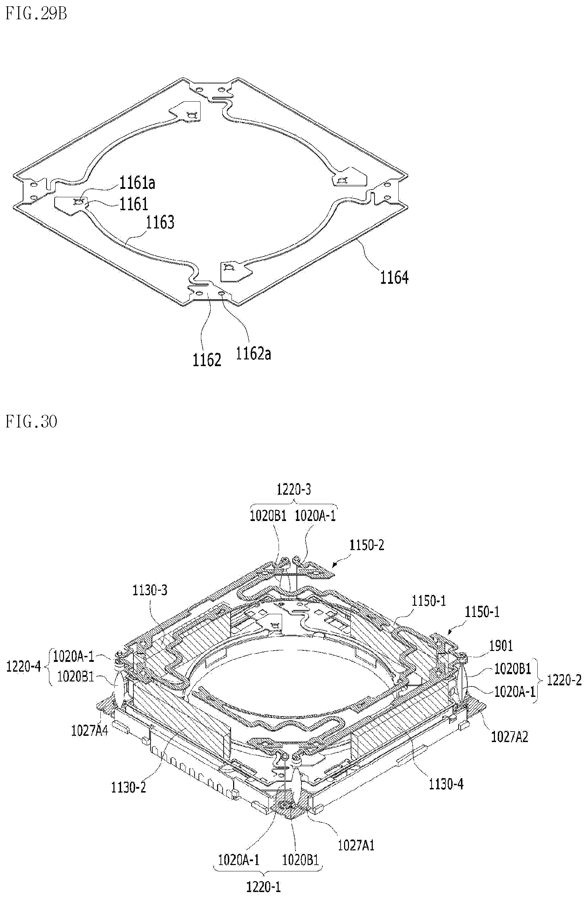

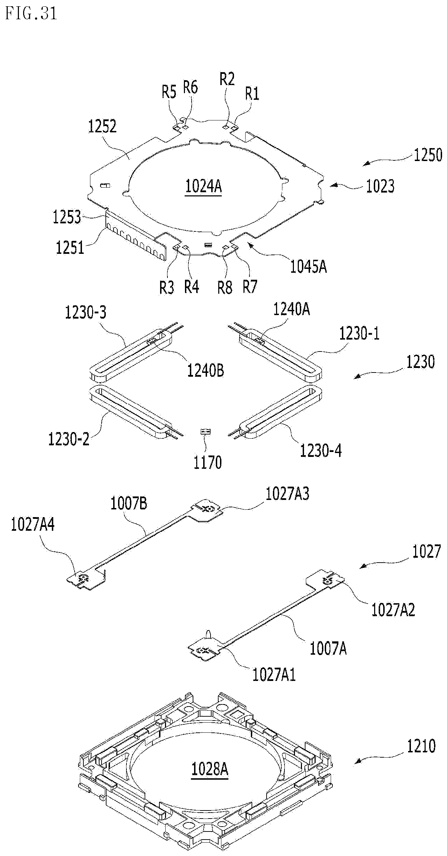

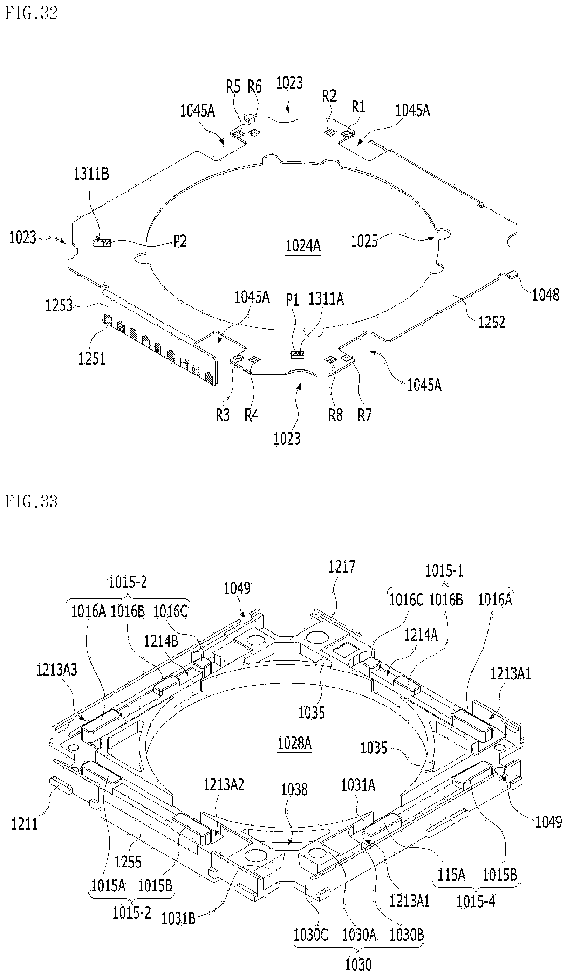

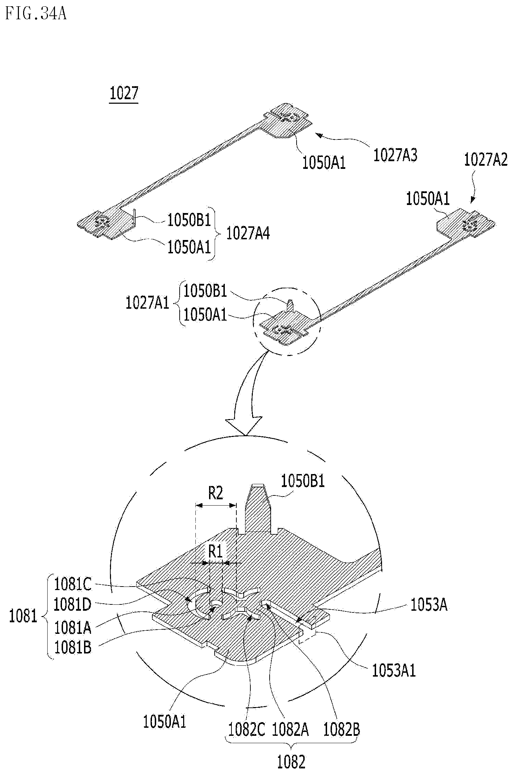

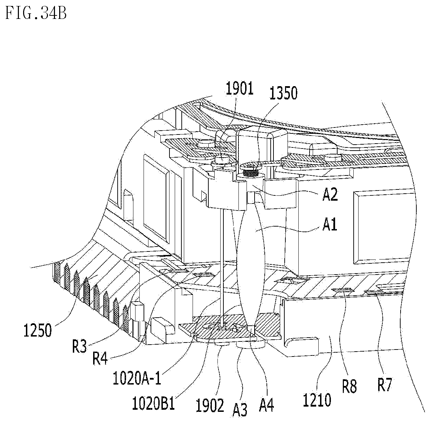

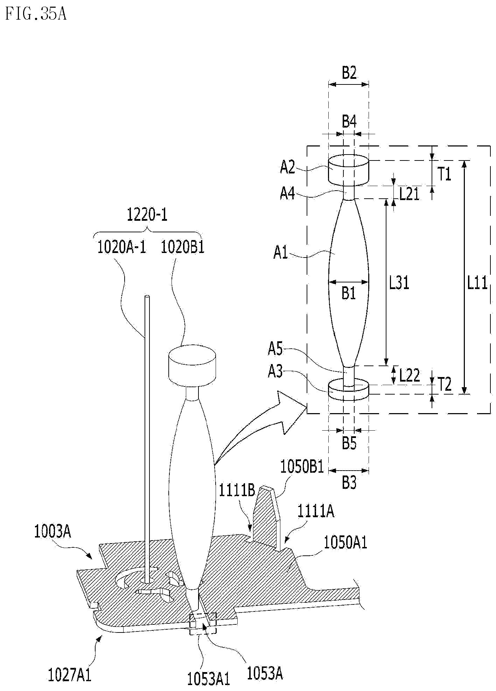

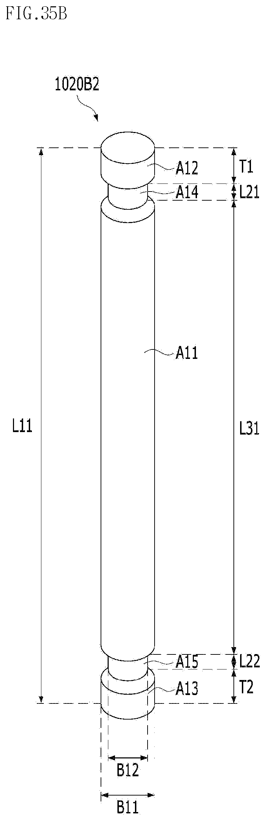

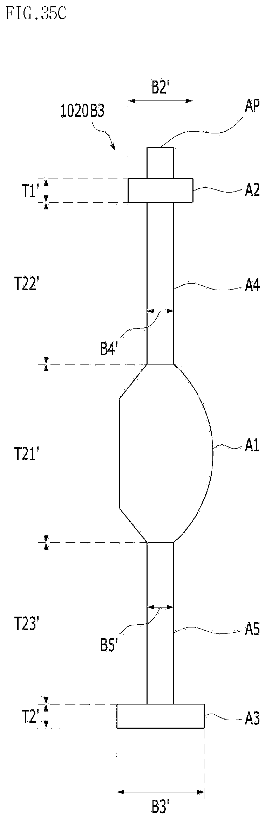

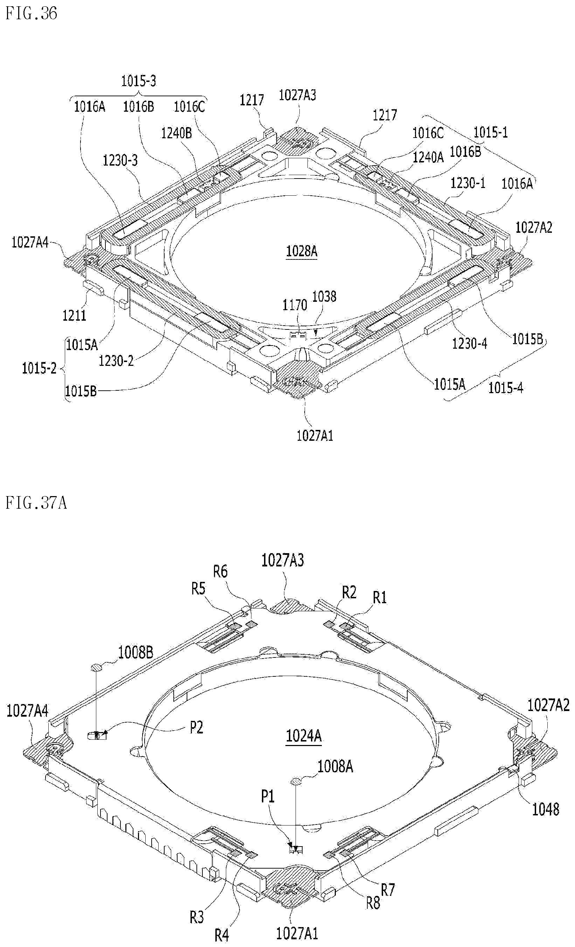

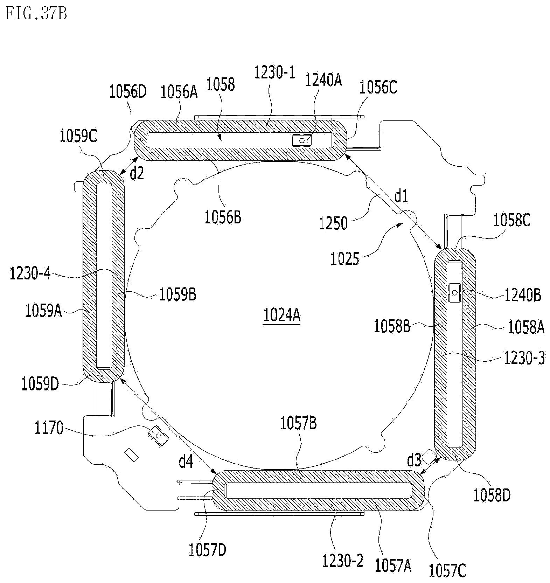

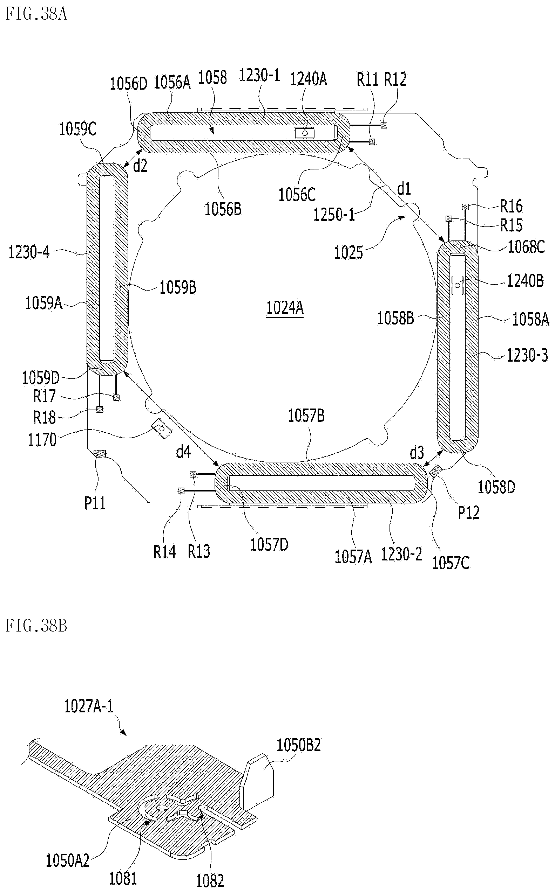

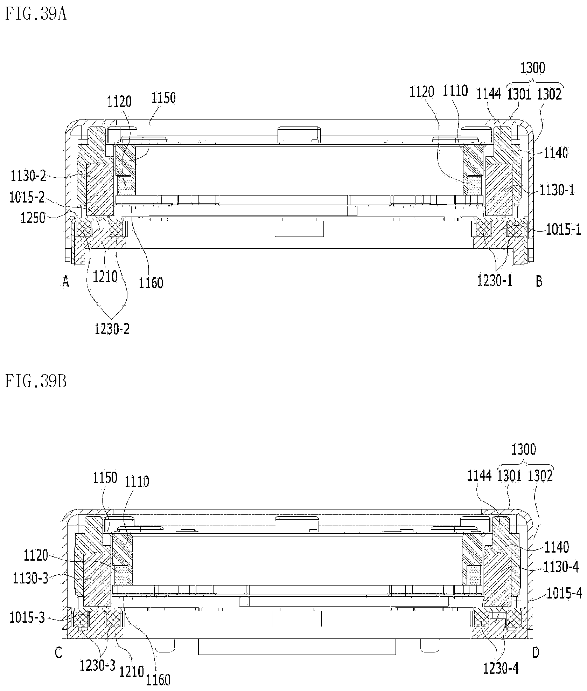

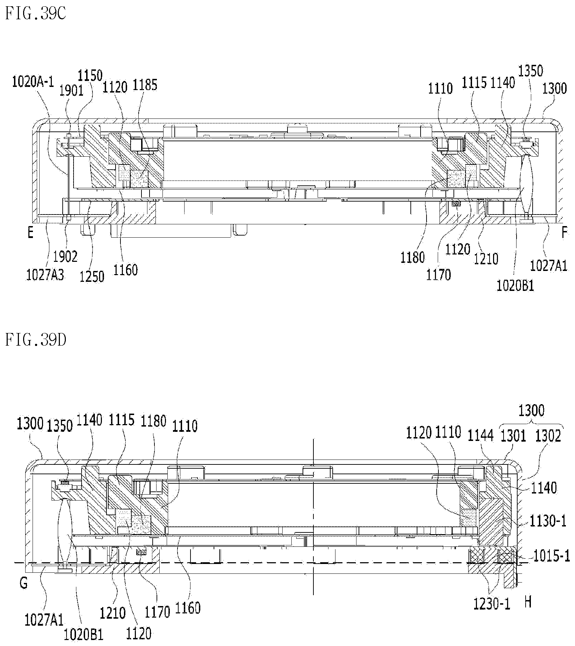

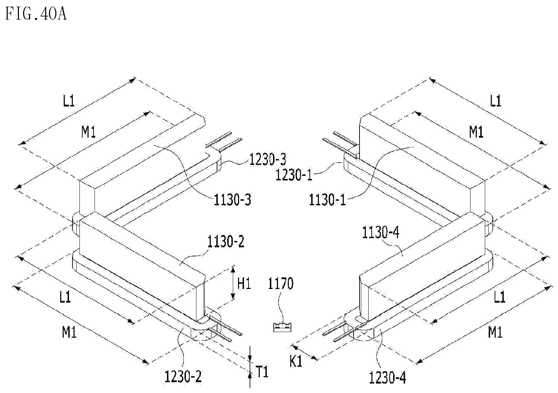

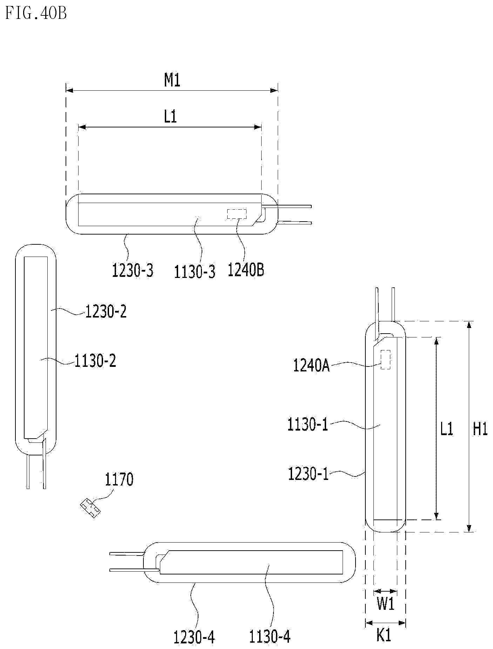

FIG. 25 is an exploded perspective view of a lens moving apparatus 1100 according to an embodiment, FIG. 26 is a perspective view of the lens moving apparatus 1100 of FIG. 25 with a cover member 1300 removed, FIG. 27A is a separated perspective view of a bobbin 1110 and a sensing magnet 1180 of FIG. 25, FIG. 27B is a coupled perspective view of the bobbin 1110, a first coil 1120, and the sensing magnet 1180 of FIG. 25, FIG. 28A is a separated perspective view of a housing 1140 of FIG. 25, FIG. 28B is a coupled perspective view of the housing 1140 and a magnet 1130 of FIG. 25, FIG. 28C is a coupled perspective view of the housing 1140 and the magnet 1130 of FIG. 25, FIG. 29A is a perspective view of an upper elastic member 1150 of FIG. 25, and FIG. 29B is a perspective view of a lower elastic member 1160 of FIG. 25. In addition, FIG. 30 is a view illustrating the conductive connection relationship between the upper elastic member 1150, the coil 1120, and a supporting member 1220 of FIG. 25, FIG. 31 is a separated perspective view of a circuit board 1250, a second coil 1230, a first position sensor 1170, a second position sensor 1240, a terminal member 1027, and a base 1210 of FIG. 25, FIG. 32 is a perspective view of the circuit board 1250 of FIG. 25, FIG. 33 is a perspective view of the base 1210 of FIG. 25, FIG. 34A is a perspective view of the terminal member 1027 of FIG. 25, and FIG. 34B is a partial enlarged view of the lens moving apparatus 1100 of FIG. 26. In addition, FIG. 35A is a coupled perspective view of a first terminal 1027A1 and a first supporting member 1220-1 of FIG. 25, FIG. 35B is a perspective view of a 1-2 supporting member 1020B2 according to another embodiment, FIG. 35C is a perspective view of a 1-2 supporting member 1020B2 according to another embodiment, FIG. 36 is a separated perspective view of the second coil 1230, the first position sensor 1170, the second position sensor 1240, the terminal member 1027, and the base 1210 of FIG. 25, FIG. 37A is a coupled perspective view of the base 1210, the terminal member 1027, the second coil 1230, and the circuit board 1250 of FIG. 25, and FIG. 37B is a bottom view of the circuit board 1250, the first position sensor 1170, and the second position sensor 1240 of FIG. 25. In addition, FIG. 38A is a bottom view of a circuit board 1250-1 according to another embodiment, FIG. 38B is a perspective view of a first terminal 1027A-1 according to another embodiment coupled to pads P11 and P12 of FIG. 38A, FIG. 39A is a sectional view of the lens moving apparatus 1100 in direction AB of FIG. 26, FIG. 39B is a sectional view of the lens moving apparatus 1100 in direction CD of FIG. 26, FIG. 39C is a sectional view of the lens moving apparatus 1100 in direction EF of FIG. 26, FIG. 39D is a sectional view of the lens moving apparatus 1100 in direction GH of FIG. 26, FIG. 40A is a perspective view of first to fourth magnets 1130-1 to 1130-4 and first to fourth coil units 1230-1 to 1230-4, and FIG. 40B is a plan view of the first to fourth magnets 1130-1 to 1130-4 and the first to fourth coil units 1230-1 to 1230-4 of FIG. 40A.

Referring to FIGs. 25 to 40B, the lens moving apparatus 1100 may include a bobbin 1110, a first coil 1120, a magnet 1130, a housing 1140, a circuit board 1250, a second coil 1230, and a base 1210.

The lens moving apparatus 1100 may further include an elastic member, and the elastic member may include at least one of an upper elastic member 1150 and a lower elastic member 1160. In addition, the lens moving apparatus 1100 may further include a supporting member 1220.

The lens moving apparatus 1100 may further include a terminal member 1027.

The lens moving apparatus 1100 may further include a first position sensor 1170 and a sensing magnet 1180 in order to perform AF feedback driving.

The lens moving apparatus may further include a balancing magnet 1185 configured to offset the effect of a magnetic field of the sensing magnet 1180 and to balance the weight with the sensing magnet 1180. In another embodiment, the balancing magnet 1185 may be omitted.

The lens moving apparatus 1100 may further include a second position sensor 1240 in order to perform optical image stabilizer (OIS) feedback driving.

In addition, the lens moving apparatus 1100 may further include a cover member 1300.

Referring to FIGs. 27A and 27B, the bobbin 1110 may be disposed inside the housing 1140, and may be moved in the optical-axis (OA) direction or the first direction (e.g. the Z-axis direction) by electromagnetic interaction between the first coil 1120 and the magnet 1130.

The bobbin 1110 may have an opening 1025A, in which a lens module 1400 is mounted. For example, the lens module 1400 may include at least one of at least one lens and a lens barrel.

For example, the opening 1025A of the bobbin 1110 may be a through-hole formed through the bobbin 1110, and the shape of the opening 1025A of the bobbin 1110 may be circular, oval, or polygonal; however, the disclosure is not limited thereto.

The bobbin 1110 may include first side portions and second side portions spaced apart from each other. Each of the second side portions may interconnect two adjacent first side portions.

For example, the first side portions of the bobbin 1110 may be referred to as "side portions," and the second side portions of the bobbin 1110 may be referred to as "corner portions" or "corners."

The first side portions of the bobbin 1110 may correspond to or may be opposite to first side portions 1141-1 to 1141-4 of the housing 1140, and the second side portions of the bobbin 1110 may correspond to or may be opposite to second side portions 1142-1 to 1142-4 of the housing 1140.

The bobbin 1110 may include a seating portion 1105 configured to allow the first coil 1120 to be seated thereon, disposed thereon, or mounted thereto.

For example, the seating portion 1105 may be formed at an outer surface of the bobbin 1110. For example, the seating portion 1105 may be formed at each of the side portions of the bobbin 1110. The seating portion 1105 may be a recess depressed from the outer surface of the bobbin 1110.

For example, the seating portion 1105 may be formed so as to correspond in shape and number to the first coil 1120 disposed on the outer surface of the bobbin 1110. For example, the seating portion 1105 may have a ring shape; however, the disclosure is not limited thereto. In another embodiment, the bobbin 1110 may have no seating portion 1105, and the first coil 1120 may be directly wound around and fixed to the outer surface of the bobbin 1110. For example, in another embodiment, the bobbin 1110 may include a protrusion configured to allow the first coil 1120 to be wound therearound.

The bobbin 1110 may include a recess 1018A or a hole, in which the sensing magnet 1180 is mounted or disposed. In addition, the bobbin 1110 may include a recess 1018B or a hole, in which the balancing magnet 1185 is mounted or disposed.

For example, the recesses 1018A and 1018B may be formed in opposite side portions of the bobbin 1110.

For example, the recess 1018A may be formed in one of the second side portions (corner portions) of the bobbin 1110 and may be depressed from a lower surface of the one second side portion of the bobbin 1110; however, the disclosure is not limited thereto.

For example, the recess 1018B may be formed in another of the second side portions (corner portions) of the bobbin 1110 and may be depressed from a lower surface of the other second side portion of the bobbin 1110; however, the disclosure is not limited thereto. In another embodiment, the recesses may be formed in opposite first side portions of the bobbin 1110.

The bobbin 1110 may have projecting portions 1111 provided on the second side portions (corner portions). The projecting portions 1111 may project in a direction parallel to a straight line that extends through the optical axis OA and is perpendicular to the optical-axis direction; however, the disclosure is not limited thereto.

The projecting portions 1111 of the bobbin 1110 may correspond to recessed portions 1145 of the housing 1140, may be inserted into or disposed in the recessed portions 1145 of the housing 1140, and may inhibit or prevent the bobbin 1110 from being moved or rotated about the optical axis while deviating from a predetermined range.

An escape recess 1112a configured to avoid spatial interference with a first frame connection portion 1153 of the upper elastic member 1150 may be provided in an upper surface of the bobbin 1110. A second escape recess 1112b configured to avoid spatial interference with a second frame connection portion 1163 of the lower elastic member 1160 may be provided in a lower surface of the bobbin 1110.

For example, the first and second escape recesses 1112a and 1112b may be disposed in the corner portions of the bobbin 1110; however, the disclosure is not limited thereto, and the escape recesses may be formed in at least one of the side portions and the corner portions of the bobbin 1110.

The bobbin 1110 may include a first stopper 1115 projecting from the upper surface thereof. Although not shown in FIG. 27B, the bobbin 1110 may include a second stopper projecting from the lower surface thereof.

The first stopper 1115 and the second stopper of the bobbin 1110 may prevent the upper surface of the bobbin 1110 from directly colliding with the inside of an upper plate 1301 of the cover member 1300 and may prevent the lower surface of the bobbin 1110 from directly colliding with the circuit board 1250 even though the bobbin 1110 is moved while deviating from a predetermined range due to external impact when the bobbin 1110 is moved in the first direction in order to perform the autofocus function.

A guide protrusion 1114 configured to guide the installation position of the first frame connection portion 1153 of the upper elastic member 1150 may be formed on the upper surface of the bobbin 1110. The guide protrusion 1114 may protrude from the upper surface of the bobbin 1110. For example, a damper may be disposed between the guide protrusion 1114 and the first frame connection portion 1153.

The bobbin 1110 may be provided at the upper surface thereof with a first coupling portion 1113 configured to be coupled and fixed to the upper elastic member 1150, and the bobbin 1110 may be provided at the lower surface thereof with a second coupling portion 1117 configured to be coupled and fixed to the lower elastic member 1160.

For example, in FIGs. 27A and 27B, the first and second coupling portions 1113 and 1117 of the bobbin 1110 may be protrusions; however, the disclosure is not limited thereto. In another embodiment, the first and second coupling portions of the bobbin 1110 may be recesses or flat surfaces.

Next, the first coil 1120 will be described.

The first coil 1120 may be disposed on the bobbin 1110 or may be coupled to the bobbin 1110.

For example, the first coil 1120 may be disposed on the outer surface of the bobbin 1110. In the first coil 1120, the "coil" may be referred to as a "coil portion," a "coil block," or a "coil ring."

For example, the first coil 1120 may be disposed outside the sensing magnet 1180 and the balancing magnet 1185.

For example, at least a part of the first coil 1120 may overlap the sensing magnet 1180 and/or the balancing magnet 1185 in the direction perpendicular to the optical axis OA; however, the disclosure is not limited thereto. In another embodiment, the first coil may not overlap the sensing magnet and/or the balancing magnet in the direction perpendicular to the optical axis.

For example, the first coil 1120 may be disposed or seated in the seating portion 1105 of the bobbin 1110.

The first coil 1120 disposed on the bobbin 1110 may be spaced apart from the sensing magnet 1180 and/or the balancing magnet 1185. For example, at least a part of the bobbin 1110 may be disposed between the first coil 1120 and the sensing magnet 1180 (or the balancing magnet 1185).

In another embodiment, at least a part of the first coil 1120 may abut the sensing magnet 1180 and/or the balancing magnet 1185.

For example, the first coil 1120 may be disposed so as to encompass the outer surface of the bobbin 1110 in a rotating direction about the optical axis OA. For example, the first coil 1120 may be wound around the outer surface of the bobbin 1110 so as to have a closed curve shape, such as a ring shape.

For example, the first coil 1120 may be directly wound around the outer surface of the bobbin 1110; however, the disclosure is not limited thereto.

In another embodiment, the first coil may include at least one coil ring or coil block. For example, the first coil may include two or more coil rings or coil blocks, and the two or more coil rings or coil blocks may be connected to each other in series. In another embodiment, the two or more coil rings or coil blocks may not be connected to each other and may be individually or independently driven. At this time, the coil rings may be disposed on the bobbin so as to be rotated or wound about an axis perpendicular to the optical axis.

A power or driving signal may be provided to the first coil 1120. The power or driving signal provided to the first coil 1120 may be a direct current signal or an alternating current signal, or may include a direct current signal and an alternating current signal, and may be voltage or current.

When a driving signal (e.g. driving current) is supplied to the first coil 1120, electromagnetic force may be formed through electromagnetic interaction with the first magnet 1130, and the bobbin 1110 may be moved by the formed electromagnetic force in the optical-axis (OA) direction.

At an initial position of an AF moving unit (or an "AF operating unit"), the bobbin 1110 may be moved in the upward or downward direction (e.g. the Z-axis direction), which is referred to as bidirectional driving of the AF moving unit. Alternatively, at the initial position of the AF moving unit, the bobbin 1110 may be moved in the upward direction, which is referred to as unidirectional driving of the AF moving unit.

At the initial position of the AF moving unit, the first coil 1120 may correspond to, may be opposite to, or may overlap the magnet 1130 in a horizontal direction. For example, the horizontal direction may be a direction that is perpendicular to the optical axis OA or a direction parallel to a straight line that is perpendicular to the optical axis OA and extends through the optical axis OA.

For example, the AF moving unit may include the bobbin 1110 and components coupled to the bobbin 1110. For example, the AF moving unit may include the bobbin 1110, the first coil 1120, and the sensing magnet 1180. For example, the AF moving unit may include the balancing magnet 1185. In addition, the AF moving unit may further include the lens module 1400 mounted in the bobbin 1110.

The initial position of the AF moving unit may be the original position of the AF moving unit in the state in which no power is applied to the first coil 1120 or the position at which the AF moving unit is located as the result of the upper and lower elastic members 1150 and 1160 being elastically deformed due only to the weight of the AF moving unit.

In addition, an initial position of the bobbin 1110 may be the position at which the AF moving unit is located when gravity acts in a direction from the bobbin 1110 to the base 1210 or when gravity acts in a direction from the base 1210 to the bobbin 1110.

The sensing magnet 1180 provides a magnetic field, which is sensed by the first position sensor 1170. The balancing magnet 1185 may serve to offset the effect of a magnetic field of the sensing magnet 1180 and to balance the weight with the sensing magnet 1180.

The sensing magnet 1180 may be disposed on the bobbin 1110. In addition, the balancing magnet 1185 may be disposed on the bobbin 1110.

For example, the sensing magnet 1180 may be disposed or seated in the first recess 1018A of the bobbin 1110, and may be coupled to the first recess 1018A by an adhesive, etc. The sensing magnet 1180 may be disposed so as to correspond to or to be opposite to the first position sensor 1170 in the optical-axis (OA) direction.

The balancing magnet 1185 may be disposed or seated in the second recess 1018B of the bobbin 1110, and may be coupled to the second recess 1018B by an adhesive, etc. The balancing magnet 1185 may be located opposite to the sensing magnet 1180. For example, the sensing magnet 1180 and the balancing magnet 1185 may be disposed on two opposite corner portions (or side portions) of the bobbin 1110.

At least a part of the sensing magnet 1180 (or the balancing magnet 1185) may be exposed from or open to the bobbin 1110.

At least a part of one surface (e.g. a lower surface) of the sensing magnet 1180 corresponding to the first position sensor 1170 may be exposed from the recess 1018A of the bobbin 1110; however, the disclosure is not limited thereto. In another embodiment, one surface of the sensing magnet 1180 facing the first position sensor 1170 may not be exposed from the bobbin 1110.

At least a part of the balancing magnet 1185 may be exposed from the second recess 1018B of the bobbin 1110; however, the disclosure is not limited thereto. In another embodiment, a lower portion of the balancing magnet 1185 may not be exposed from the bobbin 1110.

For example, at least a part (e.g. a lower portion) of the sensing magnet 1180 (or the balancing magnet 1185) may protrude from the lower surface of the bobbin 1110 in a downward direction. The reason for this is that it is necessary to reduce the distance between the sensing magnet 1180 and the first position sensor 1170 in the optical-axis direction, thereby improving sensitivity of the first position sensor 1170 that senses the intensity of a magnetic field of the sensing magnet 1180. In another embodiment, at least a part (e.g. the lower portion) of the sensing magnet 1180 (or the balancing magnet 1185) may not protrude from the lower surface of the bobbin 1110.

For example, the sensing magnet 1180 may be a monopolar magnetized magnet having a single N pole and a single S pole. For example, the interface between the N pole and the S pole of the sensing magnet 1180 may be parallel to a direction perpendicular to the optical axis OA. For example, the N pole and the S pole of the sensing magnet 1180 may be opposite to each other in the optical-axis direction; however, the disclosure is not limited thereto. In another embodiment, the sensing magnet may be disposed such that the N pole and the S pole face each other in the direction perpendicular to the optical axis. For example, in another embodiment, the interface between the N pole and the S pole of the sensing magnet 1180 disposed on the bobbin 1110 may be parallel to the optical axis OA.

In another embodiment, the sensing magnet 1180 may be a bipolar magnetized magnet or a quadrupole magnet having two N poles and two S poles. For example, the sensing magnet 1180 may include a first magnet portion, a second magnet portion, and a partition disposed between the first magnet portion and the second magnet portion.

The first magnet portion may include an N pole, an S pole, and a first boundary portion between the N pole and the S pole.

The second magnet portion may include an N pole, an S pole, and a second boundary portion between the N pole and the S pole. The partition may be a portion that separates or isolates the first magnet portion and the second magnet portion from each other and that has substantially no magnetism, and may be a portion having little polarity. For example, the partition may be a nonmagnetic material or air. The partition may be referred to as a "nonmagnetic partition," a "neutral zone," or a "neutral region."

Each of the first boundary portion and the second boundary portion may be a portion that is naturally generated to form a magnet consisting of one N pole and one S pole, and the partition is a portion that is artificially formed when the first magnet portion and the second magnet portion are magnetized. The width of the partition may be greater than the width of the first boundary portion (or the width of the second boundary portion).

For example, the first magnet portion and the second magnet portion may be disposed so as to face each other in the optical-axis direction. For example, the partition may be parallel to a straight line that is perpendicular to the optical axis and that extends through the optical axis.

The shape of the sensing magnet 1180 may be a circular column, a cylinder, a semicircular column, or a polyhedron (e.g. a hexahedron); however, the disclosure is not limited thereto.

For example, the sensing magnet 1180 may have a cylindrical shape having a length S1 (see FIG. 27A) in the optical-axis direction greater than the length S2 in the direction perpendicular to the optical axis, whereby the sensing magnet may be easily inserted into or coupled to the hole 1018A of the bobbin 1110, and the distance from the first position sensor 1170 in the optical-axis direction may be reduced. In another embodiment, the sensing magnet 1180 may have a length in the optical-axis direction equal to or less than the length in the direction perpendicular to the optical axis.

When the shape of the sensing magnet 1180 is a circular column or a cylinder, distribution of a magnetic field of the sensing magnet 1180 sensed by the first position sensor 1170 may be uniform, whereby sensitivity of the first position sensor 1170 may be improved.

For example, the sectional shape of the sensing magnet 1180 cut in the direction perpendicular to the optical axis may be a circle, an oval, or a polygon (e.g. a triangle, a quadrangle, or a pentagon); however, the disclosure is not limited thereto.

A description of the polarity and shape of the sensing magnet 1180 may be equally applied or analogically applied to the balancing magnet 1185. For example, the balancing magnet 1185 may be identical to the sensing magnet 1180.

Referring to FIGs. 29A to 29D, for example, a lower surface, a lower portion, or a lower end of the sensing magnet 1180 (or the balancing magnet 1185) may be located lower than a lower surface, a lower portion, or a lower end of the first coil 1120. In another embodiment, the former may be higher than or level with the latter.

Alternatively, for example, an upper surface, an upper portion, or an upper end of the sensing magnet 1180 (or the balancing magnet 1185) may be located lower than an upper surface, an upper portion, or an upper end of the first coil 1120. In another embodiment, the former may be higher than or level with the latter.

In another embodiment, the sensing magnet may be disposed on the circuit board 1250 or the base 1210, and the first position sensor may be disposed on the bobbin 1110.

In another embodiment, the first position sensor may be disposed on the bobbin 1110, and the sensing magnet may be disposed on the housing 1140 so as to be opposite to the first position sensor in the direction perpendicular to the optical axis.

In another embodiment, the first position sensor may be disposed on the housing 1140, and the sensing magnet may be disposed on the bobbin 1110 so as to be opposite to the first position sensor in the direction perpendicular to the optical axis.

The sensing magnet 1180 may be moved with the bobbin 1110 in the optical-axis direction, and the distance between the sensing magnet 1180 and the first position sensor 1170 may be changed by movement of the sensing magnet 1180. The first position sensor 1170 may sense the intensity of a magnetic field or magnetic force of the sensing magnet 1180 moved in the optical-axis direction, and may output an output signal based on the result of sensing.

For example, the intensity of the magnetic field or the magnetic force sensed by the first position sensor 1170 may be changed based on displacement of the bobbin 1110 in the optical-axis direction or the distance between the first position sensor 1170 and the sensing magnet 1180, the first position sensor 1170 may output an output signal proportional to the sensed intensity of the magnetic field, and displacement of the bobbin 1110 in the optical-axis direction may be sensed using the output signal of the first position sensor 1170.

Referring to FIGs. 28A to 28C, the housing 1140 receives at least a part of the bobbin 1110 therein, and supports the magnet 1130. The housing 1140 may be included in an "OIS moving unit (or operating unit)." The OIS moving unit may be moved in the direction perpendicular to the optical axis by OIS driving due to interaction between the magnet 1130 and the second coil 1230.

The housing 1140 may be disposed inside the cover member 1300, and may be disposed between the cover member 1300 and the bobbin 1110.

An outer surface of the housing 1140 may be spaced apart from an inner surface of a side plate of the cover member 1300, and the housing 1140 may be moved in a space between the housing 1140 and the cover member 1300 by OIS driving.

The housing 1140 may have a hollow column shape including an opening or a hollow 1026A.

For example, the housing 1140 may have a polygonal (e.g. quadrangular or octagonal) or circular opening 1026A, and the opening 1026A may be a through-hole formed through the housing 1140 in the optical-axis direction.

The housing 1140 may include a side portion and a corner portion. For example, the housing 1140 may include a plurality of side portions 1141-1 to 1141-4 and a plurality of corner portions 1142-1 to 1142-4.

For example, the housing 1140 may include first to fourth side portions 1141-1 to 1141-4 and first to fourth corner portions 1142-1 to 1142-4.

The first to fourth side portions 1141-1 to 1141-4 may be spaced apart from each other. Each of the corner portions 1142-1 to 1142-4 of the housing 1140 may be disposed or located between two adjacent side portions, and may interconnect the side portions 1141-1 to 1141-4.

For example, the corner portions 1142-1 to 1142-4 may be located at corners of the housing 1140. For example, the number of side portions of the housing 1140 may be four, and the number of corner portions thereof may be four; however, the disclosure is not limited thereto.

Each of the side portions 1141-1 to 1141-4 of the housing 1140 may be disposed parallel to a corresponding one of side plates 1302 of the cover member 1300.

The horizontal length of each of the side portions 1141-1 to 1141-4 of the housing 1140 may be greater than the horizontal length of each of the corner portions 1142-1 to 1142-4 thereof; however, the disclosure is not limited thereto.

The first side portion 1141-1 and the second side portion 1141-2 of the housing 1140 may be located opposite to each other, and the third side portion 1141-3 and the fourth side portion 1141-4 may be located opposite to each other. Each of the third side portion 1141-3 and the fourth side portion 1141-4 of the housing 1140 may be located between the first side portion 1141-1 and the second side portion 1141-2.

In order to prevent direct collision with the inner surface of the upper plate 1301 of the cover member 1300, the housing 1140 may be provided on an upper portion, an upper end, or an upper surface thereof with a stopper 1144. For example, the stopper 1144 may be disposed or arranged on at least one of the side portion and the corner portion of the housing 1140.

In addition, the housing 1140 may be provided on an upper portion, an upper end, or an upper surface of each of the corner portions 1142-1 to 1142-4 thereof with a guide projecting portion 146 configured to guide a damper formed on the supporting member 1220 by coating.

The housing 1140 may be provided on an upper portion, an upper end, or an upper surface thereof with at least one first coupling portion 1143 coupled to a first outer frame 1152 of the upper elastic member 1150. In addition, the housing 1140 may be provided on a lower portion, a lower end, or a lower surface thereof with at least one second coupling portion 1146 coupled and fixed to a second outer frame 1162 of the lower elastic member 1160.

Each of the first coupling portion 1143 and the second coupling portion 1146 of the housing 1140 may be a protrusion; however, the disclosure is not limited thereto. In another embodiment, each of the first coupling portion and the second coupling portion may be a recess or a flat surface.

The first coupling portion 1143 of the housing 1140 may be coupled to a hole 1152a of the first outer frame 1152 of the upper elastic member 1150 and the second coupling portion 1146 of the housing 1140 may be coupled to a hole 1162a of the second outer frame 1162 of the lower elastic member 1160 by thermal fusion or using an adhesive.

The housing 1140 may include a seating portion 1141 (or a "receiving portion") configured to receive the magnet 1130. For example, the seating portion 1141 may be formed at at least one of the side portions 1141-1 to 1141-4 of the housing 1140. For example, the seating portion 1141 may be formed at a lower portion or a lower end of at least one of the side portions 1141-1 to 1141-4 of the housing 1140.

For example, the seating portion 1141 may be provided at an inner surface of each of the side portions 1141-1 to 1141-4 of the housing 1140; however, the disclosure is not limited thereto. In another embodiment, the seating portion may be provided at an outer surface of each of the side portions of the housing. In an embodiment in which the magnet is disposed on each of the corner portions of the housing 1140, the seating portion may be formed at a corresponding one of the corner portions of the housing 1140.

For example, the seating portion 1141 of the housing 1140 may be a recess having a shape corresponding to or coinciding with the magnet 1130, e.g. a concave recess; however, the disclosure is not limited thereto.

For example, the seating portion 1141 may include a first opening facing the first coil 1120. In addition, the seating portion 1141 may include a second opening, through which a lower portion or a lower end of the magnet 1130 is exposed.

For example, one side surface of the magnet 1130 fixed to or disposed on the seating portion 1141 of the housing 1140 may be exposed through the first opening of the seating portion 1141. In addition, a lower surface of the magnet 1130 fixed to or disposed on the seating portion 1141 of the housing 1140 may be exposed through the second opening of the seating portion 1141.

For example, the lower end or the lower surface of the magnet 1130 may project from the lower surface of the housing 1140 toward the circuit board 1250. For example, the magnet 1130 may be fixed to the seating portion 1141 using an adhesive. The housing 1140 may include an injection hole 1141A, through which an adhesive is injected. The injection hole 1141A may communicate with the seating portion 1141.

Supporting members 1220-1 to 1220-4 may be disposed on the corner portions 1142-1 to 1142-4 of the housing 1140, and holes 1147, through which the supporting members 1220-1 to 1220-4 extend, may be provided in the corner portions 1142-1 to 1142-4 of the housing 1140.

For example, the housing 1140 may include a hole 1147 formed through an upper portion of each of the corner portions 1142-1 to 1142-4.

At least one supporting member 1220-1 to 220-4 may be disposed on at least one of the corner portions 1142-1 to 1142-4 of the housing 1140. For example, two supporting members 1020A and 1020B may be disposed on each of the corner portions 1142-1 to 1142-4 of the housing 1140, and two holes 1147a and 1147b may be formed in each corner portion of the housing 1140.

The hole 1147 may be a through-hole formed through the housing 1140 in the optical-axis direction; however, the disclosure is not limited thereto. In another embodiment, the housing may include a recess or an escape recess configured to avoid spatial interference with the supporting member, instead of the hole 1147. Here, the number of recesses may be equal to the number of supporting members. For example, in another embodiment, the hole may be depressed from the outer surface of each of the corner portions of the housing 1140, and at least a part of the hole may be open to the outer surface of the corner portion.

One end of the supporting member 1220 may be connected or bonded to the upper elastic member 1150 through the hole 1147.

For example, a damper may be disposed in the hole 1147, the diameter of the hole 1147 may be gradually increased in a direction from the upper surface to the lower surface of the housing 1140 in order to easily coat the damper; however, the disclosure is not limited thereto. In another embodiment, the diameter of the hole 1147 may be uniform.

The housing 1140 may be provided with at least one stopper 1149 projecting from the outer surfaces of the side portions 1141-1 to 1141-4 thereof, and the at least one stopper 1149 may prevent the outer surface of the housing 1140 from directly colliding with the cover member 1300 when the housing 1140 is moved in the direction perpendicular to the optical-axis direction.

In order not only to form a path along which the supporting member 1220 extends but also to avoid spatial interference between the supporting member 1220 and the corner portions 1142-1 to 1142-4 of the housing 1140, an escape recess 1148 or a recess may be provided in the outer surface of each of the corner portions 1142-1 to 1142-4. The escape recess 1148 may be connected to the hole 1147 of the housing 1140.

Referring to FIG. 28A, an upper surface 1060B of each of the corner portions 1142-1 to 1142-4 of the housing 1140 may include two or more surfaces having a stair in the optical-axis direction. Heights of the two or more surfaces may be lowered toward the corner of the housing 1140. The hole 1147 may be formed in the surface that has the lowest height and that is closest to the corner of the housing 1140, among the two or more surfaces.

For example, the upper surface 1060B of each of the corner portions 1142-1 to 1142-4 of the housing 1140 may include a first surface 1061, a second surface 1062 forming a stair with the first surface 1061, and a third surface 1063 forming a stair with the second surface 1062.

For example, the second surface 1062 may be lower than the first surface 1061, and the third surface 1063 may be lower than the second surface 1062. In addition, the first surface 1061 may be located closest to the center of the housing 1140, the third surface 1063 may be located farthest from the center of the housing 1140, and the second surface 1062 may be located halfway between the first surface 1061 and the third surface 1063.

For example, the first surface 1061 of each of the corner portions 1142-1 to 1142-4 of the housing 1140 may be lower than an upper surface 1060A of each of the side portions 1141-1 to 1141-4 of the housing 1140; however, the disclosure is not limited thereto. In another embodiment, the former may be level with or higher than the latter.

For example, the first coupling portion 1143 may be formed at the first surface 1061 of each of the corner portions 1142-1 to 1142-4 of the housing 1140, and the hole 1147 may be formed in the third surface 1063 of each of the corner portions 1142-1 to 1142-4 of the housing 1140.

A guide protrusion 1146 protruding from the second surface 1062 and the third surface 1063 may be formed on edges of the second surface 1062 and the third surface 1063 of each of the corner portions 1142-1 to 1142-4 of the housing 1140. For example, a damper may be disposed on the second surface 1062 and the third surface 1063 of each of the corner portions 1142-1 to 1142-4 of the housing 1140, and the guide protrusion 1146 may serve to prevent overflow of the damper from the housing 1140. In addition, the damper may be disposed in the hole 1147, and at least a part of the damper may contact the supporting member 1220.

The housing 1140 may have a recessed portion 1145 formed at a position corresponding to the projecting portion 1111 of the bobbin 1110. For example, the recessed portion 1145 may be formed in an inner surface of at least one of the corner portions 1142-1 to 1142-4 of the housing 1140. In another embodiment, the recessed portion may be formed in at least one of the side portions of the housing 1140.

For example, the recessed portion 1145 may be open at an upper portion thereof, and the recessed portion 1145 may have an opening formed in a side portion facing an outer surface of each corner portion of the bobbin 1110.

The magnet 1130 may be disposed on the housing 1140. For example, the magnet 1130 may be disposed between the side plate 1302 of the cover member 1300 and the bobbin 1110. For example, the magnet 1130 may be disposed in the seating portion 1141 of the housing 1140.

For example, the magnet 1130 may be disposed on each of the side portions 1141-1 to 1141-4 of the housing 1140.

At the initial position of the AF moving unit, the magnet 1130 may be disposed on the housing 1140 such that at least a part of the magnet overlaps the first coil 1120 in a direction parallel to a straight line that is perpendicular to the optical axis OA and extends through the optical axis OA.

The magnet 1130 may include at least one magnet (magnet unit).

For example, the magnet 1130 may include a plurality of magnets.

For example, at least two magnets 1130 may be disposed on the side portions 1141-1 to 1141-4 of the housing 1140 that face each other.

For example, the magnet 1130 may include four magnets 1130-1 to 1130-4 (or magnet units). For example, each of the magnets 1130-1 to 1130-4 may be disposed on a corresponding one of the side portions 1141-1 to 1141-4 of the housing 1140.

Each of the magnets 1130-1 to 1130-4 may have a shape corresponding to the shape of a corresponding one of the side portions 1141-1 to 1141-4 of the housing 1140, and may have a polyhedral shape (e.g. a hexahedral shape).

For example, the sectional shape of each of the first to fourth magnets 1130-1 to 1130-4 in the direction perpendicular to the optical axis may be a polygon, such as a triangle, a quadrangle, a pentagon, a diamond, or a trapezoid; however, the disclosure is not limited thereto.

For example, each of the magnets 1130-1 to 1130-4 may be a monopolar magnetized magnet; however, the disclosure is not limited thereto. In another embodiment, each of the magnets 1130-1 to 1130-4 may be a bipolar magnetized magnet or a quadrupole magnet having two N poles and two S poles.

For example, each of the sensing magnet 1180 and the balancing magnet 1185 may not overlap the first coil 1120 in the optical-axis (OA) direction; however, the disclosure is not limited thereto. In another embodiment, the sensing magnet and the balancing magnet may overlap the first coil in the optical-axis direction.

In another embodiment, the magnet may be disposed on each of the corner portions 1142-1 to 1142-4 of the housing 1140. At this time, the magnet may have a polyhedral shape capable of being easily seated or disposed on each of the corner portions of the housing 1140. For example, the magnet may include a part having a length in a horizontal direction of the magnet reduced in a direction from a first surface of the magnet to a second surface of the magnet. Here, the first surface of the magnet may be a surface opposite to the first coil 1120, and the second surface of the magnet may be a surface opposite to the first surface.

In another embodiment, the magnet may be disposed on the bobbin 1110, and the first coil may be disposed on the housing 1140.

The first magnet 1130-1 may be disposed between a first corner CA1 and a second corner CA2 of the housing 1140, the second magnet 1130-2 may be disposed between a third corner CA3 and a fourth corner CA4 of the housing 1140, the third magnet 1130-3 may be disposed between the second corner CA2 and the third corner CA3 of the housing 1140, and the fourth magnet 1130-4 may be disposed between the fourth corner CA4 and the first corner CA1 of the housing 1140.

For example, each of the first to fourth corners CA1 to CA4 may be a corresponding one of the first to fourth corner portions 1142-1 to 1142-4.

Two magnets 1130-1 and 1130-4 may be disposed adjacent to one corner (e.g. CA1) of the housing 1140. In addition, the other two magnets 1130-2 and 1130-3 may be disposed adjacent to another corner (e.g. CA3) of the housing 1140.

For example, the magnets 1130-1 to 1130-4 may be disposed so as to be biased to two facing corners CA1 and CA2 of the housing 1140.

For example, the magnets 1130-1 to 1130-4 may be disposed closer to two corners (e.g. CA1 and CA3) of the housing 1140 that face each other in a second diagonal direction than two corners (e.g. CA2 and CA4) of the housing 1140 that face each other in a first diagonal direction. The first diagonal direction may be a direction that is perpendicular to the optical axis and that faces from the second corner to the fourth corner. The second diagonal direction may be a direction that is perpendicular to the optical axis and that faces from the first corner to the third corner. The first diagonal direction and the second diagonal direction may be perpendicular to each other.

Referring to FIGs. 29A and 29B, the elastic member may be coupled to the bobbin 1110 and the housing 1140. The elastic member may elastically support the bobbin 1110 with respect to the housing 1140. For example, the elastic member may include at least one of the upper elastic member 1150 and the lower elastic member 1160.

For example, the upper elastic member 1150 may be coupled to an upper portion, an upper surface, or an upper end of the bobbin 1110 and to an upper portion, an upper surface, or an upper end of the housing 1140. For example, the lower elastic member 1160 may be coupled to a lower portion, a lower surface, or a lower end of the bobbin 1110 and to a lower portion, a lower surface, or a lower end of the housing 1140.

The upper elastic member 1150 may include a plurality of upper elastic members 1150-1 and 1150-2 conductively separated from each other. For example, the plurality of upper elastic members 1150-1 and 1150-2 may be disposed spaced apart from each other.

In FIG. 29A, two upper elastic members conductively separated from each other are shown; however, the number of upper elastic members is not limited thereto. In another embodiment, one or three or more upper elastic members may be provided.

At least one of the first and second upper elastic members 1150-1 and 1150-2 may include a first inner frame 1151 coupled to the bobbin 1110, a first outer frame 1152 coupled to the housing 1140, and a first frame connection portion 1153 configured to interconnect the first inner frame 1151 and the first outer frame 1152. The elastic member may be referred to as a "spring" or an "elastic unit," the inner frame may be referred to as an "inner portion," and the outer frame may be referred to as an "outer portion."

For example, the first inner frame 1151 of the upper elastic member 1150 may be provided with a hole 1151a, to which the first coupling portion 1113 of the bobbin 1110 is coupled; however, the disclosure is not limited thereto. For example, the hole 1151a of the first inner frame 1151 may have at least one incised portion, through which an adhesive permeates between the first coupling portion 1113 of the bobbin 1110 and the hole 1151a.

The first outer frame 1152 of the upper elastic member 1150 may be provided with a hole 1152a, to which the first coupling portion 1143 of the housing 1140 is coupled.

The first outer frame 1152 may include a first coupling portion 1071 coupled to the housing 1140, a second coupling portion 1072 coupled to the supporting member 1220, and a connection portion 1073 configured to interconnect the first coupling portion 1071 and the second coupling portion 1072.

The first coupling portion 1071 may include at least one coupling region coupled to the housing 1140 (e.g. the corner portions 1142-1 to 1142-4). For example, the coupling region of the first coupling portion 1071 may include at least one hole 1152a coupled to the first coupling portion 1143 of the housing 1140.

For example, the coupling region may have one or more holes, and each of the corner portions 1142-1 to 1142-4 of the housing 1140 may be provided with one or more first coupling portions corresponding thereto. In the embodiment of FIG. 29A, the coupling region of the first coupling portion 1071 is implemented so as to include the hole 1152a; however, the disclosure is not limited thereto. In another embodiment, the coupling region may be implemented by any of various shapes sufficient to be coupled to the housing 1140, such as a recess.

The second coupling portion 1072 may have a hole 1052, through which the supporting member 1220 extends. One end of the supporting member 1220 extending through the hole 1052 may be directly coupled to the second coupling portion 1072 using a conductive adhesive member or a solder 1901, and the second coupling portion 1072 and the supporting member 1220 may be conductively connected to each other.

For example, the second coupling portion 1072, which is a region on which the solder 1901 is disposed for coupling with the supporting member 1220, may include the hole 1052 and a region around the hole 1052.

In an embodiment in which two supporting members are disposed on one corner of the housing 1140, the first outer frame 1152 may include two second coupling portions 1072A and 1072B corresponding to one corner of the housing 1140. For example, the second coupling portion 1072 may include a 2-1 coupling portion 1072A coupled to one of the two supporting members 1020A and 1020B and a 2-2 coupling portion 1072B coupled to the other of the two supporting members 1020A and 1020B.

The connection portion 1073 may interconnect the first coupling portion 1071 and the second coupling portion 1072. For example, the connection portion 1073 may interconnect the second coupling portion 1072 and the coupling region of the first coupling portion 1071.

For example, the connection portion 1073 may include a first connection portion 1073A configured to interconnect the first coupling portion 1071 and the 2-1 coupling portion 1072A of the upper elastic member 1150 and a second connection portion 1073B configured to interconnect the first coupling portion 1071 and the 2-2 coupling portion 1072B of the upper elastic member 1150.

Each of the first and second connection portions 1073A and 1073B may include a bent portion bent at least once or a curved portion curved at least once; however, the disclosure is not limited thereto. In another embodiment, each of the first and second connection portions may be straight.

For example, the first coupling portion 1071 may contact the upper surface of each of the corner portions 1142-1 to 1142-4 of the housing 1140, and may be supported by each of the corner portions 1142-1 to 1142-4 of the housing 1140. For example, the second coupling portion 1072 may not be supported by the upper surface of the housing 1140, and may be spaced apart from the housing 1140.

In addition, a damper (not shown) may be disposed in an empty space between the connection portion 1073 and the housing 1140 in order to prevent oscillation due to vibration.

For example, the first upper elastic member 1150-1 may include two first outer frames 1152 coupled to two corner portions (e.g. 1142-1 and 1142-2) of the housing 1140, and the second upper elastic member 1150-2 may include two first outer frames 1152 coupled to the other two corner portions (e.g. 1142-3 and 1142-4) of the housing 1140.

In FIG. 29A, one first outer frame is disposed on any one corner of the housing 1140; however, the disclosure is not limited thereto. In another embodiment, two first outer frames may be disposed on any one corner of the housing 1140 so as to be spaced apart from each other, and each of the two first outer frames may include one first coupling portion, one second coupling portion, and one connection portion configured to interconnect the first coupling portion and the second coupling portion.

A first bonding portion 1041, to which one end of the first coil 1120 is coupled, may be provided at one end of the first inner frame of the first upper elastic member 1150-1.

A second bonding portion 1042, to which the other end of the first coil 1120 is coupled, may be provided at the other end of the first inner frame of the second upper elastic member 1150-2.

The first coil 1120 may be conductively connected to the upper elastic member 1150. For example, one end of the first coil 1120 may be conductively connected to the first upper elastic member 1150-1, and the other end of the first coil 1120 may be conductively connected to the second upper elastic member 1150-2.

In another embodiment, the first coil may be conductively connected to at least one of the upper elastic member and the lower elastic member.

For the first and bonding portions 1041 and 1042, the "bonding portion" may be referred to as a pad portion, a connection terminal, a solder portion, or an electrode portion.

The lower elastic member 1160 may include one spring or elastic unit; however, the disclosure is not limited thereto. In another embodiment, the lower elastic member may include a plurality of springs or a plurality of elastic units spaced apart from each other.

The lower elastic member 1160 may include a second inner frame 1161 coupled or fixed to the lower portion, the lower surface, or the lower end of the bobbin 1110, a second outer frame 1162 coupled or fixed to the lower portion, the lower surface, or the lower end of the housing 1140, and a second frame connection portion 1163 configured to interconnect the second inner frame 1161 and the second outer frame 1162.

Each of the first frame connection portion 1153 of the upper elastic member 1150 and the second frame connection portion 1163 of the lower elastic member 1160 may be formed so as to be bent or curved (or crooked) at least once in order to form a predetermined pattern. The upward and/or downward movement of the bobbin 1110 in the first direction may be flexibly (or elastically) supported through positional change and minute deformation of the connection portion 1073 and the first and second frame connection portions 1153 and 1163.

The second inner frame 1161 may be provided with a hole 1161a, to which the second coupling portion 1117 of the bobbin 1110 is coupled, and the second outer frame 1162 may be provided with a hole 1162a, to which the second coupling portion 1146 of the housing 1140 is coupled.

Each of the upper elastic member 1150 and the lower elastic member 1160 may be constituted by a leaf spring; however, the disclosure is not limited thereto. Each of the upper elastic member and the lower elastic member may be implemented by a coil spring or the like. In addition, each of the upper elastic member 1150 and the lower elastic member 1160 may include a conductive material, such as a metal material.

In order to absorb or alleviate vibration of the bobbin 1110, the lens moving apparatus 1100 may further include a first damper (not shown) disposed between each of the upper elastic members 1150-1 and 1150-2 and the bobbin 1110 (or the housing 1140).

For example, the first damper may be disposed between the first frame connection portion 1153 of each of the upper elastic members 1150-1 and 1150-2 and the bobbin 1110 so as to be coupled thereto, or may be disposed on the first frame connection portion 1153 and the bobbin 1110 so as to be coupled thereto.

In addition, for example, the lens moving apparatus 1100 may further include a second damper (not shown) disposed between the second frame connection portion 1163 of the lower elastic member 1160 and the bobbin 1110 (or the housing 1140) so as to be coupled thereto.

In addition, for example, the lens moving apparatus 1100 may further include a third damper (not shown) disposed between the supporting member 1220 and the hole 1147 of the housing 1140 so as to be coupled thereto.

In addition, for example, the lens moving apparatus 1100 may further include a fourth damper (not shown) disposed on the second coupling portion 1072 and one end of the supporting member 1220 so as to be coupled thereto. In addition, the lens moving apparatus 1100 may further include a fifth damper (not shown) disposed on the other end of the supporting member 1220 and the terminal 1027.

In addition, for example, in another embodiment, a damper (not shown) may be further disposed between the inner surface of the housing 1140 and the outer surface of the bobbin 1110.

The supporting member 1220 may support the housing 1140 so as to be movable relative to the base 1210 in the direction perpendicular to the optical axis OA. The supporting member 1220 may conductively connect at least one of the upper and lower elastic members 1150 and 1160 to the circuit board 1250.

Referring to FIG. 30, for example, the supporting member 1220 may be coupled to the upper elastic member 1150. For example, the supporting member 1220 may include a plurality of supporting members 1220-1 to 1220-4.

For example, the supporting member 1220 may include first to fourth supporting members 1220-1 to 1220-4 corresponding to the corner portions 1142-1 to 1142-4 of the housing 1140.

For example, the supporting member 1220 may be disposed on each corner portion of the housing 1140.

For example, two supporting members 1020A and 1020B may be disposed on each corner portion of the housing 1140. For example, the lens moving apparatus 1100 may include a total of eight supporting members; however, the disclosure is not limited thereto. In another embodiment, two or more supporting members may be included.

In another embodiment, one supporting member may be disposed on each of the corner portions of the housing 1140. In another embodiment, two supporting members may be disposed on at least one of the corner portions of the housing 1140, and one supporting member may be disposed on at least another of the corner portions of the housing 1140.

In another embodiment, for example, two supporting members may be disposed on each of two corner portions of the housing 1140, and one supporting member may be disposed on each of two corner portions of the housing 1140.

For example, each of the first to fourth supporting members 1220-1 to 1220-4 may be disposed on a corresponding one of the first to fourth corner portions 1142-1 to 1142-4 of the housing 1140.

For example, each of the first to fourth supporting members 1220-1 to 1220-4 may include two supporting members 1020A and 1020B (or wires) spaced apart from each other.

One end of the supporting member 1220 may be connected or coupled to the upper elastic member 1150.

The first to fourth supporting members 1220-1 to 1220-4 may be connected or coupled to the upper elastic member 1150.

For example, the first supporting member 1220-1 may be connected or coupled to the second coupling portion 1072 of one of the first outer frames of the first upper elastic member 1150-1, and the second supporting member 1220-2 may be connected or coupled to the second coupling portion 1072 of the other of the first outer frames of the first upper elastic member 1150-1.

For example, the third supporting member 1220-3 may be connected or coupled to the second coupling portion 1072 of one of the first outer frames of the second upper elastic member 1150-2, and the fourth supporting member 1220-4 may be connected or coupled to the second coupling portion 1072 of the other of the first outer frames of the second upper elastic member 1150-2.

For example, the first supporting member 1220-1 and the second supporting member 1220-2 may be conductively connected to the first upper elastic member 1150-1, and the third supporting member 1220-3 and the fourth supporting member 1220-4 may be conductively connected to the second upper elastic member 1150-2.

For example, one end of the 1-1 supporting member 1020A of each of the first to fourth supporting members 1220-1 to 1220-4 may be coupled to one 1072A of the two second coupling portions 1072A and 1072B of the first outer frame 1152, and one end of the 1-2 supporting member 1020B may be coupled to the other 1072B of the two second coupling portions 1072A and 1072B of the first outer frame 1152.

In another embodiment, the upper elastic member may include four upper elastic members separated or spaced apart from each other, and each of the supporting members 1220-1 to 1220-4 may be coupled to two coupling portions of a corresponding one of the four upper elastic members.

Two supporting members 1220-1 and 1220-3, among the supporting members 1220-1 to 1220-4, may be conductively connected to the first coil 1120. For example, the two supporting members 1220-1 and 1220-3 may be disposed on two corner portions of the housing 1140 that face each other in a diagonal direction.

In another embodiment, the two supporting members conductively connected to the first coil 1120 may be disposed on two corners selected from among the four corners of the housing 1140. For example, the two supporting members conductively connected to the first coil 1120 may be disposed on two corners adjacent to one side portion of the housing or two corners of the housing diagonally facing each other.

The other end of the supporting member 1220 may be connected or coupled to the terminal member.

For example, the other end of each of the supporting members 1220-1 to 1220-4 may be connected or coupled to a corresponding one of the terminals 1027A1 to 1027A4.

Each of the supporting members 1220-1 to 1220-4 may be conductively connected to a corresponding one of the terminals 1027A1 to 1027A4. For example, the supporting members 1220-1 to 1220-4 may conductively connect the upper elastic members 1150-1 and 1150-2 and the terminals 1027A1 to 1027A4 to each other.

For example, the first supporting member 1220-1 may conductively connect the first upper elastic member 1150-1 and the first terminal 1027A1 to each other, and the second supporting member 1220-2 may conductively connect the first upper elastic member 1150-1 and the second terminal 1027A2 to each other.

For example, the third supporting member 1220-3 may conductively connect the second upper elastic member 1150-2 and the third terminal 1027A3 to each other, and the fourth supporting member 1220-4 may conductively connect the second upper elastic member 1150-2 and the fourth terminal 1027A4 to each other.

In an embodiment in which the upper elastic member includes four upper elastic members separated or spaced apart from each other, each of the first to fourth supporting members 1220-1 to 1220-4 may conductively connect a corresponding one of the four upper elastic members and a corresponding one of the first to fourth terminal members 1027A1 to 1027A4 to each other.

The first to fourth supporting members 1220-1 to 1220-4 may be spaced apart from the housing 1140, not fixed to the housing 1140, and one end of each of the first to fourth supporting members 1220-1 to 1220-4 may be directly connected or coupled to the second coupling portion 1072 of a corresponding one of the first and second upper elastic members 1150-1 and 1150-2 using a solder or an adhesive (e.g. a conductive or nonconductive adhesive).

In another embodiment, the terminal member 1027 may be omitted, and the other end of each of the first to fourth supporting members 1220-1 to 1220-4 may be directly connected or coupled to the circuit board 1250. For example, the other end of each of the first to fourth supporting members 1220-1 to 1220-4 may be directly connected or coupled to the lower surface of the circuit board 1250. For example, the other end of each of the first to fourth supporting members 1220-1 to 1220-4 may be directly conductively connected to the circuit board 1250.

In another embodiment, the other end of each of the supporting members 1220-1 to 1220-4 may be coupled to the base 1210, and wiring or a circuit pattern configured to conductively connect the other end of each of the supporting members 1220-1 to 1220-4 to the circuit board 1250 may be formed on the base 1210.

The first coil 1120 may be conductively connected to the circuit board 1250 via the upper elastic member 1150 and the terminal member 1027.

For example, one end of the first coil 1120 may be conductively connected to the first upper elastic member 1150-1 and the first supporting member 1220-1, and may be conductively connected to a first pad P1 of the circuit board 1250 via the first supporting member 1220-1 and the first terminal 1027A1.

In addition, the other end of the first coil 1120 may be connected to the second upper elastic member 1150-2 and the third supporting member 1220-3, and may be conductively connected to a second pad P2 of the circuit board 1250 via the third supporting member 1220-3 and the third terminal 1027A3.

In another embodiment, the first coil 1120 may be conductively connected to at least one of the upper elastic member 1150 and the lower elastic member. For example, the lower elastic member may include two lower elastic members spaced apart from each other, and the first coil 1120 may be conductively connected to the two lower elastic members. In another embodiment, the first coil 1120 may be conductively connected to the upper elastic member and the lower elastic member.

For example, one driving signal may be provided to the first coil 1120 via the first and second pads P1 and P2 of the circuit board 1250.

For example, one end of the first coil 1120 may be conductively connected to the first supporting member 1220-1, and may be conductively connected to the first pad P1 of the circuit board 1250 via the first terminal 1027A1. In addition, the other end of the first coil 1120 may be conductively connected to the third supporting member 1220-3, and may be conductively connected to the second pad P2 of the circuit board 1250 via the third terminal 1027A3.

The supporting member 1220 may be implemented by an elastic supporting member, such as a suspension wire, a leaf spring, or a coil spring. The supporting member 1220 may be made of a conductive material and/or a nonconductive material. For example, the supporting member 1220 may be made of a metal and/or a nonconductive material.

Also, in another embodiment, the supporting member 1220 may be integrally formed with the upper elastic member 1150.

Referring to FIGs. 31 and 32, the circuit board 1250 is disposed under the housing 1140 and/or the bobbin 1110. Alternatively, for example, the circuit board 1250 may be disposed under the lower elastic member 1160. In addition, the circuit board 1250 may be disposed on an upper surface of the base 1210.

For example, the circuit board 1250 may include a body 1252 disposed on the upper surface of the base 1210 and an opening 1024A formed in the body 1252.

The opening 1024A of the circuit board 1250 may correspond to or may be opposite to at least one of the opening 1025A of the bobbin 1110, the opening 1026A of the housing 1140, and/or an opening 1028A of the base 1210. For example, the opening 1024A may be a through-hole formed through the body 1252 in the optical-axis direction.

When viewed from above, the shape of the body 1252 of the circuit board 1250 may be a shape coinciding with or corresponding to the upper surface of the base 1210, such as a quadrangular shape; however, the disclosure is not limited thereto.

The circuit board 1250 may include a terminal member 1253 extending from the body 1252. The terminal member 1253 may be bent from the body 1252 to a side surface of the base 1210 and may then extend.

The terminal member 1253 of the circuit board 1250 may include a plurality of terminals 1251 configured to receive electrical signals from the outside or to output electrical signals to the outside.

For example, the circuit board 1250 may include two terminal members disposed on two facing sides of the body 1252, among sides of the body; however, the disclosure is not limited thereto, and the number of terminal members may be one or more.

A driving signal may be provided to each of the first coil 1120 and the second coil 1230 through the plurality of terminals 1251 provided at the terminal member 1253 of the circuit board 1250.

For example, a driving signal or power may be supplied to the second coil 1230 via the circuit board 1250. The power or the driving signal provided to the second coil 1230 may be a direct current signal or an alternating current signal, or may include a direct current signal and an alternating current signal, and may be voltage or current.

The housing 1140 may be moved in the direction perpendicular to the optical axis, such as the second direction (e.g. the X-axis direction) and/or the third direction (e.g. the Y-axis direction), by interaction between the magnets 1130-1 to 1130-4 and the second coil units 1230-1 to 1230-4, to each of which the driving signal has been provided, whereby handshake compensation may be performed.

For example, the first and second pads P1 and P2 of the circuit board 1250 may be conductively connected to two corresponding ones of the terminals 1251 of the circuit board 1250.

In addition, through the terminals 1251 of the circuit board 1250, a driving signal may be provided to the first position sensor 1170, an output signal of the first position sensor 1170 may be received, and the received output signal of the first position sensor 1170 may be output to the outside. For example, the first position sensor 1170 may be conductively connected to corresponding ones of the terminals 1251 of the circuit board 1250.

The circuit board 1250 may be an FPCB; however, the disclosure is not limited thereto. The terminals of the circuit board 1250 may be directly formed on the surface of the base 1210 using a surface electrode scheme or the like.

In order to avoid spatial interference with the supporting members 1220-1 to 1220-4, the circuit board 1250 may have an escape portion 1023 through which each of the supporting members 1220-1 to 1220-4 extends.

For example, in FIG. 31, the escape portion 1023 may be formed at each corner of the body 1252 and may be a recess; however, the disclosure is not limited thereto. In another embodiment, the escape portion may be a hole or a through-hole, and the supporting member may extend through the hole or the through-hole.

In another embodiment, the circuit board 1250 may have no escape portion, and the supporting members 1220-1 to 1220-4 may be conductively connected to the circuit pattern or the pad formed at the upper surface of the circuit board 1250 via a solder or the like.

Referring to FIG. 32, the circuit board 1250 may include first and second pads P1 and P2 coupled or connected respectively to the two terminals 1027A1 and 1027A3. For example, the first and second pads P1 and P2 may be formed at an upper surface of the body 1252 of the circuit board 1250; however, the disclosure is not limited thereto. In another embodiment, the first and second pads may be formed at a lower surface of the body 1252. Here, the upper surface of the body 1252 may be a surface facing the housing 1140. In addition, the lower surface of the body 1252 may be a surface that faces the upper surface of the base 1210 and may be a surface opposite to the upper surface of the body 1252.

For example, the first pad P1 may be disposed adjacent to a first escape portion formed at one corner of the body 1252, and the second pad P2 may be disposed adjacent to a second escape portion formed at another corner of the body 1252.

For example, the first escape portion and the second escape portion may be adjacent to one side of the circuit board 1250; however, the disclosure is not limited thereto. In another embodiment, the first escape portion and the second escape portion may diagonally face each other. For example, the first escape portion may be adjacent to the first supporting member 1220-1, and the second escape portion may be adjacent to the third supporting member 1220-3.

The circuit board 1250 may include at least one through-hole 1311A and 1311B, through which at least a part of the terminal member 1027 is exposed. For example, at least a part (e.g. a distal end) of an extension portion 1050B1 of the terminal (e.g. 1027A1) may be exposed through the through-holes 1311A and 1311B.

The pads P1 and P2 of the circuit board 1250 may be disposed adjacent to the through-holes 1311A and 1311B. For example, the circuit board 1250 may include a first through-hole 1311A formed adjacent to the first pad P1 of the circuit board 1250 and a second through-hole 1311B formed adjacent to the second pad P2. At least a part (e.g. the extension portion 1050B1) of the terminal member 1027 may be exposed through the through-holes 1311A and 1311B, and a part of the exposed extension portion 1050B1 may be coupled to the pads P1 and P2 using a solder 8a or 8b (see FIG. 13A) or a conductive adhesive, and may be conductively connected thereto.

In another embodiment, the through-holes 1311A and 1311B may be omitted.

The circuit board 1250 may include at least one protrusion 1048 protruding from a side surface thereof, and the protrusion 1048 may protrude in the direction perpendicular to the optical axis. The protrusion 1048 may be disposed, seated, or inserted in the recessed portion 1049 of the base 1210. The protrusion 1048 may serve as an installation guide configured to allow the circuit board 1250 to be properly disposed on the base therethrough, and the protrusion 1048 and the recessed portion 1049 may prevent rotation or twisting of the circuit board 1250 on the upper surface of the base 1210.

Referring to FIG. 32, the circuit board 1250 may include pads R1 to R8 conductively connected to the second coil 1230.

For example, the circuit board 1250 may include first and second pads R1 and R2 conductively connected to the first coil unit 1230-1, third and fourth pads R3 and R4 conductively connected to the second coil unit 1230-2, fifth and sixth pads R5 and R6 conductively connected to the third coil unit 1230-3, and seventh and eighth pads R7 and R8 conductively connected to the fourth coil unit 1230-4.

The pads R1 to R8 conductively connected to the coil units 1230-1 to 1230-4 may be disposed on the upper surface of the circuit board 1250.

The circuit board 1250 may have a hole 1045A, through which at least a part of each of the coil units 1230-1 to 1230-4 extends. For example, since the coil units 1230-1 to 1230-4 are disposed on the lower surface of the circuit board 1250, both ends of each of the coil units 1230-1 to 1230-4 may be withdrawn to the upper surface of the circuit board 1250 through the hole 1045A of the circuit board 1250, and the withdrawn ends of each of the coil units 1230-1 to 1230-4 may be coupled or connected to the pads R1 to R8 disposed on the upper surface of the circuit board 1250.

For example, the hole 1045A may include an opening open to a side surface of the circuit board 1250. In another embodiment, the hole 1045A may be a through-hole that is not open to the side surface of the circuit board 1250.

FIG. 38A shows a modification 1250-1 of the circuit board 1250 of FIG. 32, wherein eight pads R11 to R18 conductively connected to the second coil 1230 may be disposed on a lower surface of the circuit board 1250-1.

For example, the pads R11 to R18 of the circuit board 1250-1 may be disposed on one region of the lower surface of the circuit board 1250-1 located outside the coil units 1230-1 to 1230-4.

For example, two pads (e.g. R11 and R12) may be disposed adjacent to one of two curved portions 1056C and 1056D of a corresponding coil unit (e.g. 1230-1).

In another embodiment, one of two pads corresponding to one coil unit (e.g. 1230-1) may be disposed on a first region of the lower surface of the circuit board 1250-1 located inside the coil unit (e.g. 1230-1), and the other of the two pads may be disposed on a second region of the lower surface of the circuit board 1250-1 located outside the coil unit (e.g. 1230-1). The reason for this is that it is possible to easily perform bonding between the pad and the coil unit. This may be equally applied to pads corresponding to the second to fourth coil units 1230-2 to 1230-4.

In another embodiment, the two pads may be located inside the coil unit (e.g. 1230-1) of the second coil 1230.

Also, in FIG. 38A, first and second pads P11 and P12 may be disposed on the lower surface of the circuit board 1250-1. FIG. 38B shows a first terminal 1027A-1 according to another embodiment configured to be coupled to the pad (e.g. P11) disposed on the lower surface of the circuit board 1250-1.

In FIG. 38B, an extension portion 1050B2 may be formed at a position adjacent to a side surface of the circuit board 1250-1 in order to perform easy coupling with the pad disposed on the lower surface of the circuit board 1250-1.

For example, the first pad P11 may be coupled to the extension portion 1050B2 of the first terminal 1027A-1 using a solder or a conductive adhesive member, and both may be conductively connected to each other. In addition, for example, the second pad P12 may be coupled to the extension portion 1050B2 of the third terminal 1027A-3 using a solder or a conductive adhesive member, and both may be conductively connected to each other.

The extension portion 1050B2 may be disposed on a region of the body 1050A2 corresponding to the pads P11 and P12 disposed on the lower surface of the circuit board 1250.

Referring to FIGs. 31 and 33, the base 1210 is disposed under the circuit board 1250. In addition, the base 1210 may be disposed under the housing 1140 and/or the bobbin 1110.

The base 1210 may have an opening 1028A corresponding to the opening 1025A of the bobbin 1110 and/or the opening 1026A of the housing 1140, and may have a shape coinciding with or corresponding to the cover member 1300, such as a quadrangular shape. For example, the opening 1028A may be a through-hole formed through the base 1210 in the optical-axis direction.

The base 1210 may include a protrusion 1035 adjacent to the opening 1028A and protruding from the upper surface thereof. The circuit board 1250 may include a recess 1025 corresponding to or opposite to the protrusion 1035 of the base 1210 and formed in an inner circumferential surface (or an inner surface) formed by the opening 1024A. The protrusion 1035 of the base 1210 may be disposed or inserted in the recess 1025 of the circuit board 1250, and both may be coupled to each other.

A receiving recess 1255 or a supporting portion may be provided at a region of the base 1210 facing the terminal 1251 of the circuit board 1250. The receiving recess 1255 of the base 1210 may receive or support the terminal member 1253 of the circuit board 1250 at which the terminal 1251 is formed. The receiving recess 1255 may be depressed from the outer surface of the base 1210.

The base 1210 may have an escape portion 1212A formed at each corner or each corner region thereof in order to avoid spatial interference with the other end of a corresponding one of the supporting members 1220-1 to 1220-4. For example, the escape portion 1212A may be a recess or a concave recess.

The upper surface 1030 of the base 1210 may include a first surface 1030A configured to allow the body 1252 of the circuit board 1250 to come into contact therewith or to support the body 1252 and a second surface 1030B forming a first stair with the first surface 1030A in the optical-axis direction.

The base 1210 may further include a surface 1031A (or a first stair surface or a first side surface) that connects the first surface 1030A and the second surface 1030B to each other. For example, the first stair surface 1031A may be perpendicular to the first surface 1030A; however, the disclosure is not limited thereto. In another embodiment, the first stair surface 1031A may be an inclined surface, and the interior angle between the first surface 1030A and the first stair surface 1031A may be an obtuse angle or an acute angle. In another embodiment, the first stair surface 1031A may have a stair shape, a curved shape, or a bent shape.

For example, the second surface 1030B may be located lower than the first surface 1030A. The second surface 1030B may be closer to the lower surface of the base 1210 than the first surface 1030A.

For example, the second surface 1030B may be located between the opening 1028A of the base 1210 and a side of the upper surface of the base 1210.

The base 1210 may include a first region on which the second coil 1230 is disposed and a second region on which the second coil 1230 is not disposed.

For example, the first region of the base 1210 may be referred to as a "receiving portion," a "receiving recess," or a "receiving region." For example, the first region of the base 1210 may be a recess. At this time, the recess may include a region open in two perpendicular directions.

For example, the first region of the base 1210 may include a bottom surface located lower than the uppermost surface of the base 1210. In addition, the first region of the base 1210 may include a protrusion, a projecting region, or a projecting portion disposed on the bottom surface.

At least a part of the second coil 1230 may be disposed in the first region of the base 1210. At least a part of the circuit board 1250 may be disposed on the first region of the base 1210, and the lower surface of the circuit board 1250 may be spaced apart from the bottom surface of the first region of the base 1210.

The first region of the base 1210 may include a protrusion, a projecting region, or a projecting portion projecting higher than the bottom surface.

For example, the protrusion, the projecting region, or the projecting portion of the first region of the base 1210 may be disposed in a hollow (or a center hole 1058) of each of the coil units 1230-1 to 1230-4 of the second coil 1230.

For example, the base 1210 may include seating portions 1213A1 to 1213A4 configured to allow the second coil 1230 to be disposed thereon, to be seated thereon, or to be inserted therein. The seating portions 1213A1 to 1213A4 may be formed at the upper surface 1030 of the base 1210.

For example, each of the seating portions 1213A1 to 1213A4 may be a recess depressed from the upper surface 1030 of the base 1210. Each of the seating portions 1213A1 to 1213A4 may be referred to as a "recess" or a "seating recess." For example, each of the seating portions 1213A1 to 1213A4 may include a first opening (or a first open region) open to the upper surface of the base 1210. Each of the seating portions 1213A1 to 1213A4 shown in FIG. 33 does not include an opening open to the outer surface of the base 1210. In another embodiment, each of the seating portions may include a second opening (or a second open region) open to the upper surface of the base 1210. The second coil 1230 may be easily inserted into, disposed on, or wound around each seating portion through the second opening.

The base 1210 may include a plurality of seating portions corresponding to the plurality of coil units. For example, the base 1210 may include four seating portions 1213A1 to 1213A4 corresponding to the four coil units 1230-1 to 1230-4. For example, the seating portions 1213A1 to 1213A4 may be disposed adjacent to first to fourth sides of the upper surface 1030 of the base 1210, respectively.

At least one projecting portion 1015, around which the coil units of the second coil 1230 are wound or to which the coil units of the second coil are fixed, may be formed at bottom surfaces of the seating portions 1213A1 to 1213A4. For example, the projecting portion 1015 may be referred to as a "protrusion." The number of projection portions disposed on the bottom surfaces of the seating portions 1213A1 to 1213A4 may be one or more.

For example, the bottom surfaces of the seating portions 1213A1 to 1213A4 may be the second surface 1030B of the upper surface 1030 of the base 1210.

The coil units 1230-1 to 1230-4 of the second coil 1230 may be disposed on the second surface 1030B of the upper surface 1030 of the base 1210 or the bottom surfaces of the seating portions 1213A1 to 1213A4.

For example, an upper portion, an upper end, or an upper surface of the second coil 1230 may be located lower than or level with the first surface 1030A of the upper surface 1030 of the base 1210.

For example, a first projecting portion 1015-1 including protrusions 1016A, 1016B, and 1016C spaced apart from each other may be formed at the first seating portion 1213A1 on which the first coil unit 1230-1 is disposed, a second projecting portion 1015-2 including protrusions 1015A and 1015B may be formed at the second seating portion 1213A2 on which the second coil unit 1230-2 is disposed, a third projecting portion 1015-3 including protrusions 1016A, 1016B, and 1016C spaced apart from each other may be formed at the third seating portion 1213A3 on which the third coil unit 1230-3 is disposed, and a fourth projecting portion 1015-4 including protrusions 1015A and 1015B may be formed at the fourth seating portion 1213A4 on which the fourth coil unit 1230-4 is disposed. In another embodiment, each of the first to fourth projecting portions may include one protrusion or two or more protrusions.

The lengths of the protrusions 1016A, 1016B, and 1016C in a direction parallel to the side of the upper surface of the base 1210 or in the longitudinal direction of the coil units 1230-1 to 1230-4 may be different from each other. For example, the length of the first protrusion 1016A may be greater than the length of the second protrusion 1016B; however, the disclosure is not limited thereto. In another embodiment, the lengths thereof may be equal to each other.

The depth of each of the seating portions 1213A1 to 1213A4 may be greater than the length of a corresponding one of the coil units 1230-1 to 1230-4 of the second coil 1230 in the optical-axis direction. As a result, it is possible to prevent the circuit board 1250, to which the coil units 1230-1 to 1230-4 are coupled, from being loosened or spaced apart from the upper surface 1030 (e.g. the first surface 1030A) of the base 1210, whereby it is possible to prevent reduction in the force of coupling between the circuit board 1250 and the base 1210.

In another embodiment, the depth of each of the seating portions 1213A1 to 1213A4 may be equal to the length of a corresponding one of the coil units 1230-1 to 1230-4 of the second coil 1230 in the optical-axis direction.

In another embodiment, the depth of each of the seating portions 1213A1 to 1213A4 may be less than the length of a corresponding one of the coil units 1230-1 to 1230-4 of the second coil 1230 in the optical-axis direction.

For example, the depth of each of the seating portions 1213A1 to 1213A4 may be the distance from the first surface 1030A of the upper surface 1030 of the base 1210 to the bottom surface (or the second surface 1030B) of a corresponding one of the seating portions 1213A1 to 1213A4. Alternatively, the depth of each of the seating portions 1213A1 to 1213A4 may be a first stair between the first surface 1030A and the second surface 1030B.

The base 1210 may include a third surface 1030C forming a second stair with the first surface 1030A in the optical-axis direction. The third surface 1030C may be disposed on each corner of the upper surface 1030 of the base 1210.

The third surface 1030C may be disposed adjacent to the escape portion 1212A of the base 1210. For example, the second stair may be the distance between the first surface 1030A and the third surface 1030C of the upper surface 1030 of the base 1210 in the optical-axis direction. For example, the second stair may be smaller than the first stair; however, the disclosure is not limited thereto. In another embodiment, the second stair may be equal to or larger than the first stair.

The base 1210 may further include a surface 1031B (or a second stair surface or a second side surface) that connects the third surface 1030C and the first surface 1030A to each other.

For example, the second stair surface 1031B may be perpendicular to the first surface 1030A; however, the disclosure is not limited thereto. In another embodiment, the second stair surface 1031B may be an inclined surface, and the interior angle between the first surface 1030A and the second stair surface 1031B may be an obtuse angle or an acute angle. In another embodiment, the second stair surface 1031B may have a stair shape, a curved shape, or a bent shape.

For example, each of the first surface 1030A, the second surface 1030B, and the third surface 1030C may be a plane perpendicular to the optical axis. In addition, for example, the first surface 1030A, the second surface 1030B, and the third surface 1030C may be parallel to each other; however, the disclosure is not limited thereto. In another embodiment, at least one of the first to third surfaces may not be parallel to the others.

The base 1210 may have a recess 1038, in which the first position sensor 1170 is disposed. The recess 1038 may be depressed from the upper surface 1030 (e.g. the first surface 1030A) of the base 1210. For example, the recess 1038 may be formed adjacent to one corner of the upper surface 1030 of the base 1210. For example, the recess 1038 may be formed in the upper surface of the base 1210 located between the opening 1028A of the base 1210 and one escape portion 1212A of the base 1210.

In addition, the recess 1038 may be formed adjacent to each of the other corners of the upper surface 1030 of the base 1210. The recess 1038 may serve to avoid spatial interference between the base 1210 and the lower elastic member 1160, the bobbin 1110, and/or the lens module 1400.

The base 1210 may have a stair 1211 configured to allow an adhesive to be coated thereon when the cover member 1300 is fixed by adhesion. At this time, the stair 1211 may be formed at the outer surface of the base 1210, may guide the side plate 1302 of the cover member 1300, and may face a lower end of the side plate 1302 of the cover member 1300.

In addition, a seating portion (not shown) configured to allow the filter 610 of the camera apparatus 200 to be installed thereat may be formed at the lower surface of the base 1210.

A guide protrusion 1217 protruding from the upper surface (30) (e.g. the first surface 1030A) of the base 1210 may be formed at an edge of the upper surface 1030 of the base 1210. The guide protrusion 1217 may guide the body 1252 of the circuit board 1250, and may support a side surface of the body 1252, thereby preventing the body 1252 from being separated outside the base 1210.

In addition, the base 1210 may have a recessed portion 1049, to which the protrusion 1048 of the circuit board 1250 is coupled. The recessed portion 1049 may be formed at a position corresponding to the protrusion 1048 of the circuit board 1250. For example, the recessed portion 1049 may be formed in the outer surface of the base 1210. For example, the recessed portion 1049 may be formed in the guide protrusion 1217 of the base 1210.

The second coil 1230 may be disposed under the circuit board 1250. The second coil 1230 may be disposed between the circuit board 1250 and the base 1210.

For example, the second coil 1230 may be disposed between the lower surface of the circuit board 1250 and the upper surface 1030 (e.g. the second surface 1030B) of the base 1210.

The second coil 1230 may correspond to, may be opposite to, or may overlap the magnet 1130 disposed on the housing 1140 in the optical-axis direction.

The second coil 1230 may include coil units corresponding in number to the magnets included in the magnet 1130.

For example, the second coil 1230 may include a plurality of coil units corresponding to the plurality of magnets in the optical-axis direction.

When the magnet 1130 includes four magnets, the second coil 1230 may include four coil units corresponding thereto. Alternatively, when the magnet 1130 includes two magnets, the second coil 1230 may include two coil units corresponding thereto.

For example, the second coil 1230 may include a first coil unit 1230-1 corresponding to, opposite to, or overlapping the first magnet 1130-1 in the optical-axis direction, a second coil unit 1230-2 corresponding to, opposite to, or overlapping the second magnet 1130-2 in the optical-axis direction, a third coil unit 1230-3 corresponding to, opposite to, or overlapping the third magnet 1130-3 in the optical-axis direction, and a fourth coil unit 1230-4 corresponding to, opposite to, or overlapping the fourth magnet 1130-4 in the optical-axis direction.

For example, the four magnets 1130-1 to 1130-4 may be disposed on the four side portions of the housing 1140, and the first to fourth coil units 1230-1 to 1230-4 may be disposed on the four side portions or the four sides of the base 1210 so as to correspond to or to be opposite to the four magnets 1130-1 to 1130-4 in the optical-axis direction.

In another embodiment, the four magnets may be disposed on the four corner portions of the housing 1140, and the first to fourth coil units may be disposed on the four corners of the base 1210 so as to correspond to or to be opposite to the four magnets in the optical-axis direction.

Each of the first to fourth coil units 1230-1 to 1230-4 may have a closed curve shape having a hollow or a center hole 1058 (see FIG. 37B), such as a ring shape, and the center hole 1058 may be formed so as to face in the optical-axis direction.

In addition, for example, each of the first to fourth coil units 1230-1 to 1230-4 may be a winding coil, a coil bundle, a coil body, or a coil block, not a fine pattern (FP) coil. For example, each of the first to fourth coil units 1230-1 to 1230-4 may be a strand having a conductive line enclosed by a coating (an insulating material).

In order to increase the number of turns of the FP coil, the number of layers on each of which a pattern is formed must be increased; however, it takes a lot of cost to increase the number of layers. In addition, there are process limitations in increasing the size of the pattern coil. Even though the number of layers is increased, therefore, resistance of the pattern coil is increased, whereby a sufficient number of coil turns is not secured, and therefore the number of coil turns is limited. As a result, electromagnetic force due to interaction between the FP coil and the magnet 1130 may be reduced or weakened due to limitation in the number of turns of the FP coil. Also, in the structure in which two supporting members are disposed on each corner of the housing 1140, as in the embodiment, electromagnetic force sufficient to withstand restoring force of the supporting members is necessary. When the FP coil is used, it is not possible to secure sufficient electromagnetic force.

In contrast, the winding coil has no limitation on the number of coil turns, and may have a number of turns equivalent to 1.5 or more times the number of turns of the FP coil. For example, under the condition of the same resistance, the winding coil may have a number of turns equivalent to 1.5 or more times the number of turns of the FP coil.

For example, the number of turns of each of the first to fourth coil units 1230-1 to 1230-4 may be 40 or more. For example, the number of turns of each of the first to fourth coil units 1230-1 to 1230-4 may be 40 to 80. Alternatively, for example, the number of turns of each of the first to fourth coil units 1230-1 to 1230-4 may be 45 to 60. Alternatively, for example, the number of turns of each of the first to fourth coil units 1230-1 to 1230-4 may be 45 to 55.

For example, the numbers of turns of the first to fourth coil units 1230-1 to 1230-4 may be equal to each other; however, the disclosure is not limited thereto. In another embodiment, the number of turns of at least one of the first to fourth coil units 1230-1 to 1230-4 may be different from the number of turns of at least one of the other coil units.

For example, the sum of the number of turns of the first coil unit 1230-1 and the number of turns of the second coil unit 1230-2 may be equal to the sum of the number of turns of the third coil unit 1230-3 and the number of turns of the fourth coil unit 1230-4.

Since each of the first to fourth coil units 1230-1 to 1230-4 is implemented by a winding coil, as described above, the embodiment is capable of sufficiently securing the number of turns of the second coil 1230 and securing electromagnetic force sufficient to withstand restoring force of the supporting members 1220-1 to 1220-4 during OIS driving.

In addition, for example, the line width of each of the first to fourth coil units 1230-1 to 1230-4 may be 55 micrometers to 70 micrometers. Alternatively, the line width of each of the first to fourth coil units 1230-1 to 1230-4 may be 60 micrometers to 65 micrometers. Alternatively, for example, the line width of each of the first to fourth coil units 1230-1 to 1230-4 may be 60 micrometers to 63 micrometers.

For example, the first coil unit 1230-1 and the second coil unit 1230-2 may be disposed so as to face each other in a direction from the first magnet 1130-1 to the second magnet 1130-2. In addition, the third coil unit 1230-3 and the fourth coil unit 1230-4 may be disposed so as to face each other in a direction from the third magnet 1130-3 to the fourth magnet 1130-4.

In addition, for example, each of the first coil unit 1230-1 and the second coil unit 1230-2 may not overlap the third and fourth coil units 1230-3 and 1230-4 in the direction from the first magnet 1130-1 to the second magnet 1130-2.

For example, the first coil unit 1230-1 may be disposed on, seated on, or coupled to the first seating portion 1213A1 of the base 1210, the second coil unit 1230-2 may be disposed on, seated on, or coupled to the second seating portion 1213A2 of the base 1210, the third coil unit 1230-3 may be disposed on, seated on, or coupled to the third seating portion 1213A3 of the base 1210, and the fourth coil unit 1230-4 may be disposed on, seated on, or coupled to the fourth seating portion 1213A4 of the base 1210.

For example, at least a part of the second coil 1230 may be disposed between the projecting portions 1015-1 to 1015-4 and the seating portions 1213A1 to 1213A4.

The first projecting portion 1015-1 may be coupled to, inserted into, or disposed in the hollow (or the center hole) of the first coil unit 1230-1. The second projecting portion 1015-2 may be coupled to, inserted into, or disposed in the hollow (or the center hole) of the second coil unit 1230-2. The third projecting portion 1015-3 may be coupled to, inserted into, or disposed in the hollow (or the center hole) of the third coil unit 1230-3. The fourth projecting portion 1015-4 may be coupled to, inserted into, or disposed in the hollow (or the center hole) of the fourth coil unit 1230-4.

For example, the height of each of the projecting portions 1015-1 to 1015-4 may be equal to or less than the height of the upper surface or the upper end of the second coil 1230 (or the coil units 1230-1 to 1230-4).

For example, the height of each of the projecting portions 1015-1 to 1015-4 may be equal to or less than the length of a corresponding one of the coil units 1230-1 to 1230-4 in the optical-axis direction. For example, the heights of the projecting portions 1015-1 to 1015-4 may be the lengths of the projecting portions 1015-1 to 1015-4 in the optical-axis direction.

For example, the upper surface of each of the projecting portions 1015-1 to 1015-4 may be lower than or level with the first surface 1030A of the upper surface 1030 of the base 1210. The reason for this is that, if the height of each of the projecting portions 1015-1 to 1015-4 is higher than the first surface 1030A of the upper surface 1030 of the base 1210, the lower surface of the circuit board 1250 and the first surface 1030A of the upper surface 1030 of the base 1210 may be loosened or spaced apart from each other.

The first to fourth coil units 1230-1 to 1230-4 may be fixed or attached to the lower surface of the circuit board 1250.

Referring to FIG. 37B, for example, the first coil unit 1230-1 may be disposed adjacent to a first side of the lower surface of the circuit board 1250 or a first side surface of the circuit board 1250. The second coil unit 1230-2 may be disposed adjacent to a second side of the lower surface of the circuit board 1250 or a second side surface of the circuit board 1250. The third coil unit 1230-3 may be disposed adjacent to a third side of the lower surface of the circuit board 1250 or a third side surface of the circuit board 1250. The fourth coil unit 1230-4 may be disposed adjacent to a fourth side of the lower surface of the circuit board 1250 or a fourth side surface of the circuit board 1250.

For example, the first side (or the first side surface) and the second side (or the second side surface) of the lower surface of the circuit board 1250 may be located opposite to each other, and the third side (or the third side surface) and the fourth side (or the fourth side surface) of the lower surface of the circuit board 1250 may be located between the first side (or the first side surface) and the second side (or the second side surface) and may be located opposite to each other.

For example, the first coil unit 1230-1 may be disposed on a first region between the first side (or the first side surface) of the lower surface of the circuit board 1250 and the opening 1024A of the circuit board 1250, the second coil unit 1230-2 may be disposed on a second region between the second side (or the second side surface) of the lower surface of the circuit board 1250 and the opening 1024A of the circuit board 1250, the third coil unit 1230-3 may be disposed on a third region between the third side (or the third side surface) of the lower surface of the circuit board 1250 and the opening 1024A of the circuit board 1250, and the fourth coil unit 1230-4 may be disposed on a fourth region between the fourth side (or the fourth side surface) of the lower surface of the circuit board 1250 and the opening 1024A of the circuit board 1250.

For example, the first coil unit 1230-1 may be disposed parallel to the first side (or the first side surface) of the lower surface of the circuit board 1250, the second coil unit 1230-2 may be disposed parallel to the second side (or the second side surface) of the lower surface of the circuit board 1250, the third coil unit 1230-3 may be disposed parallel to the third side (or the third side surface) of the lower surface of the circuit board 1250, and the fourth coil unit 1230-4 may be disposed parallel to the fourth side (or the fourth side surface) of the lower surface of the circuit board 1250.

Referring to FIG. 37A, the circuit board 1250 may include pads R1 to R8 conductively connected to the first to fourth coil units 1230-1 to 1230-4. In FIGs. 37A and 37B, the pads R1 to R8 may be disposed on the upper surface of the circuit board 1250. In FIG. 38A, the pads R11 to R18 may be disposed on the lower surface of the circuit board 1250-1.

The lens moving apparatus 1100 may further include a second position sensor 1240 for OIS feedback driving. The second position sensor 1240 may include a first sensor 1240A and a second sensor 1240B.

The first sensor 1240A and the second sensor 1240B may be disposed between the circuit board 1250 and the base 1210. For example, the first sensor 1240A and the second sensor 1240B may be disposed between the lower surface of the circuit board 1250 and the upper surface 1030 of the base 1210. Each of the first sensor 1240A and the second sensor 1240B may be conductively connected to the circuit board 1250.

Each of the first sensor 1240A and the second sensor 1240B may include a Hall sensor, and any sensor capable of sensing the intensity of a magnetic field may be used. For example, each of the first and second sensors 1240A and 1240B may be implemented by a position sensor, such as a Hall sensor, alone or in the form of a driver IC including a Hall sensor.

For example, the first sensor 1240A may be disposed in the first seating portion 1213A1 of the base 1210, and the second sensor 1240B may be disposed in the third seating portion 1213A3 of the base 1210.

For example, a space 1214A may be formed between two protrusions 1016B and 1016C located in the first seating portion 1213A1, and the first sensor 1240A may be disposed in the space 1214A between the two protrusions 1016B and 1016C located in the first seating portion 1213A1.

In addition, for example, a space 1214B may be formed between two protrusions 1016B and 1016C located in the third seating portion 1213A3, and the second sensor 1240B may be disposed in the space 1214B between the two protrusions 1016B and 1016C located in the third seating portion 1213A3.

In another embodiment, the first sensor 1240A may be disposed in a recess separately formed in the base 1210 while being spaced apart from the first seating portion, and the second sensor may be disposed in a recess separately formed in the base 1210 while being spaced apart from the second seating portion.

For example, the first sensor 1240A may be disposed in the center hole 1058 of the first coil unit 1230-1, and the second sensor 1240B may be disposed in the center hole 1058 of the third coil unit 1230-3.

Referring to FIG. 37B, each of the first to fourth coil units 1230-1 to 1230-4 may include two straight portions 1056A to 1059A and 1056B to 1059B, a first curved portion 1056C to 1059C that connects one end of each of the two straight portions 1056A to 1059A and 1056B to 1059B to each other, and a second curved portion 1056D to 1059D that connects the other end of each of the two straight portions 1056A to 1059A and 1056B to 1059B to each other.

For example, the first sensor 1240A may be disposed adjacent to one (e.g. 1056C) of the first and second curved portions 1056C and 1056D of the first coil unit 1230-1. For example, the first sensor 1240A may be disposed closer to the first curved portion 1057C than the second curved portion 1057D.

For example, the second sensor 1240B may be disposed adjacent to one (e.g. 1058C) of the first and second curved portions 1058C and 1058D of the third coil unit 1230-3. For example, the second sensor 1240B may be disposed closer to the first curved portion 1058C than the second curved portion 1058D.

For example, the first curved portion 1056C of the first coil unit 1230-1 may be located closer to the first curved portion 1058C of the third coil unit 1230-3 than the second curved portion 1058D of the third coil unit 1230-3.

In addition, the first curved portion 1058C of the third coil unit 1230-3 may be located closer to the first curved portion 1056C of the first coil unit 1230-1 than the second curved portion 1056D of the first coil unit 1230-1. In addition, the first curved portion 1057C of the second coil unit 1230-2 may be located closer to the second curved portion 1058D of the third coil unit 1230-3 than the first curved portion 1058C of the third coil unit 1230-3. In addition, the second curved portion 1057D of the second coil unit 1230-2 may be located closer to the second curved portion 1059D of the fourth coil unit 1230-4 than the first curved portion 1059C of the fourth coil unit 1230-4. In addition, the first curved portion 1059C of the fourth coil unit 1230-4 may be located closer to the second curved portion 1056D of the first coil unit 1230-1 than the first curved portion 1056C of the first coil unit 1230-1.

A first distance d1 between the first coil unit 1230-1 and the third coil unit 1230-3 may be different from a second distance d2 between the first coil unit 1230-1 and the fourth coil unit 1230-4.

The first distance d1 between two adjacent curved portions of the first coil unit 1230-1 and the third coil unit 1230-3 may be different from the second distance d2 between two adjacent curved portions of the first coil unit 1230-1 and the fourth coil unit 1230-4. In another embodiment, the first distance and the second distance may be equal to each other.

A third distance d3 between two adjacent curved portions of the second coil unit 1230-2 and the third coil unit 1230-3 may be different from a fourth distance d4 between two adjacent curved portions of the second coil unit 1230-2 and the fourth coil unit 1230-4. In another embodiment, the third distance and the fourth distance may be equal to each other. For example, each of the first to fourth distances d1 to d4 may be the shortest distance.

For example, the second distance d2 may be less than the first distance d1, and the third distance d3 may be less than the fourth distance d4.

In addition, for example, the first distance d1 may be equal to the fourth distance d4, and the second distance d2 and the third distance d3 may be equal to each other.

Referring to FIGs. 40A and 40B, when viewed from above, the first magnet 1130-1 may be located inside a region of the first coil unit 1230-1, and may overlap the first coil unit 1230-1 in the optical-axis direction.

When viewed from above, the second magnet 1130-2 may be located inside a region of the second coil unit 1230-2, and may overlap the second coil unit 1230-2 in the optical-axis direction. When viewed from above, the third magnet 1130-3 may be located inside a region of the third coil unit 1230-3, and may overlap the third coil unit 1230-3 in the optical-axis direction. When viewed from above, the fourth magnet 1130-4 may be located inside a region of the fourth coil unit 1230-4, and may overlap the fourth coil unit 1230-4 in the optical-axis direction.

The lengths L1 of the first to fourth magnets 1130-1 to 1130-4 may be equal to each other; however, the disclosure is not limited thereto. In another embodiment, the lengths of at least two of the first to fourth magnets 1130-1 to 1130-4 may be different from each other.

The widths W1 of the first to fourth magnets 1130-1 to 1130-4 may be equal to each other; however, the disclosure is not limited thereto. In another embodiment, the widths of at least two of the first to fourth magnets 1130-1 to 1130-4 may be different from each other.

The heights H1 of the first to fourth magnets 1130-1 to 1130-4 may be equal to each other; however, the disclosure is not limited thereto. In another embodiment, the heights of at least two of the first to fourth magnets 1130-1 to 1130-4 may be different from each other.

The length L1 of each of the first to fourth magnets 1130-1 to 1130-4 may be the length thereof in a longitudinal direction. In addition, the width W1 of each of the first to fourth magnets 1130-1 to 1130-4 may be the length thereof in a width direction. Here, the width direction may be perpendicular to the longitudinal direction, and the width of each of the components 1130-1 to 1130-4 may be less than the length thereof. In addition, the width of each of the components 1130-1 to 1130-4 may be referred to as a "thickness" of each of the components 1130-1 to 1130-4.

For example, the length L1 of each of the first to fourth magnets 1130-1 to 1130-4 may be the length of the first surface of each of the first to fourth magnets 1130-1 to 1130-4 facing the bobbin 1110 in the horizontal direction. In addition, for example, the width W1 of each of the first to fourth magnets 1130-1 to 1130-4 may be the distance from the first surface of each of the components 1130-1 to 1130-4 facing the bobbin 1110 to the second surface, which is a surface opposite to the first surface. In addition, for example, the height H1 of each of the first to fourth magnets 1130-1 to 1130-4 may be the length of each of the components in the optical-axis direction.

The lengths M1 of the first to fourth coil units 1230-1 to 1230-4 may be equal to each other; however, the disclosure is not limited thereto. In another embodiment, the lengths of at least two of the first to fourth coil units 1230-1 to 1230-4 may be different from each other.

The widths K1 of the first to fourth coil units 1230-1 to 1230-4 may be equal to each other; however, the disclosure is not limited thereto. In another embodiment, the widths of at least two of the first to fourth coil units 1230-1 to 1230-4 may be different from each other.

The heights T1 of the first to fourth coil units 1230-1 to 1230-4 may be equal to each other; however, the disclosure is not limited thereto. In another embodiment, the heights of at least two of the first to fourth coil units 1230-1 to 1230-4 may be different from each other.

The length M1 of each of the first to fourth coil units 1230-1 to 1230-4 may be the length of a corresponding one of the first to fourth magnets 1130-1 to 1130-4 in the longitudinal direction or a direction parallel thereto. In addition, the width K1 of each of the first to fourth coil units 1230-1 to 1230-4 may be the length of a corresponding one of the first to fourth magnets 1130-1 to 1130-4 in the width direction or a direction parallel thereto. The height T1 of each of the first to fourth coil units 1230-1 to 1230-4 may be the length thereof in the optical-axis direction.

The length L1 of each of the first to fourth magnets 1130-1 to 1130-4 in the longitudinal direction may be less than the length M1 of a corresponding one of the first to fourth coil units 1230-1 to 1230-4 in the longitudinal direction (L1<M1).

The length W1 of each of the first to fourth magnets 1130-1 to 1130-4 in the width direction may be less than the length K1 of a corresponding one of the first to fourth coil units 1230-1 to 1230-4 in the width direction (W1<K1).

For example, each of the first to fourth magnets 1130-1 to 1130-4 may include a part having a length reduced in a direction from the second surface to the first surface thereof. In addition, for example, each of the first to fourth magnets 1130-1 to 1130-4 may include a part having a width reduced in a direction from one end to the other end thereof. For example, each of the magnets 1130-1 to 1130-4 may include a tapered portion.

In addition, the distances between the magnets 1130-1 to 1130-4 and the coil units 1230-1 to 1230-4 in the optical-axis direction may be equal to each other; however, the disclosure is not limited thereto. In another embodiment, at least two of the distances may be different from each other.

At least a part of the first sensor 1240A may be disposed so as to be opposite to or to overlap the first magnet 1130-1 in the optical-axis direction. For example, the first sensor 1240A may not overlap the second coil 1230, e.g. the first coil unit 1230-1, in the optical-axis direction.

At least a part of the second sensor 1240B may be disposed so as to be opposite to or to overlap the third magnet 1130-3 in the optical-axis direction. For example, the second sensor 1240B may not overlap the second coil 1230, e.g. the third coil unit 1230-3.

The first sensor 1240A and the second sensor 1240B may be coupled or attached to the lower surface of the circuit board 1250 using a solder or a conductive adhesive member. For example, the first sensor 1240A and the second sensor 1240B may be conductively connected to the circuit board 1250. For example, the first sensor 1240A and the second sensor 1240B may be conductively connected to the terminals 1251 of the circuit board 1250.

For example, driving signals may be provided to the first sensor 1240A and the second sensor 1240B through the terminals 1251 of the circuit board 1250, and a first output of the first sensor 1240A and a second output of the second sensor 1240B may be output through the terminals 1251 of the circuit board 1250.

The controller 830 of the camera apparatus 200 or the controller 780 of the portable terminal 200A may sense or detect displacement of the OIS moving unit using the first output of the first sensor 1240A and the second output of the second sensor 1240B.

For example, the first sensor 1240A may sense the intensity of a magnetic field of the first magnet 1130-1 and may output the first output, and the second sensor 1240B may sense the intensity of a magnetic field of the third magnet 1130-3 and may output the second output.

The first sensor 1240A and the second sensor 1240B may sense displacement of the OIS moving unit in the direction perpendicular to the optical axis OA. Here, the OIS moving unit may include the housing 1140. Alternatively, for example, the OIS moving unit may include the AF driving unit and the components mounted to the housing 1140.

For example, the "OIS moving unit" may include the AF moving unit and the housing 1140, and may further include the first to fourth magnets 1130-1 to 1130-4 depending on embodiments.

The OIS moving unit (e.g. the housing 1140) may be moved in the direction perpendicular to the optical axis, such as the x-axis direction and/or the y-axis direction, by interaction between the first to fourth magnets 1130-1 to 1130-4 and the first to fourth coil units 1230-1 to 1230-4, whereby handshake compensation may be performed.

The base 1210 may include side portions and corner portions (or corners). For example, the base 1210 may include four side portions and four corner portions. The four seating portions 1213A1 to 1213A4 may be provided at the four side portions of the base 1210.

The corner portions of the base 1210 may correspond to or may be opposite to the corner portions 1142-1 to 1142-4 of the housing 1140 in the optical-axis direction.

The escape portion 1212A may be formed at each of the corner portions of the base 1210, and the third surface 1030C may be formed thereat. For example, the third surface 1030C and the second stair surface 1031B of the base 1210 may form a "stair portion" configured to allow the terminal member 1027 to be disposed thereon.

For example, in order to avoid spatial interference with coupled or bonded portions between the supporting members 1220-1 to 1220-4 and the terminal member 1027, the escape portion 1212A may be a recess or a concave recess. The width or diameter of the recess of the escape portion 1212A or the distance between inner surfaces of the recess that face each other may be increased in a direction from the center of the base 1210 to the corner portion of the base 1210; however, the disclosure is not limited thereto.

The recess of the escape portion 1212A may be formed through the third surface 1030C of the base 1210, and the recess may have an opening open to the outer surface of the base 1210.

The terminal member 1027 may be disposed on the third surface 1030C of the base 1210.

For example, the recess of the escape portion 1212A may expose a solder 1902 configured to couple a lower surface of the terminal member 1027 and the supporting member 1220 to each other from the lower surface of the base 1210.

In order to avoid spatial interference between the solder 1902 (see FIG. 29A) and the base 1210, the recess of the escape portion 1212A may overlap coupling portions 1081 and 1082 of the terminal member 1027 and the solder 1902 in the optical-axis direction.

The first position sensor 1170 may be disposed between the base 1210 and the circuit board 1250. For example, the first position sensor 1170 may be disposed between the upper surface of the base 1210 and the lower surface of the circuit board 1250. For example, the first position sensor 1170 may be disposed between the first surface 1030A of the upper surface 1030 of the base 1210 and the lower surface of the circuit board 1250.

The first position sensor 1170 may be mounted on, connected to, or coupled to the lower surface of the circuit board 1250. For example, the first position sensor 1170 may be disposed in the seating portion 1214C of the base 1210.

The first position sensor 1170 may be conductively connected to the circuit board 1250. For example, the first position sensor 1170 may be conductively connected to the terminals 1251 of the circuit board 1250.

For example, at least a part of the first position sensor 1170 may correspond to, may be opposite to, or may overlap the sensing magnet 1180 in the optical-axis direction, and may not overlap the magnet 1130. In addition, for example, the first position sensor 1170 may not overlap the second coil 1230 in the optical-axis direction.

Referring to FIG. 36, for example, the first position sensor 1170 may be disposed on the upper surface of the base 1210 located between the second coil unit 1230-2 and the fourth coil unit 1230-4. The reason for this is that, since the fourth distance d4 between the second coil unit 1230-2 and the fourth coil unit 1230-4 is greater than the second distance and the third distance, the first position sensor 1170 is less affected by a magnetic field generated by the second coil unit 1230-2 and a magnetic field generated by the fourth coil unit 1230-4.

That is, the first position sensor 1170 may be spaced apart from the second coil units 1230-1 to 1230-4 as far as possible, whereby the effect of magnetic fields generated from the second coil units 1230-1 to 1230-4 on the first position sensor 1170 may be reduced, and therefore it is possible to prevent deterioration in reliability of the first position sensor 1170.

For example, the distance between the first position sensor 1170 and the second coil unit 1230-2 may be equal to the distance between the first position sensor 1170 and the fourth coil unit 1230-4. At this time, the distance may be the shortest distance. For example, the distance between the first position sensor 1170 and the second curved portion 1057D of the second coil unit 1230-2 may be equal to the distance between the first position sensor 1170 and the second curved portion 1059D of the fourth coil unit 1230-4. At this time, the distance may be the shortest distance.

This configuration is provided to reduce the effect of magnetic fields generated from the second coil unit 1230-2 and the fourth coil unit 1230-4 on the first position sensor 1170. In another embodiment, both may be different from each other.

The bobbin 1110 and the sensing magnet 1180 may be moved in the optical-axis direction by interaction between the first coil 1120 and the magnet 1130, and the first position sensor 1170 may sense the intensity of a magnetic field of the sensing magnet 1180 and may output an output signal based on the result of sensing. That is, the first position sensor 1170 may serve to sense displacement of the AF moving unit (e.g. the bobbin 1110) in the optical-axis direction.

The first position sensor 1170 may be implemented by a position sensor, such as a Hall sensor, alone or in the form of a driver integrated circuit (IC) including a Hall sensor.

When the first position sensor 1170 is implemented by a Hall sensor alone, the first position sensor 1170 may include two input terminals and two output terminals conductively connected to the circuit board 1250. The first position sensor 1170 may receive a driving signal from the circuit board 1250, and output of the first position sensor 1170 may be transmitted to the circuit board 1250.

When the first position sensor 1170 is a driver IC including a Hall sensor, the first position sensor may include one terminal for a clock signal, one terminal for a data signal, two terminals for a power signal, and two terminals configured to provide a driving signal to the first coil 1120, and these six terminals may be conductively connected to the circuit board 1250. When each of the first sensor 1240A and the second sensor 1240B is a driver IC including a Hall sensor, a description of the first position sensor 1170 implemented in the form of the driver IC may be applied or applied correspondingly thereto.

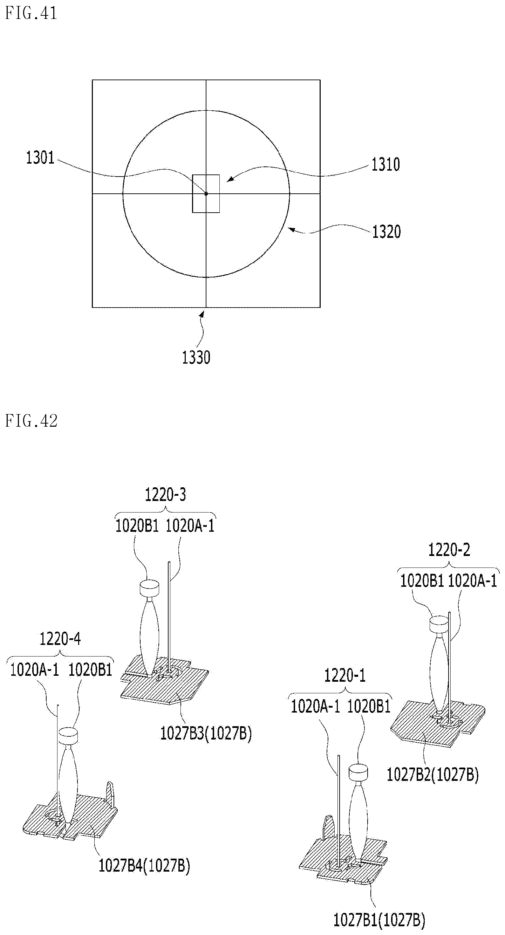

FIG. 41 is a view illustrating the relationship between the stroke range of the OIS moving unit according to the embodiment in the direction perpendicular to the optical axis, the size of the sensing magnet 1180, and the disposition of the first position sensor 1170.

1310 may be a sensing element or a sensing region of the first position sensor 1170 configured to sense the intensity of a magnetic field of the sensing magnet 1180. 1320 may be the stroke range of the OIS moving unit. 1330 may be a region on which the sensing magnet 1180 is disposed, and the region is shown as a square in FIG. 41; however, the disclosure is not limited thereto, and the region may be shown as a circle, a polygon, or an oval depending on the shape of the sensing magnet 1180.

Referring to FIG. 41, in order to improve sensitivity of the first position sensor 1170, the sensing element 1310 of the first position sensor 1170 may overlap the sensing magnet 1180 in the optical-axis direction. For example, FIG. 41 shows disposition of the sensing magnet 1180 and the first position sensor 1170 at the initial position of the OIS moving unit.

At the initial position of the OIS moving unit, the sensing element 1310 of the first position sensor 1170 may overlap the sensing magnet 1180 in the optical-axis direction.

For example, at the initial position of the OIS moving unit, the sensing element 1310 of the first position sensor 1170 may overlap the center 1301 or the central region of the sensing magnet 1180 in the optical-axis direction or may be aligned with the center 1301 of the sensing magnet 1180; however, the disclosure is not limited thereto.

The first position sensor 1170 is disposed on a stationary unit (e.g. the circuit board 1250 and the base 1210), and the sensing magnet 1180 is disposed on the OIS moving unit. When the OIS moving unit is moved relative to the stationary unit in the direction perpendicular to the optical axis, therefore, alignment or the relative positional relationship between the sensing magnet 1180 and the first position sensor 1170 in the optical-axis direction may be changed, whereby sensitivity of the first position sensor 1170 may be reduced or sensitivity of the first position sensor 1170 may be affected.

The stroke range 1320 of the OIS moving unit in the direction perpendicular to the optical axis may overlap the sensing magnet 1180 in the optical-axis direction, whereby it is possible to prevent reduction in sensitivity of the first position sensor 1170 due to movement of the OIS moving unit in the direction perpendicular to the optical axis.

For example, the stroke range 1320 of the OIS moving unit may be a circle having the maximum stroke of the OIS moving unit as the radius. The maximum stroke of the OIS moving unit may be the maximum stroke of the OIS moving unit in any one direction perpendicular to the optical axis (e.g. a +X-axis direction or a +Y-axis direction) at the initial position of the OIS moving unit.

That is, even when the OIS moving unit is moved in the direction perpendicular to the optical axis, the state in which the first position sensor 1170 and the sensing magnet 1180 at least partially overlap each other in the optical-axis direction may be maintained. For example, the state in which the sensing element of the first position sensor 1170 and the sensing magnet 1180 overlap each other in the optical-axis direction may be maintained within the movement range or total displacement of the OIS moving unit in the direction perpendicular to the optical axis.

In addition, the sensing magnet 1180 may have a size capable of covering the stroke range 1320 of the OIS moving unit.

For example, the sectional area of the sensing magnet 1180 in the direction perpendicular to the optical axis may be greater than the area of the stroke range 1320 of the OIS moving unit. In another embodiment, the sectional area of the sensing magnet 1180 in the direction perpendicular to the optical axis may be equal to the stroke range of the OIS moving unit.

The OIS moving unit may droop (or move) in the direction of gravity due to the effect of gravity, and resolution of the camera module may be reduced due to such drooping (or movement). As the weight of the OIS moving unit is increased due to an increase in size of the lens, drooping of the OIS moving unit in the direction of gravity due to the effect of gravity may further increased, whereby resolution of the camera module may be further reduced.

Since the first position sensor 1170 is disposed on the stationary unit in the embodiment, it is possible to automatically compensate or correct movement (or drooping) of the AF moving unit caused by movement (or drooping) of the OIS moving unit due to the effect of gravity.

In another embodiment, the first position sensor 1170 may be disposed on the housing 1140 so as to correspond to the sensing magnet 1180, not on the base 1210.

In another embodiment, the sensing magnet may be disposed on the housing, and the first position sensor may be disposed on the bobbin 1110.

A magnetic field may be generated at the second coil 1230 to which a driving signal is provided for OIS driving. In order to improve accuracy of the first position sensor 1170, it is preferable for the first position sensor 1170 to be spaced apart from the second coil 1230 so as to be less affected by the magnetic field of the second coil 1230.

In the embodiment, in order to reduce the effect of the magnetic field of the second coil 1230, the first position sensor 1170 may be disposed on one region of the upper surface of the base 1210 on which the first to fourth coil units 1230-1 to 1230-4 are not disposed, and the first position sensor 1170 may not overlap the second coil 1230 in the optical-axis direction.

Referring to FIG. 31, the terminal member 1027 may be disposed on the base 1210. The terminal member 1027 may be coupled or connected to the other end of the supporting member 1220. The terminal member 1027 may be conductively connected to the supporting member 1220, and may be conductively connected to the circuit board 1250. The terminal member 1027 may conductively connect the supporting member 1220 and the circuit board 1250 to each other.

In another embodiment, the terminal member 1027 may be omitted, and the supporting member 1220 may be directly coupled or connected to the circuit board 1250. For example, in another embodiment, the supporting member 1220 may be coupled to the lower surface or the upper surface of the circuit board 1250 using a solder or a conductive adhesive member, and may be conductively connected to the circuit board 1250.

The terminal member 1027 may be disposed so as to be spaced apart from the first surface 1030A of the upper surface 1030 of the base 1210 on which the circuit board 1250 is disposed. For example, a region of the terminal member 1027 coupled to the supporting member 1220 may be located lower than the upper surface 1030 of the base 1210.

The terminal member 1027 may be located between the first surface 1030A and the third surface 1030C of the upper surface of the base 1210.

For example, the upper surface of the terminal member 1027 coupled to the supporting member 1220 may be located so as to be higher than the lower surface of the base 1210 and to be lower than the first surface 1030A of the upper surface 1030 of the base 1210. For example, the upper surface of the terminal member 1027 may be located so as to be higher than the third surface 1030C of the upper surface of the base 1210 and to be lower than the first surface 1030A of the upper surface 1030 of the base 1210.

For example, the lower surface of the terminal member 1027 may be located so as to be higher than the lower surface of the base 1210 and to be lower than the first surface 1030A of the upper surface 1030 of the base 1210. For example, the lower surface of the terminal member 1027 may be located so as to be higher than the third surface 1030C of the upper surface of the base 1210 and to be lower than the first surface 1030A of the upper surface 1030 of the base 1210.

Referring to FIGs. 34B and 39D, for example, a lower surface of a body 1050A of the terminal member 1027 may be located lower than the lower surface of the coil unit (e.g. 1230-1) of the second coil 1230. For example, an upper surface of the body 1050A of the terminal member 1027 may be located lower than the lower surface of the coil unit (e.g. 1230-1) of the second coil 1230. For example, the lower surfaces of the coil units 1230-1 to 1230-4 may be located at the same height.

In another embodiment, for example, the lower surface (or the upper surface) of the body 1050A of the terminal member 1027 may be located in the same plane as the lower surface of the coil unit (e.g. 1230-1) of the second coil 1230.

In another embodiment, for example, the lower surface (or the upper surface) of the body 1050A of the terminal member 1027 may be located higher than the lower surface of the coil unit (e.g. 1230-2) of the second coil 1230.

The terminal member 1027 may include at least one terminal coupled to the supporting members (e.g. 1220-1 to 1220-4). For example, the terminal member 1027 may include a plurality of terminals 1027A1 to 1027A4.

Referring to FIGs. 31 and 34A, the terminal member 1027 may include terminals 1027A1 to 1027A4 corresponding to the supporting members 1220-1 to 1220-4.

The terminal member 1027 of the embodiment of FIG. 31 may include four terminals 1027A1 to 1027A4. Two terminals 1027A1 and 1027A2, among the four terminals 1027A1 to 1027A4, may be connected to each other, and the remaining two terminals 1027A3 and 1027A4, among the four terminals 1027A1 to 1027A4, may be connected to each other. In another embodiment, at least two selected from among the four terminals may be connected to each other.

For example, the terminal member 1027 may include a first connection portion 1007A that connects the first and second terminals 1027A1 and 1027A2 to each other and a second connection portion 1007B that connects the third and fourth terminals 1027A3 and 1027A4 to each other. In addition, for example, first and second terminals 1027A1 and 1027A2 may be spaced apart from and may be conductively independent of or separated from the third and fourth terminals 1027A3 and 1027A4.

Since the terminal member 1027 serves to conductively connect the first coil 1120 and the circuit board 1250 to each other in the embodiment of FIGs. 31 and 34A, the terminal member 1027 is divided into two parts; however, the disclosure is not limited thereto. In another embodiment, the terminal member 1027 may have an all-in-one structure in which the four terminals 1027A1 to 1027A4 are connected to each other. In another embodiment, the terminal member 1027 may be divided into three parts or more.

FIG. 42 shows a terminal member 1027B according to another embodiment.

Referring to FIG. 42, the terminal member 1027B may include four terminals 1027B1 to 1027B4 spaced apart from each other. The terminal member 1027B is a modification of the terminal member 1027 of FIG. 10A. In the terminal member 1027B of FIG. 42, the first and second connection portions 7A and 7B of FIG. 10A may be omitted.

Hereinafter, a description of the first terminal 1027A1 may be applied or applied correspondingly to the second and third terminals 1027A2 and 1027A3. Referring to FIGs. 31 and 34A, the first terminal 1027A1 may include a body 1050A1 coupled to the supporting member 1220-1 and an extension portion 1050B1 extending from the body 1050A1. One end of the extension portion 1050B1 may be conductively connected to the circuit board 1250.

In FIG. 10, each of the first terminal 1027A1 and the fourth terminal 1027A4 may include the extension portion 1050B1, and each of the second terminal 1027A2 and the third terminal 1027A3 may include no extension portion 1050B1; however, the disclosure is not limited thereto. In another embodiment, at least one of the terminals of the terminal member 1027 may include an extension portion conductively connected to the circuit board 1250 depending on the position of the pads of the circuit board 1250 and the number of the pads.

Referring to FIGs. 32 and 34A, for example, one end of the extension portion 1050B1 of the first terminal 1027A1 may be conductively connected to the first pad P1 of the circuit board 1250 using a solder or an adhesive member. In addition, for example, the extension portion 1050B1 of the fourth terminal 1027A4 may be conductively connected to the second pad P2 of the circuit board 1250 using a solder or an adhesive member.

The body 1050A1 may be disposed on the third surface 1030C of the base 1210. The body 1050A1 may be located lower than the circuit board 1250. For example, the upper surface of the body 1050A1 may be located lower than the lower surface of the circuit board 1250.

At least one recess 1003A (see FIG. 35A) configured to avoid spatial interference with the base 1210 may be formed in a side surface of the body 1050A1. For example, at least a part of the side portion of the base 1210 may be located in the recess 1003A of the body 1050A1.

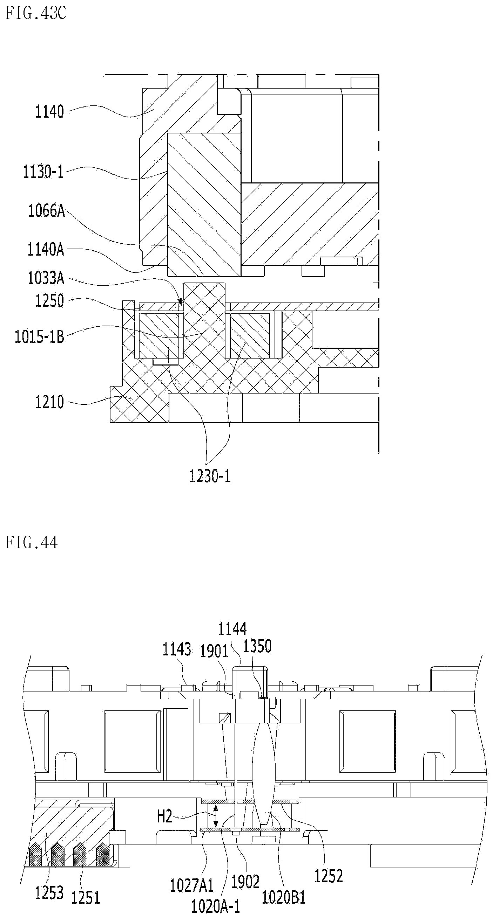

FIG. 44 shows coupling between the first supporting member 1220-1 and the first terminal 1027A1 and the stair between the circuit board 1250 and the body 1050A1 of the first terminal 1027A1. A description of FIG. 44 may be applied or applied correspondingly to the second to fourth supporting members 1220-2 to 1220-4 and the second to fourth terminals 1027A2 to 1027A4.

Referring to FIG. 44, the upper surface of the body 1050A1 coupled to the supporting member 1220-1 may be located lower than the lower surface of the circuit board 1250. As a result, for example, a stair H2 may be present between the lower surface of the circuit board 1250 and the upper surface of the body 1050A1 of the first terminal 1027A in the optical-axis direction. The stair H2 may be the height difference between the lower surface of the circuit board 1250 and the upper surface of the body 1050A1 in the optical-axis direction.

When compared to another embodiment in which the supporting member is directly coupled to the circuit board using a solder or an adhesive, it is possible to increase the length of the first supporting member 1220-1 in the optical-axis direction due to the stair H2 in the embodiment of FIG. 44. As the length of the first supporting member 1220-1 is increased, resistance of the 1-1 supporting member 1020A-1 may be increased, and the intensity of current that flows in the 1-1 supporting member 1020A-1 may be decreased. As a result, the embodiment is capable of reducing power consumption and preventing lowering in reliability of OIS driving due to reduction in diameter of an OIS wire necessary to reduce power consumption.

Referring to FIG. 34A, the body 1050A1 may include a first coupling portion 1081 coupled to the 1-1 supporting member 1020A-1 and a second coupling portion 1082 coupled to the 1-2 supporting member 1020B1.

The first coupling portion 1081 may include a first coupling region 1081A coupled to the 1-1 supporting member 1020A-1 and a first hole 1081B formed in the first coupling region 1081A. The first coupling region 1081A may be a region of the body 1050A1 to which the 1-1 supporting member 1020A-1 and the solder 1902 are coupled.

The first hole 1081B may be a through-hole. The other end of the 1-1 supporting member 1020A-1 may extend through the first hole 1081B, and the other end of the 1-1 supporting member 1020A-1 that has extended through the first hole 1081B may be coupled to a lower portion or a lower surface of the first coupling region 1081A using the solder 1902 or the conductive adhesive.

The diameter R1 of the first hole 1081B may be greater than the diameter of the 1-1 supporting member 1020A-1.

For example, the diameter (or the thickness) of the 1-1 supporting member 1020A-1 may be 40 micrometers to 100 micrometers. Alternatively, for example, the diameter (or the thickness) of the 1-1 supporting member 1020A-1 may be 50 micrometers to 70 micrometers. Alternatively, for example, the diameter (or the thickness) of the 1-1 supporting member 1020A-1 may be 50 micrometers to 60 micrometers.

The diameter R1 of the first hole 1081B may be 0.15 mm to 0.3 mm. Alternatively, for example, the diameter R1 of the first hole 1081B may be 0.2 mm to 0.25 mm. Alternatively, for example, the diameter R1 of the first hole 1081B may be 0.15 mm to 0.2 mm.

In FIG. 34A, the shape of the first coupling region 1081A may be a circle; however, the disclosure is not limited thereto. In another embodiment, the shape of the first coupling region may be an oval or a polygon (e.g. a triangle or a quadrangle).

The diameter R2 of the first coupling region 1081A may be greater than the diameter R1 of the first hole 1081B. For example, the first coupling region 1081A may have an area or a diameter sufficient to allow the solder 1902 and the 1-1 supporting member 1020A-1 to be well coupled thereto.

In addition, the body 1050A1 may include at least one second hole 1081D formed around the first coupling region 1081A. For example, the body 1050A1 may include at least one second hole 1081D formed so as to encompass the first coupling region 1081A.

For example, the body 1050A1 may include a plurality of second holes 1081D formed so as to encompass the first coupling region 1081A, and the plurality of second holes 1081D may be spaced apart from each other. In addition, the plurality of second holes 1081D may be spaced apart from the first hole 1081B.

At least one second hole 1081D may serve to allow a solder to be mainly formed on only the first coupling region 1081A due to interface tension (e.g. surface tension) at an edge of the first coupling region 1081A during soldering.

In addition, the first coupling region 1081A must be heated for soldering, and transmission of heat from the first coupling region 1081A to the other region of the body 1050A1 may be inhibited or interrupted by the at least one second hole 1081D, whereby soldering may not be performed on the other region of the body 1050A1. As a result, the at least one second hole 1081D may improve solderability of the solder 1902.

In addition, the body 1050A1 may include a supporting portion 1081C located between the plurality of second holes 1081D so as to support the first coupling region 1081A. The supporting portion 1081C may be referred to as a "connection portion" or a "bridge." For example, the supporting portion 1081C may include a plurality of supporting portions spaced apart from each other.

Referring to FIG. 34A, the second coupling portion 1082 may include a second coupling region 1082A coupled to the 1-2 supporting member 1020B1 and a first hole 1082B formed in the second coupling region 1082A. The second coupling region 1082A may be a region of the body 1050A1 to which the 1-2 supporting member 1020B1 is coupled. For example, on a region at which the second coupling region 1082A and the 1-2 supporting member 1020B1 are coupled to each other, an adhesive configured to attach both to each other may be coated.

In addition, the second coupling portion 1082 may include at least one second hole 1082C formed around the second coupling region 1082A.

In addition, the body 1050A1 may further include a third hole 1053A connected to or communicating with the second coupling portion 1082. For example, a part of the third hole 1053A may be formed in the second coupling region 1082A of the second coupling portion 1082, and may be connected to or may communicate with the first hole 1082B of the second coupling portion 1082. Another part of the third hole 1053A may be formed so as to extend from the first hole 1082B of the second coupling portion 1082 to an outer surface of the body 1050A2, and may include an opening 1053A1 open to the outer surface of the body 1050A1.

For example, the first hole 1082B and the third hole 1053A may be formed as a single hole. That is, the first hole 1082B may be formed so as to extend to the outer surface of the body 1050A1, and may include an opening 1053A1 open to the outer surface of the body 1050A1.

For example, the other end of the 1-2 supporting member 1020B1 may be inserted or fitted into the third hole 1053A of the first terminal 1027A1 through the opening 1053A1 of the hole 1053A, and the other end of the 1-2 supporting member 1020B1 may be inserted into or disposed in the first hole 1082B. In addition, for example, the other end of the 1-2 supporting member 1020B1 and the first hole 1082B of the second coupling portion 1082 may be coupled to each other using an adhesive, such as epoxy or silicone.

A description of at least one of the first coupling region 1081A, the first hole 1081B, the supporting portion 1081C, and the second hole 1081D of the first coupling portion 1081 may be applied or analogically applied to the second coupling portion 1082.

For example, the extension portion 1050B1 may protrude from the upper surface of the body 1050A1 toward the circuit board 1250. For example, the extension portion 1050B1 may protrude from the upper surface of the body 1050A1 in the optical-axis direction or an upward direction.

One end of the extension portion 1050B1 may be connected to the body 1050A1, and the other end of the extension portion 1050B1 may be connected to the pad of the circuit board 1250.

Referring to FIG. 37A, the circuit board 1250 may include at least one pad (e.g. P1 or P2), and the at least one pad P1 or P2 may be disposed on the upper surface of the circuit board 1250. For example, the pad P1 or P2 may be disposed on the upper surface of the body 1252 of the circuit board 1250 adjacent to the corner or the escape portion 1023 of the circuit board 1250.

The extension portion 1050B1 of the terminal 1027A1 or 1027A4 and the pad P1 or P2 of the circuit board 1250 may be coupled to each other using a solder 1904 or a conductive adhesive, and may be conductively connected to each other.

The extension portion 1050B1 may include at least one bent or curved portion.

For example, the extension portion 1050B1 may include a first part disposed on the second stair surface 1031B of the base 1210. The extension portion 1050B1 may include a part bent or curved from the body 1050A1 toward the circuit board 1250.

Referring to FIG. 37A, for example, a distal end of the extension portion 1050B1 may be exposed through the through-hole 1311A or 1311B, and the exposed distal end of the extension portion 1050B1 may be coupled to the pad P1 or P2 of the circuit board 1250 using a solder 1008a or 1008b (1008A or 1008B) or a conductive adhesive and may be conductively connected thereto.

Referring to FIG. 35A, for example, the terminal (e.g. 1027A1) may have recesses 1011A and 1011B formed adjacent to a bent portion such that the extension portion 1050B1 can be easily bent.

In another embodiment, the extension portion may further include a second part connected to the first part of the extension portion and disposed on the upper surface of the circuit board 1250, and the second part may be coupled or connected to the pad P1 or P2 using a solder or a conductive adhesive. For example, the extension portion according to the other embodiment may further include a bent portion formed between the first part and the second part.

In addition, as shown in FIG. 34B, a stair may be formed between the outer surface of the side portion (e.g. 1141-1) of the housing 1140 and the outer surface of the corner portion (e.g. 1142-2) adjacent thereto. The reason that the stair is formed is that, since the thickness of each corner portion of the housing 1140 is small, the stair is formed to prevent damage thereto due to external impact.

The first terminal 1027A may be coupled or attached to the base 1210 using an adhesive. For example, the body 1050A1 may be coupled or attached to the third surface 1030C of the upper surface 1030 of the base 1210 using an adhesive, and the extension portion 1050B1 may be coupled or attached to the third surface 1030C and the second stair surface 1031B of the upper surface 1030 of the base 1210.

In another embodiment, at least a part of the terminal member 1027 may be inserted into or coupled to the base 1210 by insert injection molding. For example, the terminal member 1027 may be formed with the base 1210 by insert injection molding, and at least a part of the terminal member 1027 may be inserted into the base 1210 or may be disposed in the base 1210.

In another embodiment, the terminal member may be coupled to the circuit board 1250.

For example, the fourth terminal 1027A4 may have a structure identical or similar to the structure of the first terminal 1027A1, and a description of the first terminal 1027A1 may be applied or analogically applied to the fourth terminal 1027A4. In addition, each of the second and third terminals 1027A2 and 1027A3 may be configured such that the extension portion 1050B1 of the first terminal 1027A1 is omitted therefrom; however, the disclosure is not limited thereto.

In another embodiment, each of the second and third terminals may have the same shape or structure as the first terminal 1027A1. That is, each of the second and third terminals 1027A2 and 1027A3 may include the extension portion 1050B1 of the first terminal 1027A1. At this time, the circuit board 1250 may have a pad coupled or conductively connected to each of the extension portions of the second and third terminals 1027A2 and 1027A3.

Next, the first supporting member 1220-1 will be described, and a description of the first supporting member 1220-1 may be applied or applied correspondingly to the second to fourth supporting members 1220-2 to 1220-4, the terminals of the terminal member 1027 corresponding thereto, and the upper elastic members.

Referring to FIG. 35A, the first supporting member 1220-1A may include a 1-1 supporting member 1020A-1 implemented by a one-strand wire and a 1-2 supporting member 1020B1 made of a nonconductive material.

The first supporting member 1220-1A and the 1-2 supporting member 1020B1 may be disposed on at least one of the corner portions 1142-1 to 1142-4 of the housing 1140. For example, the first supporting member 1220-1A and the 1-2 supporting member 1020B1 may be disposed on each of the corner portions 1142-1 to 1142-4 of the housing 1140.

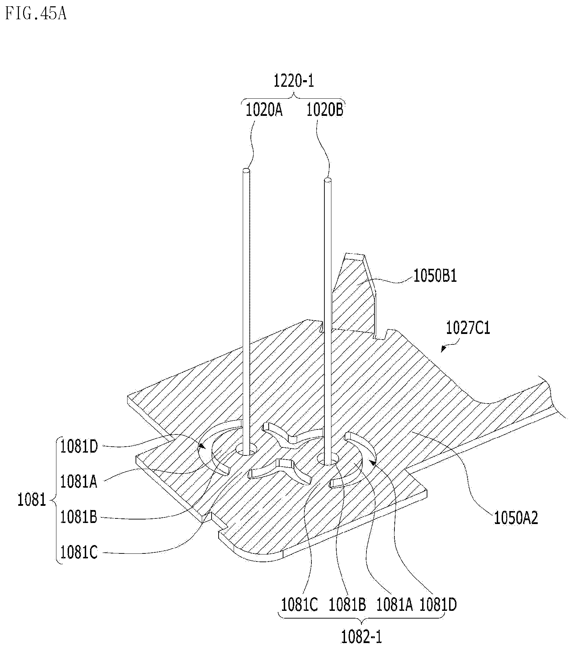

For example, the 1-1 supporting member 1020A-1 may have different stiffness (or spring constant) from the 1-1 supporting member 1020A (or the 1-2 supporting member 1020B) of FIG. 45A, a description of which will follow.

For example, the stiffness (or spring constant) of the 1-1 supporting member 1020A-1 may be less than the stiffness (or spring constant) of the 1-1 supporting member 1020A (or the 1-2 supporting member 1020B) of FIG. 21A.

For example, the diameter of the 1-1 supporting member 1020A-1 may be equal to or less than the diameter of the 1-1 supporting member 1020A (or the 1-2 supporting member 1020B) of FIG. 45A.

In contrast, the 1-2 supporting member 1020B1 made of the nonconductive material may have different stiffness (or spring constant) from the 1-1 supporting member 1020A (or the 1-2 supporting member 1020B) of FIG. 45A.

For example, the stiffness (or spring constant) of the 1-2 supporting member 1020B1 made of the nonconductive material may be greater than the stiffness (or spring constant) of the 1-1 supporting member 1020A (or the 1-2 supporting member 1020B) of FIG. 45A.

For example, the bobbin 1110, the housing 1140, and/or the base 1210 may include an injection molded material formed by injection molding. Here, the injection molded material may include at least one of resin, rubber, urethane, and plastic.

The 1-2 supporting member 1020B1 may also include an injection molded material formed by injection molding, and may be elastically deformed.

For example, the 1-2 supporting member 1020B1 may include at least one of resin, rubber, urethane, plastic, and a thermoplastic elastomer.

The section of the 1-2 supporting member 1020B1 in the direction perpendicular to the optical axis may be circular; however, the disclosure is not limited thereto. In another embodiment, the section of the 1-2 supporting member 1020B1 in the direction perpendicular to the optical axis may be polygonal.

The 1-2 supporting member 1020B1, which includes the injection molded material, may serve as a damper configured to perform buffer action. One end of the 1-2 supporting member 1020B1 may be coupled or connected to the second coupling portion 1072B of the first outer frame 1152 of the first upper elastic member 1150-1. For example, one end of the 1-2 supporting member 1020B1 may be coupled to the second coupling portion 1072B of the first outer frame 1152 using an adhesive.

Referring to FIG. 34B, the adhesive 1350 may be disposed between a first end A2 (or a "first stationary portion") of the 1-2 supporting member 1020B1 and the second coupling portion 1072B of the first outer frame 1152 of the first upper elastic member 1150-1 corresponding thereto, and may couple or attach both to each other.

For example, at least a part of the adhesive 1350 may be disposed on the first end A2 (or the "first stationary portion") of the 1-2 supporting member 1020B1 and the second coupling portion 1072B of the first outer frame 1152 of the first upper elastic member 1150-1, and may couple both to each other.

For example, the adhesive 1350 may be resin (e.g. epoxy) or silicone; however, the disclosure is not limited thereto.

The other end of the 1-2 supporting member 1020B1 may be coupled to the first terminal 1027A1.

Referring to FIG. 35A, the 1-2 supporting member 1020B1 may include a body A1, a first end A2 (or a first stationary portion) disposed between one side of the body A1 and the first upper elastic member 1150-1, and a second end A3 (or a second stationary portion) disposed between the other side of the body A1 and the first terminal 1027A1.

The body A1 may be columnar. For example, the body A1 may have a columnar shape having a convex middle. For example, the body A1 may be an entasis; however, the disclosure is not limited thereto. For example, the section of the body A1 in the direction perpendicular to the optical axis may be circular, oval, or polygonal (e.g. quadrangular).

For example, the body A1 may include at least a part having a diameter B1 gradually decreased from the middle to the first end A2 of the body A1. In addition, the body A1 may include at least a part having a diameter B1 gradually decreased from the middle to the second end A3 of the body A1. The diameter of the body A1 may be the length of the body A1 in the direction perpendicular to the optical axis.

For example, the diameter B1 of the body A1 may be gradually decreased from the middle to the first end A2 of the body A1, and the diameter B1 of the body A1 may be gradually decreased from the middle to the second end A3 of the body A1. The diameter of the body A1 may be the length of the body A1 in the direction perpendicular to the optical axis.

For example, the diameter of the body A1 may be increased and then decreased in a direction from the first end A2 (or the second end A3) to the second end A3 (or the first end A2).

In another embodiment, the diameter of the body A1 may be gradually increased from the middle to the first end A2 of the body A1, and the diameter of the body A1 may be gradually increased from the middle to the second end A3 of the body A1.

In another embodiment, the diameter of the body A1 may be gradually decreased from the first end A2 to the second end A3. In another embodiment, the diameter of the body A1 may be gradually increased from the first end A2 to the second end A3.

In another embodiment, the diameter of the body A1 from the first end A2 (or a first connection portion A4) to the second end A3 (a second connection portion A5) may be uniform.

The first end A2 may be connected or coupled to the first upper elastic member 1150-1. The first end A2 may be disposed under the second coupling portion 1072B of the first outer frame 1152 of the first upper elastic member 1150-1.

The shape of the first end A2 may be cylindrical; however, the disclosure is not limited thereto, and the shape of the first end may be polyhedral (e.g. hexahedral). The sectional shape of the first end in the direction perpendicular to the optical axis may be circular, oval, or polygonal (e.g. quadrangular).

In another embodiment, the first end A2 may have a smaller size (e.g. diameter) than the hole 1152a of the first outer frame 1152, and may be disposed in the hole 1152a of the first outer frame 1152 of the first upper elastic member 1150-1 or may extend through the hole 1152a.

The second end A3 may be connected or coupled to the first terminal 1027A1. For example, the second end A3 may be coupled or attached to the second coupling portion 1082 of the first terminal 1027A1 using an adhesive.

The second end A3 may be disposed under the first hole 1082B of the second coupling portion 1082 of the first terminal 1027A1.

The shape of the second end A3 may be cylindrical; however, the disclosure is not limited thereto, and the shape of the second end may be polyhedral (e.g. hexahedral). The sectional shape of the second end in the direction perpendicular to the optical axis may be circular, oval, or polygonal (e.g. quadrangular).

The 1-2 supporting member 1020B1 may further include a first connection portion A4 (or a first deformation portion) disposed between the body A1 and the first end A2. The first connection portion A4 may connect the body A1 and the first end A2 to each other.

The 1-2 supporting member 1020B1 may further include a second connection portion A5 (or a second deformation portion) disposed between the body A1 and the second end A3. The second connection portion A5 may connect the body A1 and the second end A3 to each other. At least a part of the second connection portion A5 may be disposed in the first hole 1082B of the first terminal 1027A1. For example, at least a part of the second connection portion A5 may extend through the first hole 1082B.

The length L31 of the body A1 in the optical-axis direction may be greater than each of the lengths T1 and T2 of the first and second ends A2 and A3 in the optical-axis direction.

The length L31 of the body A1 in the optical-axis direction may be greater than each of the lengths L21 and L22 of the first and second connection portions A4 and A5 in the optical-axis direction. In another embodiment, the length of the body A1 in the optical-axis direction may be equal to or less than the length of each of the first and second connection portions A4 and A5 in the optical-axis direction.

For example, the length L31 of the body A1 in the optical-axis direction may be 30% to 90% of the length L11 of the 1-2 supporting member 1020B1 in the optical-axis direction. For example, the length L31 of the body A1 in the optical-axis direction may be 65% to 80% of the length L11 of the 1-2 supporting member 1020B1 in the optical-axis direction. Alternatively, for example, the length L31 of the body A1 in the optical-axis direction may be 68% to 75% of the length L11 of the 1-2 supporting member 1020B1 in the optical-axis direction.

The length T1 of the first end A2 in the optical-axis direction may be greater than the length T2 of the second end A3 in the optical-axis direction. In another embodiment, the length T1 of the first end A2 in the optical-axis direction may be equal to or less than the length T2 of the second end A3 in the optical-axis direction.

The length L21 of the first connection portion A4 in the optical-axis direction may be equal to the length L22 of the second connection portion A5 in the optical-axis direction. In another embodiment, the length of the first connection portion A4 in the optical-axis direction may be different from the length of the second connection portion A5 in the optical-axis direction. For example, the length of the first connection portion A4 in the optical-axis direction may be greater or less than the length of the second connection portion A5 in the optical-axis direction.

The diameter B1 of the body A1 may be equal to or less than the diameter B2 of the first end A2 (or the diameter B3 of the second end A3). In another embodiment, the diameter B1 of the body A1 may be greater than the diameter B2 of the first end A2 (or the diameter B3 of the second end A3). The diameter B2 (or the diameter B3) may be the length of the first end A2 (or the second end A3) in the direction perpendicular to the optical axis.

The diameter B4 of the first connection portion A4 may be less than the diameter B2 of the first end A2. In addition, the diameter B5 of the second connection portion A5 may be less than the diameter B3 of the second end A3. The diameter B4 (or the diameter B5) may be the length of the first connection portion A4 (or the second connection portion A5) in the direction perpendicular to the optical axis.

For example, each of the diameter B4 of the first connection portion A4 and the diameter B5 of the second connection portion A5 may be 150 micrometers to 200 micrometers. Alternatively, for example, each of the diameter B4 of the first connection portion A4 and the diameter B5 of the second connection portion A5 may be 160 micrometers to 185 micrometers.

For example, the ratio of the diameter of the 1-1 supporting member 1020A-1 to the diameter B4 or B5 of the first connection portion A4 (or the second connection portion A5) may be 2.14 to 4. Alternatively, for example, the ratio of the diameter of the 1-1 supporting member 1020A-1 to the diameter B4 or B5 of the first connection portion A4 (or the second connection portion A5) may be 2.5 to 3.5. Alternatively, for example, the ratio of the diameter of the 1-1 supporting member 1020A-1 to the diameter B4 or B5 of the first connection portion A4 (or the second connection portion A5) may be 2.5 to 3.

If the ratio is less than 2.14, the first supporting member 1220-1 may not stably support the OIS moving unit during OIS driving, and the 1-2 supporting member 1020B1 may be cut.

If the ratio is greater than 4, on the other hand, the 1-2 supporting member 1020B1 may not be easily deformed during OIS driving, whereby more electromagnetic force is necessary to perform normal OIS driving, and therefore power consumption may be increased.

For example, the diameter B4 of the first connection portion A4 (or the diameter B5 of the second connection portion A5) may be 15% to 80% of the diameter B2 of the first end A2 (or the diameter B3 of the second end A3).

Alternatively, for example, B4 (or B5) may be 20% to 50% of B2 (or B3). Alternatively, for example, B4 (or B5) may be 20% to 30% of B2 (or B3).

Since the diameters B4 and B5 of the first and second connection portions A4 and A5 are less than the diameters B2 and B3 of the first and second ends A2 and A3 and the diameter B1 of the body A1, deformation may easily occur during OIS driving.

If B4 (or B5) is less than 15% of B2 (or B3), the first supporting member 1220-1 may not stably support the OIS moving unit during OIS driving, and the 1-2 supporting member 1020B1 may be cut.

If B4 (or B5) is greater than 80% of B2 (or B3), on the other hand, the 1-2 supporting member 1020B1 may not be easily deformed during OIS driving, whereby more electromagnetic force is necessary to perform normal OIS driving, and therefore power consumption may be increased.

For example, the diameters B4 and B5 of the first and second connection portions A4 and A5 may be equal to or less than the diameter B1 of the body A1. For example, the diameters B4 and B5 of the first and second connection portions A4 and A5 may be less than the diameter of a middle part of the body A1.

The diameter of the first hole 1082B of the first terminal 1027A1 may be greater than the diameter B5 of the second connection portion A5 such that at least a part of the second connection portion A5 is disposed in the first hole 1082B of the first terminal 1027A1.

The first and second connection portions A4 and A5 may be concave portions formed between the first end A2 and the body A2 and between the second end A3 and the body A1, respectively.

The body A1 may be referred to as a "first part," the first end A2 may be referred to as a "second part," the second end A3 may be referred to as a "third part," the first connection portion A4 may be referred to as a "fourth part" or a "first deformation portion," and the second connection portion A5 may be referred to as a "fifth part" or a "second deformation portion."

Each of the first connection portion A4 and the second connection portion A5 is basically circular but may have another shaped bend, and the number of connection portions may be different depending on characteristics of a product. The shape of the connection portion may be implemented in a partially bent or clamped form.

In another embodiment, the first connection portion and the second connection portion of FIG. 21A may be omitted, one side of the body may be connected to the first end, and the other side of the body may be connected to the second end.

FIG. 35B shows a 1-2 supporting member 1020B2, which is a modification of the 1-2 supporting member 1020B1, wherein the length of a body A11 of the 1-2 supporting member 1020B2 in the direction perpendicular to the optical axis may be uniform.

The 1-2 supporting member 1020B2 may include a body A11, a first end A12, and a second end A13. In addition, the 1-2 supporting member 1020B2 may include a first connection portion A14 that connects the first end A12 and one side of the body A11 to each other. In addition, the 1-2 supporting member 1020B2 may include a second connection portion A15 that connects the second end A13 and the other side of the body A11 to each other.

The body A11 may have a linear or straight shape having a uniform diameter from one end to the other end thereof.

The diameter of the body A11 may be uniform from the first connection portion A14 to the second connection portion A15. A description of the length of each part of FIG. 35A in the optical-axis direction may be applied or applied correspondingly to the length of each part of FIG. 35B in the optical-axis direction.

Each of the diameter of the first end A12 and the diameter of the second end A13 may be equal to the diameter B11 of the body A11. In another embodiment, each of the diameter of the first end A12 and the diameter of the second end A13 may be different from the diameter B11 of the body A11.

The diameter of each of the first and second connection portions A14 and A15 may be less than the diameter of the first end A12, the diameter of the second end A13, and the diameter B11 of the body A11.

A description of FIG. 35A may be applied or applied correspondingly to the ratio of the diameters of the first and second connection portions A14 and A15 to the diameters of the first and second ends A12 and A13.

FIG. 35C shows a 1-2 supporting member 1020B3, which is another modification of the 1-2 supporting member 1020B1 of FIG. 35A. For example, referring to FIG. 35C, the length T21' of a body A1 of the 1-2 supporting member 1020B3 in the optical-axis direction may be equal to or greater than the length T22' (or T23') of a fourth part A4 (or a fifth part A5) of the 1-2 supporting member 1020B3 in the optical-axis direction.

For example, the length T21' of the body A1 of the 1-2 supporting member 1020B3 in the optical-axis direction may be 1 mm to 1.5 mm. For example, T21' may be 1.15 mm to 1.3 mm.

In addition, for example, the length T22' of the fourth part A4 of the 1-2 supporting member 1020B3 in the optical-axis direction and the length T23' of the fifth part A5 in the optical-axis direction may be equal to each other. For example, each of T22' and T23' may be 0.8 mm to 1.4 mm. For example, each of T22' and T23' may be 1 mm to 1.2 mm.

In another embodiment, the length T22' of the fourth part A4 in the optical-axis direction and the length T23' of the fifth part A5 in the optical-axis direction may be different from each other. For example, the former may be greater or less than the latter.

In addition, for example, each of the length T1' of the first end A2 of the 1-2 supporting member 1020B3 in the optical-axis direction and the length T2' of the second end A3 of the 1-2 supporting member 1020B3 in the optical-axis direction may be less than the length T22' of the fourth part A4 in the optical-axis direction and/or the length T23' of the fifth part A5 in the optical-axis direction.

For example, each of T1' and T2' may be 0.1 mm to 0.2 mm. For example, each of T1' and T2' may be 0.1 mm to 0.15 mm.

In addition, the length T1' of the first end A2 in the optical-axis direction and the length T2' of the second end A3 in the optical-axis direction may be equal to each other; however, the disclosure is not limited thereto. In another embodiment, both may be different from each other. For example, T1'>T2' and vice versa.

In addition, for example, the diameter B2' of the first end A2 of the 1-2 supporting member 1020B3 may be less than the diameter B3' of the second end A3 of the 1-2 supporting member 1020B3.

In addition, for example, each of the diameters B4' and B5' of the fourth part A4 and the fifth part A5 may be less than the diameter B2' of the first end A2 (or the diameter B3' of the second end A3).

For example, the diameter B2' of the first end A2 may be 0.3 mm to 0.5 mm. For example, the diameter B2' of the first end A2 may be 0.4 mm to 0.44 mm.

For example, the diameter B3' of the second end A3 may be 0.55 mm to 0.7 mm. For example, the diameter B3' of the second end A3 may be 0.6 mm to 0.65 mm.

For example, each of the diameters B4' and B5' of the fourth part A4 and the fifth part A5 may be 0.15 mm to 0.2 mm. Each of the diameters B4' and B5' of the fourth part A4 and the fifth part A5 may be 0.16 mm to 0.185 mm.

For example, each of the diameters B4' and B5' of the fourth part A4 and the fifth part A5 may be greater than the diameter (or the thickness) of the 1-1 supporting member 1020A. In another embodiment, both may be equal to each other. In another embodiment, the former may be less than the latter.

For example, each of the diameters B4' and B5' of the fourth part A4 and the fifth part A5 may be 1.5 to 5 times the diameter (or the thickness) of the 1-1 supporting member 1020A. For example, each of the diameters B4' and B5' of the fourth part A4 and the fifth part A5 may be 1.5 to 3 times the diameter (or the thickness) of the 1-1 supporting member 1020A. Alternatively, for example, each of the diameters B4' and B5' of the fourth part A4 and the fifth part A5 may be 2 to 3 times the diameter (or the thickness) of the 1-1 supporting member 1020A.

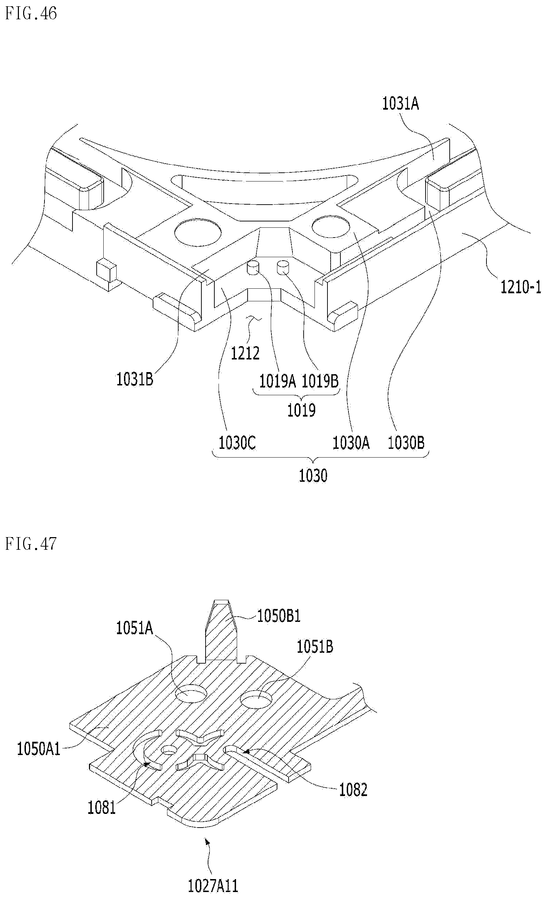

The body A1 of the 1-2 supporting member 1020B3, which is a part abutting an injection portion of a mold, through which an injection molded material is injected, may have a shape similar to the shape of the body A1 of the 1-2 supporting member 1020B1 of FIG. 47A, and may have at least one flat surface. At this time, the flat surface may be formed at the position corresponding to the injection portion of the mold.

The 1-2 supporting member 1020B3 may include a protrusion AP protruding from an upper surface of the first end A2. The protrusion AP may be coupled to the second coupling portion 1072 of the first upper elastic member 1150-1 via an adhesive member.

For example, the second coupling portion 1072 of the first upper elastic member 1150-1 may have a coupling hole to which the protrusion AP of the 1-2 supporting member 1020B3 is coupled, at least a part of the protrusion AP may be disposed in the coupling hole, and the adhesive member may be disposed on the protrusion AP and in the coupling hole so as to couple both to each other.

For example, the diameter of the protrusion AP may be equal to each of the diameters B4' and B5' of the fourth part A4 (and/or the fifth part A5). In another embodiment, the diameter of the protrusion AP may be less or greater than each of the diameters B4' and B5' of the fourth part A4 (and/or the fifth part A5). For example, the diameter of the protrusion AP may be equal to or less than the diameter of the coupling hole of the second coupling portion 1072 of the first upper elastic member 1150-1.

The cover member 1300 may receive the OIS moving unit, the upper elastic member 1150, the lower elastic member 1160, the second coil 1230, the base 1210, the terminal member 1027, the circuit board 1250, the supporting member 1220, and the second position sensor 1240 in a receiving space formed together with the base 1210.

The cover member 1300 may be a box that is open at a lower portion thereof and that includes an upper plate 1301 and side plates 1302. A lower portion of the side plate 1302 of the cover member 1300 may be coupled to the 1211 of the base 1210. The shape of the upper plate 1301 of the cover member 1300 may be a polygon, such as a quadrangle or an octagon.

An opening 1303, through which the lens module 1400 coupled to the bobbin 1110 is exposed to external light, may be formed in the upper plate 1301 of the cover member 1300. The material for the cover member 1300 may be a nonmagnetic material, such as SUS, in order to prevent a phenomenon in which the cover member sticks to the magnet 1130. The cover member 1300 may be made of a metal sheet; however, the disclosure is not limited thereto, and the cover member may be made of plastic or a resin material. In addition, the cover member 1300 may be connected to a ground terminal of the circuit board 1250 of the lens moving apparatus 1100 and/or a ground of a circuit board 800 of the camera apparatus 200. The cover member 1300 may block electromagnetic interference (EMI).

In the embodiment of FIG. 35A, the first supporting member 1220-1 includes one conductive supporting member 1020A-1 and one nonconductive supporting member 1020B1; however, the disclosure is not limited thereto.

FIG. 45A shows a first supporting member 1200-1A and a first terminal 1027C1 according to another embodiment. Hereinafter, a description of the first supporting member and the first terminal may be applied or applied correspondingly to second to fourth supporting members and second to fourth terminals.

Referring to FIG. 45A, the first terminal 1027C1 may include a body 1050A2 and an extension portion 1050B1.

The body 1050A2 may include a first coupling portion 1081 coupled to the 1-1 supporting member 1020A and a second coupling portion 1082-1 coupled to the 1-2 supporting member 1020B.

A description of the first coupling portion 1081 of FIG. 34A may be applied or applied correspondingly to the first coupling portion 1081 of FIG. 45A. The second coupling portion 1082-1 may include a first coupling region 1081A coupled to the 1-1 supporting member 1020A, a first hole 1081B formed in the first coupling region 1081A, and at least one second hole 1081D formed around the first coupling region 1081A. For example, the second coupling portion 1082-1 may include a supporting portion 1081C.

The second coupling portion 1082-1 may have the same structure or shape as the first coupling portion 1081, and a description of the first coupling portion 1081 may be applied or applied correspondingly to the second coupling portion 1082-1.

For example, the diameter range of the 1-1 supporting member 1020A-1 of FIG. 35A may be applied or applied correspondingly to the diameter range of the 1-1 supporting member 1020A of FIG. 45A.

In the embodiment of FIG. 45A, each of the two supporting members 1020A and 1020B of the first supporting member 1220-1 may be a one-strand wire made of a conductive material.

For example, one end of the 1-1 supporting member 1020A may be coupled to the 2-1 coupling portion 1072A of the upper elastic member 1150-1 using a first solder (e.g. 1901), and the other end of the 1-1 supporting member 1020A may be coupled to the first hole 1081B of the first coupling region 1081 of the first terminal 1027C1 using a second solder (e.g. 1902).

One end of the 1-2 supporting member 1020B may be coupled to the 2-2 coupling portion 1072B of the upper elastic member 1150-1 using the first solder (e.g. 1901), and the other end of the 1-2 supporting member 1020B may be coupled to the first hole 1081B of the second coupling region 1082-1 of the first terminal 1027C1 using the second solder (e.g. 1902).

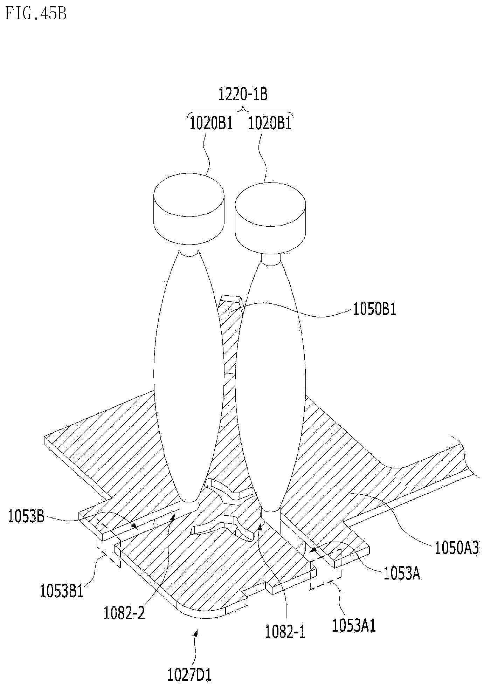

FIG. 45B is a perspective view of a first supporting member 1220-1B according to another embodiment.

Referring to FIG. 45B, the first supporting member 1220-1B may include two supporting members, each of the two supporting members may be the 1-2 supporting member 1020B1 made of the nonconductive material described with reference to FIG. 35A.

A first terminal 1027D1, to which the first supporting member 1220-1B is coupled, may include a first coupling portion 1082-1 and a second coupling portion 1082-2. A description of the second coupling portion 1082 of FIG. 34A may be applied or applied correspondingly to each of the first coupling portion 1082-1 and the second coupling portion 1082-2.

A fourth hole 1053B may be formed in a body 1050A3 of the first terminal 1027D1, the fourth hole 1053B may include an opening 1053B1 open to an outer surface of the body 1050A3, and a description of the third hole 1053A and the opening 1053A1 of FIG. 11A may be applied or applied correspondingly to the embodiment of FIG. 21B.

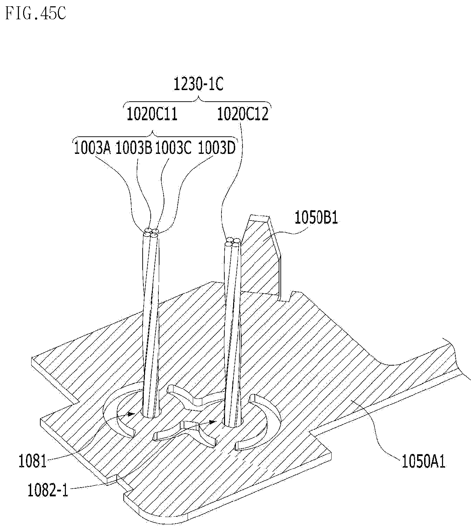

FIG. 45C is a perspective view of a first supporting member 1220-1C according to another embodiment.

Referring to FIG. 45C, the first supporting member 1220-1C may include a 1-1 supporting member 1020C11 and a 1-2 supporting member 1020C12.

The 1-1 supporting member 1020A of FIG. 45A may be implemented by a one-strand wire, whereas each of the two supporting members 1020C11 and 1020C12 of FIG. 45C may be implemented by a two-or-more-strand wire.

For example, each of the 1-1 supporting member 1020C11 and the 1-2 supporting member 1020C12 may be implemented by a four-strand wire.

For example, the diameter (or the thickness) of each strand of the four-strand wire may be 20 micrometers to 30 micrometers. For example, the diameter (or the thickness) of each strand of the four-strand wire may be 24 micrometers to 28 micrometers. Alternatively, for example, the diameter (or the thickness) of each strand of the four-strand wire may be 26 micrometers to 28 micrometers.

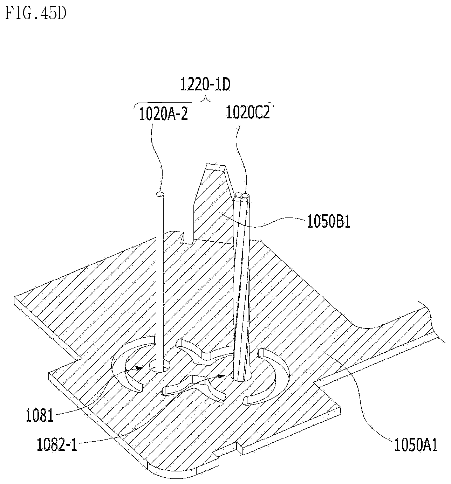

FIG. 45D is a perspective view of a first supporting member 1220-1D according to another embodiment.

Referring to FIG. 45D, the first supporting member 1220-1D may include a 1-1 supporting member 1020A-2 and a 1-2 supporting member 1020C2. For example, the 1-2 supporting member 1020C2 may be identical to the 1-2 supporting member 1020C12 (or the 1-1 supporting member 1020C11) of FIG. 45C.

For example, the 1-1 supporting member 1020A-2 may have different stiffness (or spring constant) from the 1-1 supporting member 1020A (or the 1-2 supporting member 1020B) of FIG. 45A. For example, the stiffness (or spring constant) of the 1-1 supporting member 1020A-2 may be less than the stiffness (or spring constant) of the 1-1 supporting member 1020A (or the 1-2 supporting member 1020B) of FIG. 45A.

For example, the diameter of the 1-1 supporting member 1020A-2 may be equal to or less than the diameter of the 1-1 supporting member 1020A (or the 1-2 supporting member 1020B) of FIG. 45A. For example, the diameter range of the 1-1 supporting member 1020A of FIG. 45A may be applied or applied correspondingly to the diameter range of the 1-1 supporting member 1020A-2.

For example, the diameter (or the thickness) of the 1-2 supporting member 1020C2 of FIG. 45D may be greater than the diameter (or the thickness) of the 1-1 supporting member 1020A-2 of FIG. 45D. For example, the ratio of the diameter of the 1-1 supporting member 1020A-2 to the diameter of the 1-2 supporting member 1020C2 may be 1:1.15 to 1:2.4. In another embodiment, the diameter (or the thickness) of the 1-2 supporting member 1020C2 of FIG. 45D may be equal to the diameter (or the thickness) of the 1-1 supporting member 1020A-2 of FIG. 45D.

In contrast, the 1-2 supporting member 1020C2 may have different stiffness (or spring constant) from the 1-1 supporting member 1020A (or the 1-2 supporting member 1020B) of FIG. 45A. For example, the stiffness (or spring constant) of the 1-2 supporting member 1020C2 may be greater than the stiffness (or spring constant) of the 1-1 supporting member 1020A (or the 1-2 supporting member 1020B) of FIG. 45A. The 1-2 supporting member 1020C2 may have higher stiffness than the 1-1 supporting member 1020A-2.

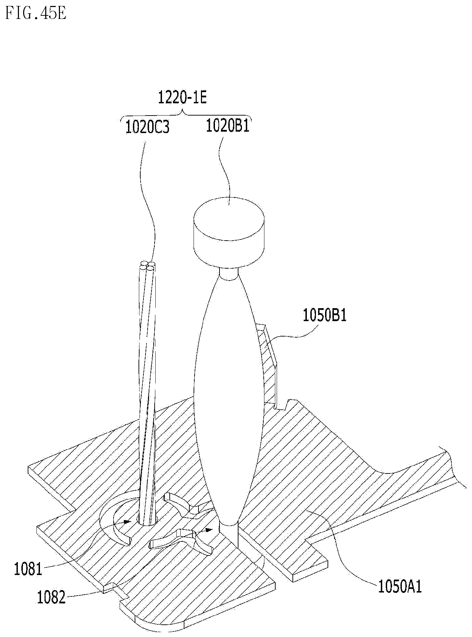

FIG. 45E is a perspective view of a first supporting member 1220-1E according to another embodiment.

Referring to FIG. 45E, the first supporting member 1220-1E may include a 1-1 supporting member 1020C3 and a 1-2 supporting member 1020B1. A description of the 1-1 supporting member 1020C11 of FIG. 45C may be applied or analogically applied to the 1-1 supporting member 1020C3 of FIG. 45E, and a description of the 1-2 supporting member 1020B1 of FIG. 45A may be applied or applied correspondingly to the 1-2 supporting member 1020B1 of FIG. 45E.

For example, the diameter of the 1-1 supporting member 1020C3 may be greater than the diameter B4 (or B5) of a first connection portion A4 (or a second connection portion A5) of the 1-2 supporting member 1020B1.

For example, the ratio of the diameter of the 1-1 supporting member 1020C3 to the diameter B4 (or B5) of the first connection portion A4 (or A5) of the 1-2 supporting member 1020B1 may be 1:1.25 to 1:2.5.

The lens moving apparatus according to the embodiment may be implemented so as to include at least one of the first supporting members 1220-1, 1220-1A, 1220-1B, 1220-1C, 1220-1D, and 1220-1E described with reference to FIGs. 35A and 45A to 45E.

In order to exhibit the same performance, the first supporting members 1200-1 to 1200-1E described with reference to FIGs. 35A and 45A to 45E may be designed to have the same stiffness or spring constant. Here, the spring constant may be a spring constant in the X-axis direction or the Y-axis direction.

The first supporting member 1220-1, 1220-1B, or 1220-1C of FIGs. 45A, 45B, and 45C has two supporting members having the same stiffness.

The supporting member 1020B1 made of the injection molded material of FIG. 35A has a longer lifespan than the wire-shaped supporting members 1020A and 1020B of FIG. 45A. In addition, each of the supporting members 1020C1 and 1020C2 of FIG. 45C has a longer lifespan than the wire-shaped supporting members 1020A and 1020B of FIG. 45A.

The embodiment 1220-1 of FIG. 35A will be compared to the embodiment 1220-1A of FIG. 45A as follows.

In order to exhibit the same performance, the stiffness (or spring constant) of the first supporting member 1220-1 of FIG. 35A must be designed so as to be equal or similar to the stiffness (or spring constant) of the first supporting member 1220-1 of FIG. 45A.

To this end, in the embodiment of FIG. 35A, the 1-1 supporting member 1020A-1 may be designed so as to have lower stiffness than the 1-1 supporting member 1020A of FIG. 45A, and the 1-2 supporting member 1020B1 may be designed so as to have higher stiffness than the 1-1 supporting member 1020A of FIG. 45A.

When compared to the 1-1 supporting member 1020A of FIG. 45A, the 1-1 supporting member 1020A-1 of FIG. 35A may be more easily bent, whereby cutting thereof due to external impact may be inhibited or prevented.

In addition, since the 1-2 supporting member 1020B1 of FIG. 35A is made of an injection molded material, the lifespan thereof is longer, when compared to the 1-1 supporting member 1020A of FIG. 45A, whereby the lifespan of the supporting member 1220-1 of FIG. 35A may be longer than the lifespan of the supporting member 1220-1A of FIG. 45A.

For the same reason, in the embodiment of FIG. 45D, cutting of the 1-1 supporting member 1020A-2 may be inhibited or prevented, and the lifespan of the first supporting member 1220-1D may be extended.

In order to implement a high-quality image, the size (e.g. the weight) of the lens module mounted to the lens moving apparatus may be increased. In an OIS VCM having a heavy lens module (e.g. a weight of 0.4 g or more) mounted thereto, a wire-shaped supporting member may be cut. In particular, a fracture phenomenon may occur at the part at which the upper end of the supporting member (e.g. wire) is soldered and at the part at which the lower end of the supporting member is soldered.

In the embodiment, in order to prevent or inhibit cutting of the supporting member, two supporting members may be disposed on one corner of the housing 1140, as shown in FIGs. 35A and 45A to 45E.

When compared to a lens moving apparatus according to another embodiment having a structure in which only one wire is disposed on one corner of the housing (hereinafter referred to as the "other embodiment"), two wires are disposed on at least one corner of the housing 1140 in the embodiment, whereby the number of wires may be increased, and therefore elastic force (or restoring force) of the supporting member may be increased.

When compared to the other embodiment, in which only one wire is disposed on one corner of the housing, elastic force (restoring force) of the supporting member is increased in the embodiment shown in FIGs. 35A and 45A to 45E, whereby an increase in electromagnetic force by interaction between the OIS coil and the magnet is required for smooth and normal OIS driving.

In order to increase electromagnetic force, the second coil 1230 according to the embodiment may be a winding coil, a coil bundle, a coil body, or a coil block, whereby it is possible to increase electromagnetic force.

If the second coil of the winding coil is disposed on the circuit board (hereinafter referred to as "another embodiment"), however, the distance between the second coil and the magnet (or the lower stopper of the housing) may be too small, whereby the second coil and the magnet (or the lower stopper of the housing) may collide with each other, and therefore the second coil may be damaged or foreign matter may be generated due to collision.

In order to prevent damage or generation of foreign matter due to collision, the second coil 1230 may be disposed under the circuit board 1250 in the embodiment. That is, the second coil 1230 may be located between the lower surface of the circuit board 1250 and the upper surface of the base 1210, and may be disposed in the seating portions 1213A1 to 1213A4 formed at the upper surface of the base 1210.

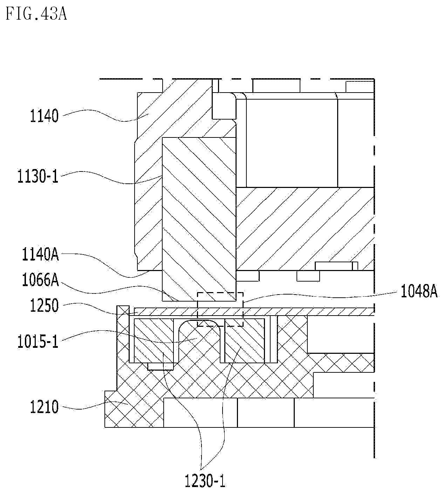

FIG. 43A shows disposition of the magnet (e.g. 1130-1) disposed on the housing 1140, the coil unit (e.g. 1230-1) disposed on the base 1210, and the circuit board 1250. A description of FIG. 43A may be applied to the other magnets 1130-2 to 1130-4 and the other coil units 1230-2 to 1230-4.

Referring to FIG. 43A, a lower surface 1066A of the magnet (e.g. 1130-1) may protrude from a lower end 1140A or a lower surface of the housing 1140 toward the circuit board 1250. For example, the lower end 1140A of the housing 1140 may be the lowest part of the housing 1140 or the part of the housing closest to the upper surface of the circuit board 1250.

Since the coil unit (e.g. 1230-1) is located under the circuit board 1250, the magnet (e.g. 1130-1) and the coil unit (e.g. 1230-1) may not collide with each other. The magnet (e.g. 1130-1) and the upper surface of the circuit board 1250 may collide with each other due to external impact, and the circuit board 1250 may absorb collision with the magnet 1130-1 in FIG. 45A.

In addition, when compared to the other embodiment in which the second coil is disposed on the circuit board, the area of the collision point 1048A or the collision region between the magnet 1130-1 and the upper surface of the circuit board 1250 may be increased in the embodiment of FIG. 19A, whereby impact may be dispersed, and therefore a structure having high resistance to impact may be obtained.

As shown in FIG. 43A, the height of the upper surface of each of the protrusions 1016A and 1016B of the projection portion 1015-1 may be equal to or less than the height of the upper surface of the coil unit (e.g. 1230-1). In addition, each of the protrusions 1016A and 1016B of the projection portion 1015-1 and the magnet (e.g. 1130-1) may overlap each other in the optical-axis direction. For example, the width W1 of the magnet (e.g. 1130-1) may be greater than the width of each of the protrusions 1016A and 1016B.

For example, in FIG. 43A, a circuit pattern or wiring may be formed on the region of the circuit board 1250 corresponding to the projecting portion 1015-1 or 1015-1A in the optical-axis direction; however, the disclosure is not limited thereto. In another embodiment, no circuit pattern or no wiring may be formed on the region of the circuit board 1250 corresponding to the projecting portion 1015-1 or 1015-1A in the optical-axis direction.

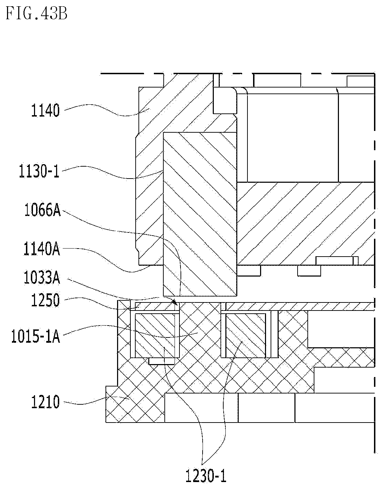

FIG. 43B shows a projecting portion 1015-1A of the base 1210 according to another embodiment.

Referring to FIG. 43B, the height of an upper surface of the projecting portion 1015-1A (or the protrusion) may be greater than the height of the upper surface or the upper end of the second coil 1230 (e.g. 1230-1). For example, the projecting portion 1015-1A (or the protrusion) and the magnet (e.g. 1130-1) may overlap each other in the optical-axis direction, and the width W1 of the magnet (e.g. 1130-1) may be greater than the width of the projecting portion 1015-1A (or the protrusion) .

In addition, for example, at least a part of the projecting portion 1015-1A (or the protrusion) may be exposed to the upper surface of the circuit board 1250. For example, at least a part of the upper surface of the projecting portion 1015-1A may be exposed to the upper surface of the circuit board 1250.

For example, the circuit board 1250 may include an opening 1033A, through which at least a part of the upper surface of the projecting portion 1015-1A (or the protrusion) is exposed. For example, the opening 1033A may be a hole or a recess. For example, the opening 1033A may be a through-hole formed through the circuit board 1250 in the optical-axis direction.

At least a part of the projecting portion 1015-1A (or the protrusion) may be disposed in the hole 1033A of the circuit board 1250. For example, the upper surface of the projecting portion 1015-1A (or the protrusion) may be the same plane as the upper surface of the circuit board 1250; however, the disclosure is not limited thereto. In another embodiment, the upper surface of the protrusion may be located so as to be lower than the upper surface of the circuit board 1250 and to be higher than the upper surface of the coil unit (e.g. 1230-1).

In FIG. 43B, the projecting portion 1015-1A (or the protrusion) exposed from the opening 1033A of the circuit board 1250 and the upper surface of the circuit board 1250 may serve as a stopper configured to absorb impact due to collision with the magnet (e.g. 1130-1).

FIG. 43C shows a projecting portion 1015-1B of the base 1210 according to another embodiment.

Referring to FIG. 43C, at least a part of the projecting portion 1015-1B (or the protrusion) may protrude from the upper surface of the circuit board 1250 toward the magnet 1130-1. For example, at least a part of the projecting portion 1015-1B (or the protrusion) may extend through the circuit board 1250.

For example, the height of an upper surface of the projecting portion 1015-1B (or the protrusion) may be greater than the height of the upper surface of the circuit board 1250. For example, the distance between the projecting portion 1015-1B (or the protrusion) and the magnet (e.g. 1130-1) in the optical-axis direction may be less than the distance between the upper surface of the circuit board 1250 and the magnet (e.g. 1130-1) in the optical-axis direction.

For example, the circuit board 1250 may include an opening 1033A, through which at least a part of the projecting portion 1015-1B (or the protrusion) extends. At least a part of the projecting portion 1015-1B (or the protrusion) may be disposed in the hole 1033A of the circuit board 1250.

In FIG. 43C, the projecting portion 1015-1B (or the protrusion) protruding from the opening 1033A of the circuit board 1250 may serve as a stopper configured to absorb impact due to collision with the magnet 1130-1.

For example, in FIGs. 43B and 43C, no circuit pattern or no wiring may be formed on the region of the circuit board 1250 corresponding to a protrusion 1215A2 in the optical-axis direction.

In the embodiments of FIGs. 35A and 45E, the supporting member disposed on one corner of the housing 1140 may have wire-shaped supporting members 1020A-1 and 1020C3 made of the conductive material and a supporting member 1020B1 made of the nonconductive material. As a result, when compared to the embodiment of FIG. 45A, in which the two wires are provided, the embodiments of FIGs. 35A and 45E are capable of reinforcing elastic force while exhibiting AF and OIS driving characteristics similar to FIG. 45A, increasing the lifespan of the supporting member, and performing stable OIS driving.

A description of FIGs. 23A, 23B, and 24 may be applied or applied correspondingly to the embodiments of FIGs. 25 to 45E. A first case CASE1 may relate to an embodiment in which the two wires 1020A and 1020B of FIG. 22A are provided at one corner of the housing 1140, and a second case CASE2 may relate to an embodiment in which the two supporting members 1020A-1 and 1020B1 of FIG. 35A are provided at one corner of the housing 1140.

FIG. 46 shows a part of a base 1210-1 according to another embodiment, and FIG. 47 shows a first terminal 1027A11 according to another embodiment disposed on the base 1210-1 of FIG. 46.

Referring to FIGs. 46 and 47, at least one protrusion or coupling protrusion 1019 protruding in a direction from a lower surface to an upper surface of the base 1210-1 may be formed at a third surface 1030C of the base 1210-1.

In FIG. 46, two coupling protrusions 1019A and 1019B spaced apart from each other are formed at the third surface 1030C; however, the disclosure is not limited thereto. In another embodiment, the number of coupling protrusions may be one or more.

The terminal 1027A11 is a modification of the terminal 1027A1 of FIG. 34A, and a body 1050A2 of the terminal 1027A11 may include at least one coupling hole 1051A and 1051B or hole configured to be coupled to the coupling protrusions 1019 of the base 1210. For example, the coupling holes 1051A and 1051B may be through-holes. The number of coupling holes may be equal to the number of coupling protrusions 1019, and may be one or more. The coupling protrusions 1019A and 1019B may be inserted into the coupling holes 1051A and 1051B or may extend through the coupling holes 1051A and 1051B.

In order for the coupling protrusion 1019 of the base 1210-1 and the coupling holes 1051A and 1051B of the terminal 1027A11 to be stably coupled to each other, the height of the coupling protrusion 1019 may be greater than the length or thickness of the terminal 1027A11 in the optical-axis direction. In another embodiment, the height of the coupling protrusion 1019 may be equal to or less than the length or thickness of the terminal 1027A11 in the optical-axis direction.

In addition, the height of the coupling protrusion 1019 of the base 1210-1 may be less than a second stair (or the distance in the optical-axis direction) between a first surface 1030A and the third surface 1030C. In another embodiment, the height of the coupling protrusion 1019 may be equal to the second stair (or the distance in the optical-axis direction) between the first surface 1030A and the third surface 1030C.

The coupling protrusion 1019 of the base 1210-1 may be located between coupling portions 1081 and 1082 of the terminal 1027A11 and a second stair surface 1031B; however, the disclosure is not limited thereto.

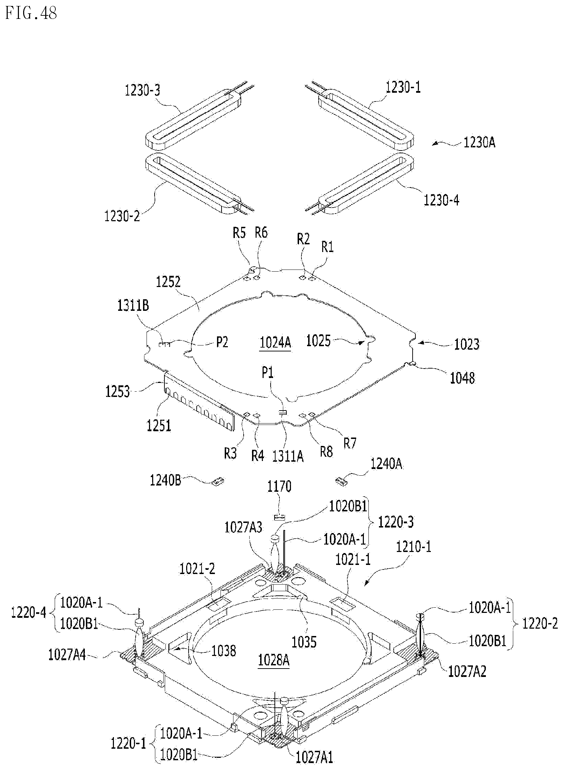

FIG. 48 is a separated perspective view of a second coil 1230A, a circuit board 1250-2, a base 1210-2, and supporting members 1220-1 to 1220-4 according to another embodiment.

Referring to FIG. 48, in the other embodiment, the second coil 1230A may be disposed on the circuit board 1250-2. For example, the second coil 1230A may be disposed under the housing 1140, the lower elastic member 1160, and/or the magnet 1130.

The second coil 1230A may include a plurality of coil units 1230-1 to 1230-4.

Pads R1 to R8 may be disposed on an upper surface of the circuit board 1250-2, and the second coil units 1230-1 to 1230-4 may be conductively connected to the pads R1 to R8.

The base 1210-2 may not have the seating portions 1213A1 to 1213A4 of FIG. 33 configured to allow the second coil 1230 to be disposed thereon and may not have the protrusions 1015-1 to 1015-4 configured to be coupled to the second coil 1230. In another embodiment, the base may include a projection portion, the circuit board may include a through-hole corresponding to the projection portion, the projection portion of the base may be exposed to the upper surface of the circuit board through the through-hole of the circuit board, and a center hole of the second coil unit may be coupled to the projection portion of the base protruding to the upper surface of the circuit board.

FIG. 49 shows a second coil 1230B according to another embodiment. The second coil 1230B may be a modification of the second coil 1230A of FIG. 26.

Referring to FIG. 49, the second coil 1230B may be disposed on the circuit board 1250.

For example, the second coil 1230B may include a circuit member 1231 disposed on the circuit board 1250-2 and coils 1023-1 to 1023-4 (or coil units) formed at the circuit member 1231. An opening 1231A corresponding to the opening 1025A of the bobbin 1110, the opening 1024A of the circuit board, and/or the opening 1028A of the base 1210-2 may be formed in the circuit member 1231. For example, the opening 1231A may be a through-hole formed through the circuit member 1231 in the optical-axis direction.

For example, the coils 1023-1 to 1023-4 may be FP coils formed at the circuit member 1231.

For example, the length of the coil (e.g. 1023-1 or 1023-3) corresponding to or opposite to the magnet 1130-1 or 1130-3 corresponding to or opposite to the first sensor 1240A (or the second sensor 1240B) may be less than the length of the other coil 1023-2 or 1023-4. The reason for this is that the first sensor 1240A (or 1240B) and the coil 1023-1 (or 1023-3) do not overlap each other in the optical-axis direction, whereby the first sensor 1240A (or 1240B) is less affected by the coil 1023-1 (or 1023-3).

In another embodiment, the lengths of the coils 1023-1 to 1023-4 may be equal to each other.

An escape recess 1231B may be provided in each corner of the circuit member 1231, the escape recess 1231B may be formed by chamfering the corner of the circuit member 1231; however, the disclosure is not limited thereto. In another embodiment, a hole, through which the supporting member 1220 extends, may be provided in the corner of the circuit member 1231.

A description of the first and second coil units 120-1 and 120-2 of the first coil 120, the first to third magnets 130-1 to 130-3, the dummy member 11, the first position sensor 170, the sensing magnet 180, and the coil units 230-1 to 230-3 of the second coil 230 according to the embodiment of FIG. 1 may replace a description of the first coil 1120, the magnet 1130, the first position sensor 1170, the sensing magnet 1180, and the second coil 1230 of FIG. 25 and may be applied or analogically applied to the embodiment of FIG. 25.

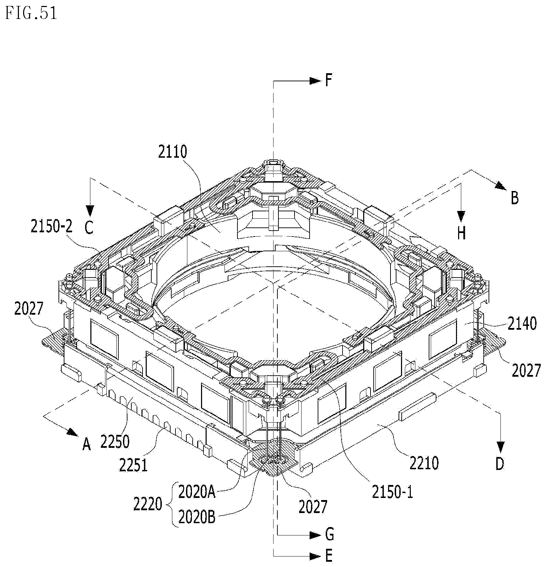

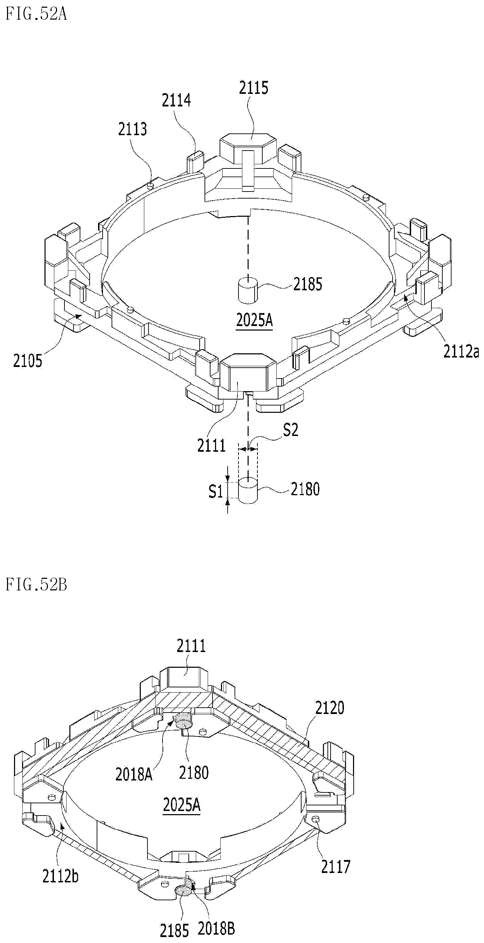

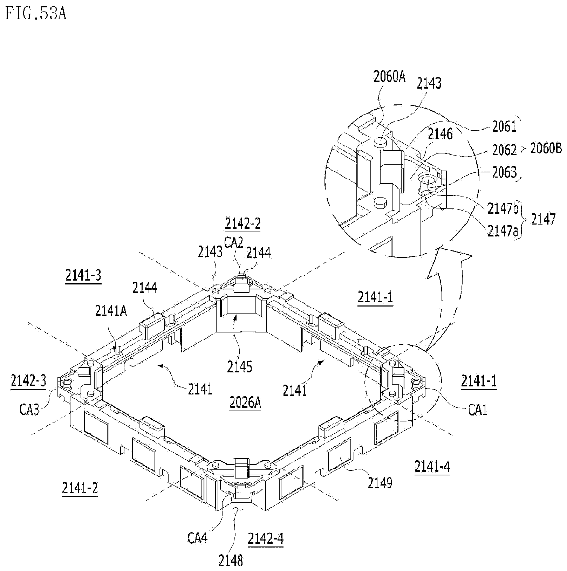

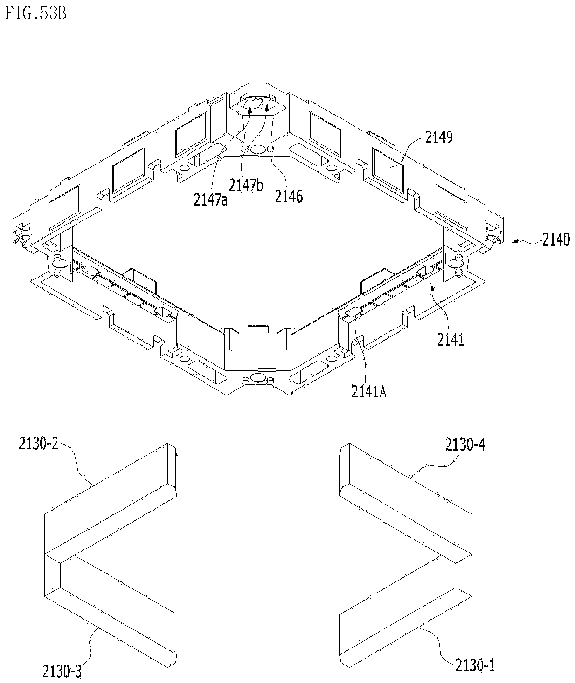

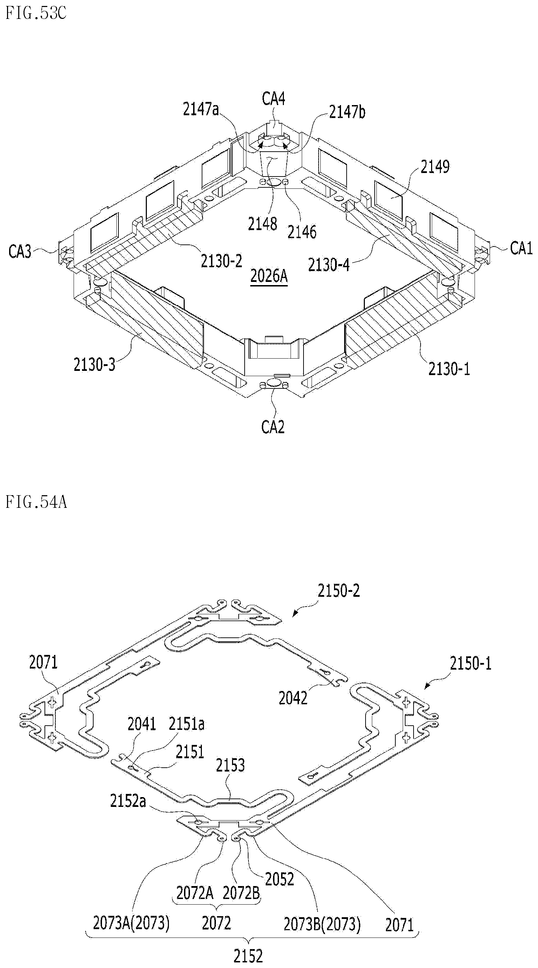

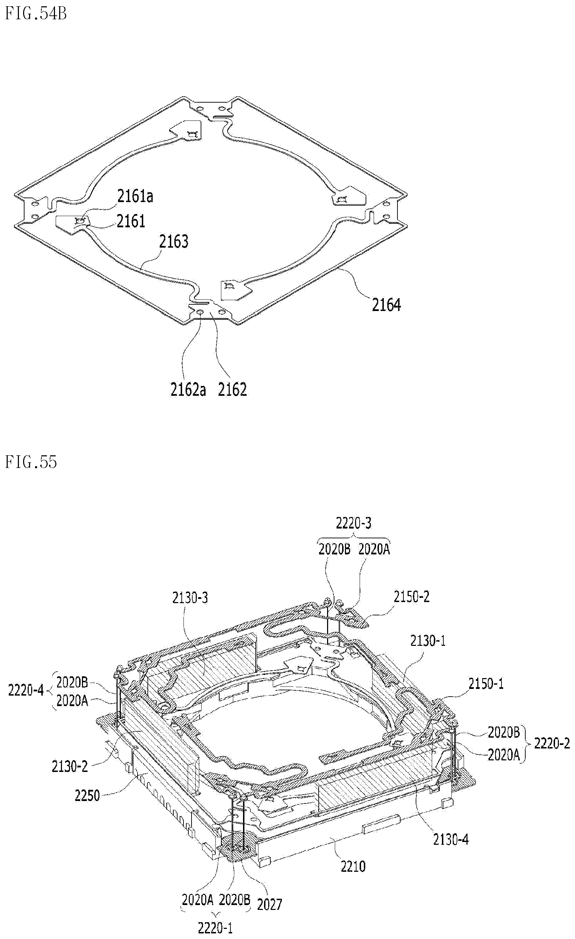

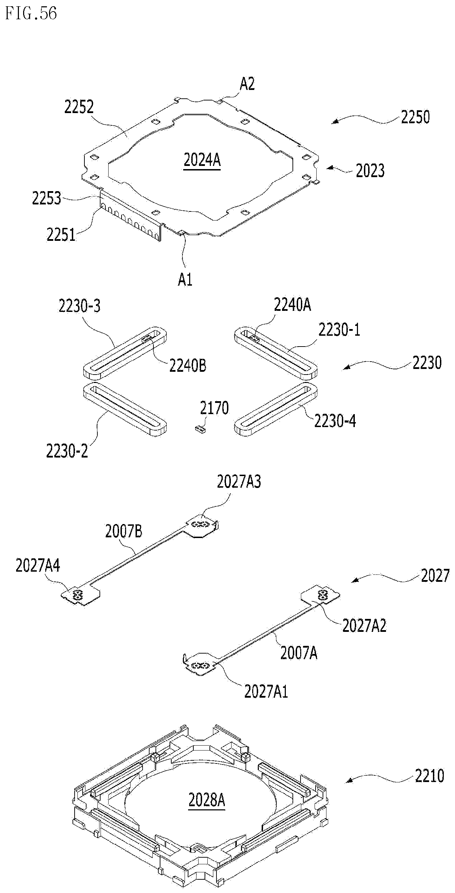

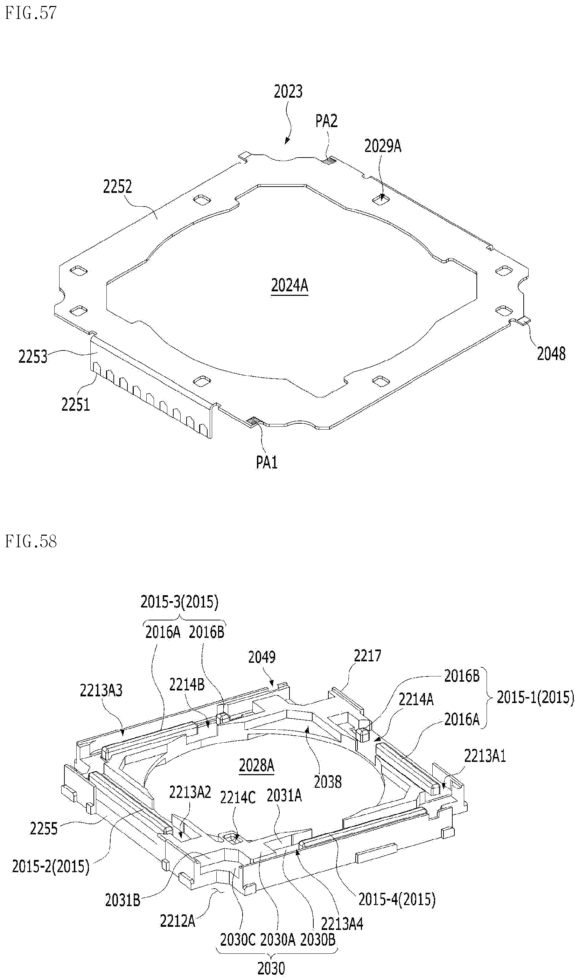

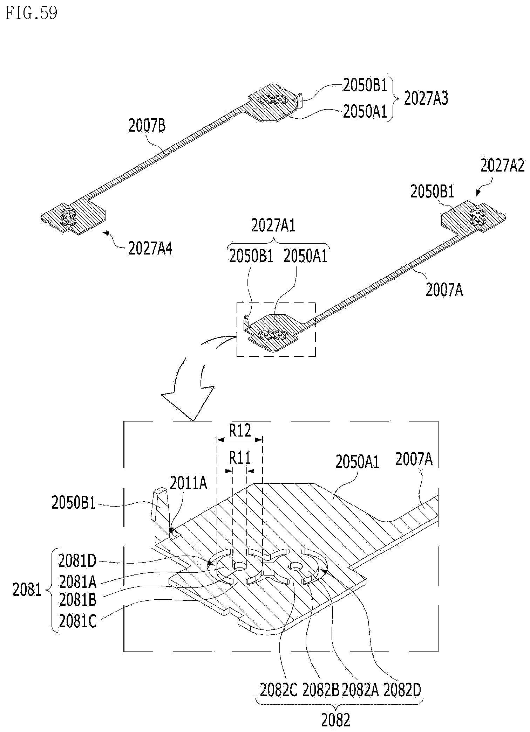

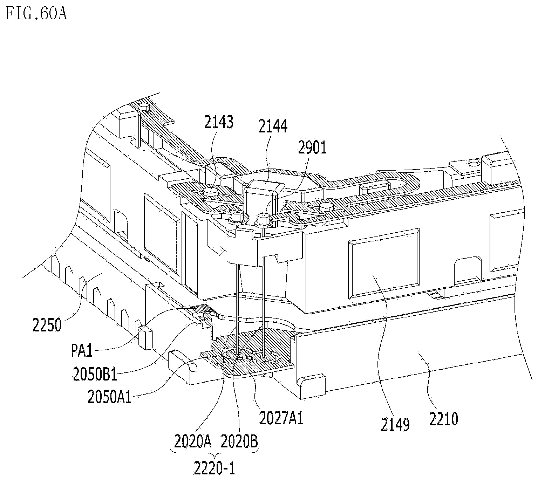

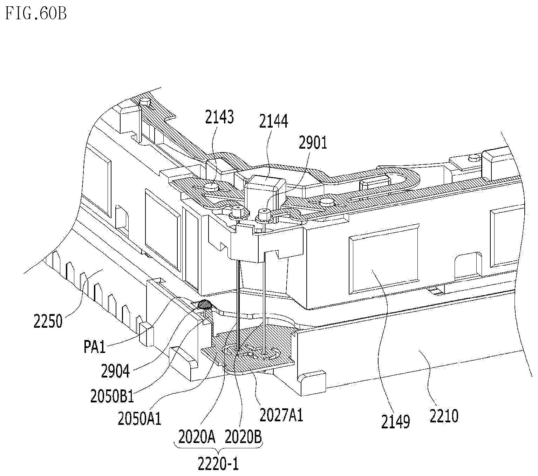

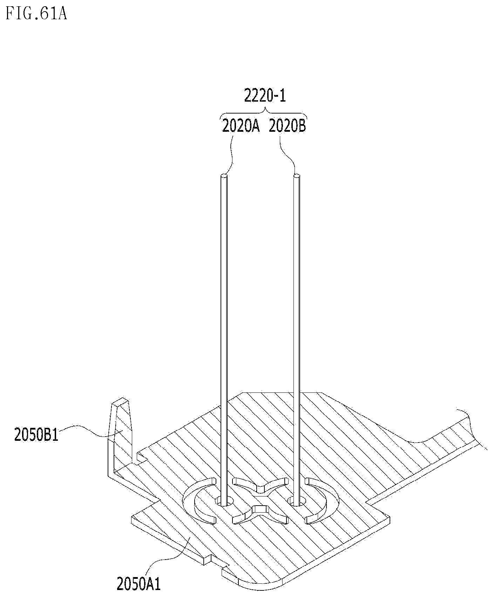

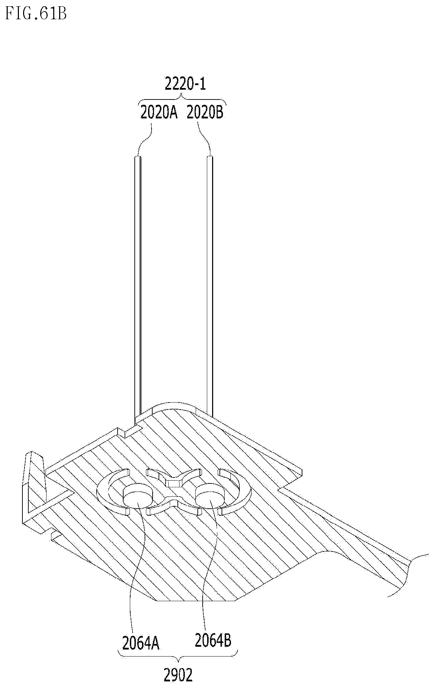

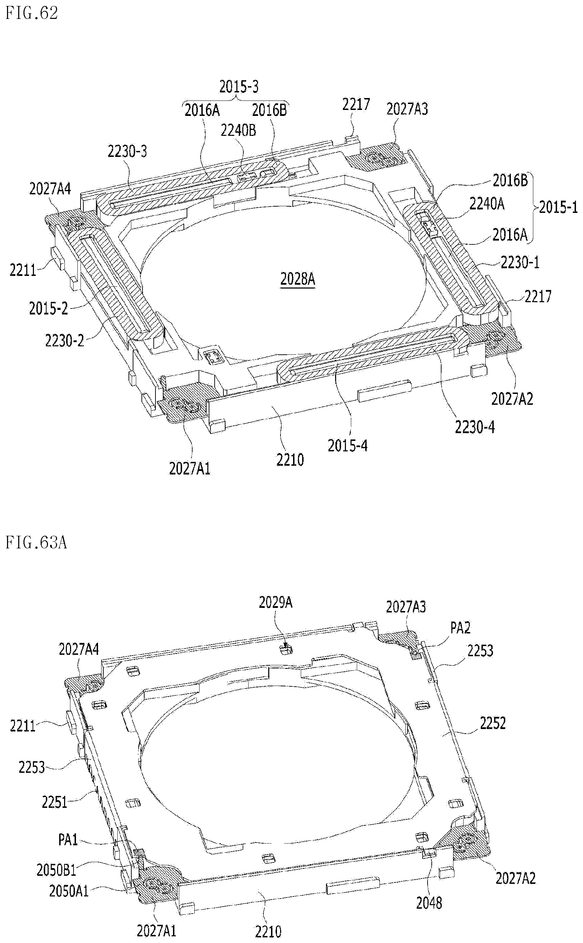

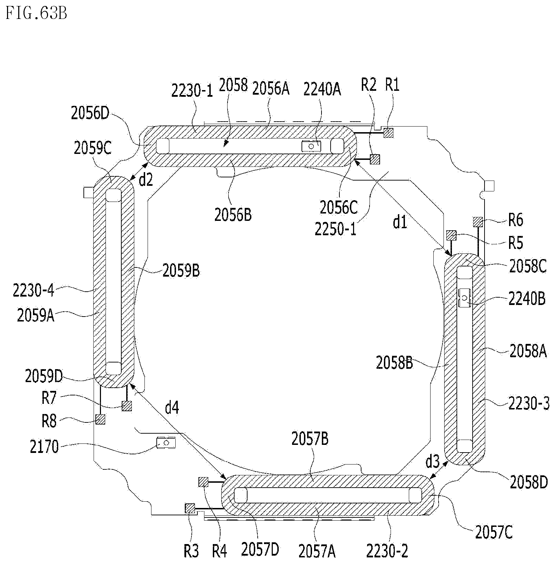

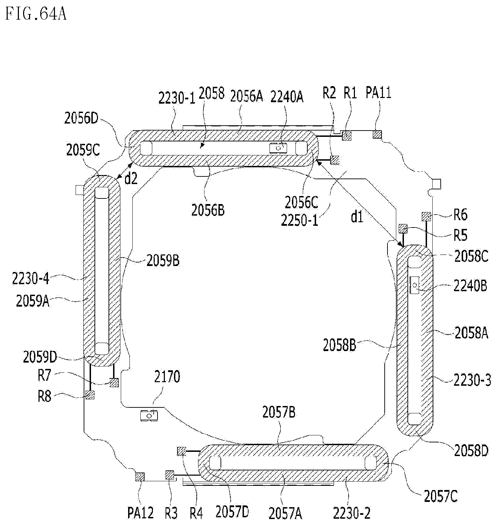

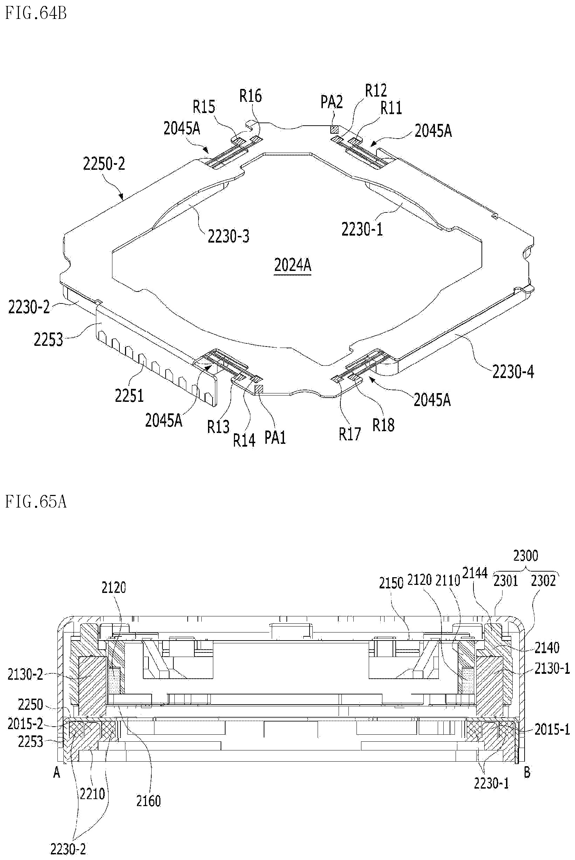

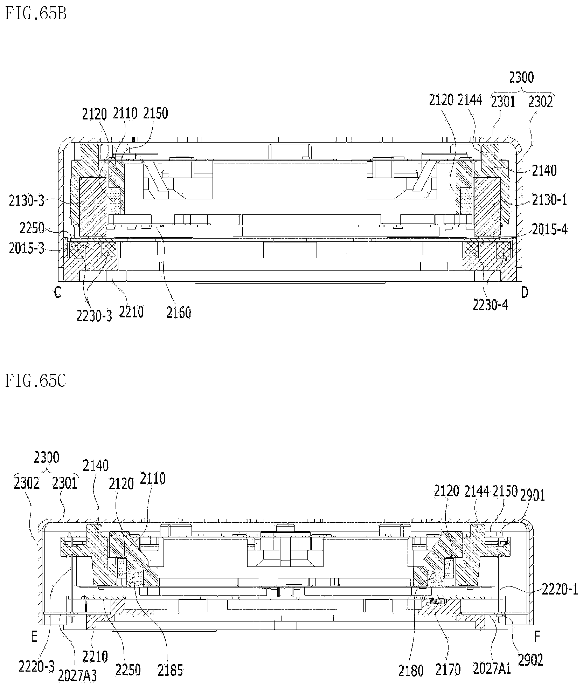

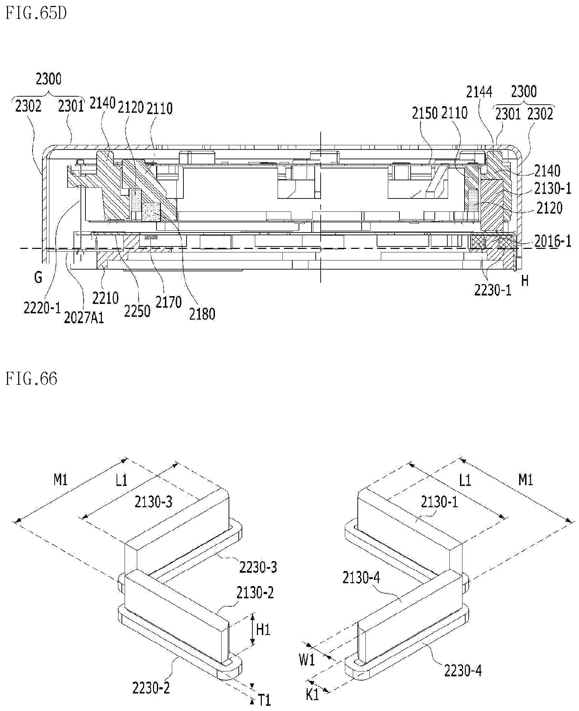

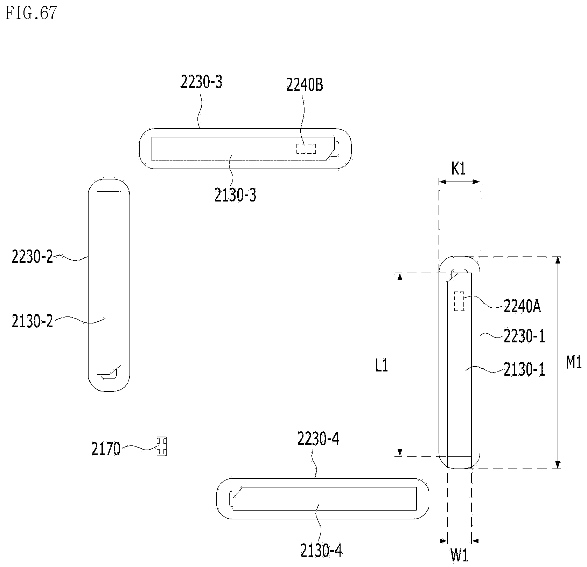

FIG. 50 is an exploded perspective view of a lens moving apparatus 2100 according to another embodiment, FIG. 51 is a perspective view of the lens moving apparatus 2100 of FIG. 50 with a cover member 2300 removed, FIG. 52A is a separated perspective view of a bobbin 2110 and a sensing magnet 2180 of FIG. 50, FIG. 52B is a coupled perspective view of the bobbin 2110, a first coil 2120, and the sensing magnet 2180 of FIG. 50, FIG. 53A is a perspective view of a housing 2140 of FIG. 50, FIG. 53B is a separated perspective view of the housing 2140 and a magnet 2130 of FIG. 50, FIG. 53C is a coupled perspective view of the housing 2140 and the magnet 2130 of FIG. 50, FIG. 54A is a perspective view of an upper elastic member 2150 of FIG. 50, FIG. 54B is a perspective view of a lower elastic member 2160 of FIG. 50, FIG. 55 is a view illustrating the conductive connection relationship between the upper elastic member 2150, a coil 2120, and a supporting member 2220 of FIG. 50, FIG. 56 is a separated perspective view of a circuit board 2250, a second coil 2230, a first position sensor 2170, a second position sensor 2240, a terminal member 2027, and a base 2210 of FIG. 50, FIG. 57 is a perspective view of the circuit board 2250 of FIG. 50, FIG. 58 is a perspective view of the base 2210 of FIG. 50, FIG. 59 is a perspective view of the terminal member 2027 of FIG. 50, FIG. 60A is a partial enlarged view of the lens moving apparatus 2100 of FIG. 51, FIG. 60B shows a solder that couples a first terminal 2027A1 shown in FIG. 60A and a first pad PA1 of the circuit board 2250 to each other, FIG. 61A is a coupled perspective view of the first terminal 2027A1 and a first supporting member 2220-1 of FIG. 50, FIG. 61B is a coupled perspective view of the first terminal 2027A1, the first supporting member 2220-1, and the solder 2902, FIG. 62 is a coupled perspective view of the second coil 2230, the first position sensor 2170, the second position sensor 2240, the terminal member 2027, and the base 2210 of FIG. 50, FIG. 63A is a coupled perspective view of the base 2210, the terminal member 2027, the second coil 2230, and the circuit board 2250 of FIG. 50, FIG. 63B is a bottom view of the circuit board 2250, the second coil 2230, the first position sensor 2170, and the second position sensor 2240 of FIG. 50, FIG. 64A is a bottom view of a circuit board 2250-1 according to another embodiment, FIG. 64B is a perspective view of a circuit board 2250-2 according to another embodiment, FIG. 65A is a sectional view of the lens moving apparatus 2100 in direction AB of FIG. 51, FIG. 65B is a sectional view of the lens moving apparatus 2100 in direction CD of FIG. 51, FIG. 65C is a sectional view of the lens moving apparatus 2100 in direction EF of FIG. 51, FIG. 65D is a sectional view of the lens moving apparatus 2100 in direction GH of FIG. 51, FIG. 66 is a perspective view of first to fourth magnets 2130-1 to 2130-4 and first to fourth coil units 2230-1 to 2230-4 of FIG. 50, and FIG. 67 is a plan view of the first to fourth magnets 2130-1 to 2130-4 and the first to fourth coil units 2230-1 to 2230-4 of FIG. 66.

Referring to FIGs. 50 to 67, the lens moving apparatus 2100 may include a bobbin 2110, a first coil 2120, a magnet 2130, a housing 2140, a circuit board 2250, a second coil 2230, and a base 2210.

The lens moving apparatus 2100 may further include an elastic member, and the elastic member may include at least one of an upper elastic member 2150 and a lower elastic member 2160. In addition, the lens moving apparatus 2100 may further include a supporting member 2220.

The lens moving apparatus 2100 may further include a terminal member 2027.

The lens moving apparatus 2100 may further include a first position sensor 2170 and a sensing magnet 2180 in order to perform AF feedback driving.

The lens moving apparatus may further include a balancing magnet 2185 configured to offset the effect of a magnetic field of the sensing magnet 2180 and to balance the weight with the sensing magnet 2180. In another embodiment, the balancing magnet 2185 may be omitted.

The lens moving apparatus 2100 may further include a second position sensor 2240 in order to perform optical image stabilizer (OIS) feedback driving.

In addition, the lens moving apparatus 2100 may further include a cover member 2300.

Referring to FIGs. 52A and 52B, the bobbin 2110 may be disposed inside the housing 2140, and may be moved in the optical-axis (OA) direction or the first direction (e.g. the Z-axis direction) by electromagnetic interaction between the first coil 2120 and the magnet 2130.

The bobbin 2110 may have an opening 2025A, in which a lens module 400 is mounted. For example, the lens module 400 may include at least one of at least one lens and a lens barrel.

For example, the opening 2025A of the bobbin 2110 may be a through-hole formed through the bobbin 2110, and the shape of the opening 2025A of the bobbin 2110 may be circular, oval, or polygonal; however, the disclosure is not limited thereto.

The bobbin 2110 may include first side portions and second side portions spaced apart from each other. Each of the second side portions may interconnect two adjacent first side portions.

For example, the first side portions of the bobbin 2110 may be referred to as "side portions," and the second side portions of the bobbin 2110 may be referred to as "corner portions" or "corners."

The first side portions of the bobbin 2110 may correspond to or may be opposite to first side portions 2141-1 to 2141-4 of the housing 2140, and the second side portions of the bobbin 2110 may correspond to or may be opposite to second side portions 2142-1 to 2142-4 of the housing 2140.

The bobbin 2110 may include a seating portion 2105 configured to allow the first coil 2120 to be seated thereon, disposed thereon, or mounted thereto.

For example, the seating portion 2105 may be formed at an outer surface of the bobbin 2110. For example, the seating portion 2105 may be formed at each of the side portions of the bobbin 2110. The seating portion 2105 may be a recess depressed from the outer surface of the bobbin 2110.

For example, the seating portion 2105 may be formed so as to correspond in shape and number to the first coil 2120 disposed on the outer surface of the bobbin 2110. For example, the seating portion 2105 may have a ring shape; however, the disclosure is not limited thereto. In another embodiment, the bobbin 2110 may have no seating portion 2105, and the first coil 2120 may be directly wound around and fixed to the outer surface of the bobbin 2110. For example, in another embodiment, the bobbin 2110 may include a protrusion configured to allow the first coil 2120 to be wound therearound.

The bobbin 2110 may include a recess 2018A or a hole, in which the sensing magnet 2180 is mounted or disposed. In addition, the bobbin 2110 may include a recess 2018B or a hole, in which the balancing magnet 2185 is mounted or disposed.

For example, the recesses 2018A and 2018B may be formed in opposite side portions of the bobbin 2110.

For example, the recess 2018A may be formed in one of the second side portions (corner portions) of the bobbin 2110 and may be depressed from a lower surface of the one second side portion of the bobbin 2110; however, the disclosure is not limited thereto.

For example, the recess 2018B may be formed in another of the second side portions (corner portions) of the bobbin 2110 and may be depressed from a lower surface of the other second side portion of the bobbin 2110; however, the disclosure is not limited thereto. In another embodiment, the recesses may be formed in opposite first side portions of the bobbin 2110.

The bobbin 2110 may have projecting portions 111 provided on the second side portions (corner portions). The projecting portions 111 may project in a direction parallel to a straight line that extends through the optical axis OA and is perpendicular to the optical-axis direction; however, the disclosure is not limited thereto.

The projecting portions 111 of the bobbin 2110 may correspond to recessed portions 2145 of the housing 2140, may be inserted into or disposed in the recessed portions 2145 of the housing 2140, and may inhibit or prevent the bobbin 2110 from being moved or rotated about the optical axis while deviating from a predetermined range.

An escape recess 2112a configured to avoid spatial interference with a first frame connection portion 2153 of the upper elastic member 2150 may be provided in an upper surface of the bobbin 2110. A second escape recess 2112b configured to avoid spatial interference with a second frame connection portion 2163 of the lower elastic member 2160 may be provided in a lower surface of the bobbin 2110.

For example, the first and second escape recesses 2112a and 2112b may be disposed in the corner portions of the bobbin 2110; however, the disclosure is not limited thereto, and the escape recesses may be formed in at least one of the side portions and the corner portions of the bobbin 2110.

The bobbin 2110 may include a first stopper 1115 projecting from the upper surface thereof. Although not shown in FIG. 52B, the bobbin 2110 may include a second stopper projecting from the lower surface thereof.

The first stopper 2115 and the second stopper of the bobbin 2110 may prevent the upper surface of the bobbin 2110 from directly colliding with the inside of an upper plate 2301 of the cover member 2300 and may prevent the lower surface of the bobbin 2110 from directly colliding with the circuit board 2250 even though the bobbin 2110 is moved while deviating from a predetermined range due to external impact when the bobbin 2110 is moved in the first direction in order to perform the autofocus function.

A guide protrusion 2114 configured to guide the installation position of the first frame connection portion 2153 of the upper elastic member 2150 may be formed on the upper surface of the bobbin 2110. The guide protrusion 2114 may protrude from the upper surface of the bobbin 2110. For example, a damper may be disposed between the guide protrusion 2114 and the first frame connection portion 2153.

The bobbin 2110 may be provided at the upper surface thereof with a first coupling portion 2113 configured to be coupled and fixed to the upper elastic member 2150, and the bobbin 2110 may be provided at the lower surface thereof with a second coupling portion 2117 configured to be coupled and fixed to the lower elastic member 2160.

For example, in FIGs. 52A and 52B, the first and second coupling portions 2113 and 2117 of the bobbin 2110 may be protrusions; however, the disclosure is not limited thereto. In another embodiment, the first and second coupling portions of the bobbin 2110 may be recesses or flat surfaces.

Next, the first coil 2120 will be described.

The first coil 2120 may be disposed on the bobbin 2110 or may be coupled to the bobbin 2110.

For example, the first coil 2120 may be disposed on the outer surface of the bobbin 2110. In the first coil 2120, the "coil" may be referred to as a "coil portion," a "coil block," or a "coil ring."

For example, the first coil 2120 may be disposed outside the sensing magnet 2180 and the balancing magnet 2185.

For example, at least a part of the first coil 2120 may overlap the sensing magnet 2180 and/or the balancing magnet 2185 in the direction perpendicular to the optical axis OA; however, the disclosure is not limited thereto. In another embodiment, the first coil may not overlap the sensing magnet and/or the balancing magnet in the direction perpendicular to the optical axis.

For example, the first coil 2120 may be disposed or seated in the seating portion 2105 of the bobbin 2110.

The first coil 2120 disposed on the bobbin 2110 may be spaced apart from the sensing magnet 2180 and/or the balancing magnet 2185. For example, at least a part of the bobbin 2110 may be disposed between the first coil 2120 and the sensing magnet 2180 (or the balancing magnet 2185).

In another embodiment, at least a part of the first coil 2120 may abut the sensing magnet 2180 and/or the balancing magnet 2185.

For example, the first coil 2120 may be disposed so as to encompass the outer surface of the bobbin 2110 in a rotating direction about the optical axis OA. For example, the first coil 2120 may be wound around the outer surface of the bobbin 2110 so as to have a closed curve shape, such as a ring shape.

For example, the first coil 2120 may be directly wound around the outer surface of the bobbin 2110; however, the disclosure is not limited thereto.

In another embodiment, the first coil may include at least one coil ring or coil block. For example, the first coil may include two or more coil rings or coil blocks, and the two or more coil rings or coil blocks may be connected to each other in series. In another embodiment, the two or more coil rings or coil blocks may not be connected to each other and may be individually or independently driven. At this time, the coil rings may be disposed on the bobbin so as to be rotated or wound about an axis perpendicular to the optical axis.

A power or driving signal may be provided to the first coil 2120. The power or driving signal provided to the first coil 2120 may be a direct current signal or an alternating current signal, or may include a direct current signal and an alternating current signal, and may be voltage or current.

When a driving signal (e.g. driving current) is supplied to the first coil 2120, electromagnetic force may be formed through electromagnetic interaction with the first magnet 2130, and the bobbin 2110 may be moved by the formed electromagnetic force in the optical-axis (OA) direction.

At an initial position of an AF moving unit (or an "AF operating unit"), the bobbin 2110 may be moved in the upward or downward direction (e.g. the Z-axis direction), which is referred to as bidirectional driving of the AF moving unit. Alternatively, at the initial position of the AF moving unit, the bobbin 2110 may be moved in the upward direction, which is referred to as unidirectional driving of the AF moving unit.

At the initial position of the AF moving unit, the first coil 2120 may correspond to, may be opposite to, or may overlap the magnet 2130 in a horizontal direction. For example, the horizontal direction may be a direction that is perpendicular to the optical axis OA or a direction parallel to a straight line that is perpendicular to the optical axis OA and extends through the optical axis OA.

For example, the AF moving unit may include the bobbin 2110 and components coupled to the bobbin 2110. For example, the AF moving unit may include the bobbin 2110, the first coil 2120, and the sensing magnet 2180. For example, the AF moving unit may include the balancing magnet 2185. In addition, the AF moving unit may further include the lens module 400 mounted in the bobbin 2110.

The initial position of the AF moving unit may be the original position of the AF moving unit in the state in which no power is applied to the first coil 2120 or the position at which the AF moving unit is located as the result of the upper and lower elastic members 2150 and 2160 being elastically deformed due only to the weight of the AF moving unit.

In addition, an initial position of the bobbin 2110 may be the position at which the AF moving unit is located when gravity acts in a direction from the bobbin 2110 to the base 2210 or when gravity acts in a direction from the base 2210 to the bobbin 2110.

The sensing magnet 2180 provides a magnetic field, which is sensed by the first position sensor 2170. The balancing magnet 2185 may serve to offset the effect of a magnetic field of the sensing magnet 2180 and to balance the weight with the sensing magnet 2180.

The sensing magnet 2180 may be disposed on the bobbin 2110. In addition, the balancing magnet 2185 may be disposed on the bobbin 2110.

For example, the sensing magnet 2180 may be disposed or seated in the first recess 2018A of the bobbin 2110, and may be coupled to the first recess 2018A by an adhesive, etc. The sensing magnet 2180 may be disposed so as to correspond to or to be opposite to the first position sensor 2170 in the optical-axis (OA) direction.

The balancing magnet 2185 may be disposed or seated in the second recess 2018B of the bobbin 2110, and may be coupled to the second recess 2018B by an adhesive, etc. The balancing magnet 2185 may be located opposite to the sensing magnet 2180. For example, the sensing magnet 2180 and the balancing magnet 2185 may be disposed on two opposite corner portions (or side portions) of the bobbin 2110.

At least a part of the sensing magnet 2180 (or the balancing magnet 2185) may be exposed from or open to the bobbin 2110.

At least a part of one surface (e.g. a lower surface) of the sensing magnet 2180 corresponding to the first position sensor 2170 may be exposed from the recess 2018A of the bobbin 2110; however, the disclosure is not limited thereto. In another embodiment, one surface of the sensing magnet 2180 facing the first position sensor 2170 may not be exposed from the bobbin 2110.

At least a part of the balancing magnet 2185 may be exposed from the second recess 2018B of the bobbin 2110; however, the disclosure is not limited thereto. In another embodiment, a lower portion of the balancing magnet 2185 may not be exposed from the bobbin 2110.

For example, at least a part (e.g. a lower portion) of the sensing magnet 2180 (or the balancing magnet 2185) may protrude from the lower surface of the bobbin 2110 in a downward direction. The reason for this is that it is necessary to reduce the distance between the sensing magnet 2180 and the first position sensor 2170 in the optical-axis direction, thereby improving sensitivity of the first position sensor 2170 that senses the intensity of a magnetic field of the sensing magnet 2180. In another embodiment, at least a part (e.g. the lower portion) of the sensing magnet 2180 (or the balancing magnet 2185) may not protrude from the lower surface of the bobbin 2110.

For example, the sensing magnet 2180 may be a monopolar magnetized magnet having a single N pole and a single S pole. For example, the interface between the N pole and the S pole of the sensing magnet 2180 may be parallel to a direction perpendicular to the optical axis OA. For example, the N pole and the S pole of the sensing magnet 2180 may be opposite to each other in the optical-axis direction; however, the disclosure is not limited thereto. In another embodiment, the sensing magnet may be disposed such that the N pole and the S pole face each other in the direction perpendicular to the optical axis. For example, in another embodiment, the interface between the N pole and the S pole of the sensing magnet 2180 disposed on the bobbin 2110 may be parallel to the optical axis OA.

In another embodiment, the sensing magnet 2180 may be a bipolar magnetized magnet or a quadrupole magnet having two N poles and two S poles. For example, the sensing magnet 2180 may include a first magnet portion, a second magnet portion, and a partition disposed between the first magnet portion and the second magnet portion.

The first magnet portion may include an N pole, an S pole, and a first boundary portion between the N pole and the S pole.

The second magnet portion may include an N pole, an S pole, and a second boundary portion between the N pole and the S pole. The partition may be a portion that separates or isolates the first magnet portion and the second magnet portion from each other and that has substantially no magnetism, and may be a portion having little polarity. For example, the partition may be a nonmagnetic material or air. The partition may be referred to as a "nonmagnetic partition," a "neutral zone," or a "neutral region."

Each of the first boundary portion and the second boundary portion may be a portion that is naturally generated to form a magnet consisting of one N pole and one S pole, and the partition is a portion that is artificially formed when the first magnet portion and the second magnet portion are magnetized. The width of the partition may be greater than the width of the first boundary portion (or the width of the second boundary portion).

For example, the first magnet portion and the second magnet portion may be disposed so as to face each other in the optical-axis direction. For example, the partition may be parallel to a straight line that is perpendicular to the optical axis and that extends through the optical axis.

The shape of the sensing magnet 2180 may be a circular column, a cylinder, a semicircular column, or a polyhedron (e.g. a hexahedron); however, the disclosure is not limited thereto.

For example, the sensing magnet 2180 may have a cylindrical shape having a length S1 (see FIG. 52A) in the optical-axis direction greater than the length S2 in the direction perpendicular to the optical axis, whereby the sensing magnet may be easily inserted into or coupled to the hole 2018A of the bobbin 2110, and the distance from the first position sensor 2170 in the optical-axis direction may be reduced. In another embodiment, the sensing magnet 2180 may have a length in the optical-axis direction equal to or less than the length in the direction perpendicular to the optical axis.

When the shape of the sensing magnet 2180 is a circular column or a cylinder, distribution of a magnetic field of the sensing magnet 2180 sensed by the first position sensor 2170 may be uniform, whereby sensitivity of the first position sensor 2170 may be improved.

For example, the sectional shape of the sensing magnet 2180 cut in the direction perpendicular to the optical axis may be a circle, an oval, or a polygon (e.g. a triangle, a quadrangle, or a pentagon); however, the disclosure is not limited thereto.

A description of the polarity and shape of the sensing magnet 2180 may be equally applied or analogically applied to the balancing magnet 2185. For example, the balancing magnet 2185 may be identical to the sensing magnet 2180.

Referring to FIGs. 65A to 65D, for example, a lower surface, a lower portion, or a lower end of the sensing magnet 2180 (or the balancing magnet 2185) may be located lower than a lower surface, a lower portion, or a lower end of the first coil 2120. In another embodiment, the former may be higher than or level with the latter.

Alternatively, for example, an upper surface, an upper portion, or an upper end of the sensing magnet 2180 (or the balancing magnet 2185) may be located lower than an upper surface, an upper portion, or an upper end of the first coil 2120. In another embodiment, the former may be higher than or level with the latter.

In another embodiment, the sensing magnet may be disposed on the circuit board 2250 or the base 2210, and the first position sensor may be disposed on the bobbin 2110.

In another embodiment, the first position sensor may be disposed on the bobbin 2110, and the sensing magnet may be disposed on the housing 2140 so as to be opposite to the first position sensor in the direction perpendicular to the optical axis.

In another embodiment, the first position sensor may be disposed on the housing 2140, and the sensing magnet may be disposed on the bobbin 2110 so as to be opposite to the first position sensor in the direction perpendicular to the optical axis.

The sensing magnet 2180 may be moved with the bobbin 2110 in the optical-axis direction, and the distance between the sensing magnet 2180 and the first position sensor 2170 may be changed by movement of the sensing magnet 2180. The first position sensor 2170 may sense the intensity of a magnetic field or magnetic force of the sensing magnet 2180 moved in the optical-axis direction, and may output an output signal based on the result of sensing.

For example, the intensity of the magnetic field or the magnetic force sensed by the first position sensor 2170 may be changed based on displacement of the bobbin 2110 in the optical-axis direction or the distance between the first position sensor 2170 and the sensing magnet 2180, the first position sensor 2170 may output an output signal proportional to the sensed intensity of the magnetic field, and displacement of the bobbin 2110 in the optical-axis direction may be sensed using the output signal of the first position sensor 2170.

Referring to FIGs. 53A to 53C, the housing 2140 receives at least a part of the bobbin 2110 therein, and supports the magnet 2130. The housing 2140 may be included in an "OIS moving unit (or operating unit)." The OIS moving unit may be moved in the direction perpendicular to the optical axis by OIS driving due to interaction between the magnet 2130 and the second coil 2230.

The housing 2140 may be disposed inside the cover member 2300, and may be disposed between the cover member 2300 and the bobbin 2110.

An outer surface of the housing 2140 may be spaced apart from an inner surface of a side plate of the cover member 2300, and the housing 2140 may be moved in a space between the housing 2140 and the cover member 2300 by OIS driving.

The housing 2140 may have a hollow column shape including an opening or a hollow 2026A.

For example, the housing 2140 may have a polygonal (e.g. quadrangular or octagonal) or circular opening 2026A, and the opening 2026A may be a through-hole formed through the housing 2140 in the optical-axis direction.

The housing 2140 may include a side portion and a corner portion. For example, the housing 2140 may include a plurality of side portions 2141-1 to 2141-4 and a plurality of corner portions 2142-1 to 2142-4.

For example, the housing 2140 may include first to fourth side portions 2141-1 to 2141-4 and first to fourth corner portions 2142-1 to 2142-4.

The first to fourth side portions 2141-1 to 2141-4 may be spaced apart from each other. Each of the corner portions 2142-1 to 2142-4 of the housing 2140 may be disposed or located between two adjacent side portions, and may interconnect the side portions 2141-1 to 2141-4.

For example, the corner portions 2142-1 to 2142-4 may be located at corners of the housing 2140. For example, the number of side portions of the housing 2140 may be four, and the number of corner portions thereof may be four; however, the disclosure is not limited thereto.

Each of the side portions 2141-1 to 2141-4 of the housing 2140 may be disposed parallel to a corresponding one of side plates 2302 of the cover member 2300.

The horizontal length of each of the side portions 2141-1 to 2141-4 of the housing 2140 may be greater than the horizontal length of each of the corner portions 2142-1 to 2142-4 thereof; however, the disclosure is not limited thereto.

The first side portion 2141-1 and the second side portion 2141-2 of the housing 2140 may be located opposite to each other, and the third side portion 2141-3 and the fourth side portion 2141-4 may be located opposite to each other. Each of the third side portion 2141-3 and the fourth side portion 2141-4 of the housing 2140 may be located between the first side portion 2141-1 and the second side portion 2141-2.

In order to prevent direct collision with the inner surface of the upper plate 2301 of the cover member 2300, the housing 2140 may be provided on an upper portion, an upper end, or an upper surface thereof with a stopper 2144. For example, the stopper 2144 may be disposed or arranged on at least one of the side portion and the corner portion of the housing 2140.

In addition, the housing 2140 may be provided on an upper portion, an upper end, or an upper surface of each of the corner portions 2142-1 to 2142-4 thereof with a guide projecting portion 146 configured to guide a damper formed on the supporting member 2220 by coating.

The housing 2140 may be provided on an upper portion, an upper end, or an upper surface thereof with at least one first coupling portion 2143 coupled to a first outer frame 2152 of the upper elastic member 2150. In addition, the housing 2140 may be provided on a lower portion, a lower end, or a lower surface thereof with at least one second coupling portion 2146 coupled and fixed to a second outer frame 2162 of the lower elastic member 2160.

Each of the first coupling portion 2143 and the second coupling portion 2146 of the housing 2140 may be a protrusion; however, the disclosure is not limited thereto. In another embodiment, each of the first coupling portion and the second coupling portion may be a recess or a flat surface.

The first coupling portion 2143 of the housing 2140 may be coupled to a hole 2152a of the first outer frame 2152 of the upper elastic member 2150 and the second coupling portion 2146 of the housing 2140 may be coupled to a hole 2162a of the second outer frame 2162 of the lower elastic member 2160 by thermal fusion or using an adhesive.

The housing 2140 may include a seating portion 2141 (or a "receiving portion") configured to receive the magnet 2130. For example, the seating portion 2141 may be formed at at least one of the side portions 2141-1 to 2141-4 of the housing 2140. For example, the seating portion 2141 may be formed at a lower portion or a lower end of at least one of the side portions 2141-1 to 2141-4 of the housing 2140.

For example, the seating portion 2141 may be provided at an inner surface of each of the side portions 2141-1 to 2141-4 of the housing 2140; however, the disclosure is not limited thereto. In another embodiment, the seating portion may be provided at an outer surface of each of the side portions of the housing. In an embodiment in which the magnet is disposed on each of the corner portions of the housing 2140, the seating portion may be formed at a corresponding one of the corner portions of the housing 2140.

For example, the seating portion 2141 of the housing 2140 may be a recess having a shape corresponding to or coinciding with the magnet 2130, e.g. a concave recess; however, the disclosure is not limited thereto.

For example, the seating portion 2141 may include a first opening facing the first coil 2120. In addition, the seating portion 2141 may include a second opening, through which a lower portion or a lower end of the magnet 2130 is exposed.

For example, one side surface of the magnet 2130 fixed to or disposed on the seating portion 2141 of the housing 2140 may be exposed through the first opening of the seating portion 2141. In addition, a lower surface of the magnet 2130 fixed to or disposed on the seating portion 2141 of the housing 2140 may be exposed through the second opening of the seating portion 2141.

For example, the lower end or the lower surface of the magnet 2130 may project from the lower surface of the housing 2140 toward the circuit board 2250. For example, the magnet 2130 may be fixed to the seating portion 2141 using an adhesive. The housing 2140 may include an injection hole 2141A, through which an adhesive is injected. The injection hole 2141A may communicate with the seating portion 2141.

Supporting members 2220-1 to 2220-4 may be disposed on the corner portions 2142-1 to 2142-4 of the housing 2140, and holes 2147, through which the supporting members 2220-1 to 2220-4 extend, may be provided in the corner portions 2142-1 to 2142-4 of the housing 2140.

For example, the housing 2140 may include a hole 2147 formed through an upper portion of each of the corner portions 2142-1 to 2142-4.

At least one supporting member 2220-1 to 220-4 may be disposed on at least one of the corner portions 2142-1 to 2142-4 of the housing 2140. For example, two supporting members 2020A and 2020B may be disposed on each of the corner portions 2142-1 to 2142-4 of the housing 2140, and two holes 2147a and 2147b may be formed in each corner portion of the housing 2140.

The hole 2147 may be a through-hole formed through the housing 2140 in the optical-axis direction; however, the disclosure is not limited thereto. In another embodiment, the housing may include a recess or an escape recess configured to avoid spatial interference with the supporting member, instead of the hole 2147. Here, the number of recesses may be equal to the number of supporting members. For example, in another embodiment, the hole may be depressed from the outer surface of each of the corner portions of the housing 2140, and at least a part of the hole may be open to the outer surface of the corner portion.

One end of the supporting member 2220 may be connected or bonded to the upper elastic member 2150 through the hole 2147.

For example, a damper may be disposed in the hole 2147, the diameter of the hole 2147 may be gradually increased in a direction from the upper surface to the lower surface of the housing 2140 in order to easily coat the damper; however, the disclosure is not limited thereto. In another embodiment, the diameter of the hole 2147 may be uniform.

The housing 2140 may be provided with at least one stopper 2149 projecting from the outer surfaces of the side portions 2141-1 to 2141-4 thereof, and the at least one stopper 2149 may prevent the outer surface of the housing 2140 from directly colliding with the cover member 2300 when the housing 2140 is moved in the direction perpendicular to the optical-axis direction.

In order not only to form a path along which the supporting member 2220 extends but also to avoid spatial interference between the supporting member 2220 and the corner portions 2142-1 to 2142-4 of the housing 2140, an escape recess 2148 or a recess may be provided in the outer surface of each of the corner portions 2142-1 to 2142-4. The escape recess 2148 may be connected to the hole 2147 of the housing 2140.

Referring to FIG. 53A, an upper surface 2060B of each of the corner portions 2142-1 to 2142-4 of the housing 2140 may include two or more surfaces having a stair in the optical-axis direction. Heights of the two or more surfaces may be lowered toward the corner of the housing 2140. The hole 2147 may be formed in the surface that has the lowest height and that is closest to the corner of the housing 2140, among the two or more surfaces.

For example, the upper surface 2060B of each of the corner portions 2142-1 to 2142-4 of the housing 2140 may include a first surface 2061, a second surface 2062 forming a stair with the first surface 2061, and a third surface 2063 forming a stair with the second surface 2062.

For example, the second surface 2062 may be lower than the first surface 2061, and the third surface 2063 may be lower than the second surface 2062. In addition, the first surface 2061 may be located closest to the center of the housing 2140, the third surface 2063 may be located farthest from the center of the housing 2140, and the second surface 2062 may be located halfway between the first surface 2061 and the third surface 2063.

For example, the first surface 2061 of each of the corner portions 2142-1 to 2142-4 of the housing 2140 may be lower than an upper surface 2060A of each of the side portions 2141-1 to 2141-4 of the housing 2140; however, the disclosure is not limited thereto. In another embodiment, the former may be level with or higher than the latter.

For example, the first coupling portion 2143 may be formed at the first surface 2061 of each of the corner portions 2142-1 to 2142-4 of the housing 2140, and the hole 2147 may be formed in the third surface 2063 of each of the corner portions 2142-1 to 2142-4 of the housing 2140.

A guide protrusion 146 protruding from the second surface 2062 and the third surface 2063 may be formed on edges of the second surface 2062 and the third surface 2063 of each of the corner portions 2142-1 to 2142-4 of the housing 2140. For example, a damper may be disposed on the second surface 2062 and the third surface 2063 of each of the corner portions 2142-1 to 2142-4 of the housing 2140, and the guide protrusion 146 may serve to prevent overflow of the damper from the housing 2140. In addition, the damper may be disposed in the hole 2147, and at least a part of the damper may contact the supporting member 2220.

The housing 2140 may have a recessed portion 2145 formed at a position corresponding to the projecting portion 111 of the bobbin 2110. For example, the recessed portion 2145 may be formed in an inner surface of at least one of the corner portions 2142-1 to 2142-4 of the housing 2140. In another embodiment, the recessed portion may be formed in at least one of the side portions of the housing 2140.

For example, the recessed portion 2145 may be open at an upper portion thereof, and the recessed portion 2145 may have an opening formed in a side portion facing an outer surface of each corner portion of the bobbin 2110.

The magnet 2130 may be disposed on the housing 2140. For example, the magnet 2130 may be disposed between the side plate 2302 of the cover member 2300 and the bobbin 2110. For example, the magnet 2130 may be disposed in the seating portion 2141 of the housing 2140.

For example, the magnet 2130 may be disposed on each of the side portions 2141-1 to 2141-4 of the housing 2140.

At the initial position of the AF moving unit, the magnet 2130 may be disposed on the housing 2140 such that at least a part of the magnet overlaps the first coil 2120 in a direction parallel to a straight line that is perpendicular to the optical axis OA and extends through the optical axis OA.

The magnet 2130 may include at least one magnet (magnet unit).

For example, the magnet 2130 may include a plurality of magnets.

For example, at least two magnets 2130 may be disposed on the side portions 2141-1 to 2141-4 of the housing 2140 that face each other.

For example, the magnet 2130 may include four magnets 2130-1 to 2130-4 (or magnet units). For example, each of the magnets 2130-1 to 2130-4 may be disposed on a corresponding one of the side portions 2141-1 to 2141-4 of the housing 2140.

Each of the magnets 2130-1 to 2130-4 may have a shape corresponding to the shape of a corresponding one of the side portions 2141-1 to 2141-4 of the housing 2140, and may have a polyhedral shape (e.g. a hexahedral shape).

For example, the sectional shape of each of the first to fourth magnets 2130-1 to 2130-4 in the direction perpendicular to the optical axis may be a polygon, such as a triangle, a quadrangle, a pentagon, a diamond, or a trapezoid; however, the disclosure is not limited thereto.

For example, each of the magnets 2130-1 to 2130-4 may be a monopolar magnetized magnet; however, the disclosure is not limited thereto. In another embodiment, each of the magnets 2130-1 to 2130-4 may be a bipolar magnetized magnet or a quadrupole magnet having two N poles and two S poles.

For example, each of the sensing magnet 2180 and the balancing magnet 2185 may not overlap the first coil 2120 in the optical-axis (OA) direction; however, the disclosure is not limited thereto. In another embodiment, the sensing magnet and the balancing magnet may overlap the first coil in the optical-axis direction.

In another embodiment, the magnet may be disposed on each of the corner portions 2142-1 to 2142-4 of the housing 2140. At this time, the magnet may have a polyhedral shape capable of being easily seated or disposed on each of the corner portions of the housing 2140. For example, the magnet may include a part having a length in a horizontal direction of the magnet reduced in a direction from a first surface of the magnet to a second surface of the magnet. Here, the first surface of the magnet may be a surface opposite to the first coil 2120, and the second surface of the magnet may be a surface opposite to the first surface.

In another embodiment, the magnet may be disposed on the bobbin 2110, and the first coil may be disposed on the housing 2140.

The first magnet 2130-1 may be disposed between a first corner CA1 and a second corner CA2 of the housing 2140, the second magnet 2130-2 may be disposed between a third corner CA3 and a fourth corner CA4 of the housing 2140, the third magnet 2130-3 may be disposed between the second corner CA2 and the third corner CA3 of the housing 2140, and the fourth magnet 2130-4 may be disposed between the fourth corner CA4 and the first corner CA1 of the housing 2140.

For example, each of the first to fourth corners CA1 to CA4 may be a corresponding one of the first to fourth corner portions 2142-1 to 2142-4.

Two magnets 2130-1 and 2130-4 may be disposed adjacent to one corner (e.g. CA1) of the housing 2140. In addition, the other two magnets 2130-2 and 2130-3 may be disposed adjacent to another corner (e.g. CA3) of the housing 2140.

For example, the magnets 2130-1 to 2130-4 may be disposed so as to be biased to two facing corners CA1 and CA2 of the housing 2140.

For example, the magnets 2130-1 to 2130-4 may be disposed closer to two corners (e.g. CA1 and CA3) of the housing 2140 that face each other in a second diagonal direction than two corners (e.g. CA2 and CA4) of the housing 2140 that face each other in a first diagonal direction. The first diagonal direction may be a direction that is perpendicular to the optical axis and that faces from the second corner to the fourth corner. The second diagonal direction may be a direction that is perpendicular to the optical axis and that faces from the first corner to the third corner. The first diagonal direction and the second diagonal direction may be perpendicular to each other.

Referring to FIGs. 54A and 54B, the elastic member may be coupled to the bobbin 2110 and the housing 2140. The elastic member may elastically support the bobbin 2110 with respect to the housing 2140. For example, the elastic member may include at least one of the upper elastic member 2150 and the lower elastic member 2160.

For example, the upper elastic member 2150 may be coupled to an upper portion, an upper surface, or an upper end of the bobbin 2110 and to an upper portion, an upper surface, or an upper end of the housing 2140. For example, the lower elastic member 2160 may be coupled to a lower portion, a lower surface, or a lower end of the bobbin 2110 and to a lower portion, a lower surface, or a lower end of the housing 2140.

The upper elastic member 2150 may include a plurality of upper elastic members 2150-1 and 2150-2 conductively separated from each other. For example, the plurality of upper elastic members 2150-1 and 2150-2 may be disposed spaced apart from each other.

In FIG. 54A, two upper elastic members conductively separated from each other are shown; however, the number of upper elastic members is not limited thereto. In another embodiment, one or three or more upper elastic members may be provided.

At least one of the first and second upper elastic members 2150-1 and 2150-2 may include a first inner frame 2151 coupled to the bobbin 2110, a first outer frame 2152 coupled to the housing 2140, and a first frame connection portion 2153 configured to interconnect the first inner frame 2151 and the first outer frame 2152. The elastic member may be referred to as a "spring" or an "elastic unit," the inner frame may be referred to as an "inner portion," and the outer frame may be referred to as an "outer portion."

For example, the first inner frame 2151 of the upper elastic member 2150 may be provided with a hole 2151a, to which the first coupling portion 2113 of the bobbin 2110 is coupled; however, the disclosure is not limited thereto. For example, the hole 2151a of the first inner frame 2151 may have at least one incised portion, through which an adhesive permeates between the first coupling portion 2113 of the bobbin 2110 and the hole 2151a.

The first outer frame 2152 of the upper elastic member 2150 may be provided with a hole 2152a, to which the first coupling portion 2143 of the housing 2140 is coupled.

The first outer frame 2152 may include a first coupling portion 2071 coupled to the housing 2140, a second coupling portion 2072 coupled to the supporting member 2220, and a connection portion 2073 configured to interconnect the first coupling portion 2071 and the second coupling portion 2072.

The first coupling portion 2071 may include at least one coupling region coupled to the housing 2140 (e.g. the corner portions 2142-1 to 2142-4). For example, the coupling region of the first coupling portion 2071 may include at least one hole 2152a coupled to the first coupling portion 2143 of the housing 2140.

For example, the coupling region may have one or more holes, and each of the corner portions 2142-1 to 2142-4 of the housing 2140 may be provided with one or more first coupling portions corresponding thereto. In the embodiment of FIG. 54A, the coupling region of the first coupling portion 2071 is implemented so as to include the hole 2152a; however, the disclosure is not limited thereto. In another embodiment, the coupling region may be implemented by any of various shapes sufficient to be coupled to the housing 2140, such as a recess.

The second coupling portion 2072 may have a hole 2052, through which the supporting member 2220 extends. One end of the supporting member 2220 extending through the hole 2052 may be directly coupled to the second coupling portion 2072 using a conductive adhesive member or a solder 2901, and the second coupling portion 2072 and the supporting member 2220 may be conductively connected to each other.

For example, the second coupling portion 2072, which is a region on which the solder 2901 is disposed for coupling with the supporting member 2220, may include the hole 2052 and a region around the hole 2052.

In an embodiment in which two supporting members are disposed on one corner of the housing 2140, the first outer frame 2152 may include two second coupling portions 2072A and 2072B corresponding to one corner of the housing 2140. For example, the second coupling portion 2072 may include a 2-1 coupling portion 2072A coupled to one of the two supporting members 2020A and 2020B and a 2-2 coupling portion 2072B coupled to the other of the two supporting members 2020A and 2020B.

The connection portion 2073 may interconnect the first coupling portion 2071 and the second coupling portion 2072. For example, the connection portion 2073 may interconnect the second coupling portion 2072 and the coupling region of the first coupling portion 2071.

For example, the connection portion 2073 may include a first connection portion 2073A configured to interconnect the first coupling portion 2071 and the 2-1 coupling portion 2072A of the upper elastic member 2150 and a second connection portion 2073B configured to interconnect the first coupling portion 2071 and the 2-2 coupling portion 2072B of the upper elastic member 2150.

Each of the first and second connection portions 2073A and 2073B may include a bent portion bent at least once or a curved portion curved at least once; however, the disclosure is not limited thereto. In another embodiment, each of the first and second connection portions may be straight.

For example, the first coupling portion 2071 may contact the upper surface of each of the corner portions 2142-1 to 2142-4 of the housing 2140, and may be supported by each of the corner portions 2142-1 to 2142-4 of the housing 2140. For example, the second coupling portion 2072 may not be supported by the upper surface of the housing 2140, and may be spaced apart from the housing 2140.

In addition, a damper (not shown) may be disposed in an empty space between the connection portion 2073 and the housing 2140 in order to prevent oscillation due to vibration.

For example, the first upper elastic member 2150-1 may include two first outer frames 2152 coupled to two corner portions (e.g. 2142-1 and 2142-2) of the housing 2140, and the second upper elastic member 2150-2 may include two first outer frames 2152 coupled to the other two corner portions (e.g. 2142-3 and 2142-4) of the housing 2140.

In FIG. 54A, one first outer frame is disposed on any one corner of the housing 2140; however, the disclosure is not limited thereto. In another embodiment, two first outer frames may be disposed on any one corner of the housing 2140 so as to be spaced apart from each other, and each of the two first outer frames may include one first coupling portion, one second coupling portion, and one connection portion configured to interconnect the first coupling portion and the second coupling portion.

A first bonding portion 2041, to which one end of the first coil 2120 is coupled, may be provided at one end of the first inner frame of the first upper elastic member 2150-1.

A second bonding portion 2042, to which the other end of the first coil 2120 is coupled, may be provided at the other end of the first inner frame of the second upper elastic member 2150-2.

The first coil 2120 may be conductively connected to the upper elastic member 2150. For example, one end of the first coil 2120 may be conductively connected to the first upper elastic member 2150-1, and the other end of the first coil 2120 may be conductively connected to the second upper elastic member 2150-2.

In another embodiment, the first coil may be conductively connected to at least one of the upper elastic member and the lower elastic member.

For the first and bonding portions 2041 and 2042, the "bonding portion" may be referred to as a pad portion, a connection terminal, a solder portion, or an electrode portion.

The lower elastic member 2160 may include one spring or elastic unit; however, the disclosure is not limited thereto. In another embodiment, the lower elastic member may include a plurality of springs or a plurality of elastic units spaced apart from each other.

The lower elastic member 2160 may include a second inner frame 2161 coupled or fixed to the lower portion, the lower surface, or the lower end of the bobbin 2110, a second outer frame 2162 coupled or fixed to the lower portion, the lower surface, or the lower end of the housing 2140, and a second frame connection portion 2163 configured to interconnect the second inner frame 2161 and the second outer frame 2162.

Each of the first frame connection portion 2153 of the upper elastic member 2150 and the second frame connection portion 2163 of the lower elastic member 2160 may be formed so as to be bent or curved (or crooked) at least once in order to form a predetermined pattern. The upward and/or downward movement of the bobbin 2110 in the first direction may be flexibly (or elastically) supported through positional change and minute deformation of the connection portion 2073 and the first and second frame connection portions 2153 and 2163.

The second inner frame 2161 may be provided with a hole 2161a, to which the second coupling portion 2117 of the bobbin 2110 is coupled, and the second outer frame 2162 may be provided with a hole 2162a, to which the second coupling portion 2146 of the housing 2140 is coupled.

Each of the upper elastic member 2150 and the lower elastic member 2160 may be constituted by a leaf spring; however, the disclosure is not limited thereto. Each of the upper elastic member and the lower elastic member may be implemented by a coil spring or the like. In addition, each of the upper elastic member 2150 and the lower elastic member 2160 may be made of a conductive material, such as a metal material.

In order to absorb or alleviate vibration of the bobbin 2110, the lens moving apparatus 2100 may further include a first damper (not shown) disposed between each of the upper elastic members 2150-1 and 2150-2 and the bobbin 2110 (or the housing 2140).

For example, the first damper may be disposed between the first frame connection portion 2153 of each of the upper elastic members 2150-1 and 2150-2 and the bobbin 2110 so as to be coupled thereto, or may be disposed on the first frame connection portion 2153 and the bobbin 2110 so as to be coupled thereto.

In addition, for example, the lens moving apparatus 2100 may further include a second damper (not shown) disposed between the second frame connection portion 2163 of the lower elastic member 2160 and the bobbin 2110 (or the housing 2140) so as to be coupled thereto.

In addition, for example, the lens moving apparatus 2100 may further include a third damper (not shown) disposed between the supporting member 2220 and the hole 2147 of the housing 2140 so as to be coupled thereto.

In addition, for example, the lens moving apparatus 2100 may further include a fourth damper (not shown) disposed on the second coupling portion 2072 and one end of the supporting member 2220 so as to be coupled thereto. In addition, the lens moving apparatus 2100 may further include a fifth damper (not shown) disposed on the other end of the supporting member 2220 and the terminal 2027.

In addition, for example, in another embodiment, a damper (not shown) may be further disposed between the inner surface of the housing 2140 and the outer surface of the bobbin 2110.

The supporting member 2220 may support the housing 2140 so as to be movable relative to the base 2210 in the direction perpendicular to the optical axis OA. The supporting member 2220 may conductively connect at least one of the upper and lower elastic members 2150 and 2160 to the circuit board 2250.

Referring to FIG. 55, for example, the supporting member 2220 may be coupled to the upper elastic member 2150. For example, the supporting member 2220 may include a plurality of supporting members 2220-1 to 2220-4.

For example, the supporting member 2220 may include first to fourth supporting members 2220-1 to 2220-4 corresponding to the corner portions 2142-1 to 2142-4 of the housing 2140.

For example, the supporting member 2220 may be disposed on each corner portion of the housing 2140.

For example, two supporting members 2020A and 2020B may be disposed on each corner portion of the housing 2140. For example, the lens moving apparatus 2100 may include a total of eight supporting members; however, the disclosure is not limited thereto.

In another embodiment, one supporting member may be disposed on each of the corner portions of the housing 2140. In another embodiment, two supporting members may be disposed on at least one of the corner portions of the housing 2140, and one supporting member may be disposed on at least another of the corner portions of the housing 2140.

In another embodiment, for example, two supporting members may be disposed on each of two corner portions of the housing 2140, and one supporting member may be disposed on each of two corner portions of the housing 2140.

For example, each of the first to fourth supporting members 2220-1 to 2220-4 may be disposed on a corresponding one of the first to fourth corner portions 2142-1 to 2142-4 of the housing 2140.

For example, each of the first to fourth supporting members 2220-1 to 2220-4 may include two supporting members 2020A and 2020B (or wires) spaced apart from each other.

One end of the supporting member 2220 may be connected or coupled to the upper elastic member 2150.

The first to fourth supporting members 2220-1 to 2220-4 may be connected or coupled to the upper elastic member 2150.

For example, the first supporting member 2220-1 may be connected or coupled to the second coupling portion 2072 of one of the first outer frames of the first upper elastic member 2150-1, and the second supporting member 2220-2 may be connected or coupled to the second coupling portion 2072 of the other of the first outer frames of the first upper elastic member 2150-1.

For example, the third supporting member 2220-3 may be connected or coupled to the second coupling portion 2072 of one of the first outer frames of the second upper elastic member 2150-2, and the fourth supporting member 2220-4 may be connected or coupled to the second coupling portion 2072 of the other of the first outer frames of the second upper elastic member 2150-2.

For example, the first supporting member 2220-1 and the second supporting member 2220-2 may be conductively connected to the first upper elastic member 2150-1, and the third supporting member 2220-3 and the fourth supporting member 2220-4 may be conductively connected to the second upper elastic member 2150-2.

For example, one end of the 1-1 supporting member 2020A of each of the first to fourth supporting members 2220-1 to 2220-4 may be coupled to one 2072A of the two second coupling portions 2072A and 2072B of the first outer frame 2152, and one end of the 1-2 supporting member 2020B may be coupled to the other 2072B of the two second coupling portions 2072A and 2072B of the first outer frame 2152.

In another embodiment, the upper elastic member may include four upper elastic members separated or spaced apart from each other, and each of the supporting members 2220-1 to 2220-4 may be coupled to two coupling portions of a corresponding one of the four upper elastic members.

Two supporting members 2220-1 and 2220-3, among the supporting members 2220-1 to 2220-4, may be conductively connected to the first coil 2120. For example, the two supporting members 2220-1 and 2220-3 may be disposed on two corner portions of the housing 2140 that face each other in a diagonal direction.

In another embodiment, the two supporting members conductively connected to the first coil 2120 may be disposed on two corners selected from among the four corners of the housing 2140. For example, the two supporting members conductively connected to the first coil 2120 may be disposed on two corners adjacent to one side portion of the housing or two corners of the housing diagonally facing each other.

The other end of the supporting member 2220 may be connected or coupled to the terminal member.

For example, the other end of each of the supporting members 2220-1 to 2220-4 may be connected or coupled to a corresponding one of the terminals 2027A1 to 2027A4.

Each of the supporting members 2220-1 to 2220-4 may be conductively connected to a corresponding one of the terminals 2027A1 to 2027A4. For example, the supporting members 2220-1 to 2220-4 may conductively connect the upper elastic members 2150-1 and 2150-2 and the terminals 2027A1 to 2027A4 to each other.

For example, the first supporting member 2220-1 may conductively connect the first upper elastic member 2150-1 and the first terminal 2027A1 to each other, and the second supporting member 2220-2 may conductively connect the first upper elastic member 2150-1 and the second terminal 2027A2 to each other.

For example, the third supporting member 2220-3 may conductively connect the second upper elastic member 2150-2 and the third terminal 2027A3 to each other, and the fourth supporting member 2220-4 may conductively connect the second upper elastic member 2150-2 and the fourth terminal 2027A4 to each other.

In an embodiment in which the upper elastic member includes four upper elastic members separated or spaced apart from each other, each of the first to fourth supporting members 2220-1 to 2220-4 may conductively connect a corresponding one of the four upper elastic members and a corresponding one of the first to fourth terminal members 2027A1 to 2027A4 to each other.

The first to fourth supporting members 2220-1 to 2220-4 may be spaced apart from the housing 2140, not fixed to the housing 2140, and one end of each of the first to fourth supporting members 2220-1 to 2220-4 may be directly connected or coupled to the second coupling portion 2072 of a corresponding one of the first and second upper elastic members 2150-1 and 2150-2 using a solder or a conductive adhesive member.

In another embodiment, the terminal member 2027 may be omitted, and the other end of each of the first to fourth supporting members 2220-1 to 2220-4 may be directly connected or coupled to the circuit board 2250. For example, the other end of each of the first to fourth supporting members 2220-1 to 2220-4 may be directly connected or coupled to the lower surface of the circuit board 2250. For example, the other end of each of the first to fourth supporting members 2220-1 to 2220-4 may be directly conductively connected to the circuit board 2250.

For example, at least one of the 1-1 supporting member 2020A and the 1-2 supporting member 2020B disposed on any one corner of the housing 2140 may be conductively connected to the circuit board 2250.

In another embodiment, the other end of each of the supporting members 2220-1 to 2220-4 may be coupled to the base 2210, and wiring or a circuit pattern configured to conductively connect the other end of each of the supporting members 2220-1 to 2220-4 to the circuit board 2250 may be formed on the base 2210.

The first coil 2120 may be conductively connected to the circuit board 2250 via the upper elastic member 2150 and the terminal member 2027.

For example, one end of the first coil 2120 may be conductively connected to the first upper elastic member 2150-1 and the first supporting member 2220-1, and may be conductively connected to a first pad PA1 of the circuit board 2250 via the first supporting member 2220-1 and the first terminal 2027A1.

In addition, the other end of the first coil 2120 may be connected to the second upper elastic member 2150-2 and the third supporting member 2220-3, and may be conductively connected to a second pad PA2 of the circuit board 2250 via the third supporting member 2220-3 and the third terminal 2027A3.

In another embodiment, the first coil 2120 may be conductively connected to at least one of the upper elastic member 2150 and the lower elastic member. For example, the lower elastic member may include two lower elastic members spaced apart from each other, and the first coil 2120 may be conductively connected to the two lower elastic members. In another embodiment, the first coil 2120 may be conductively connected to the upper elastic member and the lower elastic member.

For example, one driving signal may be provided to the first coil 2120 via the first and second pads PA1 and PA2 of the circuit board 2250.

For example, one end of the first coil 2120 may be conductively connected to the first supporting member 2220-1, and may be conductively connected to the first pad PA1 of the circuit board 2250 via the first terminal 2027A1. In addition, the other end of the first coil 2120 may be conductively connected to the third supporting member 2220-3, and may be conductively connected to the second pad PA2 of the circuit board 2250 via the third terminal 2027A3.

The supporting member 2220 may be implemented by an elastic supporting member, such as a suspension wire, a leaf spring, or a coil spring. The supporting member 2220 may be made of a conductive material and/or a nonconductive material. For example, the supporting member 2220 may be made of a metal and/or a nonconductive material.

Also, in another embodiment, the supporting member 2220 may be integrally formed with the upper elastic member 2150.

Referring to FIGs. 56 and 57, the circuit board 2250 is disposed under the housing 2140 and/or the bobbin 2110. Alternatively, for example, the circuit board 2250 may be disposed under the lower elastic member 2160. In addition, the circuit board 2250 may be disposed on an upper surface of the base 2210.

For example, the circuit board 2250 may include a body 2252 disposed on the upper surface of the base 2210 and an opening 2024A formed in the body 2252.

The opening 2024A of the circuit board 2250 may correspond to or may be opposite to at least one of the opening 2025A of the bobbin 2110, the opening 2026A of the housing 2140, and/or an opening 2028A of the base 2210. For example, the opening 2024A may be a through-hole formed through the body 2252 in the optical-axis direction.

When viewed from above, the shape of the body 2252 of the circuit board 2250 may be a shape coinciding with or corresponding to the upper surface of the base 2210, such as a quadrangular shape; however, the disclosure is not limited thereto.

The circuit board 2250 may include a terminal member 2253 extending from the body 2252. The terminal member 2253 may be bent from the body 2252 to a side surface of the base 2210 and may then extend.

The terminal member 2253 of the circuit board 2250 may include a plurality of terminals 2251 configured to receive electrical signals from the outside or to output electrical signals to the outside.

For example, the circuit board 2250 may include two terminal members disposed on two facing sides of the body 2252, among sides of the body; however, the disclosure is not limited thereto, and the number of terminal members may be one or more.

A driving signal may be provided to each of the first coil 2120 and the second coil 2230 through the plurality of terminals 2251 provided at the terminal member 2253 of the circuit board 2250.

For example, a driving signal or power may be supplied to the second coil 2230 via the circuit board 2250. The power or the driving signal provided to the second coil 2230 may be a direct current signal or an alternating current signal, or may include a direct current signal and an alternating current signal, and may be voltage or current.

The housing 2140 may be moved in the direction perpendicular to the optical axis, such as the second direction (e.g. the X-axis direction) and/or the third direction (e.g. the Y-axis direction), by interaction between the magnets 2130-1 to 2130-4 and the second coil units 2230-1 to 2230-4, to each of which the driving signal has been provided, whereby handshake compensation may be performed.

For example, the first and second pads PA1 and PA2 of the circuit board 2250 may be conductively connected to two corresponding ones of the terminals 2251 of the circuit board 2250.

In addition, through the terminals 2251 of the circuit board 2250, a driving signal may be provided to the first position sensor 2170, an output signal of the first position sensor 2170 may be received, and the received output signal of the first position sensor 2170 may be output to the outside. For example, the first position sensor 2170 may be conductively connected to corresponding ones of the terminals 2251 of the circuit board 2250.

The circuit board 2250 may be an FPCB; however, the disclosure is not limited thereto. The terminals of the circuit board 2250 may be directly formed on the surface of the base 2210 using a surface electrode scheme or the like.

In order to avoid spatial interference with the supporting members 2220-1 to 2220-4, the circuit board 2250 may have an escape portion 2023 through which each of the supporting members 2220-1 to 2220-4 extends.

For example, in FIG. 56, the escape portion 2023 may be formed at each corner of the body 2252 and may be a recess; however, the disclosure is not limited thereto. In another embodiment, the escape portion may be a hole or a through-hole, and the supporting member may extend through the hole or the through-hole.

In another embodiment, the circuit board 2250 may have no escape portion, and the supporting members 2220-1 to 2220-4 may be conductively connected to the circuit pattern or the pad formed at the upper surface of the circuit board 2250 via a solder or the like.

Referring to FIG. 57, the circuit board 2250 may include first and second pads PA1 and PA2 coupled or connected respectively to the two terminals 2027A1 and 2027A3. For example, the first and second pads PA1 and PA2 may be formed at an upper surface of the body 2252 of the circuit board 2250; however, the disclosure is not limited thereto. In another embodiment, the first and second pads may be formed at a lower surface of the body 2252. Here, the upper surface of the body 2252 may be a surface facing the housing 2140. In addition, the lower surface of the body 2252 may be a surface that faces the upper surface of the base 2210 and may be a surface opposite to the upper surface of the body 2252.

For example, the first pad PA1 may be disposed adjacent to a first escape portion formed at one corner of the body 2252, and the second pad PA2 may be disposed adjacent to a second escape portion formed at another corner of the body 2252.

For example, the first escape portion and the second escape portion may diagonally face each other. For example, the first escape portion may be adjacent to the first supporting member 2220-1, and the second escape portion may be adjacent to the third supporting member 2220-3. In another embodiment, for example, the first escape portion and the second escape portion may be disposed so as to be adjacent to one side of the circuit board 2250.

The circuit board 2250 may include at least one protrusion 2048 protruding from a side surface thereof, and the protrusion 2048 may protrude in the direction perpendicular to the optical axis. The protrusion 2048 may be disposed, seated, or inserted in the recessed portion 2049 of the base 2210. The protrusion 2048 may serve as an installation guide configured to allow the circuit board 2250 to be properly disposed on the base therethrough, and the protrusion 2048 and the recessed portion 2049 may prevent rotation or twisting of the circuit board 2250 on the upper surface of the base 2210.

The circuit board 2250 may include at least one through-hole 2029A formed at a position corresponding to the curved portions 2056C and 2056D of at least one coil unit (e.g. 2230-1 to 2230-4) of the second coil 2230.

When the coil unit (e.g. 2230-1) is coupled to pads R1 to R8 of the circuit board 2250, a jig or a pincette may be inserted into the through-hole 2029A in order to fix or support the coil unit (e.g. 2230-1). In another embodiment, the through-hole 2029A may be omitted.

Referring to FIG. 63B, the circuit board 2250 may include pads R1 to R8 conductively connected to the second coil 2230.

For example, the circuit board 2250 may include first and second pads R1 and R2 conductively connected to the first coil unit 2230-1, third and fourth pads R3 and R4 conductively connected to the second coil unit 2230-2, fifth and sixth pads R5 and R6 conductively connected to the third coil unit 2230-3, and seventh and eighth pads R7 and R8 conductively connected to the fourth coil unit 2230-4.

The eight pads R1 to R8 conductively connected to the second coil 2230 may be disposed on the lower surface of the circuit board 2250.

For example, the pads R1 to R8 of the circuit board 2250 may be disposed on one region of the lower surface of the circuit board 2250 located outside the coil units 2230-1 to 2230-4.

For example, two pads (e.g. R1 and R2) may be disposed adjacent to one of two curved portions 2056C and 2056D of a corresponding coil unit (e.g. 2230-1).

In another embodiment, one of two pads corresponding to one coil unit (e.g. 2230-1) may be disposed on a first region of the lower surface of the circuit board 2250 located inside the coil unit (e.g. 2230-1), and the other of the two pads may be disposed on a second region of the lower surface of the circuit board 2250 located outside the coil unit (e.g. 2230-1). The reason for this is that it is possible to easily perform bonding between the pad and the coil unit. This may be equally applied to pads corresponding to the second to fourth coil units 2230-2 to 2230-4.

In another embodiment, the two pads may be located inside the coil unit (e.g. 2230-1) of the second coil 2230.

A circuit board 2250-1 shown in FIG. 64A is a modification of FIG. 63B. In FIG. 64A, first and second pads PA11 and PA12 may be disposed on a lower surface of the circuit board 2250-1. For example, the first pad PA11 may be coupled to the extension portion 2050B1 of the first terminal 2027A1 using a solder or a conductive adhesive member, and both may be conductively connected to each other. In addition, for example, the second pad PA12 may be coupled to the extension portion 2050B1 of the third terminal 2027A3 using a solder or a conductive adhesive member, and both may be conductively connected to each other.

In addition, a circuit board 2250-2 shown in FIG. 64B is another modification of FIG. 63B. In FIG. 64B, pads R11 to R18 conductively connected to the coil units 2230-1 to 2230-4 may be disposed on an upper surface of the circuit board 2250-2.

The circuit board 2250-2 may have a hole 2045A, through which at least a part of each of the coil units 2230-1 to 2230-4 extends. For example, since the coil units 2230-1 to 2230-4 are disposed on the lower surface of the circuit board 2250-2, both ends of each of the coil units 2230-1 to 2230-4 may be withdrawn to the upper surface of the circuit board 2250-2 through the hole 2045A of the circuit board 2250-2, and the withdrawn ends of the coil units 2230-1 to 2230-4 may be coupled or connected to the pads R11 to R18 disposed on the upper surface of the circuit board 2250-2.

For example, the hole 2045A may include an opening open to a side surface of the circuit board 2250-2. In another embodiment, an opening open to the side surface of the circuit board 2250-2 may be included. In another embodiment, the hole 2045A may be a through-hole that is not open to the side surface of the circuit board 2250-2.

Referring to FIGs. 56 and 58, the base 2210 is disposed under the circuit board 2250. In addition, the base 2210 may be disposed under the housing 2140 and/or the bobbin 2110.

The base 2210 may have an opening 2028A corresponding to the opening 2025A of the bobbin 2110 and/or the opening 2026A of the housing 2140, and may have a shape coinciding with or corresponding to the cover member 2300, such as a quadrangular shape. For example, the opening 2028A may be a through-hole formed through the base 2210 in the optical-axis direction.

A receiving recess 2255 or a supporting portion may be provided at a region of the base 2210 facing the terminal 2251 of the circuit board 2250. The receiving recess 2255 of the base 2210 may receive or support the terminal member 2253 of the circuit board 2250 at which the terminal 2251 is formed. The receiving recess 2255 may be depressed from the outer surface of the base 2210.

The base 2210 may have an escape portion 2212A formed at each corner or each corner region thereof in order to avoid spatial interference with the other end of a corresponding one of the supporting members 2220-1 to 2220-4. For example, the escape portion 2212A may be a recess or a concave recess.

In addition, for example, a recess 2038 configured to avoid spatial interference with the lower elastic member 2160, the bobbin 1220, and/or the lens module 400 may be formed in the upper surface of the base 2210 adjacent to the opening 2028A.

The upper surface 2030 of the base 2210 may include a first surface 2030A configured to allow the body 2252 of the circuit board 2250 to come into contact therewith or to support the body 2252 and a second surface 2030B forming a first stair with the first surface 2030A in the optical-axis direction.

The base 2210 may further include a surface 2031A (or a first stair surface or a first side surface) that connects the first surface 2030A and the second surface 2030B to each other. For example, the first stair surface 2031A may be perpendicular to the first surface 2030A; however, the disclosure is not limited thereto. In another embodiment, the first stair surface 2031A may be an inclined surface, and the interior angle between the first surface 2030A and the first stair surface 2031A may be an obtuse angle or an acute angle. In another embodiment, the first stair surface 2031A may have a stair shape, a curved shape, or a bent shape.

For example, the second surface 2030B may be located lower than the first surface 2030A. The second surface 2030B may be closer to the lower surface of the base 2210 than the first surface 2030A.

For example, the second surface 2030B may be located between the opening 2028A of the base 2210 and a side of the upper surface of the base 2210.

The base 2210 may include a first region on which the second coil 2230 is disposed and a second region on which the second coil 2230 is not disposed.

For example, the first region of the base 2210 may be referred to as a "receiving portion," a "receiving recess," or a "receiving region." For example, the first region of the base 2210 may be a recess. At this time, the recess may include a region open in two perpendicular directions.

For example, the first region of the base 2210 may include a bottom surface located lower than the uppermost surface of the base 2210. In addition, the first region of the base 2210 may include a protrusion, a projecting region, or a projecting portion disposed on the bottom surface.

At least a part of the second coil 2230 may be disposed in the first region of the base 2210. At least a part of the circuit board 2250 may be disposed on the first region of the base 2210, and the lower surface of the circuit board 2250 may be spaced apart from the bottom surface of the first region of the base 2210.

The first region of the base 2210 may include a protrusion, a projecting region, or a projecting portion projecting higher than the bottom surface.

For example, the protrusion, the projecting region, or the projecting portion of the first region of the base 2210 may be disposed in a hollow (or a center hole 2058) of each of the coil units 2230-1 to 2230-4 of the second coil 2230.

For example, the base 2210 may include seating portions 2213A1 to 2213A4 configured to allow the second coil 2230 to be disposed thereon, to be seated thereon, or to be inserted therein. The seating portions 2213A1 to 2213A4 may be formed at the upper surface 2030 of the base 2210.

For example, each of the seating portions 2213A1 to 2213A4 may be a recess depressed from the upper surface 2030 of the base 2210. Each of the seating portions 2213A1 to 2213A4 may be referred to as a "recess" or a "seating recess." For example, each of the seating portions 2213A1 to 2213A4 may include a first opening (or a first open region) open to the upper surface of the base 2210. Each of the seating portions 2213A1 to 2213A4 shown in FIG. 58 does not include an opening open to the outer surface of the base 2210. In another embodiment, each of the seating portions may include a second opening (or a second open region) open to the upper surface of the base 2210. The second coil 2230 may be easily inserted into, disposed on, or wound around each seating portion through the second opening.

The base 2210 may include a plurality of seating portions corresponding to the plurality of coil units. For example, the base 2210 may include four seating portions 2213A1 to 2213A4 corresponding to the four coil units 2230-1 to 2230-4. For example, the seating portions 2213A1 to 2213A4 may be disposed adjacent to first to fourth sides of the upper surface 2030 of the base 2210, respectively.

At least one projecting portion 2015, around which the coil units of the second coil 2230 are wound or to which the coil units of the second coil are fixed, may be formed at bottom surfaces of the seating portions 2213A1 to 2213A4. For example, the projecting portion 2015 may be referred to as a "protrusion." The number of projection portions disposed on the bottom surfaces of the seating portions 2213A1 to 2213A4 may be one or more.

For example, the bottom surfaces of the seating portions 2213A1 to 2213A4 may be the second surface 2030B of the upper surface 2030 of the base 2210.

The coil units 2230-1 to 2230-4 of the second coil 2230 may be disposed on the second surface 2030B of the upper surface 2030 of the base 2210 or the bottom surfaces of the seating portions 2213A1 to 2213A4.

For example, an upper portion, an upper end, or an upper surface of the second coil 2230 may be located lower than or level with the first surface 2030A of the upper surface 2030 of the base 2210.

For example, a first projecting portion 2015-1 including two protrusions 2016A and 2016B spaced apart from each other may be formed at the first seating portion 2213A1 on which the first coil unit 2230-1 is disposed, a second projecting portion 2015-2 including one protrusion may be formed at the second seating portion 2213A2 on which the second coil unit 2230-2 is disposed, a third projecting portion 2015-3 including two protrusions 2016A and 2016B spaced apart from each other may be formed at the third seating portion 2213A3 on which the third coil unit 2230-3 is disposed, and a fourth projecting portion 2015-4 including one protrusion may be formed at the fourth seating portion 2213A4 on which the fourth coil unit 2230-4 is disposed. In another embodiment, each of the first to fourth projecting portions may include one protrusion or two or more protrusions.

The lengths of the two protrusions 2016A and 2016B in a direction parallel to the side of the upper surface of the base 2210 or in the longitudinal direction of the coil units 2230-1 to 2230-4 may be different from each other. For example, the length of the first protrusion 2016A may be greater than the length of the second protrusion 2016B; however, the disclosure is not limited thereto. In another embodiment, the lengths thereof may be equal to each other, or the former may be less than the latter.

The depth of each of the seating portions 2213A1 to 2213A4 may be greater than the length of a corresponding one of the coil units 2230-1 to 2230-4 of the second coil 2230 in the optical-axis direction. As a result, it is possible to prevent the circuit board 2250, to which the coil units 2230-1 to 2230-4 are coupled, from being loosened or spaced apart from the upper surface 2030 (e.g. the first surface 2030A) of the base 2210, whereby it is possible to prevent reduction in the force of coupling between the circuit board 2250 and the base 2210.

In another embodiment, the depth of each of the seating portions 2213A1 to 2213A4 may be equal to the length of a corresponding one of the coil units 2230-1 to 2230-4 of the second coil 2230 in the optical-axis direction.

In another embodiment, the depth of each of the seating portions 2213A1 to 2213A4 may be less than the length of a corresponding one of the coil units 2230-1 to 2230-4 of the second coil 2230 in the optical-axis direction.

For example, the depth of each of the seating portions 2213A1 to 2213A4 may be the distance from the first surface 2030A of the upper surface 2030 of the base 2210 to the bottom surface (or the second surface 2030B) of a corresponding one of the seating portions 2213A1 to 2213A4. Alternatively, the depth of each of the seating portions 2213A1 to 2213A4 may be a first stair between the first surface 2030A and the second surface 2030B.

The base 2210 may include a third surface 2030C forming a second stair with the first surface 2030A in the optical-axis direction. The third surface 2030C may be disposed on each corner of the upper surface 2030 of the base 2210.

The third surface 2030C may be disposed adjacent to the escape portion 2212A of the base 2210. For example, the second stair may be the distance between the first surface 2030A and the third surface 2030C of the upper surface 2030 of the base 2210 in the optical-axis direction. For example, the second stair may be smaller than the first stair; however, the disclosure is not limited thereto. In another embodiment, the second stair may be equal to or larger than the first stair.

The base 2210 may further include a surface 2031B (or a second stair surface or a second side surface) that connects the third surface 2030C and the first surface 2030A to each other.

For example, the second stair surface 2031B may be perpendicular to the first surface 2030A; however, the disclosure is not limited thereto. In another embodiment, the second stair surface 2031B may be an inclined surface, and the interior angle between the first surface 2030A and the second stair surface 2031B may be an obtuse angle or an acute angle. In another embodiment, the second stair surface 2031B may have a stair shape, a curved shape, or a bent shape.

For example, each of the first surface 2030A, the second surface 2030B, and the third surface 2030C may be a plane perpendicular to the optical axis. In addition, for example, the first surface 2030A, the second surface 2030B, and the third surface 2030C may be parallel to each other; however, the disclosure is not limited thereto. In another embodiment, at least one of the first to third surfaces may not be parallel to the others.

The base 2210 may have a seating portion 2214C, on which the first position sensor is disposed. The seating portion 2214C may be a recess depressed from the upper surface 2030 (e.g. the first surface 2030A) of the base 2210. For example, the seating portion 2214C may be formed adjacent to one corner of the upper surface 2030 of the base 2210.

For example, the seating portion 2214C may be formed at the upper surface of the base 2210 located between the opening 2028A of the base 2210 and one escape portion 2212A of the base 2210.

For example, the seating portion 2214C may be disposed between the seating portion 2213A2 on which the second coil unit 2230-2 is disposed and the seating portion 2213A4 on which the fourth coil unit 2230-4 is disposed. In this case, the first position sensor 2170 may be spaced apart from the second coil units 2230-1 to 2230-4 as far as possible, whereby the effect of magnetic fields generated from the second coil units 2230-1 to 2230-4 on the first position sensor 2170 may be reduced, and therefore it is possible to prevent deterioration in reliability of the first position sensor 2170.

The base 2210 may have a stair 2211 configured to allow an adhesive to be coated thereon when the cover member 2300 is fixed by adhesion. At this time, the stair 2211 may be formed at the outer surface of the base 2210, may guide the side plate 2302 of the cover member 2300, and may face a lower end of the side plate 2302 of the cover member 2300.

In addition, a seating portion (not shown) configured to allow the filter 610 of the camera apparatus 200 to be installed thereat may be formed at the lower surface of the base 2210.

A guide protrusion 2217 protruding from the upper surface (30) (e.g. the first surface 2030A) of the base 2210 may be formed at an edge of the upper surface 2030 of the base 2210. The guide protrusion 2217 may guide the body 2252 of the circuit board 2250, and may support a side surface of the body 2252, thereby preventing the body 2252 from being separated outside the base 2210.

In addition, the base 2210 may have a recessed portion 2049, to which the protrusion 2048 of the circuit board 2250 is coupled. The recessed portion 2049 may be formed at a position corresponding to the protrusion 2048 of the circuit board 2250. For example, the recessed portion 2049 may be formed in the outer surface of the base 2210. For example, the recessed portion 2049 may be formed in the guide protrusion 2217 of the base 2210.

The second coil 2230 may be disposed under the circuit board 2250. The second coil 2230 may be disposed between the circuit board 2250 and the base 2210.

For example, the second coil 2230 may be disposed between the lower surface of the circuit board 2250 and the upper surface 2030 (e.g. the second surface 2030B) of the base 2210.

The second coil 2230 may correspond to, may be opposite to, or may overlap the magnet 2130 disposed on the housing 2140 in the optical-axis direction.

The second coil 2230 may include coil units corresponding in number to the magnets included in the magnet 2130.

For example, the second coil 2230 may include a plurality of coil units corresponding to the plurality of magnets.

When the magnet 2130 includes four magnets, the second coil 2230 may include four coil units corresponding thereto. Alternatively, when the magnet 2130 includes two magnets, the second coil 2230 may include two coil units corresponding thereto.

For example, the second coil 2230 may include a first coil unit 2230-1 corresponding to, opposite to, or overlapping the first magnet 2130-1 in the optical-axis direction, a second coil unit 2230-2 corresponding to, opposite to, or overlapping the second magnet 2130-2 in the optical-axis direction, a third coil unit 2230-3 corresponding to, opposite to, or overlapping the third magnet 2130-3 in the optical-axis direction, and a fourth coil unit 2230-4 corresponding to, opposite to, or overlapping the fourth magnet 2130-4 in the optical-axis direction.

For example, the four magnets 2130-1 to 2130-4 may be disposed on the four side portions of the housing 2140, and the first to fourth coil units 2230-1 to 2230-4 may be disposed on the four side portions or the four sides of the base 2210 so as to correspond to or to be opposite to the four magnets 2130-1 to 2130-4 in the optical-axis direction.

In another embodiment, the four magnets may be disposed on the four corner portions of the housing 2140, and the first to fourth coil units may be disposed on the four corners of the base 2210 so as to correspond to or to be opposite to the four magnets in the optical-axis direction.

Each of the first to fourth coil units 2230-1 to 2230-4 may have a closed curve shape having a hollow or a center hole 2058 (see FIG. 63B), such as a ring shape, and the center hole 2058 may be formed so as to face in the optical-axis direction.

In addition, for example, each of the first to fourth coil units 2230-1 to 2230-4 may be a winding coil, a coil bundle, a coil body, or a coil block, not a fine pattern (FP) coil. For example, each of the first to fourth coil units 2230-1 to 2230-4 may be a strand having a conductive line enclosed by a coating (an insulating material).

In order to increase the number of turns of the FP coil, the number of layers on each of which a pattern is formed must be increased; however, it takes a lot of cost to increase the number of layers. In addition, there are process limitations in increasing the size of the pattern coil. Even though the number of layers is increased, therefore, resistance of the pattern coil is increased, whereby a sufficient number of coil turns is not secured, and therefore the number of coil turns is limited. As a result, electromagnetic force due to interaction between the FP coil and the magnet 2130 may be reduced or weakened due to limitation in the number of turns of the FP coil.

In the structure in which two supporting members are disposed on each corner of the housing 2140, as in the embodiment, electromagnetic force sufficient to withstand restoring force of the supporting members is necessary. When the FP coil is used, it is not possible to secure sufficient electromagnetic force.

In contrast, the winding coil has no limitation on the number of coil turns, and may have a number of turns equivalent to 1.5 or more times the number of turns of the FP coil. For example, under the condition of the same resistance, the winding coil may have a number of turns equivalent to 1.5 or more times the number of turns of the FP coil.

For example, the number of turns of each of the first to fourth coil units 2230-1 to 2230-4 may be 40 or more. For example, the number of turns of each of the first to fourth coil units 2230-1 to 2230-4 may be 40 to 80. Alternatively, for example, the number of turns of each of the first to fourth coil units 2230-1 to 2230-4 may be 45 to 60. Alternatively, for example, the number of turns of each of the first to fourth coil units 2230-1 to 2230-4 may be 45 to 55.

For example, the numbers of turns of the first to fourth coil units 2230-1 to 2230-4 may be equal to each other; however, the disclosure is not limited thereto. In another embodiment, the number of turns of at least one of the first to fourth coil units 2230-1 to 2230-4 may be different from the number of turns of at least one of the other coil units.

For example, the sum of the number of turns of the first coil unit 2230-1 and the number of turns of the second coil unit 2230-2 may be equal to the sum of the number of turns of the third coil unit 2230-3 and the number of turns of the fourth coil unit 2230-4.

Since each of the first to fourth coil units 2230-1 to 2230-4 is implemented by a winding coil, as described above, the embodiment is capable of sufficiently securing the number of turns of the second coil 2230 and securing electromagnetic force sufficient to withstand restoring force of the supporting members 2220-1 to 2220-4 during OIS driving.

In addition, for example, the line width of each of the first to fourth coil units 2230-1 to 2230-4 may be 55 micrometers to 70 micrometers. Alternatively, the line width of each of the first to fourth coil units 2230-1 to 2230-4 may be 60 micrometers to 65 micrometers. Alternatively, for example, the line width of each of the first to fourth coil units 2230-1 to 2230-4 may be 60 micrometers to 63 micrometers.

For example, the first coil unit 2230-1 and the second coil unit 2230-2 may be disposed so as to face each other in a direction from the first magnet 2130-1 to the second magnet 2130-2.

In addition, the third coil unit 2230-3 and the fourth coil unit 2230-4 may be disposed so as to face each other in a direction from the third magnet 2130-3 to the fourth magnet 2130-4.

In addition, for example, each of the first coil unit 2230-1 and the second coil unit 2230-2 may not overlap the third and fourth coil units 2230-3 and 2230-4 in the direction from the first magnet 2130-1 to the second magnet 2130-2.

For example, the first coil unit 2230-1 may be disposed on, seated on, or coupled to the first seating portion 2213A1 of the base 2210, the second coil unit 2230-2 may be disposed on, seated on, or coupled to the second seating portion 2213A2 of the base 2210, the third coil unit 2230-3 may be disposed on, seated on, or coupled to the third seating portion 2213A3 of the base 2210, and the fourth coil unit 2230-4 may be disposed on, seated on, or coupled to the fourth seating portion 2213A4 of the base 2210.

For example, at least a part of the second coil 2230 may be disposed between the projecting portions 2015-1 to 2015-4 and the seating portions 2213A1 to 2213A4.

The first projecting portion 2015-1 may be coupled to, inserted into, or disposed in the hollow (or the center hole) of the first coil unit 2230-1. The second projecting portion 2015-2 may be coupled to, inserted into, or disposed in the hollow (or the center hole) of the second coil unit 2230-2. The third projecting portion 2015-3 may be coupled to, inserted into, or disposed in the hollow (or the center hole) of the third coil unit 2230-3. The fourth projecting portion 2015-4 may be coupled to, inserted into, or disposed in the hollow (or the center hole) of the fourth coil unit 2230-4.

For example, the height of each of the projecting portions 2015-1 to 2015-4 may be equal to or less than the height of the upper surface or the upper end of the second coil 2230 (or the coil units 2230-1 to 2230-4).

For example, the height of each of the projecting portions 2015-1 to 2015-4 may be equal to or less than the length of a corresponding one of the coil units 2230-1 to 2230-4 in the optical-axis direction. For example, the heights of the projecting portions 2015-1 to 2015-4 may be the lengths of the projecting portions 2015-1 to 2015-4 in the optical-axis direction.

For example, the upper surface of each of the projecting portions 2015-1 to 2015-4 may be lower than or level with the first surface 2030A of the upper surface 2030 of the base 2210. The reason for this is that, if the height of each of the projecting portions 2015-1 to 2015-4 is higher than the first surface 2030A of the upper surface 2030 of the base 2210, the lower surface of the circuit board 2250 and the first surface 2030A of the upper surface 2030 of the base 2210 may be loosened or spaced apart from each other.

The first to fourth coil units 2230-1 to 2230-4 may be fixed or attached to the lower surface of the circuit board 2250.

Referring to FIG. 64A, for example, the first coil unit 2230-1 may be disposed adjacent to a first side of the lower surface of the circuit board 2250 or a first side surface of the circuit board 2250. The second coil unit 2230-2 may be disposed adjacent to a second side of the lower surface of the circuit board 2250 or a second side surface of the circuit board 2250. The third coil unit 2230-3 may be disposed adjacent to a third side of the lower surface of the circuit board 2250 or a third side surface of the circuit board 2250. The fourth coil unit 2230-4 may be disposed adjacent to a fourth side of the lower surface of the circuit board 2250 or a fourth side surface of the circuit board 2250.

For example, the first side (or the first side surface) and the second side (or the second side surface) of the lower surface of the circuit board 2250 may be located opposite to each other, and the third side (or the third side surface) and the fourth side (or the fourth side surface) of the lower surface of the circuit board 2250 may be located between the first side (or the first side surface) and the second side (or the second side surface) and may be located opposite to each other.

For example, the first coil unit 2230-1 may be disposed on a first region between the first side (or the first side surface) of the lower surface of the circuit board 2250 and the opening 2024A of the circuit board 2250, the second coil unit 2230-2 may be disposed on a second region between the second side (or the second side surface) of the lower surface of the circuit board 2250 and the opening 2024A of the circuit board 2250, the third coil unit 2230-3 may be disposed on a third region between the third side (or the third side surface) of the lower surface of the circuit board 2250 and the opening 2024A of the circuit board 2250, and the fourth coil unit 2230-4 may be disposed on a fourth region between the fourth side (or the fourth side surface) of the lower surface of the circuit board 2250 and the opening 2024A of the circuit board 2250.

For example, the first coil unit 2230-1 may be disposed parallel to the first side (or the first side surface) of the lower surface of the circuit board 2250, the second coil unit 2230-2 may be disposed parallel to the second side (or the second side surface) of the lower surface of the circuit board 2250, the third coil unit 2230-3 may be disposed parallel to the third side (or the third side surface) of the lower surface of the circuit board 2250, and the fourth coil unit 2230-4 may be disposed parallel to the fourth side (or the fourth side surface) of the lower surface of the circuit board 2250.

The circuit board 2250 may include pads R1 to R8 conductively connected to the first to fourth coil units 2230-1 to 2230-4. In FIG. 15A, the pads R1 to R8 may be disposed on the lower surface of the circuit board 2250. In FIG. 15B, the pads R11 to R18 may be disposed on the upper surface of the circuit board 2250-2.

The lens moving apparatus 2100 may further include a second position sensor 2240 for OIS feedback driving. The second position sensor 2240 may include a first sensor 2240A and a second sensor 2240B.

The first sensor 2240A and the second sensor 2240B may be disposed between the circuit board 2250 and the base 2210. For example, the first sensor 2240A and the second sensor 2240B may be disposed between the lower surface of the circuit board 2250 and the upper surface 2030 of the base 2210. Each of the first sensor 2240A and the second sensor 2240B may be conductively connected to the circuit board 2250.

Each of the first sensor 2240A and the second sensor 2240B may include a Hall sensor, and any sensor capable of sensing the intensity of a magnetic field may be used. For example, each of the first and second sensors 2240A and 2240B may be implemented by a position sensor, such as a Hall sensor, alone or in the form of a driver IC including a Hall sensor.

For example, the first sensor 2240A may be disposed in the first seating portion 2213A1 of the base 2210, and the second sensor 2240B may be disposed in the third seating portion 2213A3 of the base 2210.

For example, a space 2214A may be formed between the first protrusion 2016A and the second protrusion 2016B located in the first seating portion 2213A1, and the first sensor 2240A may be disposed between the first protrusion 2016A and the second protrusion 2016B located in the first seating portion 2213A1.

In addition, for example, a space 2214B may be formed between the first protrusion 2016A and the second protrusion 2016B located in the third seating portion 2213A3, and the second sensor 2240B may be disposed between the first protrusion 2016A and the second protrusion 2016B located in the third seating portion 2213A3.

In another embodiment, the first sensor 2240A may be disposed in a recess separately formed in the base 2210 while being spaced apart from the first seating portion, and the second sensor may be disposed in a recess separately formed in the base 2210 while being spaced apart from the second seating portion.

For example, the first sensor 2240A may be disposed in the center hole 2058 of the first coil unit 2230-1, and the second sensor 2240B may be disposed in the center hole 2058 of the third coil unit 2230-3.

Referring to FIG. 63B, each of the first to fourth coil units 2230-1 to 2230-4 may include two straight portions 2056A to 2059A and 2056B to 2059B, a first curved portion 2056C to 2059C that connects one end of each of the two straight portions 2056A to 2059A and 2056B to 2059B to each other, and a second curved portion 2056D to 2059D that connects the other end of each of the two straight portions 2056A to 2059A and 2056B to 2059B to each other.

For example, the first sensor 2240A may be disposed adjacent to one (e.g. 2056C) of the first and second curved portions 2056C and 2056D of the first coil unit 2230-1. For example, the first sensor 2240A may be disposed closer to the first curved portion 2057C than the second curved portion 2057D.

For example, the second sensor 2240B may be disposed adjacent to one (e.g. 2058C) of the first and second curved portions 2058C and 2058D of the third coil unit 2230-3. For example, the second sensor 2240B may be disposed closer to the first curved portion 2058C than the second curved portion 2058D.

For example, the first curved portion 2056C of the first coil unit 2230-1 may be located closer to the first curved portion 2058C of the third coil unit 2230-3 than the second curved portion 2058D of the third coil unit 2230-3.

In addition, the first curved portion 2058C of the third coil unit 2230-3 may be located closer to the first curved portion 2056C of the first coil unit 2230-1 than the second curved portion 2056D of the first coil unit 2230-1. In addition, the first curved portion 2057C of the second coil unit 2230-2 may be located closer to the second curved portion 2058D of the third coil unit 2230-3 than the first curved portion 2058C of the third coil unit 2230-3. In addition, the second curved portion 2057D of the second coil unit 2230-2 may be located closer to the second curved portion 2059D of the fourth coil unit 2230-4 than the first curved portion 2059C of the fourth coil unit 2230-4. In addition, the first curved portion 2059C of the fourth coil unit 2230-4 may be located closer to the second curved portion 2056D of the first coil unit 2230-1 than the first curved portion 2056C of the first coil unit 2230-1.

A first distance d1 between the first coil unit 2230-1 and the third coil unit 2230-3 may be different from a second distance d2 between the first coil unit 2230-1 and the fourth coil unit 2230-4.

The first distance d1 between two adjacent curved portions of the first coil unit 2230-1 and the third coil unit 2230-3 may be different from the second distance d2 between two adjacent curved portions of the first coil unit 2230-1 and the fourth coil unit 2230-4. In another embodiment, the first distance and the second distance may be equal to each other.

A third distance d3 between two adjacent curved portions of the second coil unit 2230-2 and the third coil unit 2230-3 may be different from a fourth distance d4 between two adjacent curved portions of the second coil unit 2230-2 and the fourth coil unit 2230-4. In another embodiment, the third distance and the fourth distance may be equal to each other. For example, each of the first to fourth distances d1 to d4 may be the shortest distance.

For example, the second distance d2 may be less than the first distance d1, and the third distance d3 may be less than the fourth distance d4.

In addition, for example, the first distance d1 may be equal to the fourth distance d4, and the second distance d2 and the third distance d3 may be equal to each other.

Referring to FIGs. 66 and 67, when viewed from above, the first magnet 2130-1 may be located inside a region of the first coil unit 2230-1, and may overlap the first coil unit 2230-1 in the optical-axis direction.

When viewed from above, the second magnet 2130-2 may be located inside a region of the second coil unit 2230-2, and may overlap the second coil unit 2230-2 in the optical-axis direction. When viewed from above, the third magnet 2130-3 may be located inside a region of the third coil unit 2230-3, and may overlap the third coil unit 2230-3 in the optical-axis direction. When viewed from above, the fourth magnet 2130-4 may be located inside a region of the fourth coil unit 2230-4, and may overlap the fourth coil unit 2230-4 in the optical-axis direction.

The lengths L1 of the first to fourth magnets 2130-1 to 2130-4 may be equal to each other; however, the disclosure is not limited thereto. In another embodiment, the lengths of at least two of the first to fourth magnets 2130-1 to 2130-4 may be different from each other.

The widths W1 of the first to fourth magnets 2130-1 to 2130-4 may be equal to each other; however, the disclosure is not limited thereto. In another embodiment, the widths of at least two of the first to fourth magnets 2130-1 to 2130-4 may be different from each other.

The heights H1 of the first to fourth magnets 2130-1 to 2130-4 may be equal to each other; however, the disclosure is not limited thereto. In another embodiment, the heights of at least two of the first to fourth magnets 2130-1 to 2130-4 may be different from each other.

The length L1 of each of the first to fourth magnets 2130-1 to 2130-4 may be the length thereof in a longitudinal direction. In addition, the width W1 of each of the first to fourth magnets 2130-1 to 2130-4 may be the length thereof in a width direction. Here, the width direction may be perpendicular to the longitudinal direction, and the width of each of the components 2130-1 to 2130-4 may be less than the length thereof. In addition, the width of each of the components 2130-1 to 2130-4 may be referred to as a "thickness" of each of the components 2130-1 to 2130-4.

For example, the length L1 of each of the first to fourth magnets 2130-1 to 2130-4 may be the length of the first surface of each of the first to fourth magnets 2130-1 to 2130-4 facing the bobbin 2110 in the horizontal direction. In addition, for example, the width W1 of each of the first to fourth magnets 2130-1 to 2130-4 may be the distance from the first surface of each of the components 2130-1 to 2130-4 facing the bobbin 2110 to the second surface, which is a surface opposite to the first surface. In addition, for example, the height H1 of each of the first to fourth magnets 2130-1 to 2130-4 may be the length of each of the components in the optical-axis direction.

The lengths M1 of the first to fourth coil units 2230-1 to 2230-4 may be equal to each other; however, the disclosure is not limited thereto. In another embodiment, the lengths of at least two of the first to fourth coil units 2230-1 to 2230-4 may be different from each other.

The widths K1 of the first to fourth coil units 2230-1 to 2230-4 may be equal to each other; however, the disclosure is not limited thereto. In another embodiment, the widths of at least two of the first to fourth coil units 2230-1 to 2230-4 may be different from each other.

The heights T1 of the first to fourth coil units 2230-1 to 2230-4 may be equal to each other; however, the disclosure is not limited thereto. In another embodiment, the heights of at least two of the first to fourth coil units 2230-1 to 2230-4 may be different from each other.

The length M1 of each of the first to fourth coil units 2230-1 to 2230-4 may be the length of a corresponding one of the first to fourth magnets 2130-1 to 2130-4 in the longitudinal direction or a direction parallel thereto. In addition, the width K1 of each of the first to fourth coil units 2230-1 to 2230-4 may be the length of a corresponding one of the first to fourth magnets 2130-1 to 2130-4 in the width direction or a direction parallel thereto. The height T1 of each of the first to fourth coil units 2230-1 to 2230-4 may be the length thereof in the optical-axis direction.

The length L1 of each of the first to fourth magnets 2130-1 to 2130-4 in the longitudinal direction may be less than the length M1 of a corresponding one of the first to fourth coil units 2230-1 to 2230-4 in the longitudinal direction (L1<M1).

The length W1 of each of the first to fourth magnets 2130-1 to 2130-4 in the width direction may be less than the length K1 of a corresponding one of the first to fourth coil units 2230-1 to 2230-4 in the width direction (W1<K1).

For example, each of the first to fourth magnets 2130-1 to 2130-4 may include a part having a length reduced in a direction from the second surface to the first surface thereof. In addition, for example, each of the first to fourth magnets 2130-1 to 2130-4 may include a part having a width reduced in a direction from one end to the other end thereof. For example, each of the magnets 2130-1 to 2130-4 may include a tapered portion.

In addition, the distances between the magnets 2130-1 to 2130-4 and the coil units 2230-1 to 2230-4 in the optical-axis direction may be equal to each other; however, the disclosure is not limited thereto. In another embodiment, at least two of the distances may be different from each other.

The first sensor 2240A may be disposed so as to be opposite to or to overlap the first magnet 2130-1 in the optical-axis direction. For example, the first sensor 2240A may not overlap the second coil 2230, e.g. the first coil unit 2230-1, in the optical-axis direction.

The second sensor 2240B may be disposed so as to be opposite to or to overlap the third magnet 2130-3 in the optical-axis direction. For example, the second sensor 2240B may not overlap the second coil 2230, e.g. the third coil unit 2230-3.

The first sensor 2240A and the second sensor 2240B may be coupled or attached to the lower surface of the circuit board 2250 using a solder or a conductive adhesive member. For example, the first sensor 2240A and the second sensor 2240B may be conductively connected to the circuit board 2250. For example, the first sensor 2240A and the second sensor 2240B may be conductively connected to the terminals 2251 of the circuit board 2250.

For example, driving signals may be provided to the first sensor 2240A and the second sensor 2240B through the terminals 2251 of the circuit board 2250, and a first output of the first sensor 2240A and a second output of the second sensor 2240B may be output through the terminals 2251 of the circuit board 2250.

The controller 830 of the camera apparatus 200 or the controller 780 of the portable terminal 200A may sense or detect displacement of the OIS moving unit using the first output of the first sensor 2240A and the second output of the second sensor 2240B.

For example, the first sensor 2240A may sense the intensity of a magnetic field of the first magnet 2130-1 and may output the first output, and the second sensor 2240B may sense the intensity of a magnetic field of the third magnet 2130-3 and may output the second output.

The first sensor 2240A and the second sensor 2240B may sense displacement of the OIS moving unit in the direction perpendicular to the optical axis OA. Here, the OIS moving unit may include the housing 2140. Alternatively, for example, the OIS moving unit may include the AF driving unit and the components mounted to the housing 2140.

For example, the "OIS moving unit" may include the AF moving unit and the housing 2140, and may further include the first to fourth magnets 2130-1 to 2130-4 depending on embodiments.

The OIS moving unit (e.g. the housing 2140) may be moved in the direction perpendicular to the optical axis, such as the x-axis direction and/or the y-axis direction, by interaction between the first to fourth magnets 2130-1 to 2130-4 and the first to fourth coil units 2230-1 to 2230-4, whereby handshake compensation may be performed.

The base 2210 may include side portions and corner portions (or corners). For example, the base 2210 may include four side portions and four corner portions. The four seating portions 2213A1 to 2213A4 may be provided at the four side portions of the base 2210.

The corner portions of the base 2210 may correspond to or may be opposite to the corner portions 2142-1 to 2142-4 of the housing 2140 in the optical-axis direction.

The escape portion 2212A may be formed at each of the corner portions of the base 2210, and the third surface 2030C may be formed thereat. For example, the third surface 2030C and the second stair surface 2031B of the base 2210 may form a "stair portion" configured to allow the terminal member 2027 to be disposed thereon.

For example, in order to avoid spatial interference with coupled or bonded portions between the supporting members 2220-1 to 2220-4 and the terminal member 2027, the escape portion 2212A may be a recess or a concave recess. The width or diameter of the recess of the escape portion 2212A or the distance between inner surfaces of the recess that face each other may be increased in a direction from the center of the base 2210 to the corner portion of the base 2210; however, the disclosure is not limited thereto.

The recess of the escape portion 2212A may be formed through the third surface 2030C of the base 2210, and the recess may have an opening open to the outer surface of the base 2210.

The terminal member 2027 may be disposed on the third surface 2030C of the base 2210.

For example, the recess of the escape portion 2212A may expose a solder 2902 configured to couple a lower surface of the terminal member 2027 and the supporting member 2220 to each other from the lower surface of the base 2210.

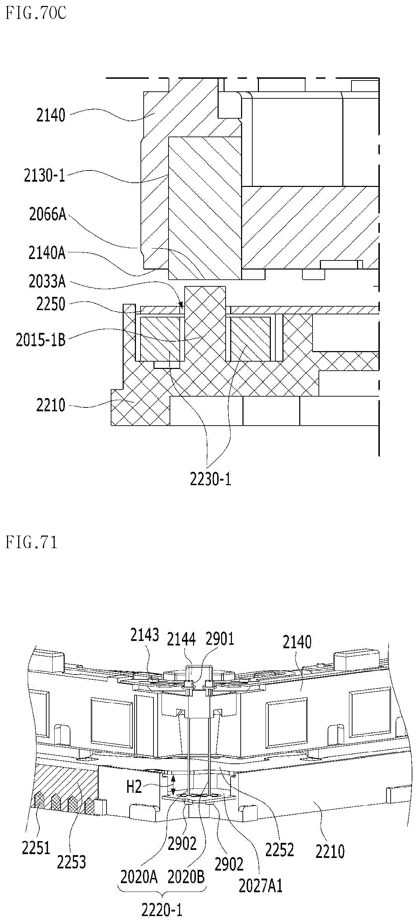

In order to avoid spatial interference between the solder 2902 (see FIG. 71) and the base 2210, the recess of the escape portion 2212A may overlap coupling portions 2081 and 2082 of the terminal member 2027 and the solder 2902 in the optical-axis direction.

The first position sensor 2170 may be disposed between the base 2210 and the circuit board 2250. For example, the first position sensor 2170 may be disposed between the upper surface of the base 2210 and the lower surface of the circuit board 2250. For example, the first position sensor 2170 may be disposed between the first surface 2030A of the upper surface 2030 of the base 2210 and the lower surface of the circuit board 2250.

The first position sensor 2170 may be mounted on, connected to, or coupled to the lower surface of the circuit board 2250. For example, the first position sensor 2170 may be disposed in the seating portion 2214C of the base 2210.

The first position sensor 2170 may be conductively connected to the circuit board 2250. For example, the first position sensor 2170 may be conductively connected to the terminals 2251 of the circuit board 2250.

For example, at least a part of the first position sensor 2170 may correspond to, may be opposite to, or may overlap the sensing magnet 2180 in the optical-axis direction, and may not overlap the magnet 2130. In addition, for example, the first position sensor 2170 may not overlap the second coil 2230 in the optical-axis direction.

Referring to FIG. 62, for example, the first position sensor 2170 may be disposed on the upper surface of the base 2210 located between the second coil unit 2230-2 and the fourth coil unit 2230-4. The reason for this is that, since the fourth distance d4 between the second coil unit 2230-2 and the fourth coil unit 2230-4 is greater than the second distance and the third distance, the first position sensor 2170 is less affected by a magnetic field generated by the second coil unit 2230-2 and a magnetic field generated by the fourth coil unit 2230-4.

For example, the distance between the first position sensor 2170 and the second coil unit 2230-2 may be equal to the distance between the first position sensor 2170 and the fourth coil unit 2230-4. At this time, the distance may be the shortest distance. For example, the distance between the first position sensor 2170 and the second curved portion 2057D of the second coil unit 2230-2 may be equal to the distance between the first position sensor 2170 and the second curved portion 2059D of the fourth coil unit 2230-4. At this time, the distance may be the shortest distance.

This configuration is provided to reduce the effect of magnetic fields generated from the second coil unit 2230-2 and the fourth coil unit 2230-4 on the first position sensor 2170. In another embodiment, both may be different from each other.

The bobbin 2110 and the sensing magnet 2180 may be moved in the optical-axis direction by interaction between the first coil 2120 and the magnet 2130, and the first position sensor 2170 may sense the intensity of a magnetic field of the sensing magnet 2180 and may output an output signal based on the result of sensing. That is, the first position sensor 2170 may serve to sense displacement of the AF moving unit (e.g. the bobbin 2110) in the optical-axis direction.

The first position sensor 2170 may be implemented by a position sensor, such as a Hall sensor, alone or in the form of a driver integrated circuit (IC) including a Hall sensor.

When the first position sensor 2170 is implemented by a Hall sensor alone, the first position sensor 2170 may include two input terminals and two output terminals conductively connected to the circuit board 2250. The first position sensor 2170 may receive a driving signal from the circuit board 2250, and output of the first position sensor 2170 may be transmitted to the circuit board 2250.

When the first position sensor 2170 is a driver IC including a Hall sensor, the first position sensor may include one terminal for a clock signal, one terminal for a data signal, two terminals for a power signal, and two terminals configured to provide a driving signal to the first coil 2120, and these six terminals may be conductively connected to the circuit board 2250. When each of the first sensor 2240A and the second sensor 2240B is a driver IC including a Hall sensor, a description of the first position sensor 2170 implemented in the form of the driver IC may be applied or applied correspondingly thereto.

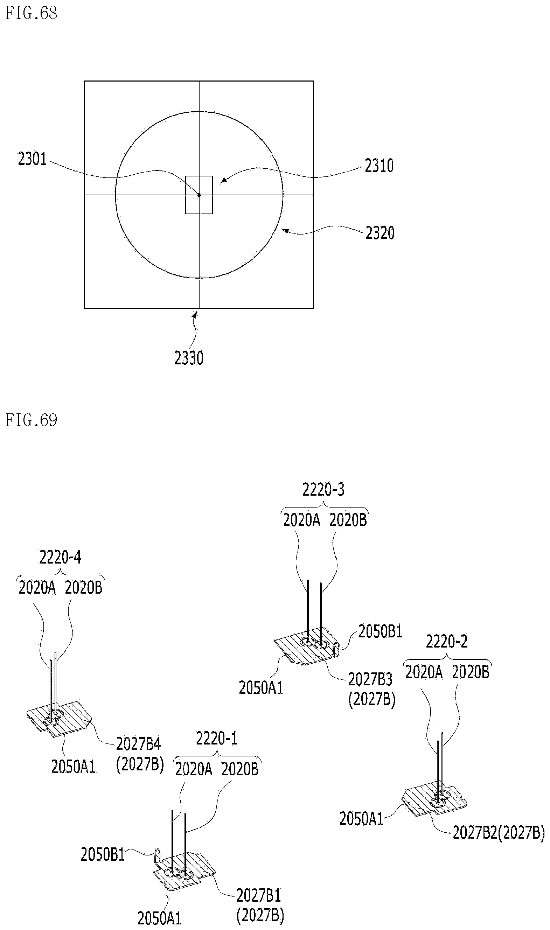

FIG. 68 is a view illustrating the relationship between the stroke range of the OIS moving unit according to the embodiment in the direction perpendicular to the optical axis, the size of the sensing magnet 2180, and the disposition of the first position sensor 2170.

2310 may be a sensing element or a sensing region of the first position sensor 2170 configured to sense the intensity of a magnetic field of the sensing magnet 2180. 2320 may be the stroke range of the OIS moving unit. 2330 may be a region on which the sensing magnet 2180 is disposed, and the region is shown as a square in FIG. 68; however, the disclosure is not limited thereto, and the region may be shown as a circle, a polygon, or an oval depending on the shape of the sensing magnet 2180.

Referring to FIG. 68, in order to improve sensitivity of the first position sensor 2170, the sensing element 2310 of the first position sensor 2170 may overlap the sensing magnet 2180 in the optical-axis direction. For example, FIG. 68 shows disposition of the sensing magnet 2180 and the first position sensor 2170 at the initial position of the OIS moving unit.

At the initial position of the OIS moving unit, the sensing element 2310 of the first position sensor 2170 may overlap the sensing magnet 2180 in the optical-axis direction.

For example, at the initial position of the OIS moving unit, the sensing element 2310 of the first position sensor 2170 may overlap the center 2301 or the central region of the sensing magnet 2180 in the optical-axis direction or may be aligned with the center 2301 of the sensing magnet 2180; however, the disclosure is not limited thereto.

The first position sensor 2170 is disposed on a stationary unit (e.g. the circuit board 2250 and the base 2210), and the sensing magnet 2180 is disposed on the OIS moving unit. When the OIS moving unit is moved relative to the stationary unit in the direction perpendicular to the optical axis, therefore, alignment or the relative positional relationship between the sensing magnet 2180 and the first position sensor 2170 in the optical-axis direction may be changed, whereby sensitivity of the first position sensor 2170 may be reduced or sensitivity of the first position sensor 2170 may be affected.

The stroke range 2320 of the OIS moving unit in the direction perpendicular to the optical axis may overlap the sensing magnet 2180 in the optical-axis direction, whereby it is possible to prevent reduction in sensitivity of the first position sensor 2170 due to movement of the OIS moving unit in the direction perpendicular to the optical axis.

For example, the stroke range 2320 of the OIS moving unit may be a circle having the maximum stroke of the OIS moving unit as the radius. The maximum stroke of the OIS moving unit may be the maximum stroke of the OIS moving unit in any one direction perpendicular to the optical axis (e.g. a +X-axis direction or a +Y-axis direction) at the initial position of the OIS moving unit.

That is, even when the OIS moving unit is moved in the direction perpendicular to the optical axis, the state in which the first position sensor 2170 and the sensing magnet 2180 at least partially overlap each other in the optical-axis direction may be maintained. For example, the state in which the sensing element of the first position sensor 2170 and the sensing magnet 2180 overlap each other in the optical-axis direction may be maintained within the movement range or total displacement of the OIS moving unit in the direction perpendicular to the optical axis.

In addition, the sensing magnet 2180 may have a size capable of covering the stroke range 2320 of the OIS moving unit.

For example, the sectional area of the sensing magnet 2180 in the direction perpendicular to the optical axis may be greater than the area of the stroke range 2320 of the OIS moving unit. In another embodiment, the sectional area of the sensing magnet 2180 in the direction perpendicular to the optical axis may be equal to the stroke range of the OIS moving unit.

The OIS moving unit may droop (or move) in the direction of gravity due to the effect of gravity, and resolution of the camera module may be reduced due to such drooping (or movement). As the weight of the OIS moving unit is increased due to an increase in size of the lens, drooping of the OIS moving unit in the direction of gravity due to the effect of gravity may further increased, whereby resolution of the camera module may be further reduced.

Since the first position sensor 2170 is disposed on the stationary unit in the embodiment, it is possible to automatically compensate or correct movement (or drooping) of the AF moving unit caused by movement (or drooping) of the OIS moving unit due to the effect of gravity.

In another embodiment, the first position sensor 2170 may be disposed on the housing 2140 so as to correspond to the sensing magnet 2180, not on the base 2210.

In another embodiment, the sensing magnet may be disposed on the housing, and the first position sensor may be disposed on the bobbin 2110.

A magnetic field may be generated at the second coil 2230 to which a driving signal is provided for OIS driving. In order to improve accuracy of the first position sensor 2170, it is preferable for the first position sensor 2170 to be spaced apart from the second coil 2230 so as to be less affected by the magnetic field of the second coil 2230.

In the embodiment, in order to reduce the effect of the magnetic field of the second coil 2230, the first position sensor 2170 may be disposed on one region of the upper surface of the base 2210 on which the first to fourth coil units 2230-1 to 2230-4 are not disposed, and the first position sensor 2170 may not overlap the second coil 2230 in the optical-axis direction.

The terminal member 2027 may be disposed on the base 2210. The terminal member 2027 may be coupled or connected to the other end of the supporting member 2220. The terminal member 2027 may be conductively connected to the supporting member 2220, and may be conductively connected to the circuit board 2250. The terminal member 2027 may conductively connect the supporting member 2220 and the circuit board 2250 to each other.

In another embodiment, the terminal member 2027 may be omitted, and the supporting member 2220 may be directly coupled or connected to the circuit board 2250. For example, in another embodiment, the supporting member 2220 may be coupled to the lower surface or the upper surface of the circuit board 2250 using a solder or a conductive adhesive member, and may be conductively connected to the circuit board 2250.

The terminal member 2027 may be disposed so as to be spaced apart from the first surface 2030A of the upper surface 2030 of the base 2210 on which the circuit board 2250 is disposed. For example, a region of the terminal member 2027 coupled to the supporting member 2220 may be located lower than the upper surface 2030 of the base 2210.

The terminal member 2027 may be located between the first surface 2030A and the third surface 2030C of the upper surface of the base 2210.

For example, the upper surface of the terminal member 2027 coupled to the supporting member 2220 may be located so as to be higher than the lower surface of the base 2210 and to be lower than the first surface 2030A of the upper surface 2030 of the base 2210. For example, the upper surface of the terminal member 2027 may be located so as to be higher than the third surface 2030C of the upper surface of the base 2210 and to be lower than the first surface 2030A of the upper surface 2030 of the base 2210.

For example, the lower surface of the terminal member 2027 may be located so as to be higher than the lower surface of the base 2210 and to be lower than the first surface 2030A of the upper surface 2030 of the base 2210. For example, the lower surface of the terminal member 2027 may be located so as to be higher than the third surface 2030C of the upper surface of the base 2210 and to be lower than the first surface 2030A of the upper surface 2030 of the base 2210.

Referring to FIG. 65D, for example, a lower surface of a body 2050A of the terminal member 2027 may be located lower than the lower surface of the coil unit (e.g. 2230-1) of the second coil 2230. For example, an upper surface of the body 2050A of the terminal member 2027 may be located lower than the lower surface of the coil unit (e.g. 2230-1) of the second coil 2230. For example, the lower surfaces of the coil units 2230-1 to 2230-4 may be located at the same height.

In another embodiment, for example, the lower surface (or the upper surface) of the body 2050A of the terminal member 2027 may be located in the same plane as the lower surface of the coil unit (e.g. 2230-1) of the second coil 2230.

In another embodiment, for example, the lower surface (or the upper surface) of the body 2050A of the terminal member 2027 may be located higher than the lower surface of the coil unit (e.g. 2230-2) of the second coil 2230.

The terminal member 2027 may include at least one terminal coupled to the supporting members (e.g. 2220-1 to 2220-4). For example, the terminal member 2027 may include a plurality of terminals 2027A1 to 2027A4.

Referring to FIG. 59, the terminal member 2027 may include terminals 2027A1 to 2027A4 corresponding to the supporting members 2220-1 to 2220-4.

The terminal member 2027 of the embodiment of FIG. 59 may include four terminals 2027A1 to 2027A4. Two terminals 2027A1 and 2027A2, among the four terminals 2027A1 to 2027A4, may be connected to each other, and the remaining two terminals 2027A3 and 2027A4, among the four terminals 2027A1 to 2027A4, may be connected to each other. In another embodiment, at least two selected from among the four terminals may be connected to each other.

For example, the terminal member 2027 may include a first connection portion 2007A that connects the first and second terminals 2027A1 and 2027A2 to each other and a second connection portion 2007B that connects the third and fourth terminals 2027A3 and 2027A4 to each other. In addition, for example, first and second terminals 2027A1 and 2027A2 may be spaced apart from and may be conductively independent of or separated from the third and fourth terminals 2027A3 and 2027A4.

Since the terminal member 2027 serves to conductively connect the first coil 2120 and the circuit board 2250 to each other in the embodiment of FIG. 59, the terminal member 2027 is divided into two parts; however, the disclosure is not limited thereto. In another embodiment, the terminal member 2027 may have an all-in-one structure in which the four terminals 2027A1 to 2027A4 are connected to each other. In another embodiment, the terminal member 2027 may be divided into three parts or more.

Hereinafter, a description of the first terminal 2027A1 may be applied or applied correspondingly to the second and third terminals 2027A2 and 2027A3. Referring to FIG. 59, the first terminal 2027A1 may include a body 2050A1 coupled to the supporting member 2220-1 and an extension portion 2050B1 extending from the body 2050A1. One end of the extension portion 2050B1 may be conductively connected to the circuit board 2250.

In FIG. 59, each of the first terminal 2027A1 and the third terminal 2027A3 may include the extension portion 2050B1, and each of the second terminal 2027A2 and the fourth terminal 2027A4 may include no extension portion 2050B1; however, the disclosure is not limited thereto. In another embodiment, at least one of the terminals of the terminal member 2027 may include an extension portion conductively connected to the circuit board 2250.

For example, one end of the extension portion 2050B1 of the first terminal 2027A1 may be conductively connected to the first pad PA1 of the circuit board 2250 using a solder or an adhesive member. In addition, for example, the extension portion 2050B1 of the third terminal 2027A3 may be conductively connected to the second pad PA2 of the circuit board 2250 using a solder or an adhesive member.

The body 2050A1 may be disposed on the third surface 2030C of the base 2210. The body 2050A1 may be located lower than the circuit board 2250. For example, the upper surface of the body 2050A1 may be located lower than the lower surface of the circuit board 2250.

FIG. 71 shows coupling between the first supporting member 2220-1 and the first terminal 2027A1 via the solder 2902 and the stair between the circuit board 2250 and the body 2050A1 of the first terminal 2027A1. A description of FIG. 71 may be applied or applied correspondingly to the second to fourth supporting members 2220-2 to 2220-4 and the second to fourth terminals 2027A2 to 2027A4.

Referring to FIG. 71, the upper surface of the body 2050A1 coupled to the supporting member 2220-1 may be located lower than the lower surface of the circuit board 2250. As a result, for example, a stair H2 may be present between the lower surface of the circuit board 2250 and the upper surface of the body 2050A1 of the first terminal 1027A in the optical-axis direction. The stair H2 may be the height difference between the lower surface of the circuit board 2250 and the upper surface of the body 2050A1 in the optical-axis direction.

When compared to another embodiment in which the supporting member is directly coupled to the circuit board using a solder, etc., it is possible to increase the length of the first supporting member 2220-1 in the optical-axis direction due to the stair H2 in the embodiment of FIG. 22. As the length of the first supporting member 2220-1 is increased, resistance of the first supporting member 2220-1 may be increased, and the intensity of current that flows in the first supporting member 2220-1 may be decreased. As a result, the embodiment is capable of reducing power consumption and preventing lowering in reliability of OIS driving due to reduction in diameter of an OIS wire necessary to reduce power consumption.

The body 2050A1 may include coupling regions 2081A and 2082A coupled to the supporting member 2220-1 and first holes 2081B and 2082B formed in the coupling regions 2081A and 2082A. Each of the coupling regions 2081A and 2082A may be a region of the body 2050A1 to which the supporting member 2220-1 and the solder 2902 are coupled.

Each of the first holes 2081B and 2082B may be a through-hole. The other end of the supporting member 2220-1 may extend through the first holes 2081B and 2082B, and the other end of the supporting member 2220-1 that has extended through the first holes 2081B and 2082B may be coupled to lower portions or lower surfaces of the coupling regions 2081A and 2082A using the solder 2902 or the conductive adhesive.

The diameter R11 of each of the first holes 2081B and 2082B may be greater than the diameter of the supporting member 2220-1.

For example, the diameter (or the thickness) of the 1-1 supporting member 2020A may be 40 micrometers to 100 micrometers. Alternatively, for example, the diameter (or the thickness) of the 1-1 supporting member 2020A may be 50 micrometers to 70 micrometers. Alternatively, for example, the diameter (or the thickness) of the 1-1 supporting member 2020A may be 50 micrometers to 60 micrometers.

The diameter R11 of each of the first holes 2081B and 2082B may be 0.15 mm to 0.3 mm. Alternatively, for example, the diameter R11 of each of the first holes 2081B and 2082B may be 0.2 mm to 0.25 mm. Alternatively, for example, the diameter R11 each of the first holes 2081B and 2082B may be 0.15 mm to 0.2 mm.

In FIG. 59, the shape of each of the coupling regions 2081A and 2082A may be a circle; however, the disclosure is not limited thereto. In another embodiment, the shape of each of the coupling regions may be an oval or a polygon (e.g. a triangle or a quadrangle).

The diameter R12 of each of the coupling regions 2081A and 2082A may be greater than the diameter R11 of each of the first holes 2081B and 2082B. For example, each of the coupling regions 2081A and 2082A may have an area or a diameter sufficient to allow the solder 2902 and the supporting member 2220-1 to be well coupled thereto.

In addition, the body 2050A1 may include at least one second hole 2081D and 2082D formed around the coupling regions 2081A and 2082A. For example, the body 2050A1 may include at least one second hole 2081D and 2082D formed so as to encompass the coupling regions 2081A and 2082A.

For example, the body 2050A1 may include a plurality of second holes 2081D and 2082D formed so as to encompass the coupling regions 2081A and 2082A, and the plurality of second holes 2081D and 2082D may be spaced apart from each other.

In addition, the plurality of second holes 2081D and 2082D may be spaced apart from the first holes 2081B and 2082B.

At least one second hole 2081D and 2082D may serve to allow a solder to be mainly formed on only the coupling regions 2081A and 2082A due to interface tension (e.g. surface tension) at edges of the coupling regions 2081A and 2082A during soldering.

In addition, the coupling regions 2081A and 2082A must be heated for soldering, and transmission of heat from the coupling regions 2081A and 2082A to the other region of the body 2050A1 may be inhibited or interrupted by the at least one second hole 2081D and 2082D, whereby soldering may not be performed on the other region of the body 2050A1. As a result, the at least one second hole 2081D and 2082D may improve solderability of the solder 2902 (2064A and 2064B).

In addition, the body 2050A1 may include supporting portions 2081C and 2082C located between the plurality of second holes 2081D and 2082D so as to support the coupling regions 2081A and 2082A. Each of the supporting portions 2081C and 2082C may be referred to as a "connection portion" or a "bridge."

For example, the supporting portions 2081C and 2082C may include a plurality of supporting portions spaced apart from each other.

For example, a coupling portion of the first terminal 2027A1 may include a first coupling portion 2081 coupled to the 1-1 supporting member 2020A of the first supporting member 2220-1 and a second coupling portion 2082 coupled to the 1-2 supporting member 2020B.

Each of the first and second coupling portions 2081 and 2082 may include the coupling regions 2081A and 2082A and the first holes 2081B and 2082B. In addition, each of the first and second coupling portions 2081 and 2082 may include the plurality of second holes 2081D and 2082D and the supporting portions 2081C and 2082C.

For example, the extension portion 2050B1 may protrude from the upper surface of the body 2050A1 toward the circuit board 2250. For example, the extension portion 2050B1 may protrude from the upper surface of the body 2050A1 in the optical-axis direction or the upward direction.

One end of the extension portion 2050B1 may be connected to the body 2050A1, and the other end of the extension portion 2050B1 may be connected to the pad PA1 of the circuit board 2250.

Referring to FIGs. 60A and 60B, the circuit board 2250 may include at least one pad (e.g. PA1 and PA2), and the at least one pad PA1 or PA2 may be disposed on the upper surface of the circuit board 2250. For example, the pad PA1 or PA2 may be disposed on the upper surface of the body 2252 of the circuit board 2250 adjacent to the terminal member 2253 of the circuit board 2250.

The extension portion 2050B1 of the terminal 2027A1 or 2027A3 and the pad PA1 or PA2 of the circuit board 2250 may be coupled to each other using a solder 2904 or a conductive adhesive, and may be conductively connected to each other.

The extension portion 2050B1 may include at least one bent or curved portion.

For example, the extension portion 2050B1 may include a first part disposed on the second stair surface 2031B of the base 2210. The extension portion 2050B1 may include a part bent or curved from the body 2050A1 toward the circuit board 2250, and may be connected or coupled to the pad PA1 or PA2 of the circuit board 2250.

For example, the terminal (e.g. 2027A1) may have a recess 2011A formed adjacent to a bent portion such that the extension portion 2050B1 can be easily bent.

In another embodiment, the extension portion may further include a second part connected to the first part of the extension portion and disposed on the upper surface of the circuit board 2250, and the second part may be coupled or connected to the pad PA1 or PA2 using a solder or a conductive adhesive. For example, the extension portion according to the other embodiment may further include a bent portion formed between the first part and the second part.

In addition, as shown in FIGs. 60A and 60B, a stair may be formed between the outer surface of the side portion of the housing 2140 and the outer surface of the corner portion thereof. The reason that the stair is formed is that, since the thickness of each corner portion of the housing 2140 is small, the stair is formed to prevent damage thereto due to external impact.

The first terminal 2027A1 may be coupled or attached to the base 2210 using an adhesive. For example, the body 2050A1 may be coupled or attached to the third surface 2030C of the upper surface 2030 of the base 2210 using an adhesive, and the extension portion 2050B1 may be coupled or attached to the third surface 2030C and the second stair surface 2031B of the upper surface 2030 of the base 2210.

In another embodiment, at least a part of the terminal member 2027 may be inserted into or coupled to the base 2210 by insert injection molding. For example, the terminal member 2027 may be formed with the base 2210 by insert injection molding, and at least a part of the terminal member 2027 may be inserted into the base 2210 or may be disposed in the base 2210.

For example, the third terminal 2027A3 may have a structure identical or similar to the structure of the first terminal 2027A1, and a description of the first terminal 2027A1 may be applied or analogically applied to the third terminal 2027A3. In addition, each of the second and fourth terminals 2027A2 and 2027A4 may be configured such that the extension portion 2050B1 of the first terminal 2027A1 is omitted therefrom; however, the disclosure is not limited thereto.

In another embodiment, each of the second and fourth terminals may have the same shape or structure as the first terminal 2027A1. That is, each of the second and fourth terminals 2027A2 and 2027A4 may include the extension portion 2050B1 of the first terminal 2027A1. At this time, the circuit board 2250 may have a pad coupled or conductively connected to each of the extension portions of the second and fourth terminals 2027A2 and 2027A4.

FIG. 69 shows a terminal member 2027B according to another embodiment.

Referring to FIG. 69, the terminal member 2027B may include four terminals 2027B1 to 2027B4 spaced apart from each other. The terminal member 2027B is a modification of the terminal member 2027 of FIG. 59, and the first and connection portions 2007A and 2007B of FIG. 59 may be omitted from the terminal member 2027B.

The cover member 2300 may receive the OIS moving unit, the upper elastic member 2150, the lower elastic member 2160, the second coil 2230, the base 2210, the terminal member 2027, the circuit board 2250, the supporting member 2220, and the second position sensor 2240 in a receiving space formed together with the base 2210.

The cover member 2300 may be a box that is open at a lower portion thereof and that includes an upper plate 2301 and side plates 2302. A lower portion of the side plate 2302 of the cover member 2300 may be coupled to the stair 2211 of the base 2210. The shape of the upper plate 2301 of the cover member 2300 may be a polygon, such as a quadrangle or an octagon.

An opening 2303, through which the lens module 400 coupled to the bobbin 2110 is exposed to external light, may be formed in the upper plate 2301 of the cover member 2300. The material for the cover member 2300 may be a nonmagnetic material, such as SUS, in order to prevent a phenomenon in which the cover member sticks to the magnet 2130. The cover member 2300 may be made of a metal sheet; however, the disclosure is not limited thereto, and the cover member may be made of plastic or a resin material. In addition, the cover member 2300 may be connected to a ground terminal of the circuit board 2250 of the lens moving apparatus 2100 and/or a ground of a circuit board 800 of the camera apparatus 200. The cover member 2300 may block electromagnetic interference (EMI).

In the embodiment of FIGs. 61A and 61B, each of the two supporting members 2020A and 2020B of the first supporting member 2220-1 may be implemented by a one-strand wire ; however, the disclosure is not limited thereto. For example, each of the two supporting members 2020A and 2020B of the first supporting member 2220-1 may be a wire made of a conductive material.

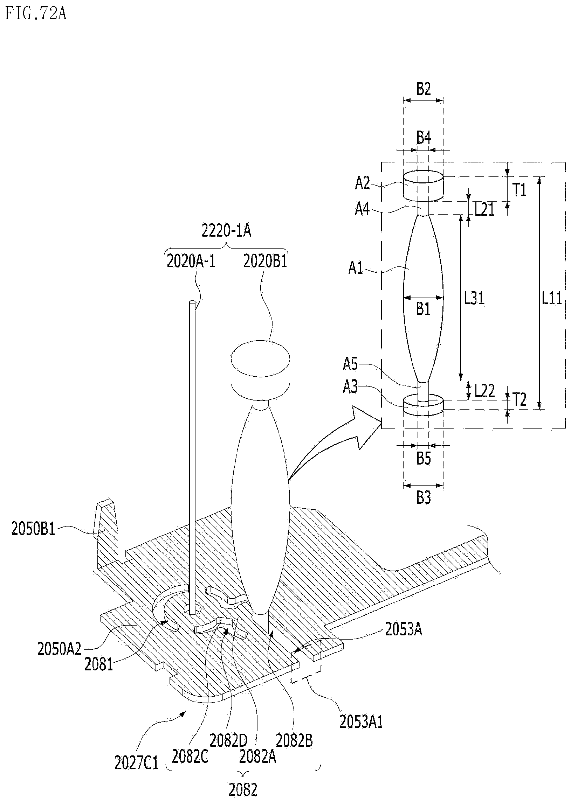

FIG. 72A shows a first supporting member 2220A-1 according to another embodiment. Hereinafter, a description of the first supporting member 2220A-1 may be applied or applied correspondingly to the second to fourth supporting members 2220-2 to 2220-4, the terminals of the terminal member 2027 corresponding thereto, and the upper elastic members.

Referring to FIG. 72A, the first supporting member 2220A-1 may include a 1-1 supporting member 2020A-1 implemented by a one-strand wire and a 1-2 supporting member 2020B1 made of a nonconductive material.

The first supporting member 2220A-1 and the 1-2 supporting member 2020B1 may be disposed on at least one of the corner portions 2142-1 to 2142-4 of the housing 2140. For example, the first supporting member 2220A-1 and the 1-2 supporting member 2020B1 may be disposed on each of the corner portions 2142-1 to 2142-4 of the housing 2140.

For example, the 1-1 supporting member 2020A-1 may have different stiffness (or spring constant) from the 1-1 supporting member 2020A (or the 1-2 supporting member 2020B) of FIG. 61A.

For example, the stiffness (or spring constant) of the 1-1 supporting member 2020A-1 may be less than the stiffness (or spring constant) of the 1-1 supporting member 2020A (or the 1-2 supporting member 2020B) of FIG. 61A.

For example, the diameter of the 1-1 supporting member 2020A-1 may be equal to or less than the diameter of the 1-1 supporting member 2020A (or the 1-2 supporting member 2020B) of FIG. 61A. For example, the range of the diameter of the 1-1 supporting member 2020A of FIG. 61A may be applied or applied correspondingly to the range of the diameter of the 1-1 supporting member 2020A-1.

In contrast, the 1-2 supporting member 2020B1 made of the nonconductive material may have different stiffness (or spring constant) from the 1-1 supporting member 2020A (or the 1-2 supporting member 2020B) of FIG. 61A.

For example, the stiffness (or spring constant) of the 1-2 supporting member 2020B1 made of the nonconductive material may be greater than the stiffness (or spring constant) of the 1-1 supporting member 2020A (or the 1-2 supporting member 2020B) of FIG. 61A.

For example, the bobbin 2110, the housing 2140, and/or the base 2210 may include an injection molded material formed by injection molding. Here, the injection molded material may include at least one of resin, rubber, urethane, and plastic.

The 1-2 supporting member 2020B1 may also be made of an injection molded material formed by injection molding, and may be elastically deformed. For example, the 1-2 supporting member 2020B1 may include at least one of resin, rubber, urethane, plastic, and a thermoplastic elastomer.

The section of the 1-2 supporting member 2020B1 in the direction perpendicular to the optical axis may be circular; however, the disclosure is not limited thereto. In another embodiment, the section of the 1-2 supporting member 2020B1 in the direction perpendicular to the optical axis may be polygonal.

The 1-2 supporting member 2020B1, which is made of the injection molded material, may serve as a damper configured to perform buffer action.

One end of the 1-2 supporting member 2020B1 may be coupled or connected to the second coupling portion 2072B of the first outer frame 2152 of the first upper elastic member 2150-1. For example, one end of the 1-2 supporting member 2020B1 may be coupled to the second coupling portion 2072B of the first outer frame 2152 using an adhesive.

The adhesive 2350 may be disposed between a first end A2 (or a "first stationary portion") of the 1-2 supporting member 2020B1 and the second coupling portion 2072B of the first outer frame 2152 of the first upper elastic member 2150-1 corresponding thereto, and may couple or attach both to each other.

For example, at least a part of the adhesive 2350 may be disposed on the first end A2 (or the "first stationary portion") of the 1-2 supporting member 2020B1 and the second coupling portion 2072B of the first outer frame 2152 of the first upper elastic member 2150-1, and may couple both to each other.

For example, the adhesive 2350 may be resin (e.g. epoxy) or silicone; however, the disclosure is not limited thereto.

The other end of the 1-2 supporting member 2020B1 may be coupled to the first terminal 2027A1.

A first terminal 2027C1 is a modification of the first terminal 2027A1 of FIG. 61A, and a body 2050A2 of the first terminal 2027C1 may further include a third hole 2053A connected to or communicating with the second coupling portion 2082. For example, a part of the third hole 2053A may be formed in the coupling region 2082A of the second coupling portion 2082, and may be connected to or may communicate with the first hole 2082B of the body 2050A1. Another part of the third hole 2053A may be formed so as to extend from the first hole 2082B to an outer surface of the body 2050A2, and may include an opening 2053A1 open to the outer surface of the body 2050A1.

For example, the first hole 2082B and the third hole 2053A may be formed as a single hole. That is, the first hole 2082B may be formed so as to extend to the outer surface of the body 2050A2, and may include an opening 2053A1 open to the outer surface of the body 2050A2.

For example, the other end of the 1-2 supporting member 2020B1 may be inserted or fitted into the third hole 2053A of the first terminal 2027C1 through the opening 2053A1 of the hole 2053A, and the other end of the 1-2 supporting member 2020B1 may be inserted into or disposed in the first hole 2082B. In addition, for example, the other end of the 1-2 supporting member 2020B1 and the first hole 2082B of the second coupling portion 2082 of the first terminal 2027C1 may be coupled to each other using an adhesive, such as epoxy or silicone.

The 1-2 supporting member 2020B1 may include a body A1, a first end A2 (or a first stationary portion) disposed between one side of the body A1 and the first upper elastic member 2150-1, and a second end A3 (or a second stationary portion) disposed between the other side of the body A1 and the first terminal 2027C1.

The body A1 may be columnar. For example, the body A1 may have a columnar shape having a convex middle. For example, the body A1 may be an entasis; however, the disclosure is not limited thereto. For example, the section of the body A1 in the direction perpendicular to the optical axis may be circular, oval, or polygonal (e.g. quadrangular).

For example, the body A1 may include at least a part having a diameter B1 gradually decreased from the middle to the first end A2 of the body A1. In addition, the body A1 may include at least a part having a diameter B1 gradually decreased from the middle to the second end A3 of the body A1. The diameter of the body A1 may be the length of the body A1 in the direction perpendicular to the optical axis.

For example, the diameter B1 of the body A1 may be gradually decreased from the middle to the first end A2 of the body A1, and the diameter B1 of the body A1 may be gradually decreased from the middle to the second end A3 of the body A1. The diameter of the body A1 may be the length of the body A1 in the direction perpendicular to the optical axis.

For example, the diameter of the body A1 may be increased and then decreased in a direction from the first end A2 (or the second end A3) to the second end A3 (or the first end A2)).

In another embodiment, the diameter of the body A1 may be gradually increased from the middle to the first end A2 of the body A1, and the diameter of the body A1 may be gradually increased from the middle to the second end A3 of the body A1.

In another embodiment, the diameter of the body A1 may be gradually decreased from the first end A2 to the second end A3. In another embodiment, the diameter of the body A1 may be gradually increased from the first end A2 to the second end A3.

In another embodiment, the diameter of the body A1 from the first end A2 (or a first connection portion A4) to the second end A3 (a second connection portion A5) may be uniform.

The first end A2 may be connected or coupled to the first upper elastic member 2150-1. The first end A2 may be disposed under the second coupling portion 2072B of the first outer frame 2152 of the first upper elastic member 2150-1.

The shape of the first end A2 may be cylindrical; however, the disclosure is not limited thereto, and the shape of the first end may be polyhedral (e.g. hexahedral). The sectional shape of the first end in the direction perpendicular to the optical axis may be circular, oval, or polygonal (e.g. quadrangular).

In another embodiment, the first end A2 may have a smaller size (e.g. diameter) than the hole 2152a of the first outer frame 2152, and may be disposed in the hole 2152a of the first outer frame 2152 of the first upper elastic member 2150-1 or may extend through the hole 2152a.

The second end A3 may be connected or coupled to the first terminal 2027C1. For example, the second end A3 may be coupled or attached to the first terminal 2027C1 using an adhesive.

The second end A3 may be disposed under the first hole 2082B of the body 2050A1 of the first terminal 2027C1.

The shape of the second end A3 may be cylindrical; however, the disclosure is not limited thereto, and the shape of the second end may be polyhedral (e.g. hexahedral). The sectional shape of the second end in the direction perpendicular to the optical axis may be circular, oval, or polygonal (e.g. quadrangular).

The 1-2 supporting member 2020B1 may further include a first connection portion A4 (or a first deformation portion) disposed between the body A1 and the first end A2. The first connection portion A4 may connect the body A1 and the first end A2 to each other.

The 1-2 supporting member 2020B1 may further include a second connection portion A5 (or a second deformation portion) disposed between the body A1 and the second end A3. The second connection portion A5 may connect the body A1 and the second end A3 to each other. At least a part of the second connection portion A5 may be disposed in the first hole 2082B of the first terminal 2027C1. For example, at least a part of the second connection portion A5 may extend through the first hole 2082B.

The length L31 of the body A1 in the optical-axis direction may be greater than each of the lengths T1 and T2 of the first and second ends A2 and A3 in the optical-axis direction.

The length L31 of the body A1 in the optical-axis direction may be greater than each of the lengths L21 and L22 of the first and second connection portions A4 and A5 in the optical-axis direction. In another embodiment, the length of the body A1 in the optical-axis direction may be equal to or less than the length of each of the first and second connection portions A4 and A5 in the optical-axis direction.

For example, the length L31 of the body A1 in the optical-axis direction may be 30% to 90% of the length L11 of the 1-2 supporting member 2020B1 in the optical-axis direction. For example, the length L31 of the body A1 in the optical-axis direction may be 65% to 80% of the length L11 of the 1-2 supporting member 2020B1 in the optical-axis direction. Alternatively, for example, the length L31 of the body A1 in the optical-axis direction may be 68% to 75% of the length L11 of the 1-2 supporting member 2020B1 in the optical-axis direction.

The length T1 of the first end A2 in the optical-axis direction may be greater than the length T2 of the second end A3 in the optical-axis direction. In another embodiment, the length T1 of the first end A2 in the optical-axis direction may be equal to or less than the length T2 of the second end A3 in the optical-axis direction.

The length L21 of the first connection portion A4 in the optical-axis direction may be equal to the length L22 of the second connection portion A5 in the optical-axis direction. In another embodiment, the length of the first connection portion A4 in the optical-axis direction may be different from the length of the second connection portion A5 in the optical-axis direction. For example, the length of the first connection portion A4 in the optical-axis direction may be greater or less than the length of the second connection portion A5 in the optical-axis direction.

The diameter B1 of the body A1 may be equal to or less than the diameter B2 of the first end A2 (or the diameter B3 of the second end A3). In another embodiment, the diameter B1 of the body A1 may be greater than the diameter B2 of the first end A2 (or the diameter B3 of the second end A3). The diameter B2 (or the diameter B3) may be the length of the first end A2 (or the second end A3) in the direction perpendicular to the optical axis.

The diameter B4 of the first connection portion A4 may be less than the diameter B2 of the first end A2. In addition, the diameter B5 of the second connection portion A5 may be less than the diameter B3 of the second end A3. The diameter B4 (or the diameter B5) may be the length of the first connection portion A4 (or the second connection portion A5) in the direction perpendicular to the optical axis.

For example, each of the diameter B4 of the first connection portion A4 and the diameter B5 of the second connection portion A5 may be 150 micrometers to 200 micrometers. Alternatively, for example, each of the diameter B4 of the first connection portion A4 and the diameter B5 of the second connection portion A5 may be 160 micrometers to 185 micrometers.

For example, the ratio of the diameter of the 1-1 supporting member 2020A-1 to the diameter B4 or B5 of the first connection portion A4 (or the second connection portion A5) may be 2.14 to 4. Alternatively, for example, the ratio of the diameter of the 1-1 supporting member 2020A-1 to the diameter B4 or B5 of the first connection portion A4 (or the second connection portion A5) may be 2.5 to 3.5. Alternatively, for example, the ratio of the diameter of the 1-1 supporting member 2020A-1 to the diameter B4 or B5 of the first connection portion A4 (or the second connection portion A5) may be 2.5 to 3.

If the ratio is less than 2.14, the first supporting member 2220-1 may not stably support the OIS moving unit during OIS driving, and the 1-2 supporting member 2020B1 may be cut.

If the ratio is greater than 4, on the other hand, the 1-2 supporting member 2020B1 may not be easily deformed during OIS driving, whereby more electromagnetic force is necessary to perform normal OIS driving, and therefore power consumption may be increased.

For example, the diameter B4 of the first connection portion A4 (or the diameter B5 of the second connection portion A5) may be 15% to 80% of the diameter B2 of the first end A2 (or the diameter B3 of the second end A3).

Alternatively, for example, B4 (or B5) may be 20% to 50% of B2 (or B3). Alternatively, for example, B4 (or B5) may be 20% to 30% of B2 (or B3).

Since the diameters B4 and B5 of the first and second connection portions A4 and A5 are less than the diameters B2 and B3 of the first and second ends A2 and A3 and the diameter B1 of the body A1, deformation may easily occur during OIS driving.

If B4 (or B5) is less than 15% of B2 (or B3), the first supporting member 2220-1A may not stably support the OIS moving unit during OIS driving, and the 1-2 supporting member 2020B1 may be cut.

If B4 (or B5) is greater than 80% of B2 (or B3), on the other hand, the 1-2 supporting member 2020B1 may not be easily deformed during OIS driving, whereby more electromagnetic force is necessary to perform normal OIS driving, and therefore power consumption may be increased.

For example, the diameters B4 and B5 of the first and second connection portions A4 and A5 may be equal to or less than the diameter B1 of the body A1. For example, the diameters B4 and B5 of the first and second connection portions A4 and A5 may be less than the diameter of a middle part of the body A1.

The diameter of the first hole 2082B of the first terminal 2027C1 may be greater than the diameter B5 of the second connection portion A5 such that at least a part of the second connection portion A5 is disposed in the first hole 2082B of the first terminal 2027C1.

The first and second connection portions A4 and A5 may be concave portions formed between the first end A2 and the body A2 and between the second end A3 and the body A1, respectively.

The body A1 may be referred to as a "first part," the first end A2 may be referred to as a "second part," the second end A3 may be referred to as a "third part," the first connection portion A4 may be referred to as a "fourth part" or a "first deformation portion," and the second connection portion A5 may be referred to as a "fifth part" or a "second deformation portion."

Each of the first connection portion A4 and the second connection portion A5 is basically circular but may have another shaped bend, and the number of connection portions may be different depending on characteristics of a product. The shape of the connection portion may be implemented in a partially bent or clamped form.

In another embodiment, the first connection portion and the second connection portion of FIG. 23A may be omitted, one side of the body may be connected to the first end, and the other side of the body may be connected to the second end.

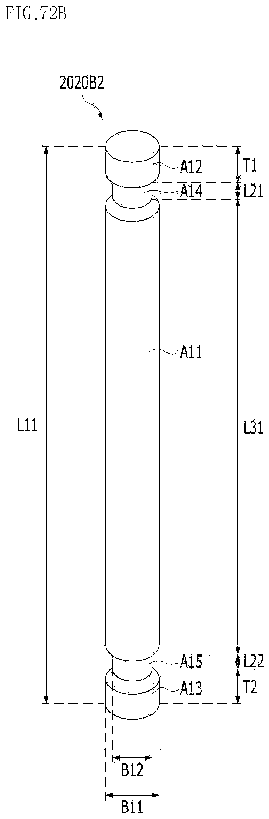

FIG. 72B is a perspective view of a 1-2 supporting member 2020B2 according to another embodiment.

Referring to FIG. 72B, the 1-2 supporting member 2020B2 is a modification of the 1-2 supporting member 2020B1, and the length of a body A11 of the 1-2 supporting member 2020B2 in the direction perpendicular to the optical axis may be uniform.

For example, the body A11 may have a linear or straight shape having a uniform diameter from one end to the other end thereof.

The 1-2 supporting member 2020B2 may include a body A11, a first end A12, and a second end A13. In addition, the 1-2 supporting member 2020B2 may include a first connection portion A14 that connects the first end A12 and one side of the body A11 to each other. In addition, the 1-2 supporting member 2020B2 may include a second connection portion A15 that connects the second end A13 and the other side of the body A11 to each other.

The diameter of the body A11 may be uniform from the first connection portion A14 to the second connection portion A15. A description of the length of each part of FIG. 72A in the optical-axis direction may be applied or applied correspondingly to the length of each part of FIG. 72B in the optical-axis direction.

Each of the diameter of the first end A12 and the diameter of the second end A13 may be equal to the diameter B11 of the body A11. In another embodiment, each of the diameter of the first end A12 and the diameter of the second end A13 may be different from the diameter B11 of the body A11.

The diameter of each of the first and second connection portions A14 and A15 may be less than the diameter of the first end A12, the diameter of the second end A13, and the diameter B11 of the body A11.

A description of FIG. 23A may be applied or applied correspondingly to the ratio of the diameters of the first and second connection portions A14 and A15 to the diameters of the first and second ends A12 and A13.

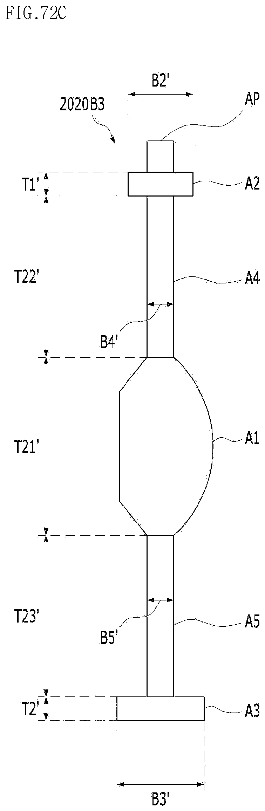

FIG. 72C is a perspective view of a 1-2 supporting member 2020B3 according to another embodiment.

Referring to FIG. 72C, the 1-2 supporting member 2020B3 may be another modification of the 1-2 supporting member 2020B1. For example, referring to FIG. 35C, the length T21' of a body A1 of the 1-2 supporting member 2020B3 in the optical-axis direction may be equal to or greater than the length T22' (or T23') of a fourth part A4 (or a fifth part A5) of the 1-2 supporting member 2020B3 in the optical-axis direction.

For example, the length T21' of the body A1 in the optical-axis direction may be 1 mm to 1.5 mm. For example, T21' may be 1.15 mm to 1.3 mm.

In addition, for example, the length T22' of the fourth part A4 in the optical-axis direction and the length T23' of the fifth part A5 in the optical-axis direction may be equal to each other. For example, each of T22' and T23' may be 0.8 mm to 1.4 mm. For example, each of T22' and T23' may be 1 mm to 1.2 mm.

In another embodiment, the length T22' of the fourth part A4 in the optical-axis direction and the length T23' of the fifth part A5 in the optical-axis direction may be different from each other. For example, the former may be greater or less than the latter.

In addition, for example, each of the length T1' of the first end A2 of the 1-2 supporting member 2020B3 in the optical-axis direction and the length T2' of the second end A3 of the 1-2 supporting member 2020B3 in the optical-axis direction may be less than the length T22' of the fourth part A4 in the optical-axis direction and/or the length T23' of the fifth part A5 in the optical-axis direction.

For example, each of T1' and T2' may be 0.1 mm to 0.2 mm. For example, each of T1' and T2' may be 0.1 mm to 0.15 mm.

In addition, the length T1' of the first end A2 in the optical-axis direction and the length T2' of the second end A3 in the optical-axis direction may be equal to each other; however, the disclosure is not limited thereto. In another embodiment, both may be different from each other. For example, Tl'>T2' and vice versa.

In addition, for example, the diameter B2' of the first end A2 of the 1-2 supporting member 2020B3 may be less than the diameter B3' of the second end A3 of the 1-2 supporting member 2020B3.

In addition, for example, each of the diameters B4' and B5' of the fourth part A4 and the fifth part A5 may be less than the diameter B2' of the first end A2 (or the diameter B3' of the second end A3).

For example, the diameter B2' of the first end A2 may be 0.3 mm to 0.5 mm. For example, the diameter B2' of the first end A2 may be 0.4 mm to 0.44 mm.

For example, the diameter B3' of the second end A3 may be 0.55 mm to 0.7 mm. For example, the diameter B3' of the second end A3 may be 0.6 mm to 0.65 mm.

For example, each of the diameters B4' and B5' of the fourth part A4 and the fifth part A5 may be 0.15 mm to 0.2 mm. Each of the diameters B4' and B5' of the fourth part A4 and the fifth part A5 may be 0.16 mm to 0.185 mm.

For example, each of the diameters B4' and B5' of the fourth part A4 and the fifth part A5 may be greater than the diameter (or the thickness) of the 1-1 supporting member 2020A. In another embodiment, both may be equal to each other. In another embodiment, the former may be less than the latter.

For example, each of the diameters B4' and B5' of the fourth part A4 and the fifth part A5 may be 1.5 to 5 times the diameter (or the thickness) of the 1-1 supporting member 2020A. For example, each of the diameters B4' and B5' of the fourth part A4 and the fifth part A5 may be 1.5 to 3 times the diameter (or the thickness) of the 1-1 supporting member 2020A. Alternatively, for example, each of the diameters B4' and B5' of the fourth part A4 and the fifth part A5 may be 2 to 3 times the diameter (or the thickness) of the 1-1 supporting member 2020A.

The body A1 of the 1-2 supporting member 2020B3, which is a part abutting an injection portion of a mold, through which an injection molded material is injected, may have a shape similar to the shape of the body A1 of the 1-2 supporting member 2020B1 of FIG. 23A, and may have at least one flat surface. At this time, the flat surface may be formed at the position corresponding to the injection portion of the mold.

The 1-2 supporting member 2020B3 may include a protrusion AP protruding from an upper surface of the first end A2. The protrusion AP may be coupled to the second coupling portion 2072 of the first upper elastic member 2150-1 via an adhesive member.

For example, the second coupling portion 2072 of the first upper elastic member 2150-1 may have a coupling hole to which the protrusion AP of the 1-2 supporting member 2020B3 is coupled, at least a part of the protrusion AP may be disposed in the coupling hole, and the adhesive member may be disposed on the protrusion AP and in the coupling hole so as to couple both to each other.

For example, the diameter of the protrusion AP may be equal to each of the diameters B4' and B5' of the fourth part A4 (and/or the fifth part A5). In another embodiment, the diameter of the protrusion AP may be less or greater than each of the diameters B4' and B5' of the fourth part A4 (and/or the fifth part A5). For example, the diameter of the protrusion AP may be equal to or less than the diameter of the coupling hole of the second coupling portion 2072 of the first upper elastic member 2150-1.

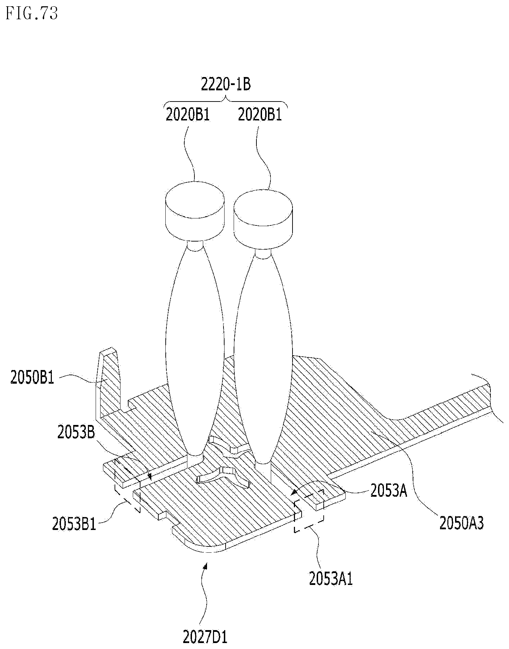

FIG. 73 is a perspective view of a first supporting member 2220-1B according to another embodiment.

Referring to FIG. 73, the first supporting member 2220-1B may include two supporting members, each of the two supporting members may be the 1-2 supporting member 2020B1 made of the nonconductive material described with reference to FIG. 72A.

A fourth hole 2053B may be formed in a body 2050A3 of the first terminal 2027D1 corresponding to the first supporting member 2220-1B, the fourth hole 2053B may include an opening 2053B1 open to an outer surface of the body 2050A3, and a description of the third hole 2053A and the opening 2053A1 of FIG. 72A may be applied or applied correspondingly to the embodiment of FIG. 73.

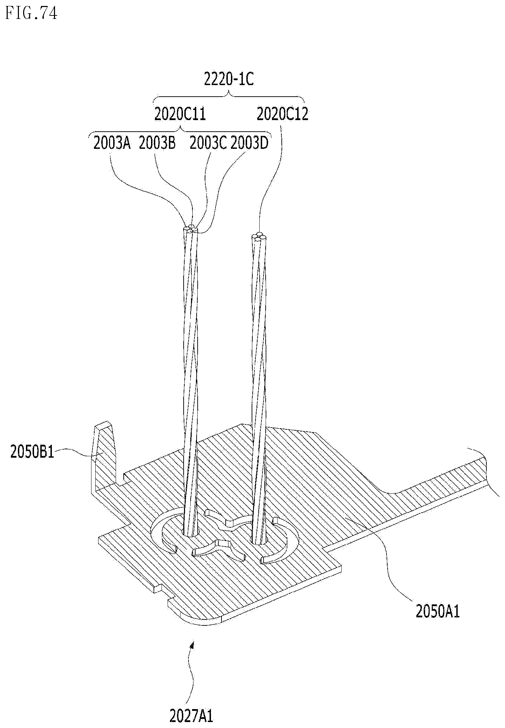

FIG. 74 is a perspective view of a first supporting member 2220-1C according to another embodiment.

Referring to FIG. 74, the first supporting member 2220-1C may include a 1-1 supporting member 2020C11 and a 1-2 supporting member 2020C12.

The 1-1 supporting member 2020A of FIG. 61A may be implemented by a one-strand wire, whereas each of the two supporting members 2020C11 and 2020C12 of FI. 74 may be implemented by a two-or-more-strand wire.

For example, each of the 1-1 supporting member 2020C11 and the 1-2 supporting member 2020C12 may be implemented by a four-strand wire.

For example, the diameter (or the thickness) of each strand of the four-strand wire may be 20 micrometers to 30 micrometers. For example, the diameter (or the thickness) of each strand of the four-strand wire may be 24 micrometers to 28 micrometers. Alternatively, for example, the diameter (or the thickness) of each strand of the four-strand wire may be 26 micrometers to 28 micrometers.

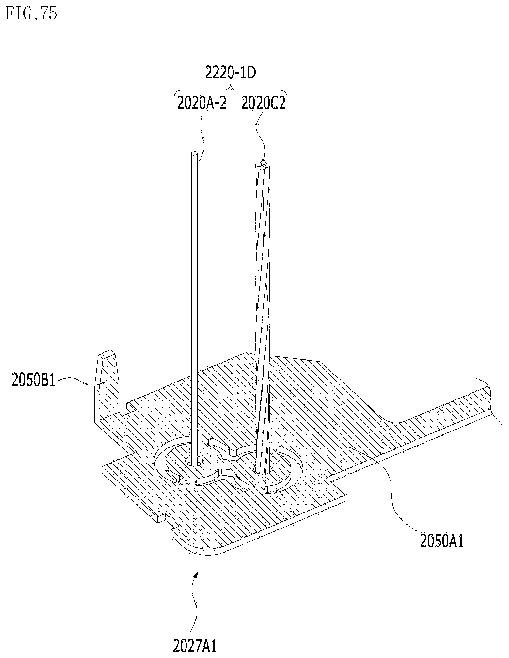

FIG. 75 is a perspective view of a first supporting member 2220-1D according to another embodiment.

Referring to FIG. 75, the first supporting member 2220-1D may include a 1-1 supporting member 2020A-2 and a 1-2 supporting member 2020C2. For example, the 1-2 supporting member 2020C2 may be identical to the 1-2 supporting member 2020C12 (or the 1-1 supporting member 2020C11) of FIG. 74.

For example, the 1-1 supporting member 2020A-2 may have different stiffness (or spring constant) from the 1-1 supporting member 2020A (or the 1-2 supporting member 2020B) of FIG. 61A. For example, the stiffness (or spring constant) of the 1-1 supporting member 2020A-2 may be less than the stiffness (or spring constant) of the 1-1 supporting member 2020A (or the 1-2 supporting member 2020B) of FIG. 61A.

For example, the diameter of the 1-1 supporting member 2020A-2 may be equal to or less than the diameter of the 1-1 supporting member 2020A (or the 1-2 supporting member 2020B) of FIG. 61A. For example, the diameter range of the 1-1 supporting member 2020A of FIG. 61A may be applied or applied correspondingly to the diameter range of the 1-1 supporting member 2020A-2.

For example, the diameter (or the thickness) of the 1-2 supporting member 2020C2 of FIG. 75 may be greater than the diameter (or the thickness) of the 1-1 supporting member 2020A-2 of FIG. 75. For example, the ratio of the diameter of the 1-1 supporting member 2020A-2 to the diameter of the 1-2 supporting member 2020C2 may be 1:1.15 to 1:2.4. In another embodiment, the diameter (or the thickness) of the 1-2 supporting member 2020C2 of FIG. 75 may be equal to the diameter (or the thickness) of the 1-1 supporting member 2020A-2 of FIG. 45D.

In contrast, the 1-2 supporting member 2020C2 may have different stiffness (or spring constant) from the 1-1 supporting member 2020A (or the 1-2 supporting member 2020B) of FIG. 61A. For example, the stiffness (or spring constant) of the 1-2 supporting member 2020C2 may be greater than the stiffness (or spring constant) of the 1-1 supporting member 2020A (or the 1-2 supporting member 2020B) of FIG. 61A.

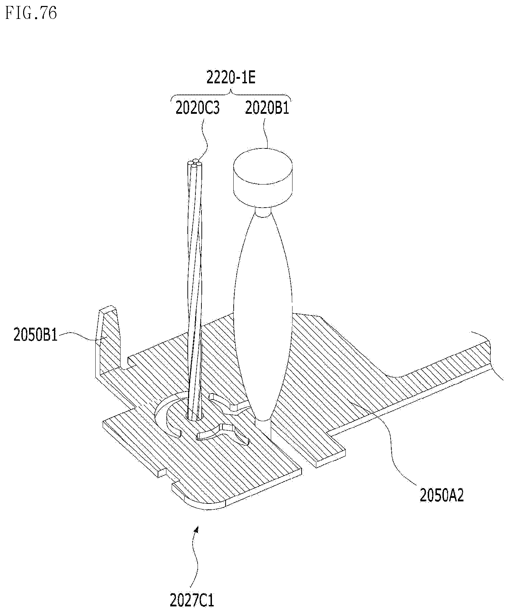

FIG. 76 is a perspective view of a first supporting member 2220-1E according to another embodiment.

Referring to FIG. 76, the first supporting member 2220-1E may include a 1-1 supporting member 2020C3 and a 1-2 supporting member 2020B1. A description of the 1-1 supporting member 2020C11 of FIG. 74 may be applied or analogically applied to the 1-1 supporting member 2020C3 of FIG. 76, and a description of the 1-2 supporting member 2020B1 of FIG. 72A may be applied or applied correspondingly to the 1-2 supporting member 2020B1 of FIG. 76.

For example, the diameter of the 1-1 supporting member 2020C3 may be greater than the diameter B4 (or B5) of a first connection portion A4 (or a second connection portion A5) of the 1-2 supporting member 2020B1.

For example, the ratio of the diameter of the 1-1 supporting member 2020C3 to the diameter B4 (or B5) of the first connection portion A4 (or A5) of the 1-2 supporting member 2020B1 may be 1:1.25 to 1:2.5.

The lens moving apparatus according to the embodiment may be implemented so as to include at least one of the first supporting members 2220-1, 2220-1A, 2220-1B, 2220-1C, 2220-1D, and 2220-1E described with reference to FIGs. 61A and 72A to 76.

In order to exhibit the same performance, the first supporting members 2200-1 to 2200-1E described with reference to FIGs. FIGs. 61A and 72A to 76 may be designed to have the same stiffness or spring constant. Here, the spring constant may be a spring constant in the X-axis direction or the Y-axis direction.

The first supporting member 2220-1, 2220-1B, or 2220-1C of FIGs. 61A, 73, and 74 has two supporting members having the same stiffness.

The supporting member 2020B1 made of the injection molded material of FIG. 73 has a longer lifespan than the wire-shaped supporting members 2020A and 2020B of FIG. 61A. In addition, each of the supporting members 2020C1 and 2020C2 of FIG. 74 has a longer lifespan than the wire-shaped supporting members 2020A and 2020B of FIG. 45A.

The embodiment of FIG. 72A will be compared to the embodiment of FIG. 61A as follows.

In order to exhibit the same performance, the stiffness (or spring constant) of the first supporting member 2220-1A of FIG. 72A must be designed so as to be equal or similar to the stiffness (or spring constant) of the first supporting member 2220-1 of FIG. 61A.

To this end, in the embodiment of FIG. 72A, the 1-1 supporting member 2020A-1 may be designed so as to have lower stiffness than the 1-1 supporting member 2020A of FIG. 61A, and the 1-2 supporting member 2020B1 may be designed so as to have higher stiffness than the 1-1 supporting member 2020A of FIG. 61A.

When compared to the 1-1 supporting member 2020A of FIG. 61A, the 1-1 supporting member 2020A-1 of FIG. 72A may be more easily bent, whereby cutting thereof due to external impact may be inhibited or prevented.

In addition, since the 1-2 supporting member 2020B1 of FIG. 35A is made of an injection molded material, the lifespan thereof is longer, when compared to the 1-1 supporting member 2020A of FIG. 61A, whereby the lifespan of the supporting member 2220-1A of FIG. 72A may be longer than the lifespan of the supporting member 2220-1 of FIG. 61A.

For the same reason, in the embodiment of FIG. 75, cutting of the 1-1 supporting member 2020A-2 may be inhibited or prevented, and the lifespan of the first supporting member 2220-1D may be extended.

In order to implement a high-quality image, the size (e.g. the weight) of the lens module mounted to the lens moving apparatus may be increased. In an OIS VCM having a heavy lens module (e.g. a weight of 0.4 g or more) mounted thereto, a wire-shaped supporting member may be cut. In particular, a fracture phenomenon may occur at the part at which the upper end of the supporting member (e.g. wire) is soldered and at the part at which the lower end of the supporting member is soldered.

In the embodiment, in order to prevent or inhibit cutting of the supporting member, two supporting members may be disposed on one corner of the housing 2140, as shown in FIGs. 12A to 27.

When compared to a lens moving apparatus according to another embodiment having a structure in which only one wire is disposed on one corner of the housing (hereinafter referred to as the "other embodiment"), two wires are disposed on at least one corner of the housing 2140 in the embodiment, whereby the number of wires may be increased, and therefore elastic force (or restoring force) of the supporting member may be increased.

When compared to the other embodiment, in which only one wire is disposed on one corner of the housing, elastic force (restoring force) of the supporting member is increased in the embodiment shown in FIGs. 61A to 76, whereby an increase in electromagnetic force by interaction between the OIS coil and the magnet is required for smooth and normal OIS driving.

In order to increase electromagnetic force, the second coil 2230 according to the embodiment may be a winding coil, a coil bundle, a coil body, or a coil block, whereby it is possible to increase electromagnetic force.

If the winding coil type second coil of the winding coil is disposed on the circuit board (hereinafter referred to a "comparative example"), however, the distance between the second coil and the magnet (or the lower stopper of the housing) may be too small, whereby the second coil and the magnet (or the lower stopper of the housing) may collide with each other, and therefore the second coil may be damaged or foreign matter may be generated due to collision.

In order to prevent damage or generation of foreign matter due to collision, the second coil 2230 may be disposed under the circuit board 2250 in the embodiment. That is, the second coil 2230 may be located between the lower surface of the circuit board 2250 and the upper surface of the base 2210, and may be disposed in the seating portions 2213A1 to 2213A4 formed at the upper surface of the base 2210.

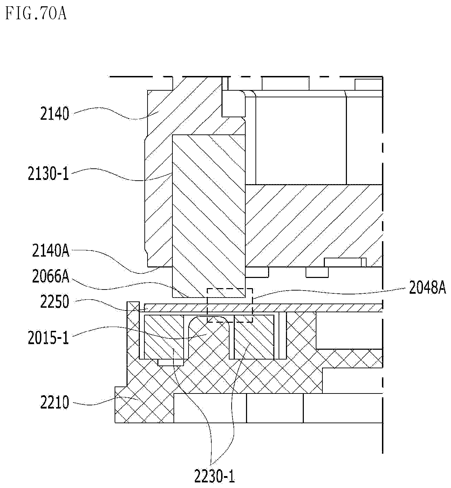

FIG. 70A shows disposition of the magnet (e.g. 2130-1) disposed on the housing 2140, the coil unit (e.g. 2230-1) disposed on the base 2210, and the circuit board 2250. A description of FIG. 70A may be applied to the other magnets 2130-2 to 2130-4 and the other coil units 2230-2 to 2230-4.

Referring to FIG. 70A, a lower surface 2066A of the magnet (e.g. 2130-1) may protrude from a lower end 2140A or a lower surface of the housing 2140 toward the circuit board 2250. For example, the lower end 2140A of the housing 2140 may be the lowest part of the housing 2140 or the part of the housing closest to the upper surface of the circuit board 2250.

Since the coil unit (e.g. 2230-1) is located under the circuit board 2250, the magnet (e.g. 2130-1) and the coil unit (e.g. 2230-1) may not collide with each other. The magnet (e.g. 2130-1) and the upper surface of the circuit board 2250 may collide with each other due to external impact, and the circuit board 2250 may absorb collision with the magnet 2130-1 in FIG. 70A.

In addition, when compared to the comparative example, the area of the collision point 2048A or the collision region between the magnet 2130-1 and the upper surface of the circuit board 2250 may be increased in the embodiment of FIG. 70A, whereby impact may be dispersed, and therefore a structure having high resistance to impact may be obtained.

As shown in FIG. 70A, the height of the upper surface of each of the protrusions 2016A and 2016B of the projection portion 2015-1 may be equal to or less than the height of the upper surface of the coil unit (e.g. 2230-1). In addition, each of the protrusions 2016A and 2016B of the projection portion 2015-1 and the magnet (e.g. 2130-1) may overlap each other in the optical-axis direction. For example, the width W1 of the magnet (e.g. 2130-1) may be greater than the width of each of the protrusions 2016A and 2016B.

For example, in FIG. 70A, a circuit pattern or wiring may be formed on the region of the circuit board 2250 corresponding to the projecting portion 2015-1 or 2015-1A in the optical-axis direction; however, the disclosure is not limited thereto. In another embodiment, no circuit pattern or no wiring may be formed on the region of the circuit board 2250 corresponding to the projecting portion 2015-1 or 2015-1A in the optical-axis direction.

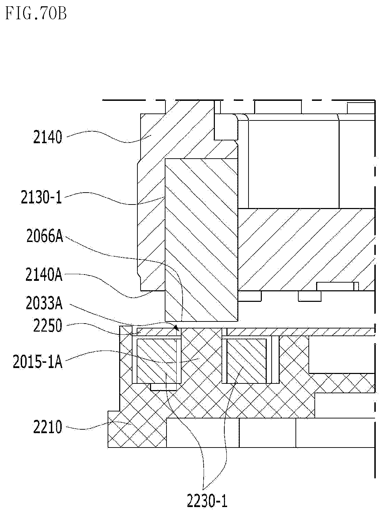

FIG. 70B shows a projecting portion 2015-1A of the base 2210 according to another embodiment.

Referring to FIG. 70B, the height of an upper surface of the projecting portion 2015-1A (or the protrusion) may be greater than the height of the upper surface or the upper end of the second coil 2230 (e.g. 2230-1). For example, the projecting portion 2015-1A (or the protrusion) and the magnet (e.g. 2130-1) may overlap each other in the optical-axis direction, and the width W1 of the magnet (e.g. 2130-1) may be greater than the width of the projecting portion 2015-1A (or the protrusion) .

In addition, for example, at least a part of the projecting portion 2015-1A (or the protrusion) may be exposed to the upper surface of the circuit board 2250. For example, at least a part of the upper surface of the projecting portion 2015-1A may be exposed to the upper surface of the circuit board 2250.

For example, the circuit board 2250 may include an opening 2033A, through which at least a part of the upper surface of the projecting portion 2015-1A (or the protrusion) is exposed. For example, the opening 2033A may be a hole or a recess. For example, the opening 2033A may be a through-hole formed through the circuit board 2250 in the optical-axis direction.

At least a part of the projecting portion 2015-1A (or the protrusion) may be disposed in the hole 2033A of the circuit board 2250. For example, the upper surface of the projecting portion 2015-1A (or the protrusion) may be the same plane as the upper surface of the circuit board 2250; however, the disclosure is not limited thereto. In another embodiment, the upper surface of the protrusion may be located so as to be lower than the upper surface of the circuit board 2250 and to be higher than the upper surface of the coil unit (e.g. 2230-1).

In FIG. 70B, the projecting portion 2015-1A (or the protrusion) exposed from the opening 2033A of the circuit board 2250 and the upper surface of the circuit board 2250 may serve as a stopper configured to absorb impact due to collision with the magnet (e.g. 2130-1).

FIG. 70C shows a projecting portion 2015-1B of the base 2210 according to another embodiment.

Referring to FIG. 70C, at least a part of the projecting portion 2015-1B (or the protrusion) may protrude from the upper surface of the circuit board 2250 toward the magnet 2130-1. For example, at least a part of the projecting portion 2015-1B (or the protrusion) may extend through the circuit board 2250.

For example, the height of an upper surface of the projecting portion 2015-1B (or the protrusion) may be greater than the height of the upper surface of the circuit board 2250. For example, the distance between the projecting portion 2015-1B (or the protrusion) and the magnet (e.g. 2130-1) in the optical-axis direction may be less than the distance between the upper surface of the circuit board 2250 and the magnet (e.g. 2130-1) in the optical-axis direction.

For example, the circuit board 2250 may include an opening 2033A, through which at least a part of the projecting portion 2015-1B (or the protrusion) extends. At least a part of the projecting portion 2015-1B (or the protrusion) may be disposed in the hole 2033A of the circuit board 2250.

In FIG. 70C, the projecting portion 2015-1B (or the protrusion) protruding from the opening 2033A of the circuit board 2250 may serve as a stopper configured to absorb impact due to collision with the magnet 2130-1.

For example, in FIGs. 70B and 70C, no circuit pattern or no wiring may be formed on the region of the circuit board 2250 corresponding to a protrusion 2215A2 in the optical-axis direction.

In the embodiments of FIGs. 72A and 76, the supporting member disposed on one corner of the housing 2140 may have wire-shaped supporting members 2020A-1 and 2020C3 made of the conductive material and a supporting member 2020B1 made of the nonconductive material. As a result, when compared to the embodiment of FIG. 61A, in which the two wires are provided, the embodiments of FIGs. 72A and 76 are capable of reinforcing elastic force while exhibiting AF and OIS driving characteristics similar to FIG. 61A, increasing the lifespan of the supporting member, and performing stable OIS driving.

A description of FIGs. 23A, 23B, and 24 may be applied or applied correspondingly to the embodiments of FIGs. 50 to 76. A first case CASE1 may relate to an embodiment in which the two wires 2020A and 2020B of FIG. 61A are provided at one corner of the housing 2140, and a second case CASE2 may relate to an embodiment in which the two supporting members 2020A-1 and 2020B1 of FIG. 72A are provided at one corner of the housing 2140.

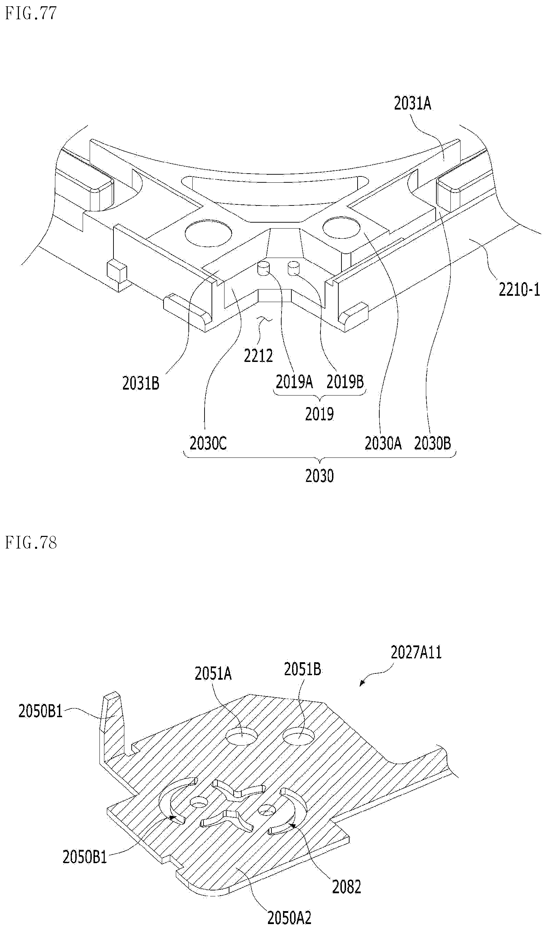

FIG. 77 shows a part of a base 2210-1 according to another embodiment, and FIG. 78 shows a first terminal 2027A11 according to another embodiment disposed on the base 2210-1 of FIG. 77.

Referring to FIGs. 77 and 78, at least one protrusion or coupling protrusion 2019 protruding in a direction from a lower surface to an upper surface of the base 2210-1 may be formed at a third surface 2030C of the base 2210-1.

In FIG. 77, two coupling protrusions 2019A and 2019B spaced apart from each other are formed at the third surface 2030C; however, the disclosure is not limited thereto. In another embodiment, the number of coupling protrusions may be one or more.

The terminal 2027A11 is a modification of the terminal 2027A1 of FIG. 59, and a body 2050A2 of the terminal 2027A11 may include at least one coupling hole 2051A and 2051B or hole configured to be coupled to the coupling protrusions 2019 of the base 2210. For example, the coupling holes 2051A and 2051B may be through-holes. The number of coupling holes may be equal to the number of coupling protrusions 2019, and may be one or more. The coupling protrusions 2019A and 2019B may be inserted into the coupling holes 2051A and 2051B or may extend through the coupling holes 2051A and 2051B.

In order for the coupling protrusion 2019 of the base 2210-1 and the coupling holes 2051A and 2051B of the terminal 2027A11 to be stably coupled to each other, the height of the coupling protrusion 2019 may be greater than the length or thickness of the terminal 2027A11 in the optical-axis direction. In another embodiment, the height of the coupling protrusion 2019 may be equal to or less than the length or thickness of the terminal 2027A11 in the optical-axis direction.

In addition, the height of the coupling protrusion 2019 of the base 2210-1 may be less than a second stair (or the distance in the optical-axis direction) between a first surface 2030A and the third surface 2030C. In another embodiment, the height of the coupling protrusion 2019 may be equal to the second stair (or the distance in the optical-axis direction) between the first surface 2030A and the third surface 2030C.

The coupling protrusion 2019 of the base 2210-1 may be located between coupling portions 2081 and 2082 of the terminal 2027A11 and a second stair surface 2031B; however, the disclosure is not limited thereto.

A description of the first and second coil units 120-1 and 120-2 of the first coil 120, the first to third magnets 130-1 to 130-3, the dummy member 11, the first position sensor 170, and the sensing magnet 180 according to the embodiment of FIG. 1 may replace a description of the first coil 2120, the magnet 2130, the first position sensor 2170, the sensing magnet 2180, and the second coil 22300 of FIG. 50 and may be applied or analogically applied to the embodiment of FIG. 50.

In addition, the terminals (e.g. 1027A1, 1027A-1, 1027D1, and 1027A11) of the embodiments of FIGs. 25 to 49 may be applied or analogically applied to the embodiment of FIG. 50.

In addition, the terminals (e.g. 2027A1, 2027C1, 2027D1, and 2027A11) of the embodiments of FIGs. 50 to 78 may be applied or analogically applied to the embodiment of FIG. 25.

Furthermore, alternative application or additional application to corresponding components of the first embodiment of FIGs. 1 to 22, the second embodiment of FIG. 25 to 49, and the embodiment of FIGs. 50 to 78 may be possible.

Meanwhile, the lens moving apparatus according to the above embodiment may be used in various fields, such as those of a camera module or an optical instrument.

For example, the lens moving apparatus 100 according to the embodiment may be included in an optical instrument configured to form an image of an object in a space using reflection, refraction, absorption, interference, diffraction, etc., which are characteristics of light, to increase the visual power of the eyes, to record or reproduce an image formed by a lens, to perform optical measurement, or to propagate or transfer an image. For example, an optical instrument according to an embodiment may be a handheld phone, a mobile phone, a smartphone, a portable smart device, a digital camera, a laptop computer, a digital broadcasting terminal, a personal digital assistant (PDA), a portable multimedia player (PMP), or a navigation system; however, the disclosure is not limited thereto, and any device capable of taking an image or a picture may be used.

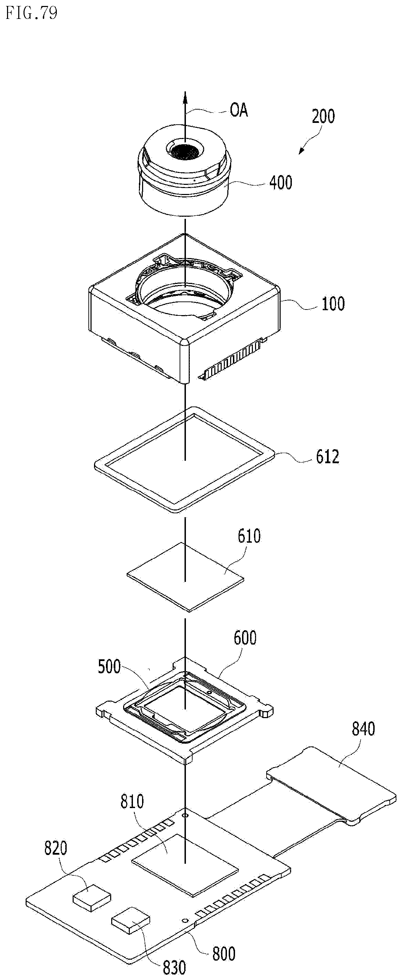

FIG. 79 is a perspective view of a camera module 200 according to an embodiment.

Referring to FIG. 79, the camera module 200 may include a barrel 400, a lens moving apparatus 100, and an image sensor 810.

For example, the camera module 200 may further include a filter 610 and a second holder 800. Alternatively, for example, the camera module 200 may further include a first filter 600. In addition, the camera module 200 may further include a controller 830. In addition, for example, the camera module 200 may include an adhesive member 612, a motion sensor 820, and a connector 840.

The lens barrel 400 may be mounted in the bobbin 110 of the lens moving apparatus 100.

The first holder 600 may be disposed under the base 210 of the lens moving apparatus 100. The filter 610 may be mounted to the first holder 600, and the first holder 600 may have a projecting portion 500, on which the filter 610 is seated.

The adhesive member 612 may couple or adhere the base 210 of the lens moving apparatus 100 to the first holder 600. The adhesive member 612 may function to prevent foreign matter from being introduced into the lens moving apparatus 100 in addition to the function of adhesion.

For example, the adhesive member 612 may be epoxy, a thermo-hardening adhesive, or an ultraviolet-hardening adhesive.

The filter 610 may function to prevent a specific-frequency-band component of light passing through the lens barrel 400 from being incident on the image sensor 810. The filter 610 may be an infrared cutoff filter; however, the disclosure is not limited thereto. In this case, the filter 610 may be disposed parallel to the x-y plane.

An opening, through which light passing through the filter 610 is incident on the image sensor 810, may be formed in the region of the first holder 600 on which the filter 610 is mounted.

The second holder 800 may be disposed under the first holder 600, and the image sensor 810 may be mounted on the second holder 600. The image sensor 810 is a region on which light passing through the filter 610 is incident in order to form an image included in the light.

The second holder 800 may be provided with various circuits, elements, and a controller in order to convert an image formed on the image sensor 810 into an electrical signal and to transfer the electrical signal to an external apparatus.

The second holder 800 may be implemented by a circuit board, on which the image sensor may be mounted, on which a circuit pattern may be formed, and on which various elements are coupled to each other.

The first holder 600 may be referred to as a "holder" or a "sensor base," and the second holder 800 may be referred to as a "board" or a "circuit board."

The image sensor 810 may receive an image included in light incident through the lens moving apparatus 100, and may convert the received image into an electrical signal.

The filter 610 and the image sensor 810 may be disposed spaced apart from each other so as to be opposite to each other in the first direction.

The motion sensor 820 may be mounted on the second holder 800, and may be conductively connected to the controller 830 via the circuit pattern provided on the second holder 800.

The motion sensor 820 outputs information about rotational angular velocity based on movement of the camera module 200. The motion sensor 820 may be implemented by a two-axis or three-axis gyro sensor or an angular velocity sensor.

The controller 830 may be mounted on the second hole 800, and may be conductively connected to the first position sensor 170, 1170, or 2170 and the second position sensor 240, 1240, or 2240 of the lens moving apparatus 100, 1100, or 2100. In addition, the controller 830 may be conductively connected to the first coil 120, 1120, or 2120 and the second coil 230, 1230, or 2230.

For example, the second holder 800 may be conductively connected to the circuit board 250, 1250, or 2250 of the lens moving apparatus 100, 1100, or 2100, and the controller 830 mounted on the second holder 800 may be conductively connected to the first position sensor 170, 1170, or 2170 and the second position sensor 240, 1240, or 2240 via the circuit board 250, 1250, or 2250. In addition, the controller 830 may be conductively connected to the first coil 120, 1120, or 2120 and the second coil 230, 1230, or 2230 via the circuit board 250, 1250, or 2250.

The controller 830 may provide a driving signal to each of the first position sensor 170, 1170, or 2170, the first sensor 240A, 1240A, or 2240A, and the second sensor 240B, 1240B, or 2240B.

For example, in another embodiment, the controller 830 may provide a power signal to at least one of the first position sensor 170, 1170, or 2170, the first sensor 240A, 1240A, or 2240A, and the second sensor 240B, 1240B, or 2240B, and may transmit and receive a clock signal and a data signal to and from at least one of the first position sensor 170, 1170, or 2170, the first sensor 240A, 1240A, or 2240A, and the second sensor 240B, 1240B, or 2240B for I2C communication.

In addition, the controller 830 may perform feedback autofocus for the AF moving unit of the lens moving apparatus based on output provided by the first position sensor 170, 1170, or 2170.

In addition, the controller 830 may perform handshake compensation for OIS moving unit of the lens moving apparatus 100, 1100, or 2100 based on output of the first sensor 240A, 1240A, or 2240A and output of the second sensor 240B, 1240B, or 2240B

The connector 840 may be conductively connected to the second holder 800, and may have a port for connection with an external apparatus.

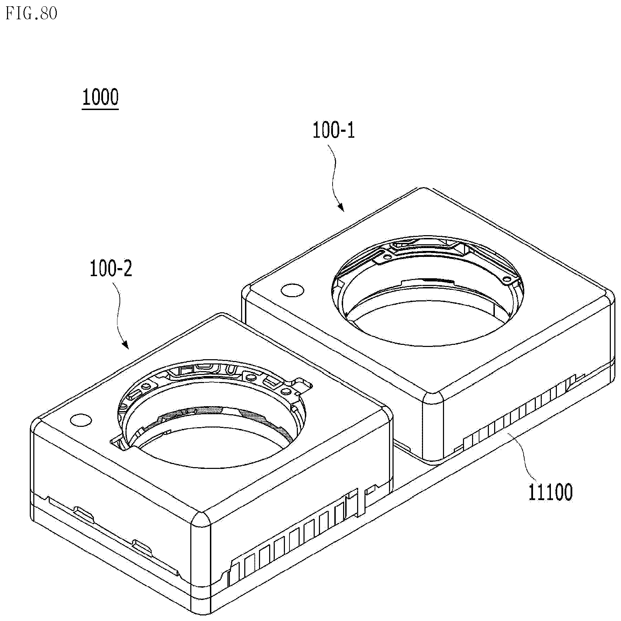

FIG. 80 is a perspective view of a camera module 1000 according to another embodiment.

Referring to FIG. 80, the camera module 1000 may be a dual camera module including a first camera module 100-1 including a first lens moving apparatus and a second camera module 100-2 including a second lens moving apparatus.

Each of the first camera module 100-1 and the second camera module 100-2 may be one of an autofocus (AF) camera module or an optical image stabilizer (OIS) camera module.

The AF camera module is a camera module capable of performing only an autofocus function, and the OIS camera module is a camera module capable of performing both an autofocus function and an optical image stabilizer (OIS) function.

For example, the first lens moving apparatus may be one of the embodiments 100, 1100, and 2100, and the second lens moving apparatus may be the embodiment or a lens moving apparatus for AF.

The camera module 1000 may further include a circuit board 11100 on which the first camera module 100-1 and the second camera module 100-2 are mounted. In FIG. 80, the first camera module 100-1 and the second camera module 100-2 are disposed side by side on a single circuit board 11100; however, the disclosure is not limited thereto. In another embodiment, the circuit board 11100 may include a first circuit board and a second circuit board separated from each other, the first camera module 100-1 may be disposed on the first circuit board, and the second camera module 100-2 may be disposed on the second circuit board.

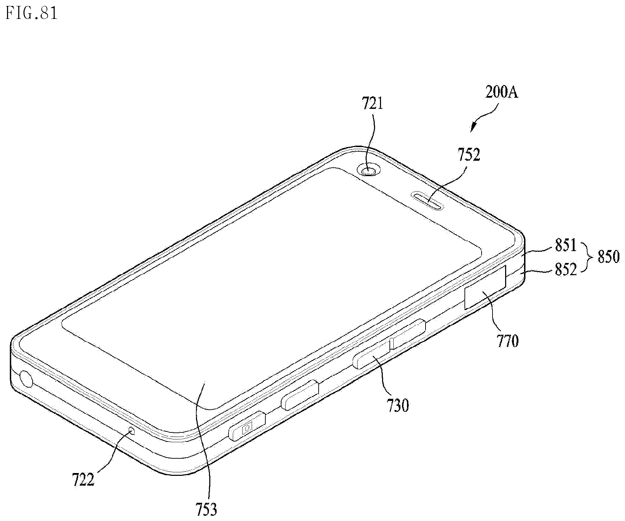

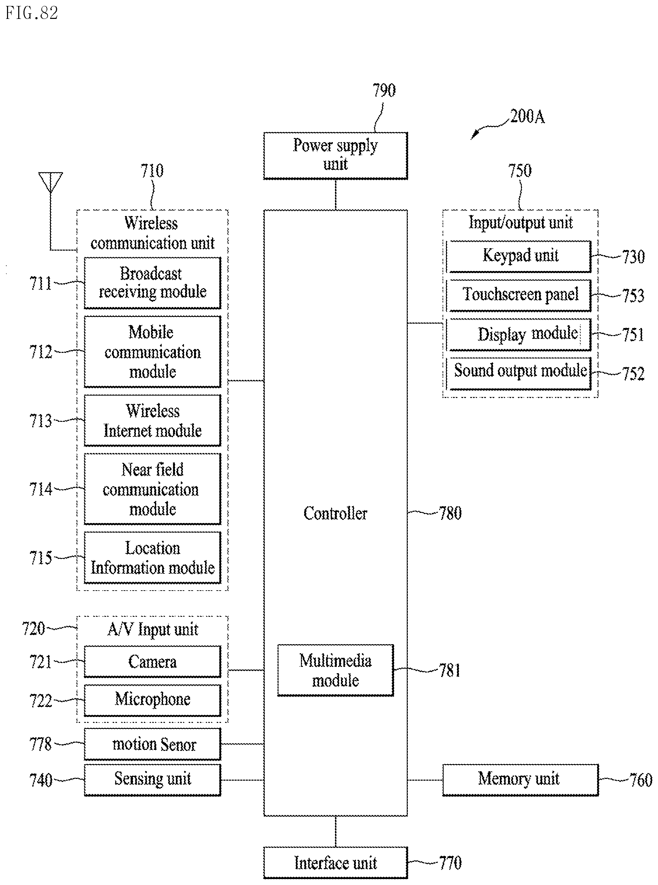

FIG. 81 is a perspective view of a portable terminal 200A according to an embodiment, and FIG. 82 is a view showing the construction of the portable terminal shown in FIG. 81.

Referring to FIGs. 81 and 82, the portable terminal 200A (hereinafter referred to as a "terminal") may include a body 850, a wireless communication unit 710, an A/V input unit 720, a sensing unit 740, an input/output unit 750, a memory unit 760, an interface unit 770, a controller 780, and a power supply unit 790.

The body 850 shown in FIG. 81 has a bar shape; however, the disclosure is not limited thereto. The body may have any of various structures, such as a slide type structure, a folder type structure, a swing type structure, and a swivel type structure, in which two or more sub-bodies are coupled so as to be movable relative to each other.

The body 850 may include a case (casing, housing, cover, etc.) that defines the external appearance thereof. For example, the body 850 may be divided into a front case 851 and a rear case 852. Various electronic parts of the terminal may be mounted in a space defined between the front case 851 and the rear case 852.

The wireless communication unit 710 may include one or more modules that enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720, which is configured to input an audio signal or a video signal, may include a camera 721 and a microphone 722.

The camera 721 may be a camera including the camera module 200 or 1000 according to the embodiment
The sensing unit 740 may sense the current state of the terminal 200A, such as the opening and closing state of the terminal 200A, the position of the terminal 200A, whether a user contacts the terminal, the orientation of the terminal 200A, and acceleration/deceleration of the terminal 200A, in order to generate a sensing signal for controlling the operation of the terminal 200A. For example, when the terminal 200A is a slide phone, the sensing unit may sense whether the slide phone is open or closed. In addition, the sensing unit senses whether electric power is supplied from the power supply unit 790 and whether the interface unit 770 is coupled to an external instrument.

The input/output unit 750 is configured to generate input or output related to visual sensation, audible sensation, or tactile sensation. The input/output unit 750 may generate input data for controlling the operation of the terminal 200A, and may display information processed by the terminal 200A.

The input/output unit 750 may include a keypad 730, a display module 751, a sound output module 752, and a touchscreen panel 753. The keypad 730 may generate input data through keypad input.

The display module 751 may include a plurality of pixels, the color of which is changed according to an electrical signal. For example, the display module 751 may include at least one of a liquid crystal display, a thin film transistor-liquid crystal display, an organic light-emitting diode, a flexible display, and a three-dimensional (3D) display.

The sound output module 752 may output audio data received from the wireless communication unit 710 in a call signal reception mode, a telephone communication mode, a recording mode, a voice recognition mode, or a broadcast reception mode, or may output audio data stored in the memory unit 760.

The touchscreen panel 753 may convert a change in capacitance due to a user's touch on a specific region of the touchscreen into an electrical input signal.

The memory unit 760 may store a program for processing and control of the controller 780, and may temporarily store input/output data (for example, a telephone directory, messages, audio, still images, photographs, and video). For example, the memory unit 760 may store images, such as photographs or video, taken by the camera 721.

The interface unit 770 functions as a path for connection between the terminal 200A and an external instrument. The interface unit 770 may receive data or electric power from the external instrument and transmit the received data or electric power to internal components of the terminal 200A, or may transfer data in the terminal 200A to the external instrument. For example, the interface unit 770 may include a wired/wireless headset port, an external charger port, a wired/wireless data port, a memory card port, a port for connection with an apparatus having an identification module, an audio input/output (I/O) port, a video input/output (I/O) port, and an earphone port.

The controller 780 may control the overall operation of the terminal 200A. For example, the controller 780 may perform related control and processing for voice communication, data communication, and video communication.

The controller 780 may have a multimedia module 781 for multimedia reproduction. The multimedia module 781 may be implemented in the controller 780 or may be implemented separately from the controller 780.

The controller 780 may perform pattern recognition processing that is capable of recognizing writing input or drawing input performed on the touchscreen as text or an image, respectively.

The features, structures, and effects described in the above embodiments are included in at least one embodiment, but are not limited only to one embodiment. Furthermore, features, structures, and effects illustrated in each embodiment may be combined or modified in other embodiments by those skilled in the art to which the embodiments pertain. Therefore, it is to be understood that such combinations and modifications fall within the scope of the present disclosure.

### [Industrial Applicability]

Embodiments may be used in a lens moving apparatus capable of increasing electromagnetic force, reducing magnetic field interference, preventing damage to an OIS coil, and reducing power consumption, a camera module, and an optical instrument.

## Claims

1. A lens moving apparatus comprising:
a base (210);
a circuit board (250) disposed on the base (210);
a housing (140) disposed on the base (210);
a bobbin (110) disposed in the housing (140);
a magnet (130) disposed on the housing (140);
a first coil (120) disposed on the bobbin (110) so as to be opposite to the magnet (130); and
a second coil (230) configured to move the housing (140) in a direction perpendicular to an optical-axis direction by an interaction with the magnet (130),
**characterized in that** the second coil (230) is disposed between the circuit board (250) and the base (210).

2. The lens moving apparatus according to claim 1, wherein the second coil (230) is coupled to a lower surface of the circuit board (250) and is conductively connected to the circuit board (250).

3. The lens moving apparatus according to claim 2, wherein the circuit board (250) comprises a pad (P1 to P6) connected to the second coil (230).

4. The lens moving apparatus according to any one of claims 1 to 3, wherein the base (210) comprises a recess (213A to 213C) formed in an upper surface thereof, and the second coil (230) is disposed in the recess (213A to 213C) of the base (210).

5. The lens moving apparatus according to claim 4, wherein
the base (210) comprises a protrusion (215-1 to 215-3) formed on the upper surface thereof,
the second coil (230) has a hollow formed in a center thereof, and
the protrusion (215-1 to 215-3) of the base (210) is disposed in the hollow of the second coil (230).

6. The lens moving apparatus according to claim 5, wherein a height of the protrusion (215-1 to 215-3) is equal to or less than a height of an upper end of the second coil (230).

7. The lens moving apparatus according to any one of claims 1 to 6, wherein the second coil (230) is wound 40 turns or more.

8. The lens moving apparatus according to claim 4, wherein a depth of the recess (213A to 213C) of the base (210) is equal to or greater than a length of the second coil (230) in the optical-axis direction.

9. The lens moving apparatus according to claim 5, wherein a height of the protrusion (215-1 to 215-3) is greater than a height of an upper end of the second coil (230).

10. The lens moving apparatus according to any one of claims 1 to 9, comprising:
an upper elastic member (150) coupled to an upper portion of the bobbin (110) and an upper portion of the housing (140); and
a supporting member (220) comprising one end coupled to the upper elastic member (150) and the other end conductively connected to the circuit board (250).

11. The lens moving apparatus according to claim 10, wherein the supporting member (220) comprises a first supporting member and a second supporting member disposed on at least one corner of the housing (140).

12. The lens moving apparatus according to claim 10, comprising a terminal member (27) coupled to the base(210) and positioned lower than a lower surface of the circuit board(250),
wherein the terminal member (27) comprises a body (50A) coupled to the other end of the supporting member (220) and an extension portion (50B) extending from the body (50A) and coupled to the circuit board (250).

13. The lens moving apparatus according to claim 11, wherein each of the first and second supporting members (20A, 20B) is a wire made of a conductive material.

14. The lens moving apparatus according to claim 11, wherein the first supporting member (20A-1) is a wire made of a conductive material and the second supporting member (20B1) is made of a nonconductive material, and
wherein a stiffness of the second supporting member (20B1) is greater than a stiffness of the first supporting member (20A-1).

15. The lens moving apparatus according to any one of claims 1 to 14, comprising:
a sensing magnet (180) disposed on the bobbin (110);
a first position sensor (170) disposed between the base (210) and the circuit board (250) so as to be opposite to the sensing magnet (180) in the optical-axis direction; and
a second position sensor (240) disposed between the base (210) and the circuit board (250) so as to be opposite to the magnet (130) in the optical-axis direction.

## Patentansprüche

1. Linsenbewegungseinrichtung, umfassend:
eine Basis (210);
eine Leiterplatte (250), die auf der Basis (210) angeordnet ist;
ein Gehäuse (140), das auf der Basis (210) angeordnet ist;
einen Spulenkörper (110), die in dem Gehäuse (140) angeordnet ist;
einen Magneten (130), der in dem Gehäuse (140) angeordnet ist;
eine erste Spule (120), die auf dem Spulenkörper (110) angeordnet ist, um dem Magneten (130) gegenüber zu liegen; und
eine zweite Spule (230), die konfiguriert ist, um das Gehäuse (140) durch eine Interaktion mit dem Magneten (130) in eine Richtung senkrecht zu einer optischen Achsrichtung zu bewegen,
**dadurch gekennzeichnet, dass** die zweite Spule (230) zwischen der Leiterplatte (250) und der Basis (210) angeordnet ist.

2. Linsenbewegungseinrichtung nach Anspruch 1, wobei die zweite Spule (230) mit einer unteren Oberfläche der Leiterplatte (250) gekoppelt und leitend mit der Leiterplatte (250) verbunden ist.

3. Linsenbewegungseinrichtung nach Anspruch 2, wobei die Leiterplatte (250) ein Pad (P1 bis P6) umfasst, das mit der zweiten Spule (230) verbunden ist.

4. Linsenbewegungseinrichtung nach einem der Ansprüche 1 bis 3, wobei die Basis (210) eine in einer oberen Oberfläche davon gebildete Aussparung (213A bis 213C) umfasst und die zweite Spule (230) in der Aussparung (213A bis 213C) der Basis (210) angeordnet ist.

5. Linsenbewegungseinrichtung nach Anspruch 4, wobei
die Basis (210) einen an der oberen Oberfläche davon gebildeten Vorsprung (215-1 bis 215-3) umfasst,
die zweite Spule (230) eine in einer Mitte davon gebildete Mulde aufweist, und
der Vorsprung (215-1 bis 215-3) der Basis (210) in der Mulde der zweiten Spule (230) angeordnet ist.

6. Linsenbewegungseinrichtung nach Anspruch 5, wobei eine Höhe des Vorsprungs (215-1 bis 215-3) gleich oder kleiner als eine Höhe eines oberen Endes der zweiten Spule (230) ist.

7. Linsenbewegungseinrichtung nach einem der Ansprüche 1 bis 6, wobei die zweite Spule (230) 40 oder mehr Umdrehungen aufgewickelt ist.

8. Linsenbewegungseinrichtung nach Anspruch 4, wobei eine Tiefe der Aussparung (213A bis 213C) der Basis (210) gleich oder größer als eine Länge der zweiten Spule (230) in der optischen Achsrichtung ist.

9. Linsenbewegungseinrichtung nach Anspruch 5, wobei eine Höhe des Vorsprungs (215-1 bis 215-3) größer als eine Höhe eines oberen Endes der zweiten Spule (230) ist.

10. Linsenbewegungseinrichtung nach einem der Ansprüche 1 bis 9, umfassend:
ein oberes elastisches Element (150), das mit einem oberen Abschnitt des Spulenkörpers (110) und einem oberen Abschnitt des Gehäuses (140) gekoppelt ist; und
ein Stützelement (220), das ein Ende umfasst, das mit dem oberen elastischen Element (150) gekoppelt ist und das andere Ende leitend mit der Leiterplatte (250) verbunden ist.

11. Linsenbewegungseinrichtung nach Anspruch 10, wobei das Stützelement (220) ein erstes Stützelement und ein zweites Stützelement umfasst, die an mindestens einer Ecke des Gehäuses (140) angeordnet sind.

12. Linsenbewegungseinrichtung nach Anspruch 10, umfassend ein mit der Basis (210) gekoppeltes und tiefer als eine untere Oberfläche der Leiterplatte(250) positioniertes Anschlusselement (27),
wobei das Anschlusselement (27) einen Körper (50A), der mit dem anderen Ende des Stützelements (220) gekoppelt ist, und einen Erweiterungsabschnitt (50B) umfasst, der sich aus dem Körper (50A) erstreckt und mit der Leiterplatte (250) gekoppelt ist.

13. Linsenbewegungseinrichtung nach Anspruch 11, wobei jedes von dem ersten und zweiten Stützelement (20A, 20B) ein Draht ist, der aus einem leitfähigen Material gefertigt ist.

14. Linsenbewegungseinrichtung nach Anspruch 11, wobei das erste Stützelement (20A-1) ein Draht ist, der aus einem leitfähigen Material gefertigt ist, und das zweite Stützelement (20B1) aus einem nicht leitfähigen Material gefertigt ist, und
wobei eine Steifigkeit des zweiten Stützelements (20B1) größer als eine Steifigkeit des ersten Stützelements (20A-1) ist.

15. Linsenbewegungseinrichtung nach einem der Ansprüche 1 bis 14, umfassend:
einen auf dem Spulenkörper (110) angeordneten Abtastmagneten (180);
einen ersten Positionssensor (170), der zwischen der Basis (210) und der Leiterplatte (250) angeordnet ist, um dem Abtastmagneten (180) in der optischen Achsrichtung gegenüber zu liegen; und
einen zweiten Positionssensor (240), der zwischen der Basis (210) und der Leiterplatte (250) angeordnet ist, um dem Magneten (130) in optischer Achsrichtung gegenüber zu liegen.

## Revendications

1. Appareil de déplacement d'objectif comprenant :
une base (210) ;
une carte à circuit imprimé (250) disposée sur la base (210) ;
une enveloppe (140) disposée sur la base (210) ;
une bobine (110) disposée dans l'enveloppe (140) ;
un aimant (130) disposé sur l'enveloppe (140) ;
un premier enroulement (120) disposé sur la bobine (110) de manière à être en face de l'aimant (130) ; et
un second enroulement (230) configuré pour déplacer l'enveloppe (140) dans une direction perpendiculaire à une direction d'axe optique par une interaction avec l'aimant (130),
**caractérisé en ce que** le second enroulement (230) est disposé entre la carte à circuit imprimé (250) et la base (210).

2. Appareil de déplacement d'objectif selon la revendication 1, dans lequel le second enroulement (230) est couplé à une surface inférieure de la carte à circuit imprimé (250) et est relié de manière conductrice à la carte à circuit imprimé (250).

3. Appareil de déplacement d'objectif selon la revendication 2, dans lequel la carte à circuit imprimé (250) comprend un plot (P1 à P6) relié au second enroulement (230).

4. Appareil de déplacement d'objectif selon l'une quelconque des revendications 1 à 3, dans lequel la base (210) comprend un évidement (213A à 213C) formé dans une surface supérieure de celle-ci, et le second enroulement (230) est disposé dans l'évidement (213A à 213C) de la base (210).

5. Appareil de déplacement d'objectif selon la revendication 4, dans lequel
la base (210) comprend une saillie (215-1 à 215-3) formée sur la surface supérieure de celle-ci,
le second enroulement (230) présente un creux formé dans un centre de celui-ci, et
la saillie (215-1 à 215-3) de la base (210) est disposée dans le creux du second enroulement (230).

6. Appareil de déplacement d'objectif selon la revendication 5, dans lequel une hauteur de la saillie (215-1 à 215-3) est inférieure ou égale à une hauteur d'une extrémité supérieure du second enroulement (230).

7. Appareil de déplacement d'objectif selon l'une quelconque des revendications 1 à 6, dans lequel le second enroulement (230) est enroulé avec 40 spires ou plus.

8. Appareil de déplacement d'objectif selon la revendication 4, dans lequel une profondeur de l'évidement (213A à 213C) de la base (210) est supérieure ou égale à une longueur du second enroulement (230) dans la direction d'axe optique.

9. Appareil de déplacement d'objectif selon la revendication 5, dans lequel une hauteur de la saillie (215-1 à 215-3) est supérieure à une hauteur d'une extrémité supérieure du second enroulement (230).

10. Appareil de déplacement d'objectif selon l'une quelconque des revendications 1 à 9, comprenant :
un organe élastique supérieur (150) couplé à une partie supérieure de la bobine (110) et à une partie supérieure de l'enveloppe (140) ; et
un organe de support (220) comprenant une extrémité couplée à l'organe élastique supérieur (150) et l'autre extrémité reliée de manière conductrice à la carte à circuit imprimé (250).

11. Appareil de déplacement d'objectif selon la revendication 10, dans lequel l'organe de support (220) comprend un premier organe de support et un second organe de support disposés sur au moins un coin de l'enveloppe (140).

12. Appareil de déplacement d'objectif selon la revendication 10, comprenant un organe de borne (27) couplé à la base (210) et positionné plus bas qu'une surface inférieure de la carte à circuit imprimé (250),
dans lequel l'organe de borne (27) comprend un corps (50A) couplé à l'autre extrémité de l'organe de support (220) et une partie d'extension (50B) s'étendant à partir du corps (50A) et couplée à la carte à circuit imprimé (250).

13. Appareil de déplacement d'objectif selon la revendication 11, dans lequel chacun des premier et second organes de support (20A, 20B) est un fil en matériau conducteur.

14. Appareil de déplacement d'objectif selon la revendication 11, dans lequel le premier organe de support (20A-1) est un fil en matériau conducteur et le second organe de support (20B1) est en matériau non conducteur, et
dans lequel une rigidité du second organe de support (20B1) est supérieure à celle du premier organe de support (20A-1).

15. Appareil de déplacement d'objectif selon l'une quelconque des revendications 1 à 14, comprenant en outre :
un aimant de détection (180) disposé sur la bobine (110) ;
un premier capteur de position (170) disposé entre la base (210) et la carte à circuit imprimé (250) de manière à être en face de l'aimant de détection (180) dans la direction d'axe optique ; et
un second capteur de position (240) disposé entre la base (210) et la carte à circuit imprimé (250) de manière à être en face de l'aimant (130) dans la direction d'axe optique.
